# EUROPEAN PATENT APPLICATION

(11) **EP 4 700 068 A1**
(43) Date of publication of application: **25.02.2026**
(21) Application number: 24811186.6
(22) Date of filing: 23.05.2024
(51) Int. Cl.: C08G 77/52, C07F 7/18, C09K 3/18

(54) **SILANE COMPOUND**

(30) Priority: 23.05.2023 JP 2023084650; 19.01.2024 JP 2024006857
(71) Applicant: Daikin Industries, Ltd., Osaka-shi, Osaka 530-0001 (JP)
(72) Inventor: TAKANO, Shinya, Osaka-Shi, Osaka 530-0001 (JP); MATSUI, Motoshi, Osaka-Shi, Osaka 530-0001 (JP); KANEKO, Kazuki, Osaka-Shi, Osaka 530-0001 (JP); MORIMOTO, Kazuki, Osaka-Shi, Osaka 530-0001 (JP); KATSUMA, Nozomi, Osaka-Shi, Osaka 530-0001 (JP); NOMURA, Takashi, Osaka-Shi, Osaka 530-0001 (JP); HARA, Manami, Osaka-Shi, Osaka 530-0001 (JP)
(74) Representative: Hoffmann Eitle
(86) International application number: PCT/JP2024/019086
(87) International publication number: WO 2024/242181

(57) **Abstract**

A silane compound represented by the following formula (1). The symbols are defined in the description.

((R^{A}-(R^{S})_{γ1}-(SiR⁶₂)_{γ2})_{γ3}R^{Ar})_{α}-X¹-(R^{H})_{β} (1)

## Description

### Technical Field

The present disclosure relates to a silane compound.

### Background Art

Certain types of silane compounds are known to be capable of providing excellent water- and oil-repellency when used in surface treatment of a substrate (Patent Literature 1).

### Citation List

### Patent Literature

Patent Literature 1: JP 2019-44179 A

### Summary of Invention

### Technical Problem

An object of the present disclosure is to provide a silane compound capable of forming a surface-treating layer having higher friction durability.

### Solution to Problem

The present disclosure includes the following embodiments.
[1] A silane compound represented by the following formula (1):

   ((R^{A} - (R^{S}) _{y1} - (Si^{R6}₂)_{y2}) _{γ3} R^{Ar})_{α}- X¹ - (R^{H})β (1)

   wherein
   R^{A} is a monovalent group containing one or more Si atoms to which neither a hydroxyl group nor a hydrolyzable group is directly bonded, or a hydrocarbon group;
   R^{S} is a group represented by the following formula: 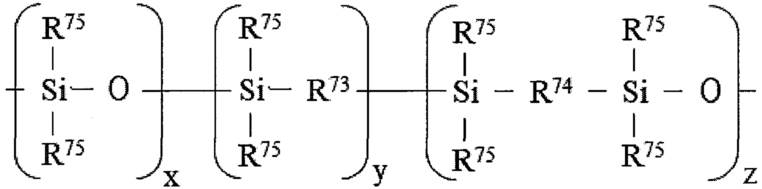 wherein
   R⁷³ is each independently a single bond, a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
   R⁷⁴ is each independently a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
      R⁷⁶ is each independently a C₁₋₆ alkylene group,
      R⁷⁷ is each independently an optionally substituted phenylene group or naphthylene group,
      R⁷⁸ is each independently a single bond or a C₁₋₆ alkylene group,
      R⁷⁹ is each independently a single bond or an oxygen atom,
   R⁷⁵ is each independently a hydrocarbon group,
   x is an integer of 0 to 500,
   y is an integer of 0 to 500,
   z is an integer of 0 to 500,
   x + y + z is 1 or more, and
   the occurrence order of the respective repeating units enclosed in parentheses provided with x, y, or z is not limited in the formula;
   R⁶ is each independently a hydrocarbon group;
   R^{Ar} is a di- to hexavalent aromatic group;
   X¹ is a di- to decavalent group;
   R^{H} is a monovalent group containing a Si atom to which a hydroxyl group or a hydrolyzable group is bonded;
   α is an integer of 1 to 9;
   β is an integer of 1 to 9;
   γ1 is 0 or 1;
   γ2 is 0 or 1; and
   _{γ3} is an integer of 1 to 5.
[2] The silane compound according to [1], wherein R^{A} is a group represented by the following group A:

   R¹ₙₐR² ₃₋ₙₐSi - R⁰ - (A)

   wherein
   R¹ is each independently a group represented by -(R⁴-SiR³2 )ₘₐ-R³,
      R⁴ is each independently an oxygen atom or a C₁₋₆ alkylene group,
      R³ is each independently a hydrocarbon group or R^{1'} ,
         R^{1'} has the same meaning as R¹,
      ma is each independently an integer of 1 to 5, provided that the number of R^{1'} in R¹ is 20 or less,
   R² is each independently a hydrocarbon group,
   na is an integer of 1 to 3, and
   R⁰ is a single bond or an oxygen atom.
[3] The silane compound according to [2], wherein in the group A,
   R¹ is each independently a group represented by - (OSiR³₂)ₘₐ-R³,
      R³ is each independently a hydrocarbon group or R^{1'},
      ma is each independently 1 or 2,
   R² is each independently a hydrocarbon group, and
   na is an integer of 1 to 3.
[4] The silane compound according to [2] or [3], wherein R³ is a C₁₋₄ alkyl group.
[5] The silane compound according to any one of [1] to [4], wherein R^{A} is a C₁₋₁₂ alkyl group.
[6] The silane compound according to any one of [1] to [5], wherein R⁶ is a C₁₋₄ alkyl group or a phenyl group.
[7] The silane compound according to any one of [1] to [6], wherein R^{Ar} is an arylene group having 6 to 20 carbon atoms.
[8] The silane compound according to any one of [1] to [7], wherein x is an integer of 1 to 300, y is an integer of 1 to 300, and z is an integer of 1 to 300.
[9] The silane compound according to any one of [1] to [8], wherein x is an integer of 1 to 100, y is an integer of 1 to 100, and z is an integer of 1 to 100.
[10] The silane compound according to any one of [1] to [9], wherein x is an integer of 0 to 500, y is 0, z is an integer of 0 to 500, and x + y + z is 1 or more.
[11] The compound according to any one of [1] to [10], wherein X¹ is a divalent organic group containing an alkylene group having 3 or more carbon atoms.
[12] The compound according to any one of [1] to [11], wherein X¹ is a divalent organic group containing an alkylene group having 11 or more carbon atoms.
[13] The compound according to any one of [1] to [12], wherein
   X¹ is a divalent organic group further containing - CO-, -COO-, -OCO-, -NR⁴¹-, -CONR⁴¹-, -NR⁴¹CO-, -OCONR⁴¹-, - NR⁴¹COO-, -NR⁴¹-CO-NR⁴¹-, -O-, -S-, -O-(CH₂)ₓ₁-CONR⁴¹-, -O-(CH₂) ₓ₁-NR⁴¹CO-, or -O- (CH₂)ₓ₁-CO-,
   R⁴¹ is a hydrogen atom or a C₁₋₆ alkyl group, and
   x1 is an integer of 1 to 30.
[14] The compound according to any one of [1] to [13], wherein
   X¹ is a divalent organic group further containing - CO-, -COO-, -OCO-, -NR⁴¹-, -CONR⁴¹-, -NR⁴¹CO-, -OCONR⁴¹-, - O- (CH₂)ₓ₁-CONR⁴¹-, -O- (CH₂)ₓ₁-NR⁴¹CO-, or -O- (CH₂) ₓ₁-CO-,
   R⁴¹ is a hydrogen atom or a C₁₋₆ alkyl group, and
   x1 is an integer of 1 to 30.
[15] The compound according to any one of [1] to [14], wherein X¹ is a group represented by the following formula:

   -X²¹-X¹⁰-X¹¹-X¹²-

   wherein
   X²¹ is a single bond, -O-, -O- (CₐH₂ₐO)_{b}-, R⁶¹_{b1}R⁶²_{3-b1}C-, R⁶³_{b2}R⁶⁴_{3-b2}Si- or R⁶⁵₂N-,
      R⁶¹ is a divalent organic group,
      R⁶² is a hydrogen atom or a monovalent organic group,
      R⁶³ is a divalent organic group,
      R⁶⁴ is a hydrogen atom or a monovalent organic group,
      R⁶⁵ is a divalent organic group,
      b1 is 2 or 3,
      b2 is 2 or 3,
      a is an integer of 1 to 4,
      b is an integer of 1 to 10,
   X¹⁰ is an alkylene group having 3 or more carbon atoms,
   X¹¹ is a single bond, -CO-, -COO-, -OCO-, -NR⁴¹-, - CONR⁴¹-, -NR⁴¹CO-, -OCONR⁴¹-, -NR⁴¹COO-, -NR⁴¹-CO-NR⁴¹-, -O-, -S-, -O-(CH₂)ₓ-CONR⁴¹-, -O-(CH₂)ₓ-NR⁴¹CO-, or -O-(CH₂)ₓ₁-CO-,
   R⁴¹ is a hydrogen atom or a C₁₋₆ alkyl group,
   x1 is an integer of 1 of 30, and
   X¹² is a single bond or a C₁₋₃₀ alkylene group.
[16] The silane compound according to any one of [1] to [15], wherein R^{H} is a group represented by the following formula (S1), (S2), (S3), (S4), or (S5):

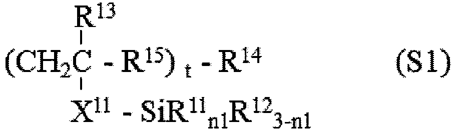

   - SiR¹¹ₙ₁R¹²₃₋ₙ₁ (S2)

   - 8iR^{a1}ₖ₁R^{b1}₁₁R^{c1}ₘ₁ (S3)

   - CR^{d1}ₖ₂R^{e1}₁₂R^{f1}ₘ₂ (S4)

   - NR^{g1}R^{h1} (S5)

   wherein
   R¹¹ is each independently a hydroxyl group or a hydrolyzable group,
   R¹² is each independently a monovalent organic group,
   n1 is each independently an integer of 0 to 3 for each (SiR¹¹ₙ₁R¹²₃₋ₙ₁) unit,
   X¹¹ is each independently a single bond or a divalent organic group,
   R¹³ is each independently a hydrogen atom or a monovalent organic group,
   t is each independently an integer of 2 or more,
   R¹⁴ is each independently a hydrogen atom, a halogen atom, or -X¹¹-SiR¹¹ₙ₁R¹²₃₋ₙ₁,
   R¹⁵ is each independently a single bond, an oxygen atom, an alkylene group having 1 to 6 carbon atoms, or an alkyleneoxy group having 1 to 6 carbon atoms,
   R^{a1} is each independently -Z¹-SiR²¹ₚ₁R²²_{q1}R²³ᵣ₁,
   Z¹ is each independently a divalent organic group,
   R²¹ is each independently -Z^{1'}-SiR^{21'}ₚ₁,R^{22'}_{q1},R^{23'}ᵣ₁,
   R²² is each independently a hydroxyl group or a hydrolyzable group,
   R²³ is each independently a monovalent organic group,
   p1 is each independently an integer of 0 to 3,
   q1 is each independently an integer of 0 to 3,
   r1 is each independently an integer of 0 to 3,
   Z^{1'} is each independently a divalent organic group,
   R^{21'} is each independently -Z^{1"}-SiR^{22"}_{q1"}R^{23"}_{r1"},
   R^{22'} is each independently a hydroxyl group or a hydrolyzable group,
   R^{23'} is each independently a monovalent organic group,
   p1' is each independently an integer of 0 to 3,
   q1' is each independently an integer of 0 to 3,
   r1' is each independently an integer of 0 to 3,
   Z^{1"} is each independently a divalent organic group,
   R^{22"} is each independently a hydroxyl group or a hydrolyzable group,
   R^{23"} is each independently a monovalent organic group,
   q1" is each independently an integer of 0 to 3,
   r1" is each independently an integer of 0 to 3,
   R^{b1} is each independently a hydroxyl group or a hydrolyzable group,
   R^{c1} is each independently a monovalent organic group,
   k1 is each independently an integer of 0 to 3,
   11 is each independently an integer of 0 to 3,
   m1 is each independently an integer of 0 to 3,
   provided that, in the formula (S3), at least two Si atoms to which a hydroxyl group or a hydrolyzable group is bonded are present,
   R^{d1} is each independently -Z²-CR³¹ₚ₂R³²_{q2}R³³ᵣ₂,
   Z² is each independently a single bond, an oxygen atom, or a divalent organic group,
   R³¹ is each independently -Z^{2'}-CR^{32'}_{q2'}R^{33'}_{r2'},
   R³² is each independently -Z³-SiR³⁴ₙ₂R³⁵₃₋ₙ₂,
   R³³ is each independently a hydrogen atom, a hydroxyl group, or a monovalent organic group,
   p2 is each independently an integer of 0 to 3,
   q2 is each independently an integer of 0 to 3,
   r2 is each independently an integer of 0 to 3,
   Z^{2'} is each independently a single bond, an oxygen atom, or a divalent organic group,
   R^{32'} is each independently -Z³-SiR³⁴ₙ₂R³⁵₃₋ₙ₂,
   R^{33'} is each independently a hydrogen atom, a hydroxyl group, or a monovalent organic group,
   q2' is each independently an integer of 0 to 3,
   r2' is each independently an integer of 0 to 3,
   Z³ is each independently a single bond, an oxygen atom, or a divalent organic group,
   R³⁴ is each independently a hydroxyl group or a hydrolyzable group,
   R³⁵ is each independently a monovalent organic group,
   n2 is each independently an integer of 0 to 3,
   R^{e1} is each independently -Z³-SiR³⁴ₙ₂R³⁵₃₋ₙ₂,
   R^{f1} is each independently a hydrogen atom, a hydroxyl group, or a monovalent organic group,
   k2 is each independently an integer of 0 to 3,
   12 is each independently an integer of 0 to 3,
   m2 is each independently an integer of 0 to 3,
   provided that, in the formula (S4), at least two Si atoms to which a hydroxyl group or a hydrolyzable group is bonded are present,
   R^{g1} and R^{h1} are each independently -Z⁴-SiR¹¹ₙ₁R¹²₃₋ₙ₁, - Z⁴-SiR^{a1}ₖ₁R^{b1}₁₁R^{c1}ₘ₁, or -Z⁴-CR^{d1}ₖ₂R^{e1}₁₂R^{f1}ₘ₂, and
   Z⁴ is each independently a single bond, an oxygen atom, or a divalent organic group,
   provided that, in the formula (S5), at least two Si atoms to which a hydroxyl group or a hydrolyzable group is bonded are present.
[17] The silane compound according to [16], wherein R^{H} is a group represented by the formula (S2).
[18] The silane compound according to [16], wherein R^{H} is a group represented by the formula (S3), (S4), or (S5).
[19] The silane compound according to any one of [1] to [18], wherein
   R^{A} is a C₁₋₄ alkyl group, 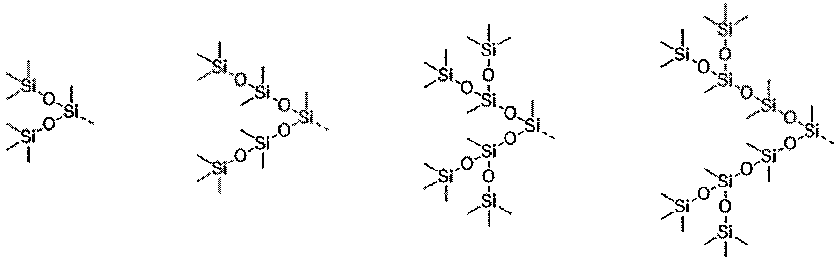 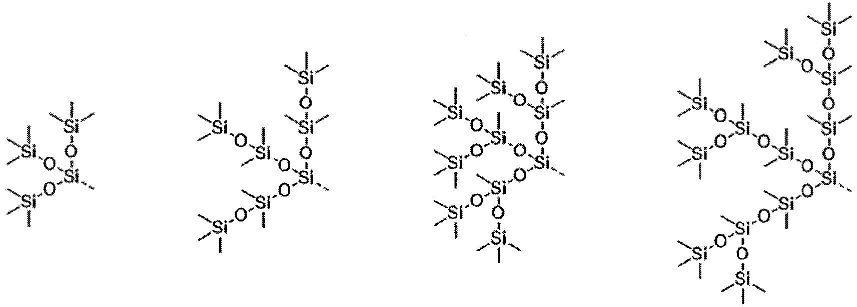 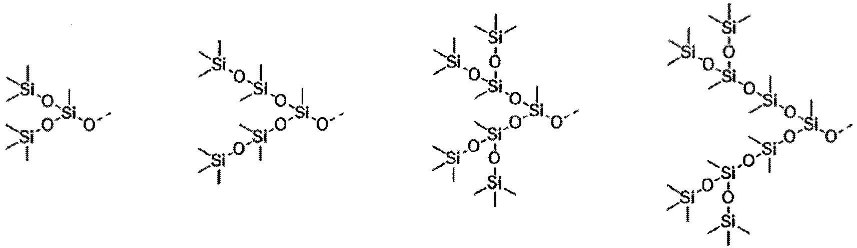 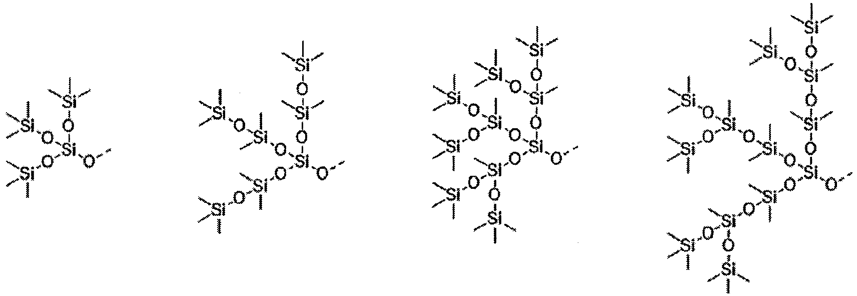 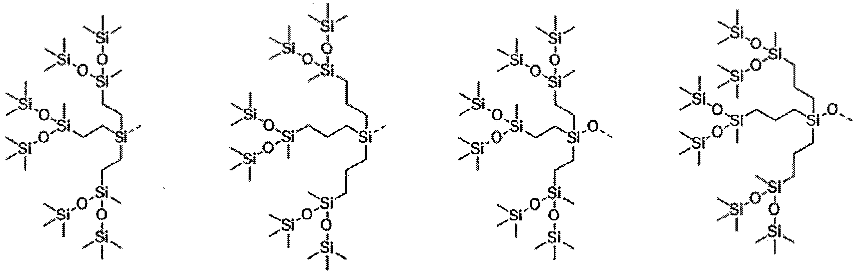
   R^{S} is - (SiR⁷⁵₂-O-)ₓ-;
   R⁶ is a C₁₋₄ alkyl group;
   R^{Ar} is a phenylene group or a naphthylene group, or a benzenetriyl group, optionally substituted with a fluorine atom or a C₁₋₄ alkoxy group;
   X¹ is a group represented by the following formula:

      -X²¹-X¹⁰-

      wherein
      X²¹ is a single bond, -O-, or -O-(C₂H₄O)_{b}-,
      b is an integer of 2 to 10, and
      X¹⁰ is an alkylene group having 11 to 24 carbon atoms;
      R^{H} is -Si(OR)₃ or -SiR(OR)₂;
      α is 1;
      β is 1;
      γ1 is 0 or 1;
      γ2 is 0 or 1; and
      _{γ3} is 1 or 2.
[20] The compound according to any one of [1] to [19], which is selected from: 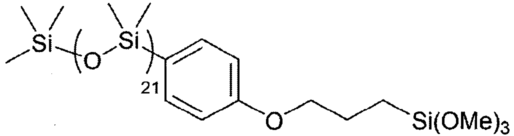 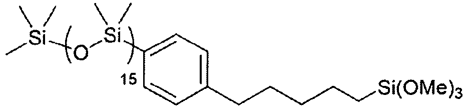 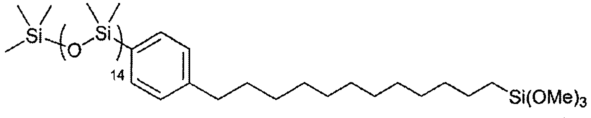 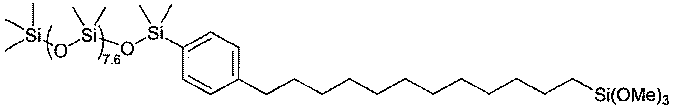 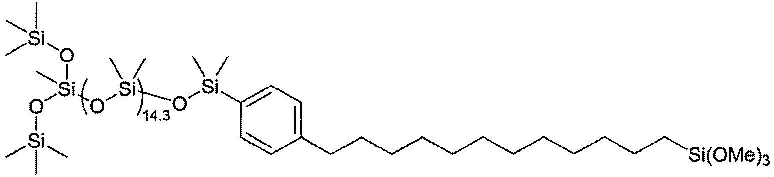 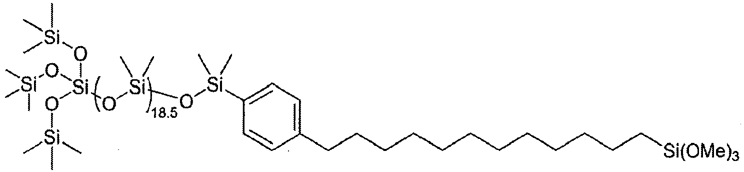 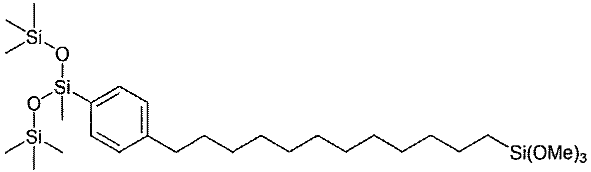 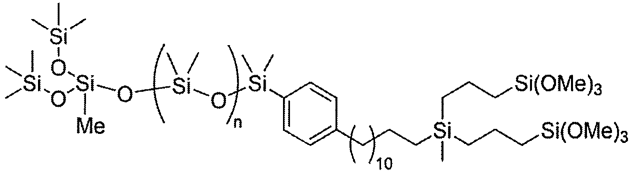 wherein n is 16, 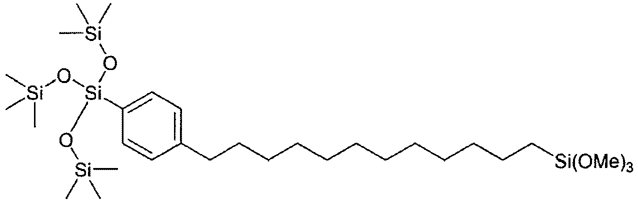 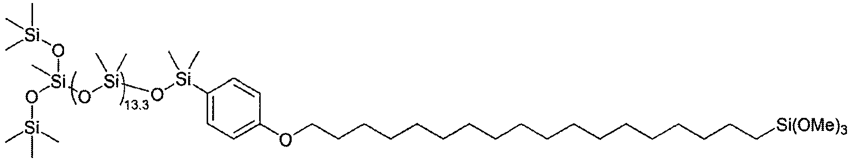 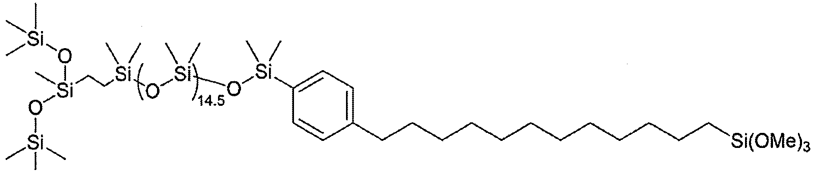 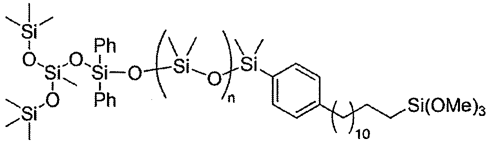 wherein n is 16, 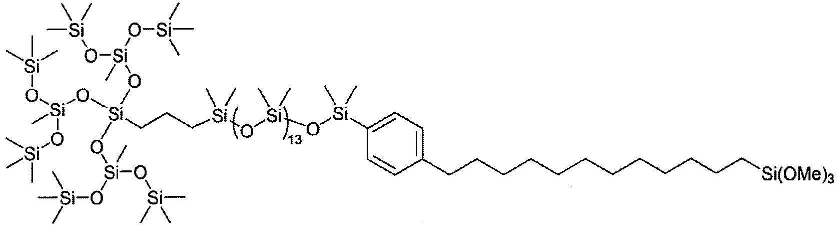 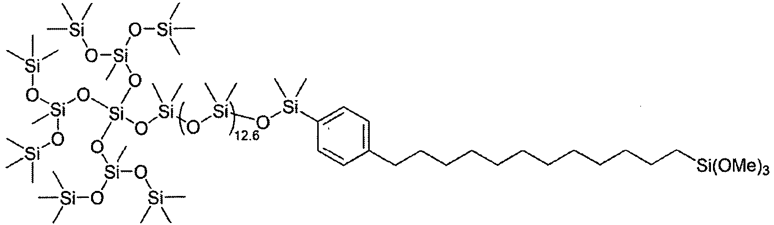 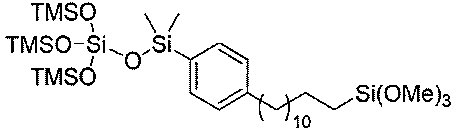 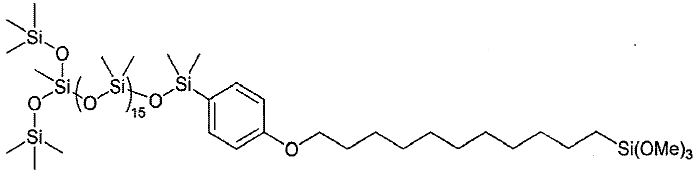 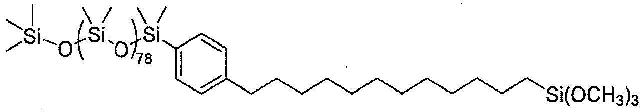 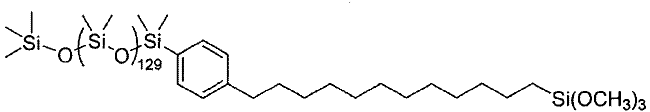 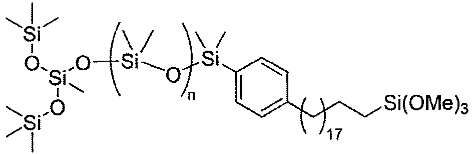 wherein n is 12, 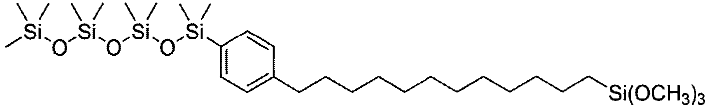 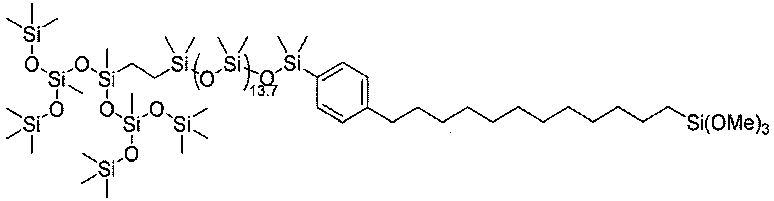 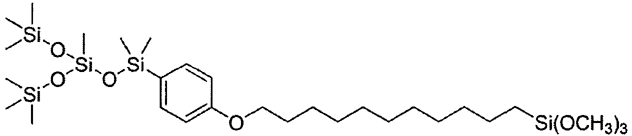 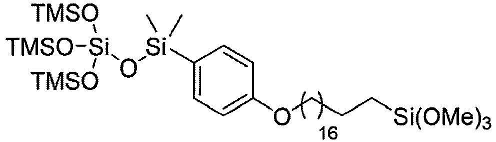 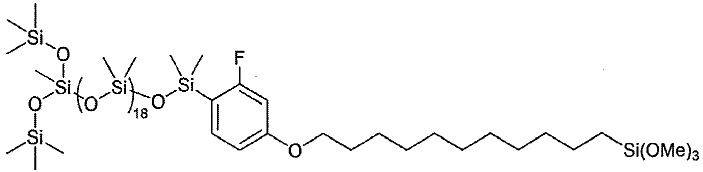 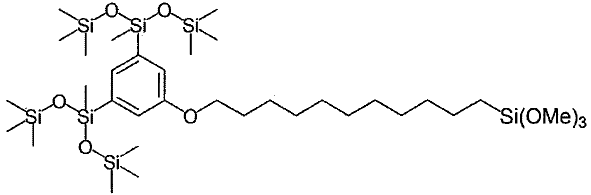 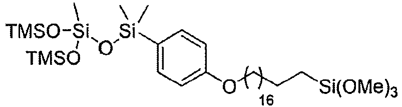 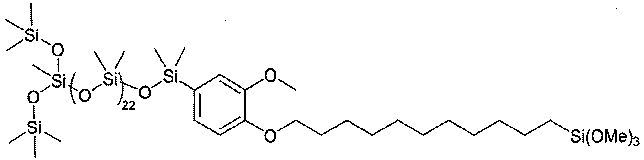 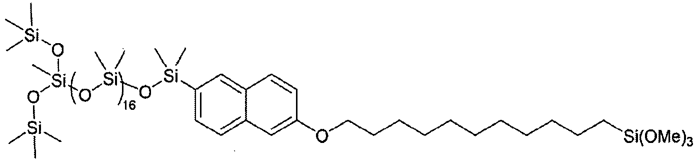 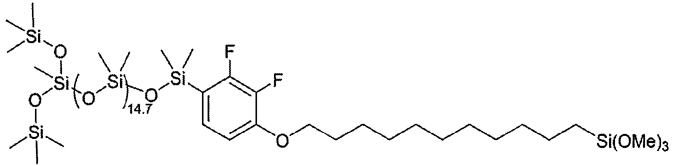 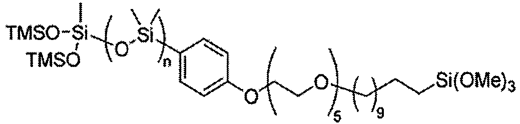 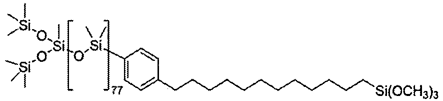 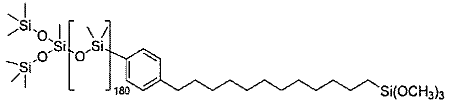 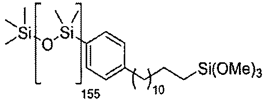 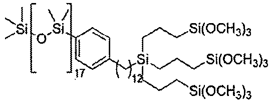 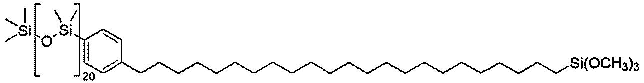 wherein TMS is a trimethylsilane group.
[21] A compound represented by the following formula (1a1), (1a2), (1a3), or (1a4):

   R^{A}-R^{S}-SiR⁶₂-R^{Ar}-R^{x}-CONR⁸¹- (CH₂) _{za}-CH=CH₂ (1a1)

   R^{A}-R^{S}-SiR⁶₂-R^{Ar}-R^{X}-CON [- (CH₂) _{za}-CH=CH₂]₂ (1a2)

   R^{A}-R^{S}-SiR⁶₂-R^{Ar}-R^{X}-CONR⁸¹- (CH₂) _{zb}-CR⁸² [- (CH₂) _{za}-CH=CH₂]2 (1a3)

   R^{A}-R^{S}-SiR⁶₂-R^{Ar}-R^{X}-CONR⁸¹- (CH₂)_{zb}-C[-(CH₂) _{za}-CH=CH₂]3 (1a4)

   wherein
   R^{A} is a hydrocarbon group, or a monovalent group containing one or more Si atoms to which neither a hydroxyl group nor a hydrolyzable group is directly bonded;
   R^{S} is a group represented by the following formula: 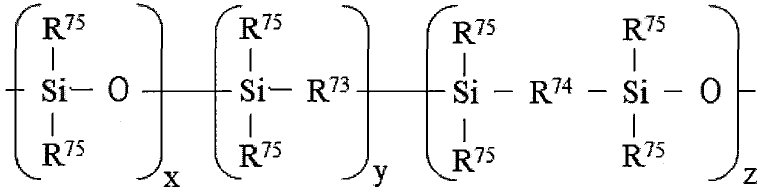 wherein
   R⁷³ is each independently a single bond, a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
   R⁷⁴ is each independently a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
      R⁷⁶ is each independently a C₁₋₆ alkylene group,
      R⁷⁷ is each independently an optionally substituted phenylene group or naphthylene group,
      R⁷⁸ is each independently a single bond or a C₁₋₆ alkylene group,
      R⁷⁹ is each independently a single bond or an oxygen atom,
   R⁷⁵ is each independently a hydrocarbon group,
   x is an integer of 0 to 500,
   y is an integer of 0 to 500,
   z is an integer of 0 to 500,
   x + y + z is 1 or more, and
   the occurrence order of the respective repeating units enclosed in parentheses provided with x, y, or z is not limited in the formula;
   R⁶ is each independently a hydrocarbon group;
   R^{Ar} is a divalent aromatic group;
   R^{X} is a single bond or a divalent group;
   R⁸¹ is a hydrogen atom or a monovalent organic group;
   R⁸² is a hydrogen atom or a monovalent organic group;
   za is an integer of 0 to 30; and
   zb is an integer of 0 to 30.
[22] A compound represented by the following formula (1b1), (1b2), (1b3), or (1b4):

   Hal-R^{Ar}-R^{X}-CONR⁶¹- (CH₂)_{z}-CH=CH₂ (1b1)

   Hal-R^{Ar}-R^{X}CON[-(CH₂)_{z}-CH=CH₂]₂ (1b2)

   Hal-R^{Ar}-R^{X}-CONR⁸¹-(CH₂)_{zb}-CR⁸²[-(CH₂)_{za}-CH=CH₂]₂ (1b3)

   Hal-R^{Ar}-R^{X}-CONR⁸¹- (CH₂) _{zb}-C[- (CH₂) _{za}-CH=CH₂]3 (1b4)

   wherein
   Hal is halogen,
   R^{Ar} is a divalent aromatic group,
   R^{X} is a single bond or a divalent group,
   R⁸¹ is a hydrogen atom or a monovalent organic group,
   R⁸² is a hydrogen atom or a monovalent organic group,
   za is an integer of 0 to 30, and
   zb is an integer of 0 to 30.
[23] A compound represented by the following formula (1c1), (1c2), or (1c3):

   R^{A}-R⁸-SiR⁶₂-R^{Ar}-R^{X}- (CH₂) _{za}-CH=CH₂ (1c1)

   R^{A}-R^{S}-SiR⁶₂-R^{Ar}-R^{X}-SiR⁸³ [- (CH₂) _{za}-CH=CH₂ (1c2)

   R^{A}-R^{S}-SiR⁶₂-R^{Ar}-R^{X}-Si [- (CH₂) _{za}-CH=CH₂]₃ (1c3)

   wherein
   R^{A} is a hydrocarbon group, or a monovalent group containing one or more Si atoms to which neither a hydroxyl group nor a hydrolyzable group is directly bonded;
   R^{S} is a group represented by the following formula: 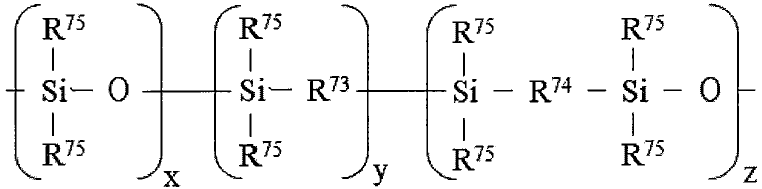 wherein
   R⁷³ is each independently a single bond, a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
   R⁷⁴ is each independently a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
      R⁷⁶ is each independently a C₁₋₆ alkylene group,
      R⁷⁷ is each independently an optionally substituted phenylene group or naphthylene group,
      R⁷⁸ is each independently a single bond or a C₁₋₆ alkylene group,
      R⁷⁹ is each independently a single bond or an oxygen atom,
   R⁷⁵ is each independently a hydrocarbon group,
   x is an integer of 0 to 500,
   y is an integer of 0 to 500,
   z is an integer of 0 to 500,
   x + y + z is 1 or more, and
   the occurrence order of the respective repeating units enclosed in parentheses provided with x, y, or z is not limited in the formula;
   R⁶ is each independently a hydrocarbon group;
   R^{Ar} is a divalent aromatic group;
   R^{X} is a single bond or a divalent group;
   R⁸³ is a hydrogen atom or a monovalent organic group;
   za is an integer of 0 to 30; and
   zb is an integer of 0 to 30.
[24] A compound represented by the following formula (1d1), (1d2), or (1d3):

   Hal-R^{Ar}-R^{X}-(CH₂)_{za}-CH=CH₂ (1d1)

   Hal-R^{Ar}-R^{X}-SiR⁸³[-(CH₂)_{za}-CH=CH₂]₂ (1d2)

   Hal-R^{Ar}-R^{X}-Si[-(CH₂)_{za}-CH=CH₂]₃ (1d3)

   wherein
   Hal is halogen,
   R^{Ar} is a divalent aromatic group,
   R^{X} is a single bond or a divalent group,
   R⁸³ is a hydrogen atom or a monovalent organic group,
   za is an integer of 0 to 30, and
   zb is an integer of 0 to 30.
[25] A silane compound represented by the following formula:

   R¹ₙₐR²₃₋ₙₐSi- (CH₂) p-SiR²₂-X

   wherein
   R¹ is each independently a group represented by -(R⁴-SiR³₂)ₘₐ-R³,
      R⁴ is each independently an oxygen atom or a C₁₋₆ alkylene group,
      R³ is each independently a hydrocarbon group or R^{1'},
         R^{1'} has the same meaning as R¹,
      ma is each independently an integer of 1 to 5,
   provided that the number of R^{1'} in R¹ is 20 or less,
   R² is each independently a hydrocarbon group,
   na is an integer of 1 to 3,
   p is an integer of 0 to 10, and
   X is a hydrogen atom or a chlorine atom.
[26] A silane compound represented by the following formula:

   R¹ₙₐR²₃₋ₙₐSi- (CH₂) _{q}-CH=CH₂

   wherein
   R¹ is each independently a group represented by -(R⁴-SiR³₂)ₘₐ-R³,
      R⁴ is each independently an oxygen atom or a C₁₋₆ alkylene group,
      R³ is each independently a hydrocarbon group or R^{1'},
         R^{1'} has the same meaning as R¹,
      ma is each independently an integer of 1 to 5,
   provided that the number of R^{1'} in R¹ is 20 or less,
   R² is each independently a hydrocarbon group,
   na is an integer of 1 to 3, and
   q is an integer of 0 to 10.
[27] A composition comprising the compound represented by formula (1) according to any one of [1] to [20] and a compound represented by formula (2):

   ((X³)_{γ}-R^{Ar})_{α}-X¹-(R^{H})β (2)

   wherein
   X³ is hydrogen, fluorine, chlorine, bromine, iodine, or a hydroxyl group,
   R^{Ar} is a di- to hexavalent aromatic group,
   X¹ is a di- to decavalent group,
   R^{H} is a monovalent group containing a Si atom to which a hydroxyl group or a hydrolyzable group is bonded,
   α is an integer of 1 to 9,
   β is an integer of 1 to 9, and
   y is the valence of R^{Ar} minus 1.
[28] The composition according to [27], comprising the compound represented by formula (2) in an amount of 0.1% by mass to 30% by mass based on the sum of the compound represented by formula (1) and the compound represented by the formula (2).
[29] The composition according to [27] or [28], wherein the compound represented by formula (2) is the following compound: 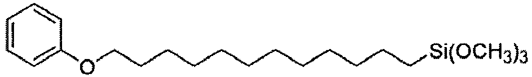 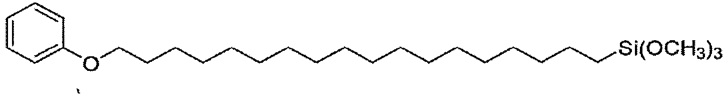 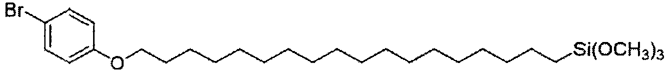
[30] The composition according to any one of [27] to [29], comprising the compound represented by formula (1) according to [20] and the compound represented by formula (2) according to [28].
[31] A surface-treating agent comprising the compound according to any one of [1] to [20].
[32] The surface-treating agent according to [31], further comprising a condensate of the compound according to any one of [1] to [20].
[33] The surface-treating agent according to [31] or [32], further comprising a solvent selected from compounds represented by R⁸¹OR⁸², R⁸³ₙ₈C₆H₆₋ₙ₈, R⁸⁴R⁸⁵R⁸⁶Si- (O-SiR⁸⁷R⁸⁸)ₘ₈-R⁸⁹, and (OSiR⁸⁷R⁸⁸)ₘ₉,
   Wherein
   R⁸¹ to R⁸⁹ are each independently a monovalent organic group having 1 to 10 carbon atoms,
   m8 is an integer of 1 to 6,
   m9 is an integer of 4 to 8, and
   n8 is an integer of 0 to 6.
[34] The surface-treating agent according to [33], wherein the solvent is R⁸⁴R⁸⁵R⁸⁶Si- (O-SiR⁸⁷R⁸⁸)ₘ₈-R⁸⁹.
[35] The surface-treating agent according to [33] or [34], wherein the solvent is hexamethyldisiloxane, hexaethyldisiloxane, octamethyltrisiloxane, octamethylcyclotetrasiloxane, or decamethylcyclopentasiloxane.
[36] The surface-treating agent according to any one of [31] to [35], which is for vacuum deposition.
[37] The surface-treating agent according to any one of [31] to [35], which is for wet coating.
[38] A pellet comprising the surface-treating agent according to any one of [31] to [37].
[39] An article comprising a substrate and a layer on the substrate, wherein the layer is formed from the silane compound according to any one of [1] to [20].
[40] The article according to [39], comprising, between the substrate and the aforementioned layer, a silicon oxide-containing intermediate layer.
[41] The article according to [40], wherein the intermediate layer comprises an alkali metal atom.
[42] The article according to [41], wherein the alkali metal atom is at least partially sodium atom.
[43] The article according to any one of [38] to [41], which is an optical member.
[44] The article according to any one of [38] to [42], which is a display.

### Advantageous Effect of Invention

The present disclosure can provide a silane compound capable of forming a surface-treating layer having higher friction durability.

### Description of Embodiments

The term "monovalent organic group" as used herein refers to a carbon-containing monovalent group. The monovalent organic group is not limited, and may be a hydrocarbon group or a derivative thereof. The derivative of a hydrocarbon group refers to a group that has one or more of N, O, S, Si, amide, sulfonyl, siloxane, carbonyl, carbonyloxy, and the like at the terminal or in the molecular chain of the hydrocarbon group. The term simply referred to as an "organic group" means a monovalent organic group. The term "divalent organic group" refers to a carbon-containing divalent group. The divalent organic group may be, for example, a divalent group obtained by further removing one hydrogen atom from the organic group. Similarly, an organic group having a valence of 3 or more refers to a group obtained by removing a predetermined number of hydrogen atoms from an organic group.

The "hydrocarbon group" as used herein refers to a group containing carbon and hydrogen and a group in which a hydrogen atom is removed from the hydrocarbon. Examples of the hydrocarbon group include, but are not limited to, C₁₋₂₀ hydrocarbon groups, such as an aliphatic hydrocarbon group and an aromatic hydrocarbon group. The "aliphatic hydrocarbon group" may be either linear, branched, or cyclic, and may be either saturated or unsaturated. The hydrocarbon group may contain one or more ring structures. The hydrocarbon group may be substituted with one or more substituents.

Examples of the substituent of the "hydrocarbon group" as used herein include, but are not limited to, a halogen atom; and one or more groups selected from a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5- to 10-membered heterocyclyl group, a 5- to 10-membered unsaturated heterocyclyl group, a C₆₋₁₀ aryl group, and a 5- to 10-membered heteroaryl group each optionally substituted with one or more halogen atoms.

The "hydrolyzable group" as used herein refers to a group that can undergo a hydrolysis reaction, i.e., refers to a group that can be removed from the main backbone of the compound by a hydrolysis reaction. Examples of the hydrolyzable group include -OR^{h}, -OCOR^{h}, -O-N=CR^{h}₂, -NR^{h}₂, -NHR^{h}, or -NCO (in these formulae, R^{h} represents a substituted or unsubstituted alkyl group having 1 to 4 carbon atoms), and -OR^{h} (i.e., an alkoxy group) is preferable. Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable.

### [Silane compound]

The silane compound of the present disclosure is represented by the following formula (1):

**((R^{A} -(R^{S})_{γ1} -**(SiR⁶₂)_{γ2})_{γ3}**R^{Ar})**α**-X¹-(R^{H})**_{β} (1)

wherein
R^{A} is a monovalent group containing one or more Si atoms to which neither a hydroxyl group nor a hydrolyzable group is directly bonded, or a hydrocarbon group;
R^{S} is a group represented by the following formula: 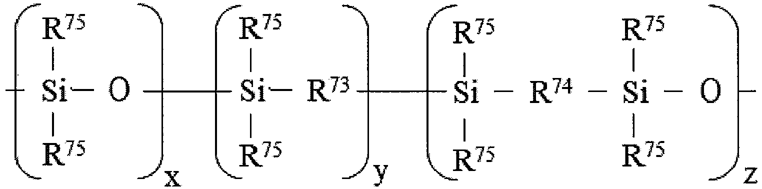 wherein
R⁷³ is each independently a single bond, a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁴ is each independently a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
   R⁷⁶ is each independently a C₁₋₆ alkylene group,
   R⁷⁷ is each independently an optionally substituted phenylene group or naphthylene group,
   R⁷⁸ is each independently a single bond or a C₁₋₆ alkylene group,
   R⁷⁹ is each independently a single bond or an oxygen atom,
R⁷⁵ is each independently a hydrocarbon group,
x is an integer of 0 to 500,
y is an integer of 0 to 500,
z is an integer of 0 to 500,
x + y + z is 1 or more, and
the occurrence order of the respective repeating units enclosed in parentheses provided with x, y, or z is not limited in the formula;
R⁶ is each independently a hydrocarbon group;
R^{Ar} is a di- to hexavalent aromatic group;
X¹ is a di- to decavalent group;
R^{H} is a monovalent group containing a Si atom to which a hydroxyl group or a hydrolyzable group is bonded;
α is an integer of 1 to 9;
β is an integer of 1 to 9;
γ1 is 0 or 1;
γ2 is 0 or 1; and
γ3 is an integer of 1 to 5.

R^{A} is a hydrocarbon group, or a monovalent group containing one or more Si atoms to which neither a hydroxyl group nor a hydrolyzable group is directly bonded,

In one embodiment, R^{A} is a hydrocarbon group.

The hydrocarbon group is preferably an alkyl group.

The alkyl group may be linear or may be branched. In one embodiment, the alkyl group is linear. In another embodiment, the alkyl group is branched. The alkyl group is preferably a C₁₋₁₂ alkyl group, more preferably a C₁₋₆ alkyl group, even more preferably a C₁₋₄ alkyl group such as a C₁₋₃ alkyl group, specifically a methyl group, an ethyl group, a n-propyl group, an iso-propyl group, a n-butyl group, or a tert-butyl group, and particularly preferably a methyl group or an n-butyl group.

In one embodiment, R^{A} is a methyl group.

In one embodiment, R^{A} is a n-butyl group.

In one embodiment, R^{A} is a group represented by the following group A:

**R¹ₙₐ^{R2}₃₋ₙₐ^{Si}** - **R⁰** - (A)

wherein
R¹ is each independently a group represented by -(R⁴-SiR³₂)ₘₐ-R³,
   R⁴ is each independently an oxygen atom or a C₁₋₆ alkylene group,
   R³ is each independently a hydrocarbon group or R^{1'},
      R^{1'} has the same meaning as R¹,
   ma is each independently an integer of 1 to 5,
provided that the number of R^{1'} in R¹ is 20 or less,
R² is each independently a hydrocarbon group,
na is an integer of 1 to 3, and
R⁰ is a single bond or an oxygen atom.

R¹ is each independently a group represented by -(R⁴-SiR³₂)ₘₐ-R³.

R⁴ is each independently an oxygen atom or a C₁₋₆ alkylene group.

The C₁₋₆ alkylene group in R⁴ may be linear or may be branched. The C₁₋₆ alkylene group is preferably a C₁₋₄ alkylene group, and more preferably a C₂₋₄ alkylene group.

In one embodiment, R⁴ is O.

In one embodiment, some R⁴ groups are O, and other R⁴ groups are C₁₋₆ alkylene groups.

R³ is each independently a hydrocarbon group or R^{1'}.

The hydrocarbon group in R³ may preferably be an alkyl group or an aryl group.

The alkyl group may be linear or may be branched. The alkyl group is preferably an alkyl group having 1 to 6 carbon atoms, and more preferably an alkyl group having 1 to 4 carbon atoms. The alkyl group is particularly preferably a methyl group, an ethyl group, a n-propyl group, an iso-propyl group, a n-butyl group, or a tert-butyl group.

The aryl group may be monocyclic or may be polycyclic. The aryl group is preferably an aryl group having 6 to 20 carbon atoms, and more preferably an aryl group having 6 to 10 carbon atoms. The aryl group is particularly preferably a phenyl group.

R³ is preferably an alkyl group and more preferably an alkyl group having 1 to 4 carbon atoms, such as a methyl group, an ethyl group, a n-propyl group, an iso-propyl group, a n-butyl group, or a tert-butyl group.

In one embodiment, R³ is a methyl group.

In one embodiment, R³ is a n-butyl group.

R^{1'} has the same meaning as R¹. That is, R^{1'} is - (R⁴-SiR³₂)ₘₐ-R³. However, in R¹, the number of R^{1'} is 20 or less, preferably 10 or less, more preferably 6 or less, and even more preferably 3 or less.

In one embodiment, R³ is each independently a hydrocarbon group or R^{1'}.

In a preferable embodiment, R³ is each independently a hydrocarbon group.

In one embodiment, R³ is -(R⁴'-SiR³'₂)_{ma'}-R^{3'} wherein
R^{3'} is each independently a hydrocarbon group or - (R⁴-SiR³₂)ₘₐ-R³,
at least one R^{3'} is -(R⁴-SiR³₂)ₘₐ-R³,
   R³ is each independently a hydrocarbon group,
   R⁴ is each independently an oxygen atom or a C₁₋₆ alkylene group,
   ma is each independently an integer of 1 to 5,
R^{4'} is each independently an oxygen atom or a C₁₋₆ alkylene group, and
ma' is each independently an integer of 1 to 5.

In another embodiment, R³ is -(R^{4'}-SiR^{3'}₂)_{ma'}-R^{3'} wherein
R^{3'} is each independently a hydrocarbon group or - (R^{4"}-SiR^{3"}₂)_{ma"}-R^{3"},
at least one R^{3'} is - (R^{4"}-SiR^{3"}₂)_{ma"}-R^{3"},
   R^{3"} is each independently a hydrocarbon group or - (R⁴-SiR³₂)ₘₐ-R³,
   at least one R^{3"} is -(R⁴-SiR³₂)ₘₐ-R³,
      R³ is each independently a hydrocarbon group,
      R⁴ is each independently an oxygen atom or a C₁₋₆ alkylene group,
      ma is each independently an integer of 1 to 5,
   R^{4"} is each independently an oxygen atom or a C₁₋₆ alkylene group,
   ma" is each independently an integer of 1 to 5,
R^{4'} is each independently an oxygen atom or a C₁₋₆ alkylene group, and
ma' is each independently an integer of 1 to 5.

ma is each independently an integer of 1 to 5, and preferably 1 or 2.

R² is each independently a hydrocarbon group.

The hydrocarbon group in R² may preferably be an alkyl group or an aryl group.

The alkyl group may be linear or may be branched. The alkyl group is preferably an alkyl group having 1 to 6 carbon atoms, and more preferably an alkyl group having 1 to 4 carbon atoms. The alkyl group is particularly preferably a methyl group, an ethyl group, a n-propyl group, an iso-propyl group, a n-butyl group, or a tert-butyl group.

The aryl group may be monocyclic or may be polycyclic. The aryl group is preferably an aryl group having 6 to 20 carbon atoms, and more preferably an aryl group having 6 to 10 carbon atoms. The aryl group is particularly preferably a phenyl group.

R² is preferably an alkyl group, more preferably an alkyl group having 1 to 4 carbon atoms, and even more preferably a methyl group.

na is 1 to 3. In one embodiment, na is 2. In another embodiment, na is 3. Note that na, when R^{1'} is present, is independently selected for (R⁴-SiR³₂)ₘₐ.

R⁶ is a single bond or an oxygen atom.

In one embodiment, R⁰ is a single bond.

In another embodiment, R⁰ is an oxygen atom.

In R¹, 2 or more, preferably 3 or more, more preferably 4 or more, and even more preferably 6 or more, such as 8 or more, 9 or more, 10 or more, or 12 or more Si-O bonds are present.

In a preferable embodiment, in the group A,
R¹ is each independently a group represented by -(R⁴-SiR³₂)ₘₐ-R³,
   R⁴ is each independently an oxygen atom or a C₁₋₆ alkylene group,
   R³ is each independently a hydrocarbon group (preferably an alkyl group having 1 to 4 carbon atoms) or R^{1'}, and preferably a hydrocarbon group (preferably an alkyl group having 1 to 4 carbon atoms),
      R^{1'} has the same meaning as R¹,
   ma is 1 or 2,
R² is each independently a hydrocarbon group and preferably an alkyl group having 1 to 4 carbon atoms, and
na is 1 to 3.

Examples of the group A include, but are not limited to, the following groups:

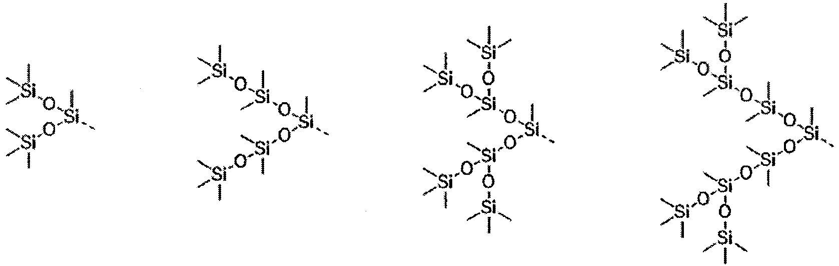

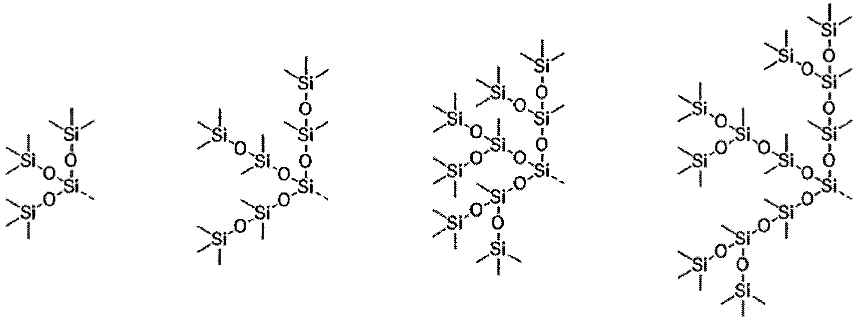

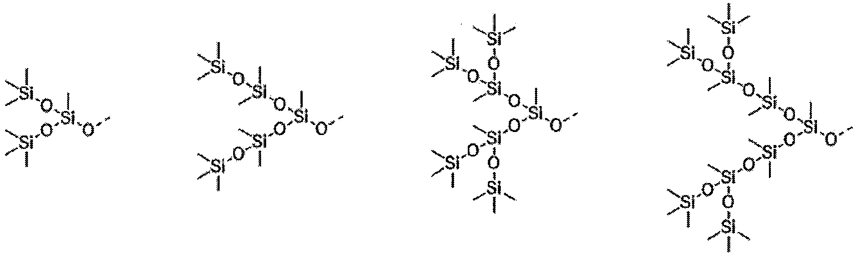

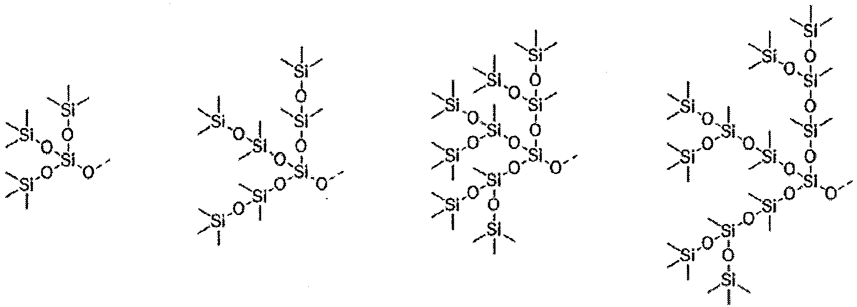

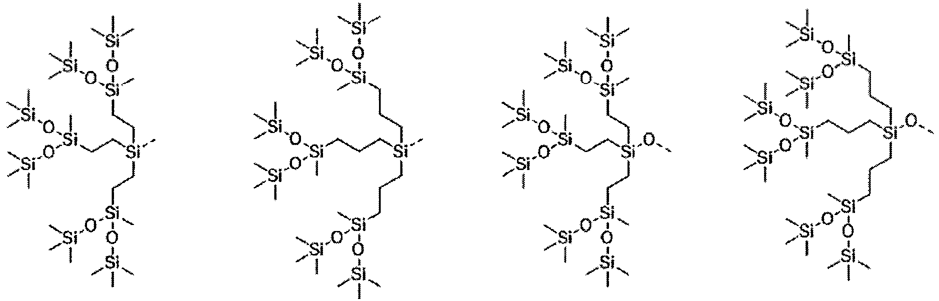

In one embodiment, the group A is the following group:

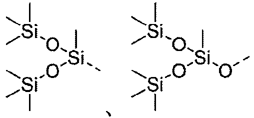

In one embodiment, the group A is the following group:

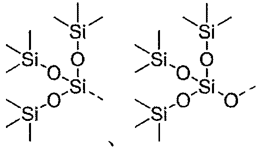

R^{S} is a group represented by the following formula: 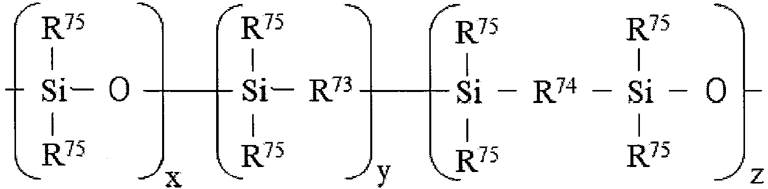 (wherein
R⁷³ is each independently a single bond, a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁴ is each independently a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
   R⁷⁶ is each independently a C₁₋₆ alkylene group,
   R⁷⁷ is each independently an optionally substituted phenylene group or naphthylene group,
   R⁷⁸ is each independently a single bond or a C₁₋₆ alkylene group,
   R⁷⁹ is each independently a single bond or an oxygen atom,
R⁷⁵ is each independently a hydrocarbon group,
x is an integer of 0 to 500,
y is an integer of 0 to 500,
z is an integer of 0 to 500,
x + y + z is 1 or more, and
the occurrence order of the respective repeating units enclosed in parentheses provided with x, y, or z is not limited in the formula).

R⁷³ is each independently a single bond, a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-, and is preferably a C₁₋₁₂ alkylene group or -R⁷⁶-OR⁷⁶-.

In one embodiment, R⁷³ is a single bond.

In one embodiment, R⁷³ is a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-, and is preferably a C₁₋₁₂ alkylene group or -R⁷⁶-O-R⁷⁶-.

R⁷⁴ is each independently a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-.

In one embodiment, R⁷⁴ is each independently a C₁₋₁₂ alkylene group or -R⁷⁶-O-R⁷⁶-.

In another embodiment, R⁷⁴ is each independently - R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-.

In one embodiment, R⁷³ is each independently a C₁₋₁₂ alkylene group or -R⁷⁶-O-R⁷⁶-, and R⁷⁴ is each independently a C₁₋₁₂ alkylene group or -R⁷⁶-O-R⁷⁶-.

In another embodiment, R⁷³ is each independently a C₁₋₁₂ alkylene group or -R⁷⁶-O-R⁷⁶-, and R⁷⁴ is each independently -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,

The C₁₋₁₂ alkylene group may be linear or may be branched. The C₁₋₁₂ alkylene group is preferably linear.

The C₁₋₁₂ alkylene group is preferably a C₂₋₈ alkylene group, and more preferably a C₂₋₆ alkylene group.

R⁷⁶ is each independently a C₁₋₆ alkylene group. The C₁₋₆ alkylene group may be linear or may be branched. The C₁₋₆ alkylene group is preferably linear.

The C₁₋₆ alkylene group is preferably a C₂₋₄ alkylene group, and more preferably a C₂₋₃ alkylene group.

In a preferable embodiment, in a group containing a plurality of R⁷⁶, all R⁷⁶ are the same group.

R⁷⁷ is each independently an optionally substituted arylene group.

In one embodiment, R⁷⁷ is each independently:

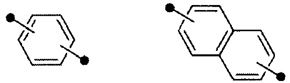

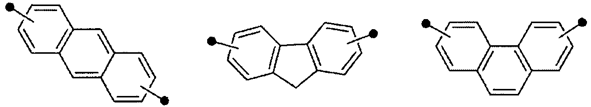

In one embodiment, R⁷⁷ is a phenylene group.

In another embodiment, R⁷⁷ is a naphthylene group.

The arylene group may have a substituent. The number of substituents is not limited, and is, for example, 1 to 4, and preferably 1 or 2.

In one embodiment, the phenylene group and the naphthylene group may have a substituent. The number of substituents is not limited, and is, for example, 1 to 4, and preferably 1 or 2. The substituted phenylene group is preferably 2,5-substituted phenylene.

The substituent with respect to the arylene group is each independently -R⁴¹-R⁴²

R⁴¹ is a single bond, an oxygen atom, or a sulfur atom, preferably a single bond or an oxygen atom, and more preferably an oxygen atom.

R⁴² is a C₁₋₁₂ alkyl group, - (O-R⁴³)ₚ, -R⁴⁴-R⁴⁵, or -R⁴⁴-OR⁴⁶, all of which are optionally substituted with a halogen.

The halogen is fluorine, chlorine, bromine, or iodine, and is preferably fluorine.

The C₁₋₁₂ alkyl group in R⁴² may be linear or may be branched.

R⁴³ is a C₁₋₆ alkylene group, and preferably a C₂₋₄ alkylene group. Such an alkylene group may be linear or may be branched.

R⁴⁴ is a C₁₋₁₂ alkylene group, and preferably a C₁₋₆ alkylene group. Such an alkylene group may be linear or may be branched.

R⁴⁵ is -CH=CH₂ or -OCOCH=CH₂.

R⁴⁶ is a hydrogen atom or a C₁₋₆ alkyl group. Such an alkyl group may be linear or may be branched. The C₁₋₆ alkyl group is preferably a C₁₋₃ alkyl group, more preferably a C₁₋₂ alkyl group, and even more preferably a methyl group.

R⁷⁸ is each independently a single bond or a C₁₋₆ alkylene group. Such a C₁₋₆ alkylene group may be linear or may be branched.

In one embodiment, R⁷⁸ is a single bond.

In another embodiment, R⁷⁸ is a C₁₋₆ alkylene group.

R⁷⁹ is each independently a single bond or an oxygen atom.

In one embodiment, R⁷⁹ is a single bond.

In another embodiment, R⁷⁹ is an oxygen atom.

R⁷⁵ is each independently a hydrocarbon group. Such a hydrocarbon group may be substituted.

R⁷⁵ is, each independently, preferably an unsubstituted hydrocarbon group or a hydrocarbon group substituted with a halogen atom. Such a halogen atom is preferably a fluorine atom.

R⁷⁵ is, each independently, preferably a C₁₋₁₈ alkyl group or aryl group optionally substituted with a halogen atom, and more preferably a C₁₋₁₈ alkyl group or aryl group.

The C₁₋₁₈ alkyl group may be linear or may be branched, and is preferably linear. The C₁₋₁₈ alkyl group is preferably a C₁₋₁₀ alkyl group, more preferably a C₁₋₆ alkyl group, even more preferably a C₁₋₄ alkyl group, and yet more preferably a methyl group.

The aryl group is preferably a phenyl group.

In one embodiment, R⁷⁵ is each independently a C₁₋₆ alkyl group, preferably a C₁₋₄ alkyl group, and more preferably a methyl group.

In another embodiment, R⁷⁵ is a phenyl group.

In another embodiment, R⁷⁵ is each independently a methyl group or a phenyl group, and preferably a methyl group.

x is an integer of 0 to 500. x may be 500 or less, preferably 300 or less, more preferably 100 or less, even more preferably 50 or less, and particularly preferably 30 or less. x may be 0 or more, preferably 1 or more, more preferably 3 or more, even more preferably 5 or more, and even more preferably 10 or more, such as 30 or more, or 50 or more. x from the viewpoint of abrasion resistance is preferably an integer of 1 to 50, and more preferably an integer of 1 to 30.

In one embodiment, x is 0.

In one embodiment, x is 1 to 500, preferably an integer of 1 to 300, more preferably an integer of 1 to 100, even more preferably an integer of 5 to 50, and yet more preferably an integer of 10 to 30.

In one embodiment, x is 30 to 500, preferably an integer of 30 to 300, and more preferably an integer of 30 to 200.

In one embodiment, x is 50 to 500, preferably an integer of 50 to 300, and more preferably an integer of 50 to 100.

In one embodiment, x is 100 to 500, preferably an integer of 100 to 300, and more preferably an integer of 100 to 200.

y is an integer of 0 to 500. y may be 500 or less, preferably 300 or less, more preferably 100 or less, even more preferably 50 or less, and particularly preferably 30 or less. y may be 0 or more, preferably 1 or more, more preferably 3 or more, even more preferably 5 or more, and even more preferably 10 or more, such as 30 or more, or 50 or more. y from the viewpoint of abrasion resistance is preferably an integer of 1 to 50, and more preferably an integer of 1 to 30.

In one embodiment, y is 0.

In one embodiment, y is 1 to 500, preferably an integer of 1 to 300, more preferably an integer of 1 to 100, even more preferably an integer of 5 to 50, and yet more preferably an integer of 10 to 30.

z is an integer of 0 to 500. z may be 500 or less, preferably 300 or less, more preferably 100 or less, even more preferably 50 or less, and particularly preferably 30 or less. z may be 0 or more, preferably 1 or more, more preferably 3 or more, even more preferably 5 or more, and even more preferably 10 or more, such as 30 or more, or 50 or more. z from the viewpoint of abrasion resistance is preferably an integer of 1 to 50, and more preferably an integer of 1 to 30.

In one embodiment, z is 0.

In one embodiment, z is 1 to 500, preferably an integer of 1 to 300, more preferably an integer of 1 to 100, even more preferably an integer of 5 to 50, and yet more preferably an integer of 10 to 30.

In one embodiment, y is 0, and z is 0.

The sum of x, y, and z may be 1 or more. The sum of x, y, and z may be preferably 3 or more, more preferably 5 or more, even more preferably 10 or more, and yet more preferably 30 or more, such as 50 or more. Also, the sum of x, y, and z may be preferably 500 or less, more preferably 300 or less, and even more preferably 100 or less, such as 50 or less, 30 or less, or 20 or less.

The R^{S} group may be a random polymer or may be a block polymer.

γ1 is 0 or 1.

In one embodiment, y1 is 0.

In another embodiment, γ1 is 1.

R⁶ is each independently a C₁₋₄ alkyl group.

The C₁₋₄ alkyl group in R⁶ may be linear or may be branched. The C₁₋₄ alkyl group is preferably a methyl group, an ethyl group, a n-propyl group, an iso-propyl group, a n-butyl group, or a tert-butyl group.

R⁶ is preferably a methyl group, an ethyl group, or a n-butyl group, and more preferably a methyl group.

γ2 is 0 or 1.

In one embodiment, y2 is 0.

In another embodiment, γ2 is 1.

In one embodiment, R⁰ is an oxygen atom, and γ1 and γ2 are 1.

In another embodiment, R⁰ is an oxygen atom, γ1 is 0, and y2 is 1.

In another embodiment, R⁰ is a single bond, and γ1 and y2 are 0.

R^{Ar} is a di- to hexavalent aromatic group. In one embodiment, R^{Ar} is a divalent or trivalent, and preferably divalent, aromatic group.

R^{Ar} is preferably bonded to the Si atom on the side opposite X¹.

The di- to hexavalent aromatic group is not limited as long as it is a di- to hexavalent group having aromaticity.

The di- to hexavalent aromatic group may be an aromatic hydrocarbon group or a heteroaromatic group. The aromatic group may be monocyclic or polycyclic. The polycyclic aromatic group may be a group in which two rings are fused, a group in which two or more rings are bonded by, for example, a single bond, or a combination thereof.

The total number of ring members in the di- to hexavalent aromatic group may be 6 to 30, preferably 6 to 24, more preferably 6 to 20, even more preferably 6 to 14, and particularly preferably 6 to 12.

In one embodiment, R^{Ar} is an arylene group having 6 to 20 carbon atoms.

In one embodiment, R^{Ar} is each independently:

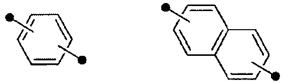

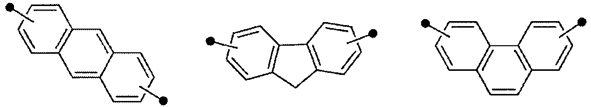

In one embodiment, R^{Ar} may be an o-phenylene group, a m-phenylene group, a p-phenylene group, a 2-methyl-1,4-phenylene group, a 2,5-dimethyl-1,4-phenylene group, a 1,2-naphthylene group, a 1,4-naphthylene group, a 1,5-naphthylene group, a 9,10-anthrylene group, a 9,10-phenanthrylene group, or a 4,4'-biphenylylene group.

In a preferable embodiment, R^{Ar} is a phenylene group, and particularly preferably a p-phenylene group.

In another embodiment, R^{Ar} is a benzenetriyl group (i.e., a trivalent benzene group).

The di- to hexavalent aromatic group is optionally substituted. The number of substituents is not limited and is, for example, 1 to 4, and preferably 1 or 2. Examples of the substituent include a halogen (preferably a fluorine atom), a C₁₋₆ alkyl group, or a C₁₋₄ alkoxy group.

In a preferable embodiment, R^{Ar} is an unsubstituted phenylene group.

γ3 is an integer of 1 to 5. γ3 is the same as (the valence of R^{Ar} minus 1). For example, _{γ3} is 1 when R^{Ar} is a divalent aromatic group.

X¹ is interpreted as a linker connecting the moiety (R^{A}-R^{S}-SiR⁶2-R^{Ar}-) that mainly provides functions such as water-repellency and the silane moiety (R^{H}) that provides an ability to bind to a substrate. Accordingly, X¹ is not limited as long as the silane compound represented by the formula (1) can stably exist.

In the formula (1), α is an integer of 1 to 9, and β is an integer of 1 to 9. These α and β may vary depending on the valence of X¹. The sum of α and β is the same as the valence of X¹. For example, when X¹ is a decavalent organic group, the sum of α and β is 10. For example, α may be 9, and β may be 1; α may be 5, and β may be 5; or α may be 1, and β may be 9. When X¹ is a divalent organic group, α and β are each 1.

X¹ is a di- to decavalent group. Below, the left side of the group X¹ binds to R^{Ar} and the right side binds to R^{H}.

The di- to decavalent group is preferably a di- to tetravalent group, and more preferably a divalent group. In another embodiment, the di- to decavalent organic group is preferably a tri- to octavalent organic group, and more preferably a tri- to hexavalent organic group.

In one embodiment, X¹ is a divalent group, and α and β are 1.

In one embodiment, X¹ is a tri- to hexavalent group, α is 1, and β is 2 to 5.

In one embodiment, X¹ is a trivalent organic group; and α is 2 and β is 1, or α is 1 and β is 2.

In one embodiment, X¹ is a divalent organic group containing an alkylene group having 3 or more, 6 or more, 10 or more, 12 or more, 16 or more, 18 or more, or 22 or more carbon atoms. The number of carbon atoms in the alkylene group may be, for example, 60 or less, 40 or less, 36 or less, 32 or less, 30 or less, 28 or less, or 24 or less. The number of carbon atoms in the alkylene group in X¹ may be preferably 3 to 60, more preferably 6 to 40, and even more preferably 10 to 30.

The alkylene group in X¹ may be linear or may be branched. The alkylene group is preferably linear.

In one embodiment, X¹ may be a divalent organic group containing -CO-, -COO-, -OCO-, -NR⁴¹-, -CONR⁴¹-, - OCONR⁴¹-, -NR⁴¹CO-, -OCONR⁴¹-, -NR⁴¹COO-, -NR⁴¹-CO-NR⁴¹-, - O-, -S-, -O-(CH₂)ₓ₁-CONR⁴¹-, -O-(CH₂)ₓ₁-NR⁴¹CO-, or -O-(CH₂)ₓ₁-CO-, in addition to the alkylene group having 3 or more carbon atoms. R⁴¹ is a hydrogen atom or a C₁₋₆ alkyl group, and x1 is an integer of 1 to 30 (preferably an integer of 1 to 20 such as an integer of 1 to 10, 11 to 30, or 11 to 20).

In one embodiment, X¹ may be a divalent organic group further containing -CO-, -COO-, -OCO-, -NR⁴¹-, - CONR⁴¹-, -NR⁴¹CO-, -OCONR⁴¹-, -O-(CH₂)ₓ₁-CONR⁴¹-, -O- (CH₂)ₓ₁-NR⁴¹CO-, or -O-(CH₂)ₓ₁-CO-, in addition to the alkylene group having 3 or more carbon atoms. R⁴¹ is a hydrogen atom or a C₁₋₆ alkyl group, and x1 is an integer of 1 to 30 (preferably an integer of 1 to 20 such as an integer of 1 to 10, 11 to 30, or 11 to 20).

In one embodiment, X¹ is a group represented by the following formula:

-X²¹-X¹⁰-X¹¹-X¹²-

wherein
X²¹ is a single bond, -O-, -O-(C₂H₄O)_{b}-, R⁶¹_{b1}R⁶²_{3-b1}C-, R⁶³_{b2}R⁶⁴_{3-b2}Si-, or R⁶⁵₂N-,
   R⁶¹ is a divalent organic group,
   R⁶² is a hydrogen atom or a monovalent organic group,
   R⁶³ is a divalent organic group,
   R⁶⁴ is a hydrogen atom or a monovalent organic group,
   R⁶⁵ is a divalent organic group,
      b1 is 2 or 3,
      b2 is 2 or 3,
      a is an integer of 1 to 4,
      b is an integer of 1 to 10,
X¹⁰ is an alkylene group having 3 or more carbon atoms,
X¹¹ is a single bond, -CO-, -COO-, -OCO-, -NR⁴¹-, - CONR⁴¹-, -NR⁴¹CO-, -OCONR⁴¹-, -NR⁴¹COO-, -NR⁴¹-CO-NR⁴¹-, -O-, -S-, -O-(CH₂)ₓ-CONR⁴¹-, -O-(CH₂)ₓ-NR⁴¹CO-, or -O-(CH₂)ₓ₁-CO-,
R⁴¹ is a hydrogen atom or a C₁₋₆ alkyl group,
x1 is an integer of 1 to 30, and
X¹² is a single bond or a C₁₋₃₀ alkylene group.

In one embodiment, X¹ is preferably a group represented by the following formula:

-X¹⁰-X¹¹-X¹²-

wherein
X¹⁰ is an alkylene group having 3 or more carbon atoms,
X¹¹ is a single bond, -CO-, -COO-, -OCO-, -NR⁴¹-, - CONR⁴¹-, -NR⁴¹CO-, -OCONR⁴¹-, -NR⁴¹COO-, -NR⁴¹-CO-NR⁴¹-, -O-, -S-, -O-(CH₂)ₓ-CONR⁴¹-, -O-(CH₂)ₓ-NR⁴¹CO-, or -O-(CH₂)ₓ₁-CO-,
R⁴¹ is a hydrogen atom or a C₁₋₆ alkyl group,
x1 is an integer of 1 to 30, and
X¹² is a single bond or a C₁₋₃₀ alkylene group.

In one embodiment, X¹ is preferably a group represented by the following formula:

-X²¹-X¹⁰-

wherein
X²¹ is a single bond, -O-, or -O-(CₐH₂ₐO)_{b}-,
a is an integer of 1 to 4,
b is an integer of 1 to 10, and
X¹⁰ is an alkylene group having 11 to 24 carbon atoms.

X²¹ is -O-, -O-(CₐH₂ₐO)_{b}-, R⁶¹_{b1}R⁶²_{3-b1}C-, R⁶³_{b2}R⁶⁴_{3-b2}Si-, or R⁶⁵₂N-.

a is an integer of 1 to 4, preferably an integer of 2 to 4, and more preferably 2.

b is an integer of 1 to 10, and preferably an integer of 2 to 10.

R⁶¹ is a divalent organic group.

R⁶¹ is preferably a C₁₋₆ alkylene group, -(CH₂)_{f1}-O-(CH₂)_{f2}- (wherein f1 is an integer of 0 to 6 such as an integer of 1 to 6, and f2 is an integer of 0 to 6 such as an integer of 1 to 6), or -(CH₂)_{f3}-phenylene-(CH₂)_{f4}-(wherein f3 is an integer of 0 to 6 such as an integer of 1 to 6, and f4 is an integer of 0 to 6 such as an integer of 1 to 6). Such a C₁₋₆ alkylene group may be linear or may be branched, and is preferably linear. These groups may be substituted with, for example, one or more substituents selected from, a fluorine atom, a C₁₋₆ alkyl group, a C₂₋₆ alkenyl group, and a C₂₋₆ alkynyl group, and are preferably unsubstituted.

In a preferable embodiment, R⁶¹ is a C₁₋₆ alkylene group or -(CH₂)_{f3}-phenylene-(CH₂)_{f4}-, and preferably - phenylene-(CH₂)_{f4}-.

In another preferable embodiment, R⁶¹ is a C₁₋₃ alkylene group. In one embodiment, R⁶¹ may be -CH₂CH₂CH₂-. In another embodiment, R⁶¹ may be -CH₂CH₂-.

R⁶² is a hydrogen atom or a monovalent organic group.

In one embodiment, R⁶² is a hydrogen atom.

In another embodiment, R⁶² is a monovalent organic group.

In R⁶², the monovalent organic group is preferably a C₁₋₂₀ alkyl group, more preferably a C₁₋₆ alkyl group, and even more preferably a methyl group.

b1 is 2 or 3. In one embodiment, b1 is 2. In another embodiment, b1 is 3.

R⁶³ is a divalent organic group.

R⁶³ is preferably a C₁₋₆ alkylene group, -(CH₂)_{g1}-O-(CH₂)_{g2}- (wherein g1 is an integer of 0 to 6 such as an integer of 1 to 6, and g2 is an integer of 0 to 6 such as an integer of 1 to 6), or -(CH₂)_{g3}-phenylene-(CH₂)_{g4}-(wherein g3 is an integer of 0 to 6 such as an integer of 1 to 6, and g4 is an integer of 0 to 6 such as an integer of 1 to 6). Such a C₁₋₆ alkylene group may be linear or may be branched, and is preferably linear. These groups may be substituted with, for example, one or more substituents selected from, a fluorine atom, a C₁₋₆ alkyl group, a C₂₋₆ alkenyl group, and a C₂₋₆ alkynyl group, and are preferably unsubstituted.

In a preferable embodiment, R⁶³ is a C₁₋₆ alkylene group or - (CH₂)_{g3}-phenylene-(CH₂)_{g4}-, and preferably - phenylene-(CH₂)_{q4}-.

In another preferable embodiment, R⁶³ is a C₁₋₃ alkylene group. In one embodiment, R⁶³ may be -CH₂CH₂CH₂-. In another embodiment, R⁶³ may be -CH₂CH₂-.

R⁶⁴ is a hydrogen atom or a monovalent organic group.

In one embodiment, R⁶⁴ is a hydrogen atom.

In another embodiment, R⁶⁴ is a monovalent organic group.

In R⁶⁴, the monovalent organic group is preferably a C₁₋₂₀ alkyl group, more preferably a C₁₋₆ alkyl group, and even more preferably a methyl group.

b2 is 2 or 3. In one embodiment, b2 is 2. In another embodiment, b2 is 3.

R⁶⁵ is a divalent organic group.

R⁶⁵ is preferably a C₁₋₆ alkylene group, - (CH₂)ₕ₁-O-(CH₂)ₕ₂- (wherein h1 is an integer of 0 to 6 such as an integer of 1 to 6, and h2 is an integer of 0 to 6 such as an integer of 1 to 6), or -(CH₂)ₕ₃-phenylene-(CH₂)ₕ₄-(wherein h3 is an integer of 0 to 6 such as an integer of 1 to 6, and h4 is an integer of 0 to 6 such as an integer of 1 to 6). Such a C₁₋₆ alkylene group may be linear or may be branched, and is preferably linear. These groups may be substituted with, for example, one or more substituents selected from, a fluorine atom, a C₁₋₆ alkyl group, a C₂₋₆ alkenyl group, and a C₂₋₆ alkynyl group, and are preferably unsubstituted.

In a preferable embodiment, R⁶⁵ is a C₁₋₆ alkylene group or -(CH₂)ₕ₃-phenylene-(CH₂)ₕ₄-, and preferably - phenylene-(CH₂)ₕ₄-.

In another preferable embodiment, R⁶⁵ is a C₁₋₃ alkylene group. In one embodiment, R⁶⁵ may be -CH₂CH₂CH₂-. In another embodiment, R⁶⁵ may be -CH₂CH₂-.

In one embodiment, X²¹ is R⁶¹_{b1}R⁶²_{3-b1}C-.

In one embodiment, X²¹ is R⁶³_{b2}R⁶⁴_{3-b2}Si-.

In one embodiment, X²¹ is R⁶⁵₂N-.

In one embodiment, X²¹ is -O-.

The number of carbon atoms in the alkylene group in X¹⁰ may be preferably 3 or more, more preferably 6 or more, even more preferably 10 or more, yet more preferably 11 or more, and particularly preferably 12 or more, such as 16 or more, 18 or more, or 22 or more. The number of carbon atoms of the alkylene group in X¹⁰ may preferably be 60 or less, more preferably 40 or less, even more preferably 30 or less, and yet more preferably 24 or less. The number of carbon atoms of the alkylene group in X¹⁰ may preferably be 3 to 60, more preferably 6 to 40, and even more preferably 10 to 30.

The alkylene group in X¹⁰ may be linear or may be branched. The alkylene group is preferably linear.

X¹¹ is preferably -CO-, -COO-, -NR⁴¹-, -CONR⁴¹-, - OCONR⁴¹-, -NR⁴¹-CO-NR⁴¹-, -O-, -S-, -O-(CH₂)ₓ-CONR⁴¹-, or - O-(CH₂)ₓ₁-CO-, more preferably -CO-, -CONR⁴¹-, or - OCONR⁴¹-, and even more preferably -CONR⁴¹-. R⁴¹ is preferably a hydrogen atom, and x1 is an integer of 1 to 30.

In one embodiment, X¹² is a single bond.

In another embodiment, X¹² is a C₁₋₃₀ alkylene group.

The C₁₋₃₀ alkylene group in X¹² may be linear or may be branched. In one embodiment, the C₁₋₃₀ alkylene group is linear. In another embodiment, the C₁₋₃₀ alkylene group is branched. The C₁₋₃₀ alkylene group is preferably a C₁₋₂₀ alkylene group, more preferably a C₁₋₁₀ alkylene group, even more preferably a C₁₋₄ alkylene group, and yet more preferably a C₁₋₃ alkylene group.

In one embodiment, X¹ is a group represented by the following formula (X^{A1}): 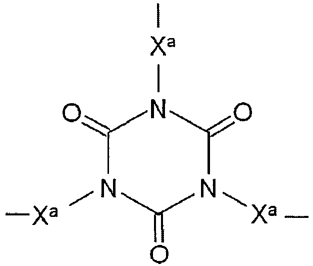 wherein X^{a} is a single bond or a divalent organic group.

X^{a} is a single bond or divalent linking group directly bonded to the isocyanuric ring. X^{a} is preferably a single bond, an alkylene group, or a divalent group containing at least one bond selected from the group consisting of an ether bond, an ester bond, an amide bond, and a sulfide bond, and more preferably a single bond, an alkylene group having 1 to 10 carbon atoms, or a divalent hydrocarbon group having 1 to 10 carbon atoms and containing at least one bond selected from the group consisting of an ether bond, an ester bond, an amide bond, and a sulfide bond.

X^{a} is even more preferably a group represented by the following formula:

- (CX¹²¹X¹²²)ₓ₁-(X^{a1})_{y1}-(CX¹²³X¹²⁴)_{z1}-

wherein X¹²¹ to X¹²⁴ are each independently H, OH, or - OSi(OR¹²¹)₃, where three R¹²¹ are each independently an alkyl group having 1 to 4 carbon atoms,
X^{a1} is -C(=O)NH-, -NHC(=O)-, -O-, -C(=O)O-, -OC(=O)-, -OC(=O)O-, -NH-, or -NHC(=O)NH- (left side of each bond binds to CX¹²¹X¹²²), and
x1 is an integer of 0 to 10, y1 is 0 or 1, and z1 is an integer of 1 to 10.

X^{a1} is preferably -O- or -C(=O)O-.

X^{a} is particularly preferably
a group represented by

   -(CH₂)ₘ₁₂-O-(CH₂)ₘ₁₃-
wherein m12 is an integer of 1 to 3, and m13 is an integer of 1 to 3,
a group represented by

   -(CH₂)ₘ₁₅-O-CH₂CH(OH)-(CH₂)ₘ₁₆-
wherein m15 is an integer of 1 to 3, and m16 is an integer of 1 to 3,
a group represented by

   -(CH₂)ₘ₁₈-
wherein m18 is an integer of 1 to 3, or
a group represented by

   -(CH₂)ₘ₂₀-O-CH₂CH(OSi(OCH₃)₃)-(CH₂)ₘ₂₁-
wherein m20 is an integer of 1 to 3, and m21 is an integer of 1 to 3.

X^{a} is not limited, and specific examples include -CH₂-, -C₂H₄-, -C₃H₆-, -C₄H₈-, -C₄H₈-O-CH₂-, -CO-O-CH₂-CH(OH)-CH₂-, -S-, -NR¹²¹-, - (CH₂)ₘ₂₂-C(=O)-O-(CH₂)ₘ₂₃-, - (CH₂)ₘ₂₂-O-C(=O)-(CH₂)ₘ₂₃-, -(CH₂)ₘ₂₂-C(=O)-NR¹²¹-(CH₂)ₘ₂₃-, and -(CH₂)ₘ₂₂-NR¹²¹-C(=O)-(CH₂)ₘ₂₃-CH₂OCH₂CH(OSi(OCH₃)₃)CH₂-, wherein R¹²¹ is a hydrogen atom or a C₁₋₆ hydrocarbon chain, m22 is an integer of 1 to 10, and m23 is an integer of 1 to 10.

R^{H} is a monovalent group containing a Si atom to which a hydroxyl group or a hydrolyzable group is bonded.

In a preferable embodiment, R^{H} is a group represented by the following formula (S1), (S2), (S3), (S4), or (S5):

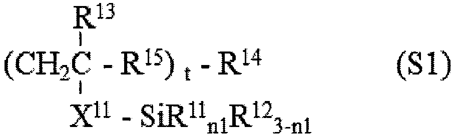

- SiR¹¹ₙ₁R¹²₃₋ₙ₁ (S2)

- SiR^{a1}ₖ₁R^{b1}ₗ₁R^{c1}ₘ₁ (S3)

- CR^{d1}ₖ₂R^{e1}ₗ₂R^{f1}ₘ₂ (S4)

-NR^{g1}R^{h1} (S5)

wherein
R¹¹ is each independently a hydroxyl group or a hydrolyzable group,
R¹² is each independently a monovalent organic group,
n1 is each independently an integer of 0 to 3 for each (SiR¹¹ₙ₁R¹²₃₋ₙ₁) unit,
X¹¹ is each independently a single bond or a divalent organic group,
R¹³ is each independently a hydrogen atom or a monovalent organic group,
t is each independently an integer of 2 or more,
R¹⁴ is each independently a hydrogen atom, a halogen atom, or -X¹¹-SiR¹¹ₙ₁R¹²₃₋ₙ₁,
R¹⁵ is each independently a single bond, an oxygen atom, an alkylene group having 1 to 6 carbon atoms, or an alkyleneoxy group having 1 to 6 carbon atoms,
R^{a1} is each independently -Z¹-SiR²¹ₚ₁R²²_{q1}R²³ᵣ₁,
Z¹ is each independently a divalent organic group,
R²¹ is each independently -Z^{1'}-SiR^{21'}_{p1'}R^{22'}_{q1'}R^{23'}_{r1'},
R²² is each independently a hydroxyl group or a hydrolyzable group,
R²³ is each independently a monovalent organic group,
p1 is each independently an integer of 0 to 3,
q1 is each independently an integer of 0 to 3,
r1 is each independently an integer of 0 to 3,
Z^{1'} is each independently a divalent organic group,
R^{21'} is each independently -Z^{1"}-SiR^{22"}_{q1"}R^{23"}_{r1"},
R^{22'} is each independently a hydroxyl group or a hydrolyzable group,
R^{23'} is each independently a monovalent organic group,
p1' is each independently an integer of 0 to 3,
q1' is each independently an integer of 0 to 3,
r1' is each independently an integer of 0 to 3,
Z^{1"} is each independently a divalent organic group,
R^{22"} is each independently a hydroxyl group or a hydrolyzable group,
R^{23"} is each independently a monovalent organic group,
q1" is each independently an integer of 0 to 3,
r1" is each independently an integer of 0 to 3,
R^{b1} is each independently a hydroxyl group or a hydrolyzable group,
R^{c1} is each independently a monovalent organic group,
k1 is each independently an integer of 0 to 3,
11 is each independently an integer of 0 to 3,
m1 is each independently an integer of 0 to 3,
provided that, in the formula (S3), at least two Si atoms to which a hydroxyl group or a hydrolyzable group is bonded are present,
R^{d1} is each independently -Z²-CR³¹ₚ₂R³²_{q2}R³³ᵣ₂,
Z² is each independently a single bond, an oxygen atom, or a divalent organic group,
R³¹ is each independently -Z^{2'}-CR^{32'}_{q2'}R^{33'}_{r2'},
R³² is each independently -Z³-SiR³⁴ₙ₂R³⁵₃₋ₙ₂,
R³³ is each independently a hydrogen atom, a hydroxyl group, or a monovalent organic group,
p2 is each independently an integer of 0 to 3,
q2 is each independently an integer of 0 to 3,
r2 is each independently an integer of 0 to 3,
Z^{2'} is each independently a single bond, an oxygen atom, or a divalent organic group,
R^{32'} is each independently -Z³-SiR³⁴ₙ₂R³⁵₃₋ₙ₂,
R^{33'} is each independently a hydrogen atom, a hydroxyl group, or a monovalent organic group,
q2' is each independently an integer of 0 to 3,
r2' is each independently an integer of 0 to 3,
Z³ is each independently a single bond, an oxygen atom, or a divalent organic group,
R³⁴ is each independently a hydroxyl group or a hydrolyzable group,
R³⁵ is each independently a monovalent organic group,
n2 is each independently an integer of 0 to 3,
R^{e1} is each independently -Z³-SiR³⁴ₙ₂R³⁵₃₋ₙ₂,
R^{f1} is each independently a hydrogen atom, a hydroxyl group, or a monovalent organic group,
k2 is each independently an integer of 0 to 3,
l2 is each independently an integer of 0 to 3,
m2 is each independently an integer of 0 to 3,
provided that, in the formula (S4), at least two Si atoms to which a hydroxyl group or a hydrolyzable group is bonded are present,
R^{g1} and R^{h1} are each independently -Z⁴-SiR¹¹ₙ₁R¹²₃₋ₙ₁, - Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂, and
Z⁴ is each independently a single bond, an oxygen atom, or a divalent organic group,
provided that, in the formula (S5), at least two Si atoms to which a hydroxyl group or a hydrolyzable group is bonded are present.

In the formulae, R¹¹ is each independently a hydroxyl group or a hydrolyzable group.

R¹¹ is preferably, each independently, a hydrolyzable group.

R¹¹ is preferably, each independently, -OR^{h}, -OCOR^{h}, -O-N=CR^{h}₂, -NR^{h}₂, -NHR^{h}, -NCO, or a halogen (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

In the formulae, R¹² is each independently a monovalent organic group. Such a monovalent organic group is a monovalent organic group excluding the above hydrolyzable group.

In R¹², the monovalent organic group is preferably a C₁₋₂₀ alkyl group, more preferably a C₁₋₆ alkyl group, and even more preferably a methyl group.

In the formulae, n1 is each independently an integer of 0 to 3 for each (SiR¹¹ₙ₁R¹²₃₋ₙ₁) unit, provided that, in the formula (S1), at least two (SiR¹¹ₙ₁R¹²₃₋ₙ₁) units wherein n1 is 1 to 3 are present. In other words, in the formula (S1), at least two Si atoms to which a hydroxyl group or a hydrolyzable group is bonded are present.

n1 is each independently an integer of preferably 1 to 3, more preferably 2 to 3, and even more preferably 3 for each (SiR¹¹ₙ₁R¹²₃₋ₙ₁) unit.

In the formula, X¹¹ is each independently a single bond or a divalent organic group. Such a divalent organic group is preferably -R²⁸-Oₓ-R²⁹-, wherein R²⁸ and R²⁹ are each independently a single bond or a C₁₋₂₀ alkylene group, and x is 0 or 1. Such a C₁₋₂₀ alkylene group may be linear or may be branched, and is preferably linear. Such a C₁₋₂₀ alkylene group is preferably a C₁₋₁₀ alkylene group, more preferably a C₁₋₆ alkylene group, and even more preferably a C₁₋₃ alkylene group.

In one embodiment, X¹¹ is each independently a -C₁₋₆ alkylene-O-C₁₋₆ alkylene- or a -O-C₁₋₆ alkylene-.

In a preferable embodiment, X¹¹ is each independently a single bond or a linear C₁₋₆ alkylene group, preferably a single bond or a linear C₁₋₃ alkylene group, more preferably a single bond or a linear C₁₋₂ alkylene group, and even more preferably a linear C₁₋₂ alkylene group.

In the formula, R¹³ is each independently a hydrogen atom or a monovalent organic group. Such a monovalent organic group is preferably a C₁₋₂₀ alkyl group.

In a preferable embodiment, R¹³ is each independently a hydrogen atom or a linear C₁₋₆ alkyl group, preferably a hydrogen atom or a linear C₁₋₃ alkyl group, and preferably a hydrogen atom or a methyl group.

In the formula, R¹⁵ is each independently a single bond, an oxygen atom, an alkylene group having 1 to 6 carbon atoms, or an alkyleneoxy group having 1 to 6 carbon atoms.

In one embodiment, R¹⁵ is each independently an oxygen atom, an alkylene group having 1 to 6 carbon atoms, or an alkyleneoxy group having 1 to 6 carbon atoms.

In a preferable embodiment, R¹⁵ is a single bond.

In the formula, t is each independently an integer of 2 or more.

In a preferable embodiment, t is each independently an integer of 2 to 10, and preferably an integer of 2 to 6.

In the formula, R¹⁴ is each independently a hydrogen atom, a halogen atom, or -X¹¹-SiR¹¹ₙ₁R¹²₃₋ₙ₁. Such a halogen atom is preferably an iodine atom, a chlorine atom, or a fluorine atom, and more preferably a fluorine atom. In a preferable embodiment, R¹⁴ is a hydrogen atom.

In one embodiment, the formula (S1) is the following formula (S1-a): 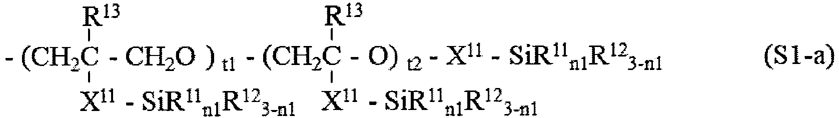 wherein
R¹¹, R¹², R¹³, X¹¹, and n1 have the same meanings as those described for the formula (S1),
t1 and t2 are each independently an integer of 1 or more, preferably an integer of 1 to 10, and more preferably an integer of 2 to 10, such as an integer of 1 to 5 or an integer of 2 to 5, and
the occurrence order of the respective repeating units enclosed in parentheses provided with t1 and t2 is not limited in the formula.

In a preferable embodiment, the formula (S1) is the following formula (S1-b): 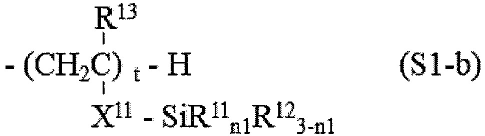 R¹¹, R¹², R¹³, X¹¹, n1, and t have the same meanings as those described for the formula (S1).

R^{a1} is each independently -Z¹-SiR²¹ₚ₁R²²_{q1}R²³ᵣ₁.

Z¹ is each independently an oxygen atom or a divalent organic group. Below, the right side of the structure denoted as Z¹ binds to (SiR²¹ₚ₁R²²_{q1}R²³ᵣ₁).

In a preferable embodiment, Z¹ is a divalent organic group.

In a preferable embodiment, Z¹ does not include a group that forms a siloxane bond with the Si atom to which Z¹ is bonded. Preferably, in the formula (S2), (Si-Z¹-Si) does not include a siloxane bond.

Z¹ is preferably a C₁₋₃₀ alkylene group, -(CH₂)_{z1}-O-(CH₂)_{z2}- (wherein z1 is an integer of 0 to 6 such as an integer of 1 to 6, and z2 is an integer of 0 to 6 such as an integer of 1 to 6), or -(CH₂)_{z3}-phenylene-(CH₂)_{z4}-(wherein z3 is an integer of 0 to 6 such as an integer of 1 to 6, and z4 is an integer of 0 to 6 such as an integer of 1 to 6). Such a C₁₋₆ alkylene group may be linear or may be branched, and is preferably linear. These groups may be substituted with, for example, one or more substituents selected from, a fluorine atom, a C₁₋₆ alkyl group, a C₂₋₆ alkenyl group, and a C₂₋₆ alkynyl group, and are preferably unsubstituted.

In a preferable embodiment, Z¹ is a C₁₋₃₀ alkylene group or -(CH₂)_{z3}-phenylene-(CH₂)_{z4}-, and preferably - phenylene-(CH₂)_{z4}-.

In another preferable embodiment, Z¹ is a C₁₋₃₀ alkylene group such as a C₁₋₆ alkylene group or a C₁₋₃ alkylene group. In one embodiment, Z¹ may be -CH₂CH₂CH₂-. In another embodiment, Z¹ may be -CH₂CH₂-. In yet another embodiment, Z¹ may be -CH₂CH₂CH₂CH₂CH₂CH₂CH₂CH₂CH₂CH₂CH₂-.

R²¹ is each independently -Z^{1'}-SiR^{21'}_{p1'}R^{22'}_{q1'}R^{23'}_{r1'}.

Z^{1'} is each independently an oxygen atom or a divalent organic group. Below, the right side of the structure denoted as Z^{1'} binds to (SiR^{21'}_{p1'}R^{22'}_{q1'}R^{23'}_{r1'}).

In a preferable embodiment, Z^{1'} is a divalent organic group.

In a preferable embodiment, Z^{1'} does not include a group that forms a siloxane bond with the Si atom to which Z^{1'} is bonded. Preferably, in the formula (S2), (Si-Z^{1'}-Si) does not include a siloxane bond.

Z^{1'} is preferably a C₁₋₃₀ alkylene group, -(CH₂)_{z1'}-O-(CH₂)_{z2'}- (wherein z1' is an integer of 0 to 6 such as an integer of 1 to 6, and z2' is an integer of 0 to 6 such as an integer of 1 to 6), or -(CH₂)_{z3'}-phenylene-(CH₂)_{z4'}-(wherein z3' is an integer of 0 to 6 such as an integer of 1 to 6, and z4' is an integer of 0 to 6 such as an integer of 1 to 6). Such a C₁₋₆ alkylene group may be linear or may be branched, and is preferably linear. These groups may be substituted with, for example, one or more substituents selected from, a fluorine atom, a C₁₋₆ alkyl group, a C₂₋₆ alkenyl group, and a C₂₋₆ alkynyl group, and are preferably unsubstituted.

In a preferable embodiment, Z^{1'} is a C₁₋₃₀ alkylene group or -(CH₂)_{z3'}-phenylene-(CH₂)_{z4'}-, and preferably - phenylene-(CH₂)_{z4'}-.

In another preferable embodiment, Z^{1'} is a C₁₋₃₀ alkylene group such as a C₁₋₆ alkylene group or a C₁₋₃ alkylene group. In one embodiment, Z^{1'} may be -CH₂CH₂CH₂-. In another embodiment, Z^{1'} may be -CH₂CH₂-. In yet another embodiment, Z^{1'} may be - CH₂CH₂CH₂CH₂CH₂CH₂CH₂CH₂CH₂CH₂CH₂-.

R^{21'} is each independently -Z^{1"}-SiR^{22"}_{q1"}R^{23"}_{r1"}.

Z^{1"} is each independently an oxygen atom or a divalent organic group. Below, the right side of the structure denoted as Z^{1"} binds to (SiR^{22"}_{q1"}-R^{23"}_{r1"}).

In a preferable embodiment, Z^{1"} is a divalent organic group.

In a preferable embodiment, Z^{1"} does not include a group that forms a siloxane bond with the Si atom to which Z^{1"} is bonded. Preferably, in the formula (S2), (Si-Z^{1"}-Si) does not include a siloxane bond.

Z^{1"} is preferably a C₁₋₃₀ alkylene group, -(CH₂)_{z1"}-O-(CH₂)_{z2"}- (wherein z1" is an integer of 0 to 6 such as an integer of 1 to 6, and z2" is an integer of 0 to 6 such as an integer of 1 to 6), or -(CH₂)_{z3"}-phenylene-(CH₂)_{z4"}-(wherein z3" is an integer of 0 to 6 such as an integer of 1 to 6, and z4" is an integer of 0 to 6 such as an integer of 1 to 6). Such a C₁₋₆ alkylene group may be linear or may be branched, and is preferably linear. These groups may be substituted with, for example, one or more substituents selected from, a fluorine atom, a C₁₋₆ alkyl group, a C₂₋₆ alkenyl group, and a C₂₋₆ alkynyl group, and are preferably unsubstituted.

In a preferable embodiment, Z^{1"} is a C₁₋₃₀ alkylene group or -(CH₂)_{z3"}-phenylene-(CH₂)_{z4"}-, and preferably - phenylene-(CH₂)_{z4"}-. When Z^{1"} is such a group, light resistance, in particular ultraviolet resistance, can be more increased.

In another preferable embodiment, Z^{1"} is a C₁₋₃₀ alkylene group such as a C₁₋₆ alkylene group or a C₁₋₃ alkylene group. In one embodiment, Z^{1"} may be - CH₂CH₂CH₂-. In another embodiment, Z^{1"} may be -CH₂CH₂-. In yet another embodiment, Z^{1"} may be - CH₂CH₂CH₂CH₂CH₂CH₂CH₂CH₂CH₂CH₂CH₂-.

R^{22"} is each independently a hydroxyl group or a hydrolyzable group.

R^{22"} is preferably, each independently, a hydrolyzable group.

R^{22"} is preferably, each independently, -OR^{h}, -OCOR^{h}, -O-N=CR^{h}₂, -NR^{h}₂, -NHR^{h}, or -NCO (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

R^{23"} is each independently a monovalent organic group. Such a monovalent organic group is a monovalent organic group excluding the above hydrolyzable group.

In R^{23"}, the monovalent organic group is preferably a C₁₋₂₀ alkyl group, more preferably a C₁₋₆ alkyl group, and even more preferably a methyl group.

q1" is each independently an integer of 0 to 3, and r1" is each independently an integer of 0 to 3. The sum of q1" and r1" is 3 in the (SiR^{22"}_{q1"}R^{23"}_{r1"}) unit.

q1" is preferably, each independently, an integer of 1 to 3, more preferably 2 to 3, and even more preferably 3 for each (SiR^{22"}_{q1"}R^{23"}_{r1"}) unit.

R^{22'} is each independently a hydroxyl group or a hydrolyzable group.

R^{22'} is preferably, each independently, a hydrolyzable group.

R^{22'} is preferably, each independently, -OR^{h}, -OCOR^{h}, -O-N=CR^{h}₂, -NR^{h}₂, -NHR^{h}, or -NCO (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

R^{23'} is each independently a monovalent organic group. Such a monovalent organic group is a monovalent organic group excluding the above hydrolyzable group.

In R^{23'}, the monovalent organic group is preferably a C₁₋₂₀ alkyl group, more preferably a C₁₋₆ alkyl group, and even more preferably a methyl group.

p1' is each independently an integer of 0 to 3, q1' is each independently an integer of 0 to 3, and r1' is each independently an integer of 0 to 3. The sum of p', q1', and r1' is 3 in the (SiR^{21'}_{p1'}R^{22'}_{q1'}R^{23'}_{r1'}) unit.

In one embodiment, p1' is 0.

In one embodiment, p1' may be each independently an integer of 1 to 3, an integer of 2 to 3, or 3 for each (SiR^{21'}_{p1'}R^{22'}_{q1'}R^{23'}_{r1'}) unit. In a preferable embodiment, p1' is 3.

In one embodiment, q1' is each independently an integer of 1 to 3, preferably an integer of 2 to 3, and more preferably 3 for each (SiR^{21'}_{p1'}R^{22'}_{q1'}R^{23'}_{r1'}) unit.

In one embodiment, p1' is 0, and q1' is each independently an integer of 1 to 3, preferably an integer of 2 to 3, and even more preferably 3 for each (SiR^{21'}_{q1'}R^{22'}_{q1'}R^{23'}_{r1'}) unit.

R²² is each independently a hydroxyl group or a hydrolyzable group.

R²² is preferably, each independently, a hydrolyzable group.

R²² is preferably, each independently, -OR^{h}, -OCOR^{h}, -O-N=CR^{h}₂, -NR^{h}₂, -NHR^{h}, or -NCO (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

R²³ is each independently a monovalent organic group. Such a monovalent organic group is a monovalent organic group excluding the above hydrolyzable group.

In R²³, the monovalent organic group is preferably a C₁₋₂₀ alkyl group, more preferably a C₁₋₆ alkyl group, and even more preferably a methyl group.

p1 is each independently an integer of 0 to 3, q1 is each independently an integer of 0 to 3, and r1 is each independently an integer of 0 to 3. The sum of p1, q1, and r1 is 3 in the (SiR²¹ₚ₁R²²_{q1}R²³ᵣ₁) unit.

In one embodiment, p1 is 0.

In one embodiment, p1 may be each independently an integer of 1 to 3, an integer of 2 to 3, or 3 for each (SiR²¹ₚ₁R²²_{q1}R²³ᵣ₁) unit. In a preferable embodiment, p1 is 3.

In one embodiment, q1 is each independently an integer of 1 to 3, preferably an integer of 2 to 3, and more preferably 3 for each (SiR²¹ₚ₁R²²_{q1}R²³ᵣ₁) unit.

In one embodiment, p1 is 0, and q1 is each independently an integer of 1 to 3, preferably an integer of 2 to 3, and even more preferably 3 for each (SiR²¹ₚ₁R²²_{q1}R²³ᵣ₁) unit.

In the formula, R^{b1} is each independently a hydroxyl group or a hydrolyzable group.

R^{b1} is preferably, each independently, a hydrolyzable group.

R^{b1} is preferably, each independently, -OR^{h}, -OCOR^{h}, -O-N=CR^{h}₂, -NR^{h}₂, -NHR^{h}, or -NCO (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

In the formula, R^{c1} is each independently a monovalent organic group. Such a monovalent organic group is a monovalent organic group excluding the above hydrolyzable group.

In R^{c1}, the monovalent organic group is preferably a C₁₋₂₀ alkyl group, more preferably a C₁₋₆ alkyl group, and even more preferably a methyl group.

k1 is each independently an integer of 0 to 3, l1 is each independently an integer of 0 to 3, and m1 is each independently an integer of 0 to 3. The sum of k1, l1, and m1 is 3 in the (SiR^{a1}ₖ₁R^{b1}ₗ₁R^{c1}ₘ₁) unit.

In one embodiment, k1 is each independently an integer of 1 to 3, preferably 2 or 3, and more preferably 3 for each (SiR^{a1}ₖ₁R^{b1}ₗ₁R^{c1}ₘ₁) unit. In a preferable embodiment, k1 is 3.

In the formula (S3), at least two Si atoms to which a hydroxyl group or a hydrolyzable group is bonded are present.

In a preferable embodiment, in the terminal moiety of the formula (S3), at least two Si atoms to which a hydroxyl group or a hydrolyzable group is bonded are present.

In a preferable embodiment, the group represented by the formula (S3) has any one of -Z¹-SiR²²_{q1}R²³ᵣ₁ (wherein q1 is an integer of 1 to 3, preferably 2 or 3, and more preferably 3, and r1 is an integer of 0 to 2), -Z^{1'}-SiR^{22'}_{q1'}R^{23'}_{r1'} (wherein q1' is an integer of 1 to 3, preferably 2 or 3, and more preferably 3, and r1' is an integer of 0 to 2), and -Z^{1"}-SiR^{22"}_{q1"}R^{23"}_{r1"} (wherein q1" is an integer of 1 to 3, preferably 2 or 3, and more preferably 3, and r1" is an integer of 0 to 2). Z¹, Z^{1'}, Z^{1"}, R²², R²³, R^{22'}, R^{23'}, R^{22"}, and R^{23"} have the same meanings as those described above.

In a preferable embodiment, when R^{21'} is present in the formula (S3), q1" is an integer of 1 to 3, preferably 2 or 3, and more preferably 3 in at least one and preferably all R^{21'} groups.

In a preferable embodiment, when R²¹ is present in the formula (S3), p1' is 0, and q1' is an integer of 1 to 3, preferably 2 or 3, and more preferably 3 in at least one and preferably all R²¹ groups.

In a preferable embodiment, when R^{a1} is present in the formula (S3), p1 is 0, and q1 is an integer of 1 to 3, preferably 2 or 3, and more preferably 3 in at least one and preferably all R^{a1} groups.

In a preferable embodiment, in the formula (S3), k1 is 2 or 3 and is preferably 3, p1 is 0, q1 is 2 or 3 and is preferably 3.

R^{d1} is each independently -Z²-CR³¹ₚ₂R³²_{q2}R³³ᵣ₂.

Z² is each independently a single bond, an oxygen atom, or a divalent organic group. Below, the right side of the structure denoted as Z² binds to (CR³¹ₚ₂R³²_{q2}R³³ᵣ₂).

In a preferable embodiment, Z² is a divalent organic group.

In a preferable embodiment, Z² does not include a siloxane bond.

Z² is preferably a C₁₋₃₀ alkylene group, -(CH₂)_{z5}-O-(CH₂)_{z6}- (wherein z5 is an integer of 0 to 6 such as an integer of 1 to 6, and z6 is an integer of 0 to 6 such as an integer of 1 to 6), or -(CH₂)_{z7}-phenylene-(CH₂)_{z8}-(wherein z7 is an integer of 0 to 6 such as an integer of 1 to 6, and z8 is an integer of 0 to 6 such as an integer of 1 to 6). Such a C₁₋₆ alkylene group may be linear or may be branched, and is preferably linear. These groups may be substituted with, for example, one or more substituents selected from, a fluorine atom, a C₁₋₆ alkyl group, a C₂₋₆ alkenyl group, and a C₂₋₆ alkynyl group, and are preferably unsubstituted.

In a preferable embodiment, Z² is a C₁₋₃₀ alkylene group or -(CH₂)_{z7}-phenylene-(CH₂)_{z8}-, and preferably - phenylene-(CH₂)_{z8}-. When Z² is such a group, light resistance, in particular ultraviolet resistance, can be more increased.

In another preferable embodiment, Z² is a C₁₋₃₀ alkylene group such as a C₁₋₆ alkylene group or a C₁₋₃ alkylene group. In one embodiment, Z² may be -CH₂CH₂CH₂-. In another embodiment, Z² may be -CH₂CH₂-. In yet another embodiment, Z^{2'} may be -CH₂CH₂CH₂CH₂CH₂CH₂CH₂CH₂CH₂CH₂CH₂-.

R³¹ is each independently -Z^{2'}-CR^{32'}_{q2'}R^{33'}_{r2'}.

Z^{2'} is each independently a single bond, an oxygen atom, or a divalent organic group. Below, the right side of the structure denoted as Z^{2'} binds to (CR^{32'}_{q2'}R^{33'}_{r2'}).

In a preferable embodiment, Z^{2'} does not include a siloxane bond.

Z^{2'} is preferably a C₁₋₃₀ alkylene group, -(CH₂)_{z5'}-O-(CH₂)_{z6'}- (wherein z5' is an integer of 0 to 6 such as an integer of 1 to 6, and z6' is an integer of 0 to 6 such as an integer of 1 to 6), or -(CH₂)_{z7'}-phenylene-(CH₂)_{z8'}-(wherein z7' is an integer of 0 to 6 such as an integer of 1 to 6, and z8' is an integer of 0 to 6 such as an integer of 1 to 6). Such a C₁₋₆ alkylene group may be linear or may be branched, and is preferably linear. These groups may be substituted with one or more substituents selected from, for example, a fluorine atom, a C₁₋₆ alkyl group, a C₂₋₆ alkenyl group, and a C₂₋₆ alkynyl group, and are preferably unsubstituted.

In a preferable embodiment, Z^{2'} is a C₁₋₃₀ alkylene group or -(CH₂)_{z7'}-phenylene-(CH₂)_{z8'}-, and preferably - phenylene-(CH₂)_{z8'}-. When Z^{2'} is such a group, light resistance, in particular ultraviolet resistance, can be more increased.

In another preferable embodiment, Z^{2'} is a C₁₋₃₀ alkylene group such as a C₁₋₆ alkylene group or a C₁₋₃ alkylene group. In one embodiment, Z^{2'} may be -CH₂CH₂CH₂-. In another embodiment, Z^{2'} may be -CH₂CH₂-. In yet another embodiment, Z^{2'} may be - CH₂CH₂CH₂CH₂CH₂CH₂CH₂CH₂CH₂CH₂CH₂-.

R^{32'} is each independently -Z³-SiR³⁴ₙ₂R³⁵₃₋ₙ₂.

Z³ is each independently a single bond, an oxygen atom, or a divalent organic group. Below, the right side of the structure denoted as Z³ binds to (SiR³⁴ₙ₂R³⁵₃₋ₙ₂).

In one embodiment, Z³ is an oxygen atom.

In one embodiment, Z³ is a divalent organic group.

In a preferable embodiment, Z³ does not include a siloxane bond.

Z³ is preferably a C₁₋₃₀ alkylene group, -(CH₂)_{z5"}-O-(CH₂)_{z6"}- (wherein z5" is an integer of 0 to 6 such as an integer of 1 to 6, and z6" is an integer of 0 to 6 such as an integer of 1 to 6), or -(CH₂)_{z7"}-phenylene-(CH₂)_{z8"}-(wherein z7" is an integer of 0 to 6 such as an integer of 1 to 6, and z8" is an integer of 0 to 6 such as an integer of 1 to 6). Such a C₁₋₆ alkylene group may be linear or may be branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z³ is a C₁₋₃₀ alkylene group or -(CH₂)_{z7"}-phenylene-(CH₂)_{z8"}-, and preferably - phenylene-(CH₂)_{z8"}-. When Z³ is such a group, light resistance, in particular ultraviolet resistance, can be more increased.

In another preferable embodiment, Z³ is a C₁₋₃₀ alkylene group such as a C₁₋₆ alkylene group or a C₁₋₃ alkylene group. In one embodiment, Z³ may be -CH₂CH₂CH₂-. In another embodiment, Z³ may be -CH₂CH₂-. In yet another embodiment, Z³ may be -CH₂CH₂CH₂CH₂CH₂CH₂CH₂CH₂CH₂CH₂CH₂-.

R³⁴ is each independently a hydroxyl group or a hydrolyzable group.

R³⁴ is preferably, each independently, a hydrolyzable group.

R³⁴ is preferably, each independently, -OR^{h}, -OCOR^{h}, -O-N=CR^{h}₂, -NR^{h}₂, -NHR^{h}, -NCO, or a halogen (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

R³⁵ is each independently a monovalent organic group. Such a monovalent organic group is a monovalent organic group excluding the above hydrolyzable group.

In R³⁵, the monovalent organic group is preferably a C₁₋₂₀ alkyl group, more preferably a C₁₋₆ alkyl group, and even more preferably a methyl group.

n2 is each independently an integer of 0 to 3 for each (SiR³⁴ₙ₂R³⁵₃₋ₙ₂) unit, provided that, in the terminal moiety of the formula (S4), at least two (SiR³⁴ₙ₂R³⁵₃₋ₙ₂ ) units wherein n2 is 1 to 3 are present. In other words, in the terminal moiety of the formula (S4), at least two Si atoms to which a hydroxyl group or a hydrolyzable group is bonded are present.

n2 is each independently an integer of preferably 1 to 3, more preferably 2 to 3, and even more preferably 3 for each (SiR³⁴ₙ₂R³⁵₃₋ₙ₂) unit.

R^{33'} is each independently a hydrogen atom, a hydroxyl group, or a monovalent organic group. Such a monovalent organic group is a monovalent organic group excluding the hydrolyzable group.

In R^{33'}, the monovalent organic group is preferably a C₁₋₂₀ alkyl group or -(CₛH₂ₛ)ₜ₁-(O-CₛH₂ₛ)ₜ₂ (wherein s is an integer of 1 to 6, preferably an integer of 2 to 4, t1 is 1 or 0 and preferably 0, and t2 is an integer of 1 to 20, preferably an integer of 2 to 10, and more preferably an integer of 2 to 6), more preferably a C₁₋₂₀ alkyl group, even more preferably a C₁₋₆ alkyl group, and particularly preferably a methyl group.

In one embodiment, R^{33'} is a hydroxyl group.

In another embodiment, R^{33'} is a monovalent organic group, preferably a C₁₋₂₀ alkyl group, and more preferably a C₁₋₆ alkyl group.

q2' is each independently an integer of 0 to 3, and r2' is each independently an integer of 0 to 3. The sum of q2' and r2' is 3 in the (CR^{32'}_{q2'}R^{33'}_{r2'}) unit.

q2' is each independently an integer of preferably 1 to 3, more preferably 2 to 3, and even more preferably 3 for each (CR^{32'}_{q2'}R^{33'}_{r2'}) unit.

R³² is each independently -Z³-SiR³⁴ₙ₂R³⁵₃₋ₙ₂. Such -Z³-SiR³⁴ₙ₂R³⁵₃₋ₙ₂ has the same meanings as those described for R^{32'}.

R³³ is each independently a hydrogen atom, a hydroxyl group, or a monovalent organic group. Such a monovalent organic group is a monovalent organic group excluding the above hydrolyzable group.

In R³³, the monovalent organic group is preferably a C₁₋₂₀ alkyl group or -(CₛH₂ₛ)ₜ₁-(O-CₛH₂ₛ)ₜ₂ (wherein s is an integer of 1 to 6, preferably an integer of 2 to 4, t1 is 1 or 0 and preferably 0, and t2 is an integer of 1 to 20, preferably an integer of 2 to 10, and more preferably an integer of 2 to 6), more preferably a C₁₋₂₀ alkyl group, even more preferably a C₁₋₆ alkyl group, and particularly preferably a methyl group.

In one embodiment, R³³ is a hydroxyl group.

In another embodiment, R³³ is a monovalent organic group, preferably a C₁₋₂₀ alkyl group, and more preferably a C₁₋₆ alkyl group.

p2 is each independently an integer of 0 to 3, q2 is each independently an integer of 0 to 3, and r2 is each independently an integer of 0 to 3. The sum of p2, q2, and r2 is 3 in the (CR³¹ₚ₂R³²_{q2}R³³ᵣ₂) unit.

In one embodiment, p2 is 0.

In one embodiment, p2 may be each independently an integer of 1 to 3, an integer of 2 to 3, or 3 for each (CR³¹ₚ₂R³²_{q2}R³³ᵣ₂) unit. In a preferable embodiment, p2 is 3.

In one embodiment, q2 is each independently an integer of 1 to 3, preferably an integer of 2 to 3, and more preferably 3 for each (CR³¹ₚ₂R³²_{q2}R³³ᵣ₂) unit.

In one embodiment, p2 is 0, and q2 is each independently an integer of 1 to 3, preferably an integer of 2 to 3, and even more preferably 3 for each (CR³¹ₚ₂R³²_{q2}R³³ᵣ₂) unit.

R^{e1} is each independently -Z³-SiR³⁴ₙ₂R³⁵₃₋ₙ₂. Such -Z³-SiR³⁴ₙ₂R³⁵₃₋ₙ₂ has the same meanings as those described for R^{32'}.

R^{f1} is each independently a hydrogen atom, a hydroxyl group, or a monovalent organic group. Such a monovalent organic group is a monovalent organic group excluding the above hydrolyzable group.

In R^{f1}, the monovalent organic group is preferably a C₁₋₂₀ alkyl group or -(CₛH₂ₛ)ₜ₁-(O-CₛH₂ₛ)ₜ₂ (wherein s is an integer of 1 to 6, preferably an integer of 2 to 4, t1 is 1 or 0 and preferably 0, and t2 is an integer of 1 to 20, preferably an integer of 2 to 10, and more preferably an integer of 2 to 6), more preferably a C₁₋₂₀ alkyl group, even more preferably a C₁₋₆ alkyl group, and particularly preferably a methyl group.

In one embodiment, R^{f1} is a hydroxyl group.

In another embodiment, R^{f1} is a monovalent organic group, preferably a C₁₋₂₀ alkyl group, and more preferably a C₁₋₆ alkyl group.

k2 is each independently an integer of 0 to 3, l2 is each independently an integer of 0 to 3, and m2 is each independently an integer of 0 to 3. The sum of k2, l2, and m2 is 3 in the (CR^{d1}ₖ₂R^{e1}ₗ₂R^{f1}ₘ₂) unit.

In one embodiment, two or more such as 2 to 27, preferably 2 to 9, more preferably 2 to 6, even more preferably 2 to 3, and particularly preferably 3 (SiR³⁴ₙ₂R³⁵₃₋ₙ₂) units in which n2 is 1 to 3, preferably 2 or 3, and more preferably 3 are present in each terminal moiety of the formula (S3).

In a preferable embodiment, when R^{32'} is present in the formula (S4), n2 is an integer of 1 to 3, preferably 2 or 3, and more preferably 3 in at least one and preferably all R^{32'} groups.

In a preferable embodiment, when R³² is present in the formula (S4), n2 is an integer of 1 to 3, preferably 2 or 3, and more preferably 3 in at least one and preferably all R³² groups.

In a preferable embodiment, when R^{e1} is present in the formula (S4), n2 is an integer of 1 to 3, preferably 2 or 3, and more preferably 3 in at least one and preferably all R^{a1} groups.

In a preferable embodiment, in the formula (S4), k2 is 0, 12 is 2 or 3 and is preferably 3, and n2 is 2 or 3 and is preferably 3.

R^{g1} and R^{h1} are each independently -Z⁴-SiR¹¹ₙ₁R¹²₃₋ₙ₁, - Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂. Here, R¹¹, R¹², R^{a1}, R^{b2}, R^{c1}, R^{d1}, R^{e1}, R^{f1}, n1, k1, l1, m1, k2, l2, and m2 have the same meanings as above.

In a preferable embodiment, R^{g1} and R^{h1} are each independently -Z⁴-SiR¹¹ₙ₁R¹²₃₋ₙ₁.

Z⁴ is each independently a single bond, an oxygen atom, or a divalent organic group. Below, the right side of the structure denoted as Z⁴ binds to (SiR¹¹ₙ₁R¹²₃₋ₙ₁).

In one embodiment, Z⁴ is an oxygen atom.

In one embodiment, Z⁴ is a divalent organic group.

In a preferable embodiment, Z⁴ does not include a siloxane bond.

Z⁴ is preferably a C₁₋₃₀ alkylene group, - (CH₂)_{z5"}-O-(CH₂)_{z6"}- (wherein z5" is an integer of 0 to 6 such as an integer of 1 to 6, and z6" is an integer of 0 to 6 such as an integer of 1 to 6), or - (CH₂)_{z7"}-phenylene- (CH₂)_{z8"}-(wherein z7" is an integer of 0 to 6 such as an integer of 1 to 6, and z8" is an integer of 0 to 6 such as an integer of 1 to 6). Such a C₁₋₆ alkylene group may be linear or may be branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z⁴ is a C₁₋₃₀ alkylene group or - (CH₂)_{z7"}-phenylene- (CH₂)_{z8"}-, and preferably - phenylene- (CH₂)_{z8"}-. When Z³ is such a group, light resistance, in particular ultraviolet resistance, can be more increased.

In another preferable embodiment, Z⁴ is a C₁₋₃₀ alkylene group such as a C₁₋₆ alkylene group or a C₁₋₃ alkylene group. In one embodiment, Z⁴ may be -CH₂CH₂CH₂-. In another embodiment, Z⁴ may be -CH₂CH₂-. In yet another embodiment, Z⁴ may be -CH₂CH₂CH₂CH₂CH₂CH₂CH₂CH₂CH₂CH₂CH₂-.

In one embodiment, none of the formulae (S1), (S2), (S3), and (S4) contains a siloxane bond.

In one embodiment, R^{H} is a group represented by the formula (S2), (S3), (S4), or (S5).

In one embodiment, R^{H} is a group represented by the formula (S2), (S3), or (S4).

In one embodiment, R^{H} is a group represented by the formula (S3), (S4), or (S5).

In one embodiment, R^{H} is a group represented by the formula (S3) or (S4).

In one embodiment, R^{H} is a group represented by the formula (S4) or (S5).

In one embodiment, R^{H} is a group represented by the formula (S2).

In one embodiment, R^{H} is a group represented by the formula (S1). In a preferable embodiment, n1 is 1 to 3, preferably 2 to 3, and even more preferably 3.

In one embodiment, R^{H} is a group represented by the formula (S2). In a preferable embodiment, n1 is 1 to 3, preferably 2 to 3, and even more preferably 3.

In a preferable embodiment, the formula (S2) is the following formulae. In the following formulae, * represents the point of attachment to X¹.

* -Si(OCH₃)₃

***** -Si(OCH₂CH₃)₃

In one embodiment, R^{H} is a group represented by the formula (S3). In a preferable embodiment, the formula (S2) is -SiR^{a1}₂R^{c1} or -SiR^{a1}₃, R^{a1} is -Z¹-SiR²²_{q1}R²³ᵣ₁, Z¹ is a C₁₋₆ alkylene group, -(CH₂)_{z1}-O-(CH₂)_{z2}- (wherein z1 is an integer of 0 to 6 such as an integer of 1 to 6, and z2 is an integer of 0 to 6 such as an integer of 1 to 6), or - (CH₂)_{z3}-phenylene- (CH₂)_{z4}- (wherein z3 is an integer of 0 to 6 such as an integer of 1 to 6, and z4 is an integer of 0 to 6 such as an integer of 1 to 6), preferably a C₁₋₆ alkylene group, and q1 is 1 to 3, preferably 2 to 3, and even more preferably 3.

In one embodiment, R^{H} is a group represented by the formula (S4). In a preferable embodiment, the formula (S3) is -CR^{e1}₂R^{f1} or -CR^{e1}₃, R^{e1} is -Z³-SiR³⁴ₙ₂R³⁵₃₋ₙ₂, Z³ is a C₁₋₆ alkylene group, -(CH₂)_{z5"}-O-(CH₂)_{z6"}- (wherein z5" is an integer of 0 to 6 such as an integer of 1 to 6, and z6" is an integer of 0 to 6 such as an integer of 1 to 6), or -(CH₂)_{z7"}-phenylene-(CH₂)_{z8"}- (wherein z7" is an integer of 0 to 6 such as an integer of 1 to 6, and z8" is an integer of 0 to 6 such as an integer of 1 to 6), preferably a C₁₋₆ alkylene group, and n2 is 1 to 3, preferably 2 to 3, and even more preferably 3.

In one embodiment, R^{H} is a group represented by the formula (S5). In a preferable embodiment, R^{g1} and R^{h1} are -Z⁴-SiR¹¹ₙ₁R¹²₃₋ₙ₁, Z⁴ is a C₁₋₆ alkylene group, -(CH₂)_{z5"}-O-(CH₂)_{z6"}- (wherein z5" is an integer of 0 to 6 such as an integer of 1 to 6, and z6" is an integer of 0 to 6 such as an integer of 1 to 6), or -(CH₂)_{z7"}-phenylene-(CH₂)_{z8"}-(wherein z7" is an integer of 0 to 6 such as an integer of 1 to 6, and z8" is an integer of 0 to 6 such as an integer of 1 to 6), preferably a C₁₋₆ alkylene group, and n1 is 1 to 3, preferably 2 to 3, and even more preferably 3.

In a preferable embodiment, the formula (S3) is the following formulae. In the following formulae, * represents the point of attachment to X¹.

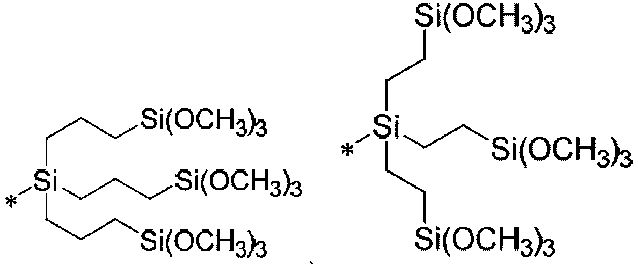

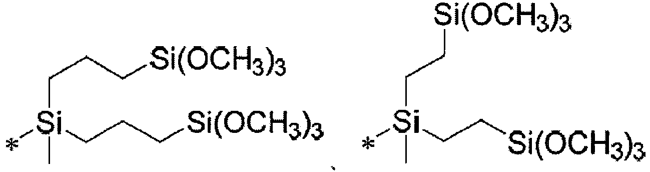

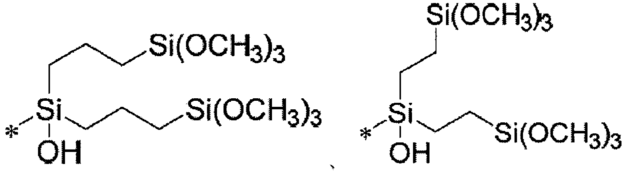

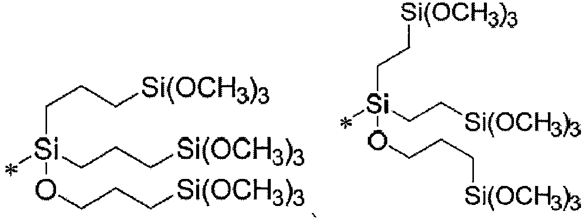

In a preferable embodiment, the formula (S4) is the following formulae. In the following formulae, * represents the point of attachment to X¹.

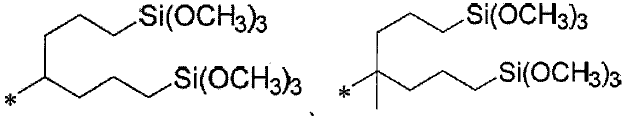

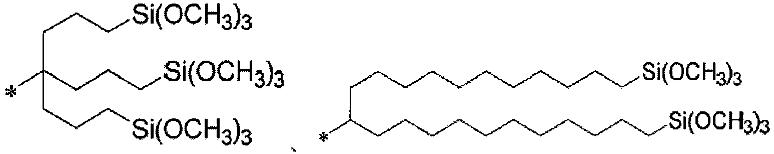

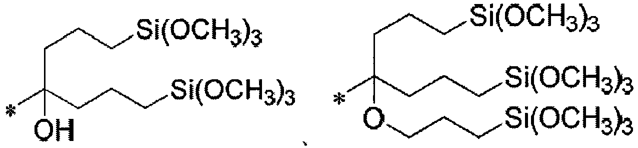

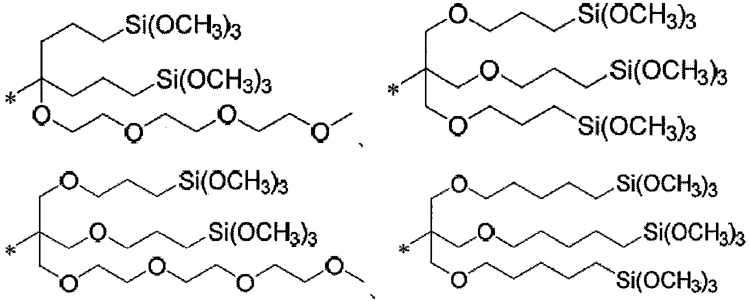

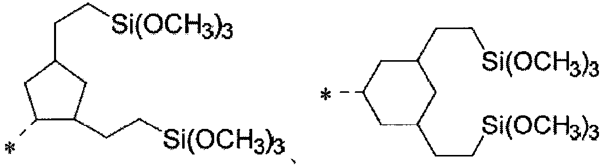

In a preferable embodiment, formula (S5) is the following formulae. In the following formulae, * represents the point of attachment to X¹.

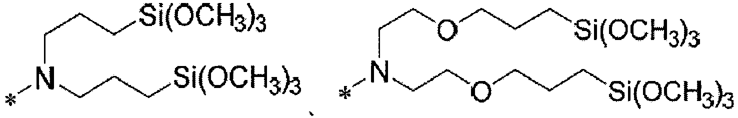

In one embodiment, suitable silane compounds of the present disclosure include, but are not limited to, the following compounds.

In the following formulae, n is preferably 0 or more, more preferably 3 or more, and particularly preferably 6 or more. Also, n is preferably 60 or less, more preferably 40 or less, and particularly preferably 36 or less. Moreover, n is preferably 3 or more and 60 or less, more preferably 3 or more and 60 or less, and particularly preferably 6 or more and 40 or less.

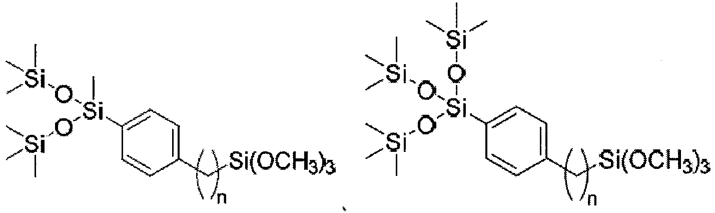

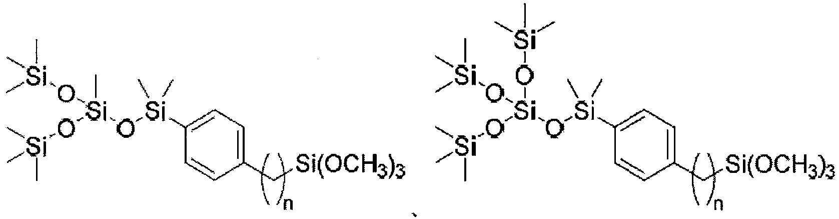

In the following formulae, p is preferably 1 or more, more preferably 3 or more, and particularly preferably 5 or more. Also, p is preferably 500 or less, more preferably 300 or less, and particularly preferably 100 or less. Moreover, p is preferably 1 or more and 500 or less, more preferably 3 or more and 300 or less, and particularly preferably 5 or more and 100 or less. From the viewpoint of abrasion resistance, p is preferably 1 to 50, and more preferably 1 to 30. From the viewpoint of lubricity, p is preferably 10 to 300, more preferably 20 to 200, and particularly preferably 50 to 200. q is preferably 0 or more, more preferably 3 or more, and particularly preferably 6 or more. Also, q is preferably 60 or less, more preferably 40 or less, and particularly preferably 36 or less. Moreover, q is preferably 3 or more and 60 or less, more preferably 3 or more and 60 or less, and particularly preferably 6 or more and 40 or less.

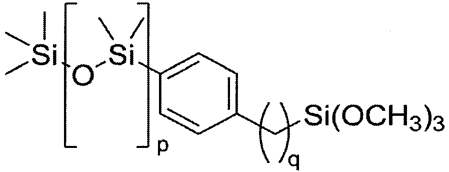

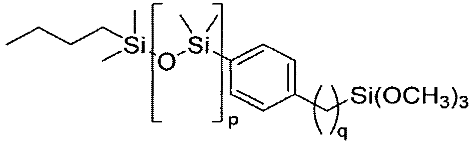

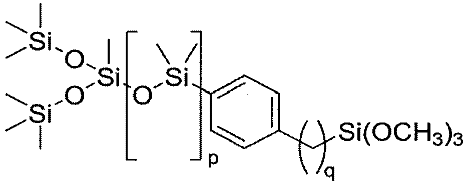

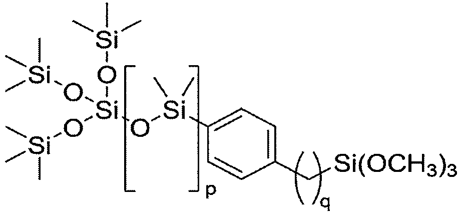

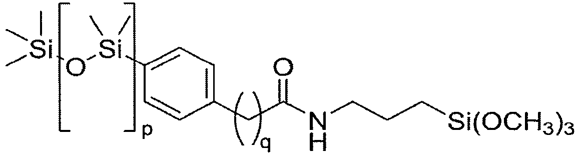

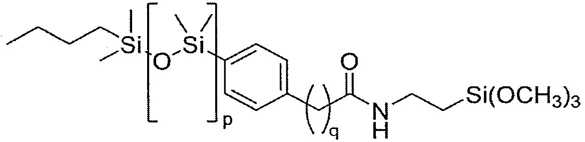

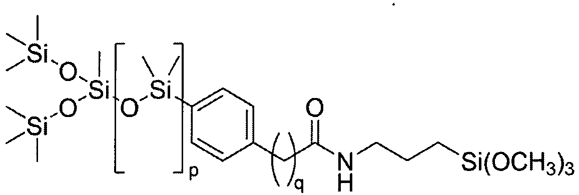

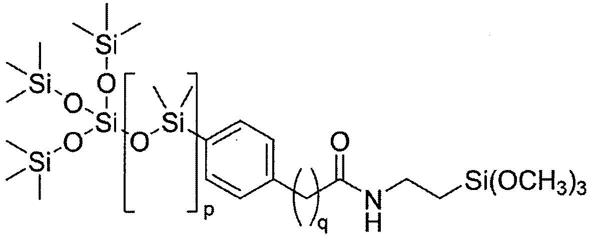

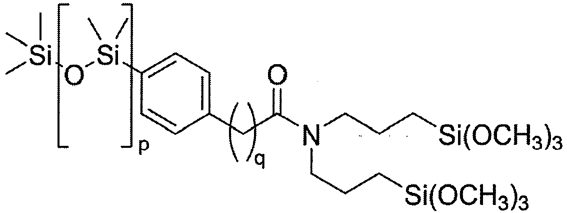

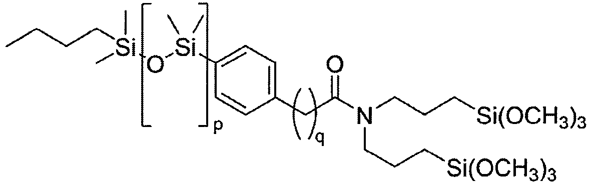

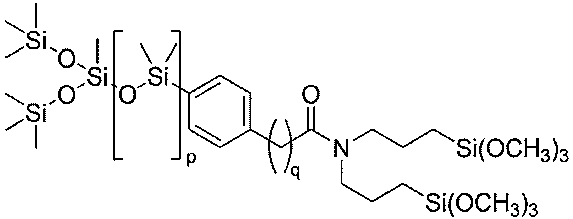

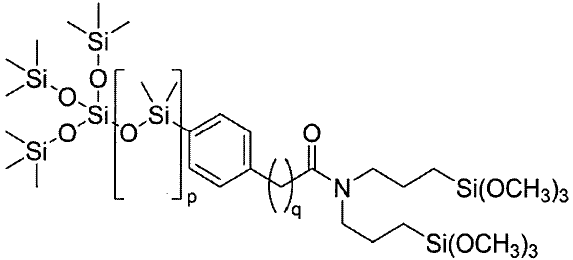

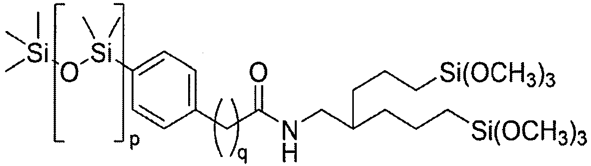

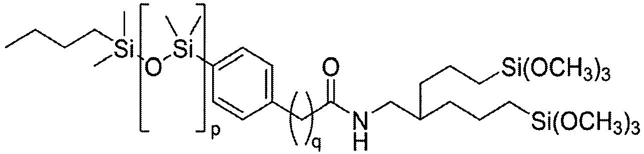

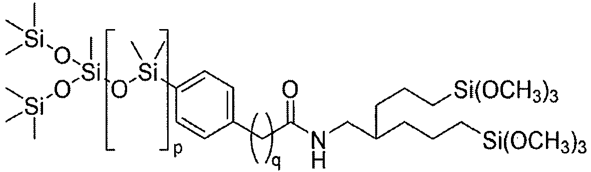

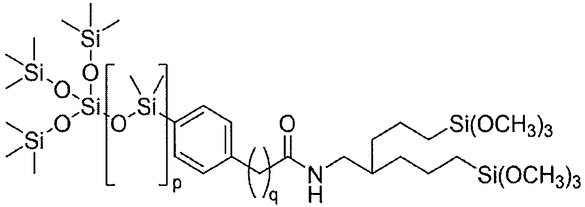

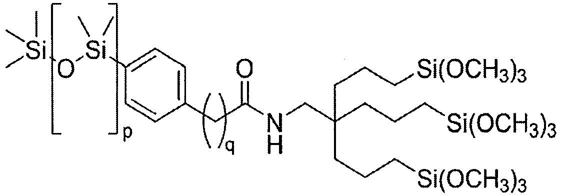

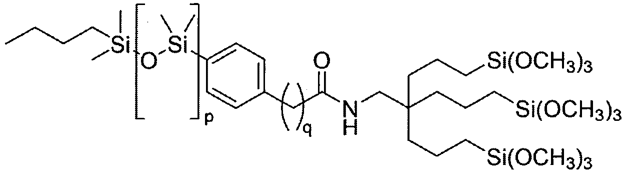

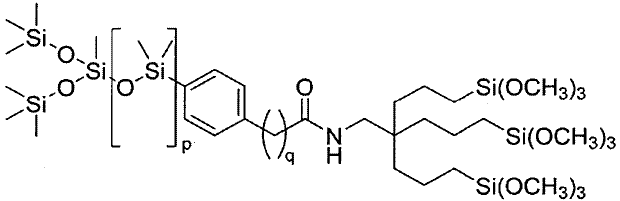

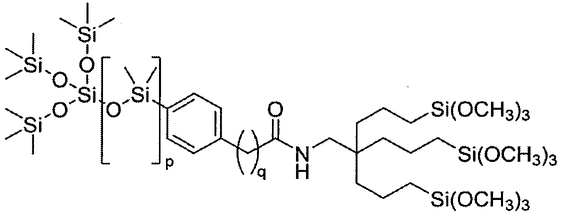

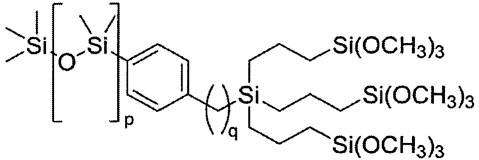

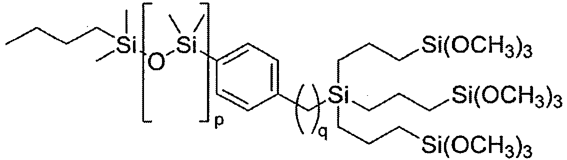

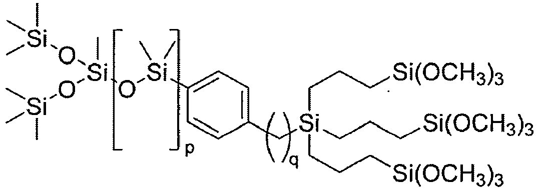

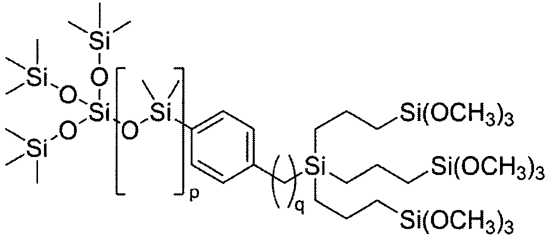

In one embodiment, suitable silane compounds of the present disclosure include, but are not limited to, the following compounds.

In the following formulae, n is preferably 0 or more, more preferably 3 or more, and particularly preferably 6 or more. Also, n is preferably 60 or less, more preferably 40 or less, and particularly preferably 36 or less. Moreover, n is preferably 3 or more and 60 or less, more preferably 3 or more and 60 or less, and particularly preferably 6 or more and 40 or less.

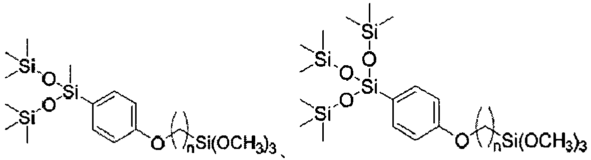

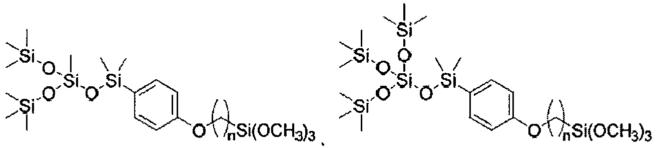

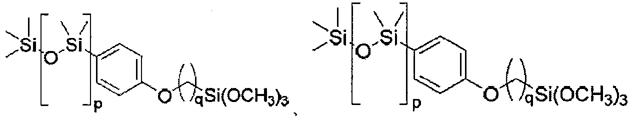

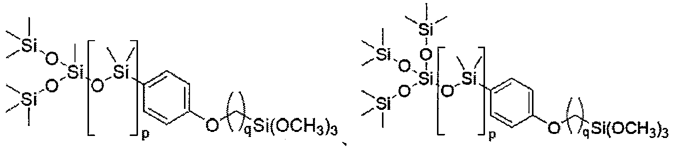

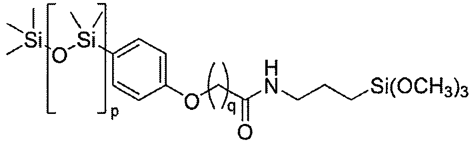

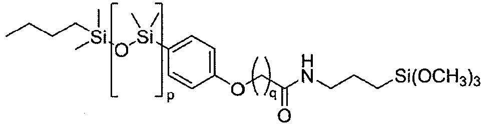

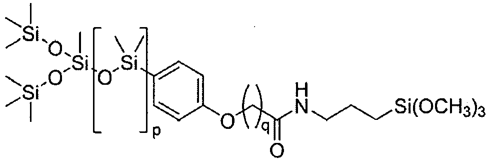

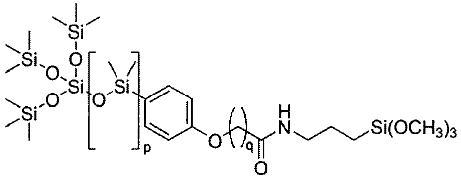

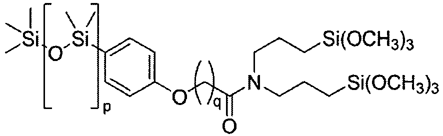

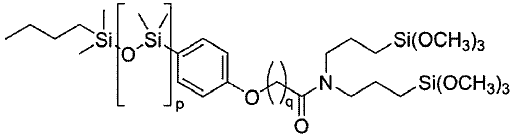

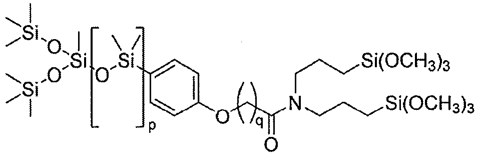

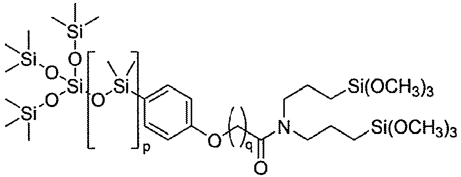

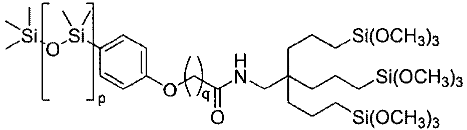

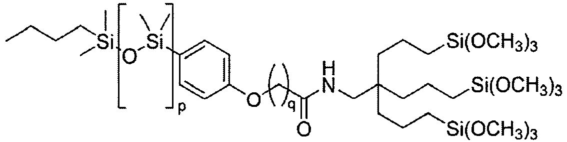

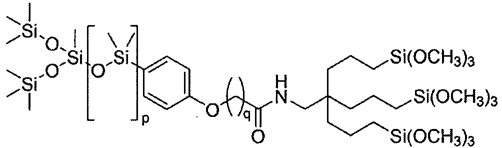

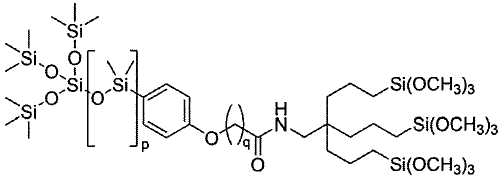

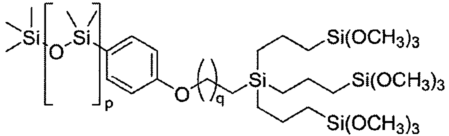

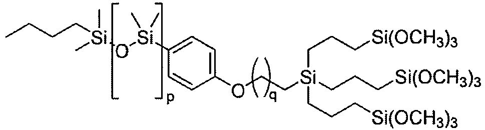

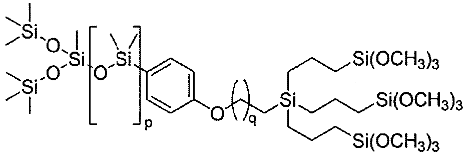

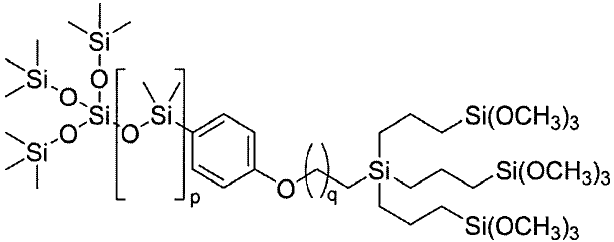

### [Production Method]

Below, the method for producing the silane compound of the present disclosure will now be described in detail. Note that the method for producing the silane compound of the present disclosure is not limited to the following methods.

### (Production method)

In this production method, an aromatic compound having a halogen atom and a terminal olefin-containing group is reacted with a silane compound to produce an aromatic compound having a siloxane group and an olefin-containing group, the olefin group of this aromatic compound is reacted with a compound represented by, for example, the following formula:

HSiR^{j27}ₘ₃R^{j28}₃₋ₘ₃

wherein
R^{j27} is each independently a hydroxyl group or a hydrolyzable group,
R^{j28} is each independently a monovalent organic group, and
m3 is 1 to 3,
and thereby a silane compound can be obtained. The monovalent organic group does not include a hydrolyzable group.

Examples of the aromatic compound having a halogen atom and a terminal olefin-containing group include compounds represented by the formula (1b):

Hal-R^{Ar}-R^{X1}-CH=CH₂ (1b)

wherein
Hal is halogen such as fluorine, chlorine, bromine, or iodine, and preferably bromine,
R^{Ar} is a divalent aromatic group and is as defined in the formula (1), and
R^{x1} is a single bond or a divalent group.

Examples of the compounds represented by the formula (1b) include compounds represented by the following formula (1b1), (1b2), (1b3), or (1b4):

Hal-R^{Ar}-R^{x}-CONR⁸¹-(CH₂)_{z}-CH=CH₂ (1b1)

Hal-R^{Ar}-R^{X}-CON[-(CH₂)_{z}-CH=CH₂]₂ (1b2)

Hal-R^{Ar}-R^{X}-CONR⁸¹-(CH₂)_{zb}-CR⁸²[-(CH₂)_{za}-CH=CH₂]₂ (1b3)

Hal-R^{Ar}-R^{X}-CONR⁸¹-(CH₂)_{zb}-C[-(CH₂)_{za}-CH=CH₂]₃ (1b4)

(wherein
Hal is halogen,
R^{Ar} is a divalent aromatic group,
R^{X} is a single bond or a divalent group,
R⁸¹ is a hydrogen atom or a monovalent organic group,
R⁸² is a hydrogen atom or a monovalent organic group,
za is an integer of 0 to 30, and
zb is an integer of 0 to 30) or compounds represented by the formula (1d1), (1d2), or (1d3):

   Hal-R^{Ar}-R^{X}-(CH₂)_{za}-CH=CH₂ (1d1)

   Hal-R^{Ar}-R^{X}-SiR⁸³[-(CH₂)_{za}-CH=CH₂]₂ (1d2)

   Hal-R^{Ar}-R^{x}-Si[-(CH₂)_{za}-CH=CH₂]₃ (1d3)

   (wherein
   Hal is halogen,
   R^{Ar} is a divalent aromatic group,
   R^{X} is a single bond or a divalent group,
   R⁸³ is a hydrogen atom or a monovalent organic group,
   za is an integer of 0 to 30, and
   zb is an integer of 0 to 30).

The compound represented by the formula (1b1), (1b2), (1b3) or (1b4), or the compound represented by the formula (1d1), (1d2) or (1d3), is reacted with a silane compound to each give a compound represented by the following formula (1a1), (1a2), (1a3), or (1a4):

R^{A}-R^{S}-SiR⁶₂-R^{Ar}-R^{X}-CONR⁸¹-(CH₂)_{za}-CH=CH₂ (1a1)

R^{A}-R^{S}-SiR⁶₂-R^{Ar}-R^{X}-CON[-(CH₂)_{za}-CH=CH₂]₂ (1a2)

R^{A}-R^{S}-SiR⁶₂-R^{Ar}-R^{X}-CONR⁸¹-(CH₂)_{zb}-CR⁸²[-(CH₂)_{za}-CH=CH₂]2 (1a3)

R^{A}-R^{S}-SiR⁶₂-R^{Ar}-R^{X}-CONR⁸¹-(CH₂)_{zb}-C[-(CH₂)_{za}-CH=CH₂]3 (1a4)

or a compound represented by the following (1c1), (1c2), or (1c3):

R^{A}-R^{S}-SiR⁶₂-R^{Ar}-R^{X}-(CH₂)_{za}-CH=CH₂ (1c1)

R^{A}-R^{S}-SiR⁶₂-R^{Ar}-R^{X}-SiR⁸³[-(CH₂)_{za}-CH=CH₂]₂ (1c2)

R^{A}-R^{S}-SiR⁶₂-R^{Ar}-R^{X}-Si[-(CH₂)_{za}-CH=CH₂]3 (1c3)

wherein
R^{A} is a hydrocarbon group, or a monovalent group containing one or more Si atoms to which neither a hydroxyl group nor a hydrolyzable group is directly bonded;
R^{S} is a group represented by the following formula: 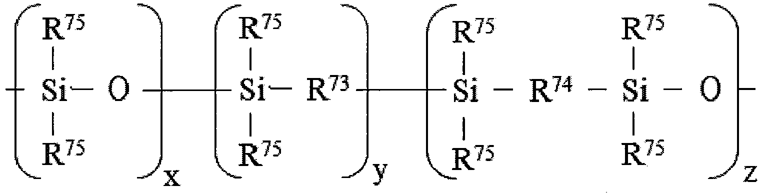 wherein
   R⁷³ is each independently a single bond, a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
   R⁷⁴ is each independently a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
      R⁷⁶ is each independently a C₁₋₆ alkylene group,
      R⁷⁷ is each independently an optionally substituted phenylene group or naphthylene group,
      R⁷⁸ is each independently a single bond or a C₁₋₆ alkylene group,
      R⁷⁹ is each independently a single bond or an oxygen atom,
   R⁷⁵ is each independently a hydrocarbon group,
   x is an integer of 0 to 500,
   y is an integer of 0 to 500,
   z is an integer of 0 to 500,
   x + y + z is 1 or more, and
   the occurrence order of the respective repeating units enclosed in parentheses provided with x, y, or z is not limited in the formula;
   R⁶ is each independently a hydrocarbon group;
   R^{Ar} is a divalent aromatic group;
   R^{X} is a single bond or a divalent group;
   R⁸¹ is a hydrogen atom or a monovalent organic group;
   R⁸³ is a hydrogen atom or a monovalent organic group;
   za is an integer of 0 to 30; and
   zb is an integer of 0 to 30.

In the formulae (1a1) to (1a4), (1b1) to (1b4), (1c1) to (1c3), and (1d1) to (1d3), R^{A}, R^{S}, R⁶, and R^{Ar} have the same meanings as R^{A}, R^{S}, R⁶, and R^{Ar} in the formula (1), respectively, and may have the same embodiments.

In the formulae (1b1) to (1b4) and (1d1) to (1d3), Hal is halogen, specifically a fluorine atom, a chlorine atom, a bromine atom, or an iodine atom, preferably a chlorine atom or a bromine atom, and more preferably a bromine atom.

In the formulae (1a1) to (1a4), (1b1) to (1b4), (1c1) to (1c3), and (1d1) to (1d3), R^{X} is a single bond or a divalent group.

In one embodiment, R^{X} is a single bond.

In another embodiment, R^{X} is a divalent group.

In one embodiment, the divalent group may be a group represented by the following formula:

-X^{10'}-X^{11'}-X^{12'}-

wherein
X^{10'} is an alkylene group having three or more carbon atoms,
X^{11'} is a single bond, -CO-, -COO-, -NR⁴¹-, -CONR⁴¹-, -OCONR⁴¹-, -NR⁴¹-CO-NR⁴¹-, -O-, -S-, -O-(CH₂)ₓ-CONR⁴¹-, or - O-(CH₂)ₓ₁-CO-,
R⁴¹ is a hydrogen atom or a C₁₋₆ alkyl group,
x1 is an integer of 1 to 20, and
X^{12'} is a single bond or a C₁₋₃₀ alkylene group. X^{10'}, X^{11'}, and X^{12'} have the same meanings as X¹⁰, X¹¹, and X¹² in the formula (1), and may have the same embodiments.

R⁸¹ is a hydrogen atom or a monovalent organic group.

R⁸² is a hydrogen atom, a hydroxy group, or a monovalent organic group.

R⁸³ is a hydrogen atom, a hydroxy group, or a monovalent organic group.

The monovalent organic groups in R⁸¹, R⁸², and R⁸³ may each independently be a hydrocarbon group, or a group having an oxygen atom at a terminal or in the main chain of a hydrocarbon group.

The monovalent organic group is preferably a C₁₋₂₀ alkyl group or -(CₛH₂ₛ)ₜ₁-(O-CₛH₂ₛ)ₜ₂H (wherein s is an integer of 1 to 6 and preferably an integer of 2 to 4, t1 is 1 or 0 and preferably 0, and t2 is an integer of 1 to 20, preferably an integer of 2 to 10, and more preferably an integer of 2 to 6), more preferably a C₁₋₂₀ alkyl group, even more preferably a C₁₋₆ alkyl group, and particularly preferably a methyl group.

In the formulae (1a1) to (1a4), (1b1) to (1b4), (1c1) to (1c3), and (1d1) to (1d3), za is an integer of 0 to 30.

In one embodiment, za is 0.

In another embodiment, za is an integer of 1 to 30, and may be an integer of, for example, 4 to 30, 8 to 28, 10 to 26, and 14 to 22.

In the formulae (1a1) to (1a4), (1b1) to (1b4), (1c1) to (1c3), and (1d1) to (1d3), zb is an integer of 0 to 30.

In one embodiment, zb is 0.

In another embodiment, zb is an integer of 1 to 30, and may be an integer of, for example, 4 to 30, 8 to 28, 10 to 26, and 14 to 22.

Examples of the silane compound include the following compounds:

ClSiR⁸⁵₃, ClSiR⁸⁵(SiR⁸⁵₃)₂,

wherein R⁸⁵ is each independently a hydrocarbon group, preferably a C₁₋₆ alkyl group, more preferably a C₁₋₃ alkyl group, and even more preferably a methyl group; and 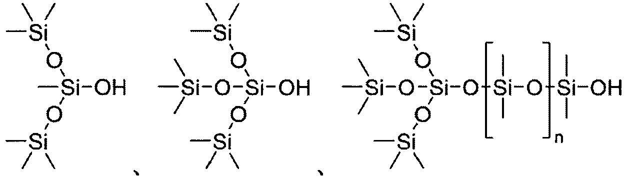 wherein n is 0 to 500, and preferably 0 to 200 (in one embodiment, n is 0; in another embodiment, n is 1 to 200, preferably 10 to 100, and more preferably 10 to 50; and in yet another embodiment, n is preferably 1 to 10, and more preferably 1 to 6).

The silane compound may be a cyclic siloxane. Examples of the cyclic siloxane include hexamethylcyclotrisiloxane, octamethylcyclotetrasiloxane, decamethylcyclopentasiloxane, dodecamethylcyclohexasiloxane, tetradecamethylcycloheptasiloxane, hexadecamethylcyclooctasiloxane, octadecamethylcyclononasiloxane, and eicosamethylcyclodecasiloxane. From the viewpoint of reactivity, hexamethylcyclotrisiloxane, octamethylcyclotetrasiloxane, decamethylcyclopentasiloxane, and dodecamethylcyclohexasiloxane are preferable, and hexamethylcyclotrisiloxane and octamethylcyclotetrasiloxane are more preferable.

The silane compound represented by the formula (1) can be obtained by reacting the aromatic compound with the cyclic siloxane and then with a capping agent. The capping agent may be a chlorosilane. Specific examples of the chlorosilane include chlorotrimethylsilane, chlorotriethylsilane, chlorotripropylsilane, chlorotributylsilane, chlorocyclohexyldimethylsilane, chlorodimethylphenylsilane, chloromethyldiphenylsilane, chlorotriphenylsilane, and chlorosilanes represented by the following formulae:

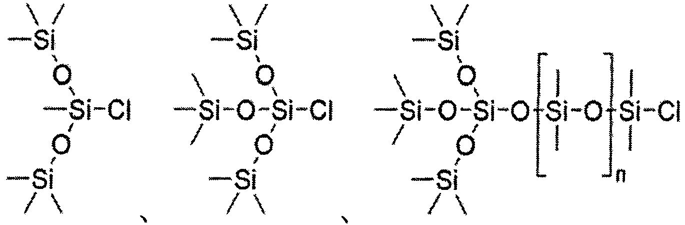

Alternatively, the silane compound of the present disclosure can be obtained by reacting a raw material silane compound, a cyclic siloxane, and a compound having a terminal olefin-containing group to produce a compound having a siloxane group and an olefin-containing group, and reacting the olefin group of this compound with a compound represented by the following formula:

HSiR^{j27}ₘ₃R^{j28}₃₋ₘ₃

wherein
R^{j27} is each independently a hydroxyl group or a hydrolyzable group,
R^{j28} is each independently a monovalent organic group, and
m3 is 1 to 3.

The raw material silane compound may be a silane compound represented by the following formula:

R¹ₙₐR²₃₋ₙₐSi-(CH₂)ₚ-SiR²₂-X

wherein
R¹ is each independently a group represented by -(R⁴-SiR³₂)ₘₐ-R³,
   R⁴ is each independently an oxygen atom or a C₁₋₆ alkylene group,
   R³ is each independently a hydrocarbon group or R^{1'},
      R^{1'} has the same meaning as R¹,
   ma is each independently an integer of 1 to 5,
provided that the number of R^{1'} in R¹ is 20 or less,
R² is each independently a hydrocarbon group,
na is an integer of 1 to 3, p is an integer of 0 to 10, preferably an integer of 0 to 5, more preferably an integer of 0 to 3, and even more preferably 0, 1, or 2, and
X is a hydrogen atom or a chlorine atom.

The silane compound can be obtained by reacting a silane compound having a terminal olefin group with a compound represented by:

HSiR^{j31}ₘ₅R^{j32}₃₋ₘ₅

wherein
R^{j31} is independently a hydrogen atom or a halogen atom (preferably a chlorine atom),
R^{j32} is independently a monovalent organic group, and
m5 is 1 to 3.

The silane compound having a terminal olefin group may be a silane compound represented by the following formula:

R¹ₙₐR²₃₋ₙₐSi-(CH₂)_{q}-CH=CH₂

wherein
R¹ is each independently a group represented by -(R⁴-SiR³₂)ₘₐ-R³,
   R⁴ is each independently an oxygen atom or a C₁₋₆ alkylene group,
   R³ is each independently a hydrocarbon group or R^{1'},
      R^{1'} has the same meaning as R¹,
   ma is each independently an integer of 1 to 5,
provided that the number of R^{1'} in R¹ is 20 or less,
R² is each independently a hydrocarbon group,
na is an integer of 1 to 3, and
q is an integer of 0 to 10, preferably an integer of 0 to 5, more preferably an integer of 0 to 3, and even more preferably 0, 1, or 2.

The present disclosure provides a composition containing the compound represented by the formula (1) of the present disclosure and a compound represented by the formula (2):

((X³)_{γ}-R^{Ar})_{α}-X¹-(R^{H})_{β} (2)

wherein
X³ is hydrogen, fluorine, chlorine, bromine, iodine, or a hydroxyl group,
R^{Ar} is a di- to hexavalent aromatic group,
X¹ is a di- to decavalent group,
R^{H} is a monovalent group containing a Si atom to which a hydroxyl group or a hydrolyzable group is bonded,
α is an integer of 1 to 9,
β is an integer of 1 to 9, and
y is the valence of R^{Ar} minus 1.

In the composition, the compound represented by the formula (2) is contained in an amount of preferably 0.1% by mass to 30% by mass, more preferably 0.1% by mass to 20% by mass, and preferably 0.1% by mass to 10% by mass, based on the sum of the compound represented by the formula (1) and the compound represented by the formula (2). The lower limit of the content of the compound represented by the formula (2) is not limited, and may be, for example, 3.0% by mass, 2.0% by mass, 1.0% by mass, 0.5% by mass, or 0.3% by mass. The upper limit of the content of the compound represented by the formula (2) is not limited, and may be, for example, 8.0% by mass, 5.0% by mass, 3.0% by mass, or 1.0% by mass.

In one embodiment, the compound represented by the formula (2) is not limited, and examples include the following compounds:

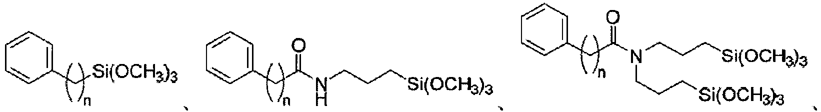

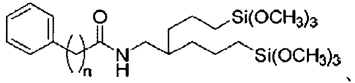

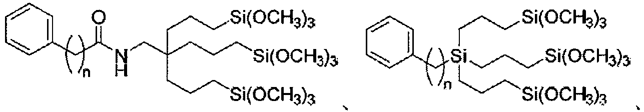

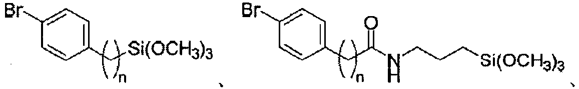

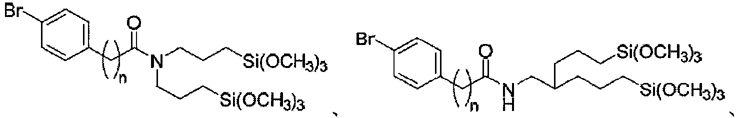

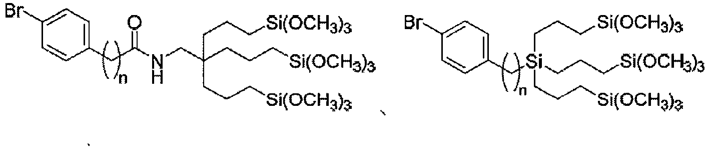

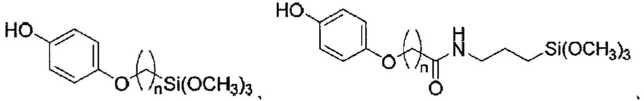

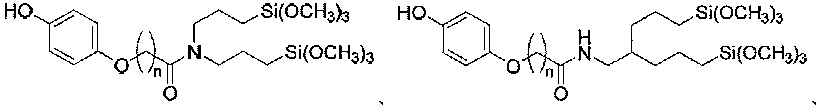

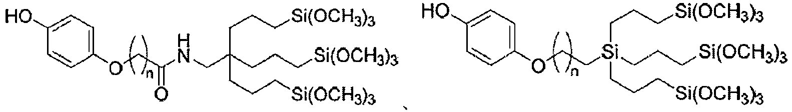

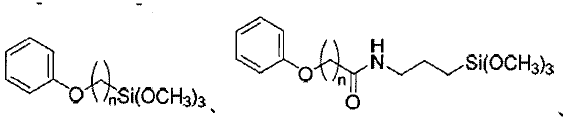

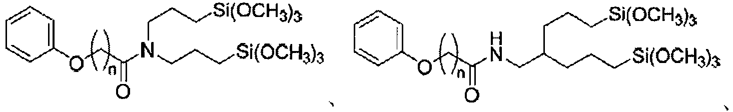

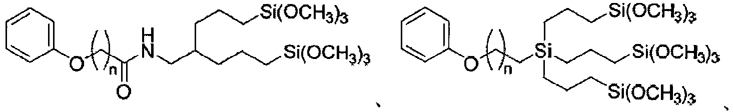

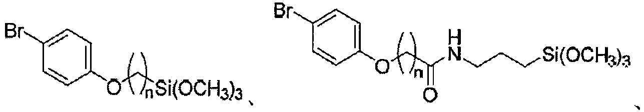

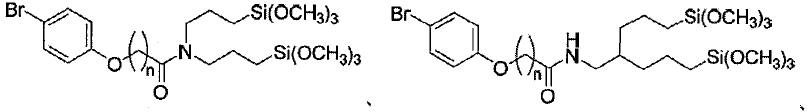

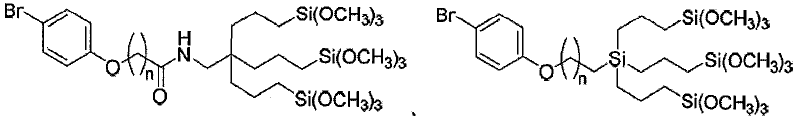

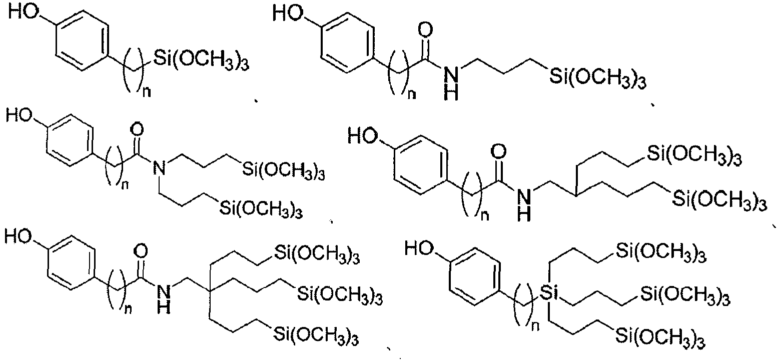

In the above formulae, n is 0 or more, preferably 3 or more, and more preferably 6 or more. n is preferably 60 or less, more preferably 40 or less, and even more preferably 36 or less. n is preferably 3 or more and 60 or less, more preferably 3 or more and 60 or less, and even more preferably 6 or more and 40 or less.

Next, the surface-treating agent of the present invention will now be described.

The surface-treating agent of the present disclosure contains at least one silane compound represented by the formula (1).

In one embodiment, the surface-treating agent of the present disclosure is at least one compound itself that is represented by the formula (1).

In one embodiment, the content of the compound represented by the formula (1) is preferably 0.1 to 50.0% by mass,more preferably 1.0 to 30.0% by mass, even more preferably 5.0 to 25.0% by mass, and particularly preferably 10.0 to 20.0% by mass based on the entirety of the surface-treating agent.

In another embodiment, the content of the compound represented by the formula (1) is preferably 0.001 to 30% by mass, more preferably 0.01 to 10% by mass, even more preferably 0.05 to 5% by mass, and particularly preferably 0.05 to 2% by mass based on the entirety of the surface-treating agent.

In one embodiment, the surface-treating agent of the present disclosure may contain the compound represented by the formula (1) and a condensate in which at least a part of the compound represented by the formula (1) is condensed.

In the above embodiment, the content of the condensate may be preferably 40% by mass or less and more preferably 30% by mass or less based on the sum of the compound represented by the formula (1) and the condensate. Here, the content of the condensate can be determined from, for example, the abundance ratio of the peak position to the area in GPC (gel permeation chromatography).

The composition of the present disclosure may contain a solvent, a (non-reactive) silicone compound that may be understood as a silicone oil (hereinafter, referred to as "silicone oil"), an amine compound, an alcohol, a catalyst, a surfactant, a polymerization inhibitor, a sensitizer, and the like.

In one embodiment, the surface-treating agent of the present disclosure contains a compound represented by R⁹⁰-OH.

R⁹⁰ is a monovalent organic group and is preferably a C₁₋₂₀ alkyl group or a C₃₋₂₀ alkylene group, and these groups may be substituted with one or more substituents. Examples of substituents include a hydroxyl group and - OR⁹¹ wherein R⁹¹ is a C₁₋₁₀ alkyl group, and preferably a C₁₋₃ alkyl group, such as a methyl group.

In one embodiment, the surface-treating agent of the present disclosure may contain a solvent selected from the compounds represented by R⁸¹OR⁸², R⁸³ₙ₈C₆H₆₋ₙ₈, R⁸⁴R⁸⁵R⁸⁶Si-(O-SiR⁸⁷R⁸⁸)ₘ₈-R⁸⁹, and (OSiR⁸⁷R⁸⁸)ₘ₉,
wherein
R⁸¹ to R⁸⁹ are each independently a monovalent organic group having 1 to 10 carbon atoms,
m8 is an integer of 1 to 6,
m9 is an integer of 3 to 8, and
n8 is an integer of 0 to 6.

The monovalent organic group having 1 to 10 carbon atoms may be linear or branched, and may further contain a cyclic structure.

In one embodiment, the monovalent organic group having 1 to 10 carbon atoms may contain an oxygen atom, a nitrogen atom, or a halogen atom.

In another embodiment, the monovalent organic group having 1 to 10 carbon atoms does not contain a halogen atom.

In a preferable embodiment, the monovalent organic group having 1 to 10 carbon atoms is a hydrocarbon group optionally substituted with a halogen, and preferably a hydrocarbon group not substituted with a halogen.

In one embodiment, the hydrocarbon group is linear.

In another embodiment, the hydrocarbon group is branched.

In another embodiment, the hydrocarbon group contains a cyclic structure.

In one embodiment, the solvent is R⁸¹OR⁸².

R⁸¹ and R⁸² may be, each independently, preferably a hydrocarbon group having 1 to 8 carbon atoms, and more preferably a C₁₋₆ alkyl group or a C₅₋₈ cycloalkyl group.

In one embodiment, the solvent is R⁸³ₙ₈C₆H₆₋ₙ₈.

C₆H₆₋ₙ₈ is an n8-valent benzene ring. That is to say, R⁸³ₙ₈C₆H₆₋ₙ₈ is benzene substituted with n8 R⁸³.

R⁸³ may be each independently a halogen, or a C₁₋₆ alkyl group optionally substituted with a halogen.

n8 is preferably an integer of 1 to 3.

In one embodiment, the solvent is R⁸⁴R⁸⁵R⁸⁶Si-(O-SiR⁸⁷R⁸⁸)ₘ₈-R⁸⁹.

In one embodiment, the solvent is (OSiR⁸⁷R⁸⁸)ₘ₉. (OSiR⁸⁷R⁸⁸)ₘ₉ is a cyclic siloxane formed of multiple OSiR⁸⁷R⁸⁸ units bonded in a cyclic form.

R⁸⁴ to R⁸⁹ are each independently a hydrogen atom or a C₁₋₆ alkyl group, preferably a C₁₋₆ alkyl group, more preferably a C₁₋₃ alkyl group, and even more preferably a methyl group.

m8 is preferably an integer of 1 to 6, more preferably an integer of 1 to 5, and even more preferably 1 to 2.

m9 is preferably an integer of 3 to 6, and more preferably an integer of 3 to 5.

In one embodiment, examples of the solvent include aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide, N,N-dimethylacetamide, and N-methylpyrrolidone; ether alcohols such as methyl cellosolve, cellosolve, isopropyl cellosolve, butyl cellosolve, and diethylene glycol monomethyl ether; diethylene glycol monoethyl ether acetate; polyfluoroaromatic hydrocarbons (for example, 1,3-bis(trifluoromethyl)benzene); polyfluoroaliphatic hydrocarbons (for example, C₆F₁₃CH₂CH₃ (for example, ASAHIKLIN(R) AC-6000 manufactured by AGC Inc.), C₆F₁₃H (for example, ASAHIKLIN(R) AC-2000 manufactured by AGC Inc.), and 1,1,2,2,3,3,4-heptafluorocyclopentane (for example, Zeorolla(R) H manufactured by ZEON Corporation); fluorine-containing hydrocarbons such as 1,1,2-trichloro-1,2,2-trifluoroethane, 1,2-dichloro-1,1,2,2-tetrafluoroethane, 1,1-dichloro-1,2,2,3,3-pentafluoropropane (HCFC 225), and 1,3-bis(trifluoromethyl)benzene; fluorine-containing alcohols such as CF₃CH₂OH, CF₃CF₂CH₂OH, and (CF₃)₂CHOH; alkyl perfluoroalkyl ethers (the perfluoroalkyl group and the alkyl group may be linear or branched) such as hydrofluoroethers (HFE) (for example, perfluoropropyl methyl ether (C₃F₇OCH₃) (for example, Novec(TM) 7000 manufactured by SUMITOMO 3M), perfluorobutyl methyl ether (C₄F₉OCH₃) (for example, Novec(TM) 7100 manufactured by SUMITOMO 3M), perfluorobutyl ethyl ether (C₄F₉OC₂H₅) (for example, Novec(TM) 7200 manufactured by SUMITOMO 3M), and perfluorohexyl methyl ether (C₂F₅CF(OCH₃)C₃F₇) (for example, Novec(TM) 7300 manufactured by SUMITOMO 3M), or CF₃CH₂OCF₂CHF₂ (for example, ASAHIKLIN(R) AE-3000 manufactured by AGC Inc.)), hydrofluoroolefins; ethers such as CF₃CH=CHCl (for example, CELEFIN(R) 1233Z manufactured by Central Glass Co., Ltd.), CHF₂CF=CHCl (for example, AMOLEA(R) AS-300 manufactured by AGC Inc.), and cyclopentyl methyl ether; siloxanes such as hexamethyldisiloxane, hexaethyldisiloxane, octamethyltrisiloxane, octamethylcyclotetrasiloxane, octamethylcyclopentasiloxane, decamethylcyclopentasiloxane, decamethyltetrasiloxane, dodecamethylpentasiloxane, and tetradecamethylhexasiloxane; and dimethylsulfoxide. Alternatively, the solvent may be a mixed solvent of two or more of such solvents. In particular, preferable are aliphatic hydrocarbons, esters, glycol ethers, alcohols, ether alcohols, and siloxanes. For example, preferable are hexane, cyclohexane, heptane, octane, nonane, decane, undecane, dodecane, mineral spirits, methyl acetate, ethyl acetate, propyl acetate, n-butyl acetate, isopropyl acetate, isobutyl acetate, propylene glycol monomethyl ether, propylene glycol monoethyl ether, propylene glycol monobutyl ether, methanol, ethanol, iso-propanol, n-butanol, isobutanol, tert-butanol, sec-butanol, diethylene glycol monomethyl ether, hexamethyldisiloxane, hexaethyldisiloxane, octamethyltrisiloxane, decamethyltetrasiloxane, dodecamethylpentasiloxane, tetradecamethylhexasiloxane, octamethylcyclotetrasiloxane, and octamethylcyclopentasiloxane.

Examples of the silicone oil include, but are not limited to, compounds represented by the following general formula (3a):

R^{1a}-(SiR^{3a}₂-O)ₐ₁-SiR^{3a}₂-R^{1a} (3a)

wherein
R^{1a} is each independently a hydrogen atom or a hydrocarbon group,
R^{3a} is each independently a hydrogen atom or a hydrocarbon group, and
a1 is 2 to 3,000.

R^{3a} is each independently a hydrogen atom or a hydrocarbon group. Such a hydrocarbon group may be substituted.

R^{3a} is, each independently, preferably an unsubstituted hydrocarbon group or a hydrocarbon group substituted with a halogen atom. Such a halogen atom is preferably a fluorine atom.

R^{3a} is, each independently, preferably a C₁₋₆ alkyl group or an aryl group optionally substituted with a halogen atom, and more preferably a C₁₋₆ alkyl group or an aryl group.

The C₁₋₆ alkyl group may be linear or may be branched, and is preferably linear. The C₁₋₆ alkyl group is preferably a C₁₋₃ alkyl group, and more preferably a methyl group.

The aryl group is preferably a phenyl group.

In one embodiment, R^{3a} is each independently a C₁₋₆ alkyl group, preferably a C₁₋₃ alkyl group, and more preferably a methyl group.

In another embodiment, R^{3a} is a phenyl group.

In another embodiment, R^{3a} is a methyl group or a phenyl group, and preferably a methyl group.

R^{1a} is each independently a hydrogen atom or a hydrocarbon group, and has the same meanings as those described for R^{3a}.

R^{1a} is, each independently, preferably a C₁₋₆ alkyl group or an aryl group optionally substituted with a halogen atom, and more preferably a C₁₋₆ alkyl group or an aryl group.

In one embodiment, R^{la} is each independently a C₁₋₆ alkyl group, preferably a C₁₋₃ alkyl group, and more preferably a methyl group.

In another embodiment, R^{1a} is a phenyl group.

In another embodiment, R^{1a} is a methyl group or a phenyl group, and preferably a methyl group.

a1 is 2 to 1,500. a1 may be preferably 5 or more, more preferably 10 or more, and even more preferably 15 or more, such as 30 or more or 50 or more. a1 may be preferably 1,000 or less, more preferably 500 or less, even more preferably 200 or less, and yet more preferably 150 or less, such as 100 or less or 80 or less.

a1 may be preferably 5 to 1,000, more preferably 10 to 500, even more preferably 15 to 200, and yet more preferably 15 to 150.

Other examples of the silicone oil include compounds represented by (3b) below:

R^{1a}-R^{SO2}-R^{3a} (3b)

wherein
R^{1a} is each independently a hydrocarbon group,
R^{3a} is each independently a hydrocarbon group, and
R^{SO2} is -R^{S}-SiR⁵₂-, wherein R^{S} and R⁵ have the same meanings as above.

The silicone oil may have an average molecular weight of 500 to 1,000,000, and preferably 1,000 to 100,000. The molecular weight of the silicone oil may be measured using GPC.

The silicone oil may be, for example, a linear or cyclic silicone oil in which a1 in -(SiR^{3a}₂-O)ₐ₁- is 30 or less. The linear silicone oil may be a so-called straight silicone oil or modified silicone oil. Examples of the straight silicone oil include dimethyl silicone oil, methyl phenyl silicone oil, and methyl hydrogen silicone oil. Examples of the modified silicone oil include those obtained by modifying a straight silicone oil with alkyl, aralkyl, polyether, higher fatty acid ester, fluoroalkyl, amino, epoxy, carboxyl, alcohol, or the like. The cyclic silicone oil may be, for example, cyclic dimethylsiloxane oil.

The silicone oil may be contained in an amount of, for example, 0 to 50% by mass, preferably 0.001 to 30% by mass, and more preferably 0.1 to 5% by mass, based on the composition of the present disclosure.

In the composition of the present disclosure, such a silicone oil may be contained in an amount of, for example, 0 to 300 parts by mass, preferably 0 to 100 parts by mass, more preferably 0 to 50 parts by mass, and even more preferably 0 to 10 parts by mass, based on total 100 parts by mass of the compound of the present disclosure (in the case of two or more kinds, the total thereof, and the same applies below).

The silicone oil contributes to increasing the surface lubricity of the surface-treating layer.

Examples of the alcohol include methanol, ethanol, iso-propanol, n-butanol, isobutanol, tert-butanol, sec-butanol, 3-pentanol, octyl alcohol, 3-methyl-3-methoxybutanol, and tert-amyl alcohol. Such an alcohol added to the composition improves the stability of the composition.

Examples of the catalyst include acids (for example, acetic acid, hydrochloric acid, nitric acid, sulfuric acid, phosphoric acid, sulfonic acid, p-toluenesulfonic acid, trifluoroacetic acid, and the like), bases (for example, sodium hydroxide, potassium hydroxide, ammonia, triethylamine, diethylamine, and the like), transition metals (for example, Ti, Ni, Sn, Zr, Al, B, Si, Ta, Nb, Mo, W, Cr, Hf, V, and the like), and sulfur-containing compounds or nitrogen-containing compounds having an unshared electron pair in the molecular structure (for example, sulfoxide compounds, aliphatic amine compounds, aromatic amine compounds, phosphoric acid amide compounds, amide compounds, and urea compounds).

Examples of the aliphatic amine compound include diethylamine and triethylamine. Examples of the aromatic amine compound include aniline and pyridine.

In a preferable embodiment, the transition metal is contained as a transition metal compound represented by M-R, wherein M is a transition metal atom and R is a hydrolyzable group. By using a compound obtained by bonding a transition metal and a hydrolyzable group as the transition metal compound, the transition metal atom can be contained in the surface-treating layer more efficiently, and the abrasion durability and the chemical resistance of the surface-treating layer can be more increased.

The hydrolyzable group means a group that can undergo a hydrolysis reaction in the same manner as the hydrolyzable group concerning the above compound, i.e., means a group that can be removed from the transition metal atom by a hydrolysis reaction. Examples of the hydrolyzable group include -OR^{m}, -OCOR^{m}, -O-N=CR^{m}₂, -NR^{m}₂, -NHR^{m}, -NCO, and a halogen (in these formulae, R^{m} represents a substituted or unsubstituted C₁₋₄ alkyl group).

In a preferable embodiment, the hydrolyzable group is -OR^{m}, and preferably methoxy or ethoxy. By using an alkoxy group as the hydrolyzable group, the transition metal atom can be contained in the surface-treating layer more efficiently, and the abrasion durability and the chemical resistance of the surface-treating layer can be more increased.

In one embodiment, the hydrolyzable group may be the same as the hydrolyzable group contained in the above compound. By causing the hydrolyzable groups in the compound and in the transition metal compound to be the same group, the influence of such hydrolyzable groups being mutually exchanged, if ever, can be minimized.

In another embodiment, the hydrolyzable group may be different from the hydrolyzable group contained in the above compound. By causing the hydrolyzable groups in the above compound and in the transition metal compound to be different, the reactivity of hydrolysis can be controlled.

In one embodiment, the above hydrolyzable group and the hydrolyzable group contained in the above compound may be mutually exchanged in the composition.

In a preferable embodiment, the transition metal compound may be Ta(OR^{m})₅ (wherein R^{m} is a substituted or unsubstituted C₁₋₄ alkyl group), preferably Ta(OCH₂CH₃)₅ or Si(OR^{m})₁₋ₘ₁R^{m'}ₘ₁ (wherein R^{m} is a substituted or unsubstituted C₁₋₄ alkyl group, R^{m'} is a C₁₋₄ alkyl group, and m1 is 0 or 1), and preferably tetraethoxysilane, methyltrimethoxysilane, methyltriethoxysilane, tetraisopropoxysilane, dimethyldiethoxysilane, or dimethyldimethoxysilane.

The catalyst may be contained in an amount of, for example, 0.0002% by mass or more based on the entirety of the composition. The catalyst may be contained in an amount of preferably 0.02% by mass or more, and more preferably 0.04% by mass or more, based on the entirety of the composition. The catalyst may be contained in an amount of, for example, 10% by mass or less based on the entirety of the composition and, in particular, is contained in an amount of 1% by mass or less. The composition of the present disclosure can contribute to the formation of a surface-treating layer having better durability when the catalyst is contained in the concentration as described above.

The content of the catalyst is preferably 0 to 10% by mass, more preferably 0 to 5% by mass, and particularly preferably 0 to 1% by mass, based on the compound of the present disclosure.

The catalyst promotes hydrolysis and dehydrative condensation of the compound of the present disclosure, and promotes formation of a layer formed of the composition of the present disclosure.

Examples of other components include, in addition to those described above, tetraethoxysilane, methyltrimethoxysilane, 3-aminopropyltrimethoxysilane, 3-glycidoxypropyltrimethoxysilane, and methyltriacetoxysilane.

The composition of the present disclosure may contain, in addition to the components described above, trace amounts of Pt, Rh, Ru, 1,3-divinyltetramethyldisiloxane, triphenylphosphine, NaCl, KCl, silane condensates, and the like as impurities.

In one embodiment, the composition of the present disclosure is for a dry coating method, and preferably for vacuum deposition.

In one embodiment, the composition of the present disclosure is for a wet coating method, and preferably for dip coating.

The composition of the present disclosure can be formed into pellets by impregnating a porous material such as a porous ceramic material or a metal fiber such as a fiber obtained by, for example, solidifying steel wool in a cotton-like form with composition. Such pellets can be used in, for example, vacuum deposition.

The composition of the present disclosure is preferably used as a surface-treating agent or as a component of a surface-treating agent.

Below, the article of the present disclosure will now be described.

The article of the present disclosure includes a substrate and a layer (a surface-treating layer) on the substrate surface, the layer being formed of the surface-treating agent of the present disclosure.

The substrate usable in the present disclosure may be composed of any suitable material such as glass, resin (which may be natural or synthetic resin such as a commonly used plastic material), metal, ceramics, semiconductors (such as silicon and germanium), fiber (such as woven fabric and nonwoven fabric), fur, leather, wood, pottery, stone, building materials, and sanitary articles.

For example, when the article to be produced is an optical member, the material constituting the surface of the substrate may be a material for an optical member, such as glass or a transparent plastic. When the article to be produced is an optical member, some layer (or film), such as a hard coat layer or an antireflection layer, may be formed on the surface (the outermost layer) of the substrate. The antireflection layer may be any of a single-layer antireflection layer and a multi-layer antireflection layer. Examples of inorganic substances usable in the antireflection layer include SiO₂, SiO, ZrO₂, TiO₂, TiO, Ti₂O₃, Ti₂O₃, Al₂O₃, Ta₂O₅, Ta₃O₅, Nb₂O₅, HfO₂, Si₃N₄, CeO₂, MgO, Y₂O₃, SnO₂, MgF₂, and WO₃. One of these inorganic substances may be used singly, or two or more kinds thereof may be used in combination (for example, as a mixture). In the case of a multi-layer antireflection layer, SiO₂ and/or SiO is preferably used in the outermost layer thereof. When the article to be produced is an optical glass component for a touch panel, a part of the surface of the substrate (glass) may have a transparent electrode such as a thin film in which indium tin oxide (ITO), indium zinc oxide, or the like is used. The substrate, according to its specific configuration or the like, may have an insulating layer, an adhesive layer, a protecting layer, a decorated frame layer (ICON), an atomizing film layer, a hard coating layer, a polarizing film, a phase difference film, a liquid crystal display module, or the like.

The form of the substrate is not limited, and may be, for example, a plate, a film, or the like. The surface region of the substrate on which a surface-treating layer is to be formed may be at least a portion of the substrate surface, and may be suitably determined according to the application, specific configuration, and the like of an article to be produced.

In one embodiment, the substrate, or at least the surface portion thereof, may be composed of a material originally having a hydroxyl group. Examples of the material include glass, as well as metal (in particular, base metal) that forms a natural oxidized film or a thermal oxidized film on its surface, ceramics, and semiconductors. Alternatively, when the substrate has an insufficient amount of hydroxyl groups or when the substrate originally has no hydroxyl group as in resin and the like, a pre-treatment may be performed on the substrate to thereby introduce or increase hydroxyl groups on the surface of the substrate. Examples of such a pre-treatment include a plasma treatment (for example, corona discharge) and ion beam irradiation. The plasma treatment can be suitably utilized to not only introduce or increase hydroxyl groups on the substrate surface, but also clean the substrate surface (remove foreign matter and the like). Another example of such a pre-treatment is a method wherein a monolayer of a surface adsorbent having a carbon-carbon unsaturated bonding group is formed on the surface of the substrate by a LB method (a Langmuir-Blodgett method), a chemical adsorption method, or the like beforehand, and thereafter cleaving the unsaturated bond under an atmosphere containing oxygen, nitrogen, or the like.

In another embodiment, the substrate, or at least the surface portion thereof, may be composed of a material comprising another reactive group such as a silicone compound having one or more Si-H groups or alkoxysilane.

In a preferable embodiment, the substrate is glass. Such glass is preferably sapphire glass, soda-lime glass, alkali aluminosilicate glass, borosilicate glass, alkali-free glass, crystal glass, quartz glass, or crystallized glass, and is particularly preferably chemically strengthened soda-lime glass, chemically strengthened alkali aluminosilicate glass, or chemically bonded borosilicate glass.

In one embodiment, the article of the present disclosure may include a silicon oxide-containing intermediate layer between glass and the surface-treating layer. By providing such an intermediate layer, adhesion between glass and the surface-treating layer is increased, and durability is increased.

In a preferable embodiment, the intermediate layer may contain an alkali metal in addition to silicon oxide.

Examples of the alkali metal include lithium, sodium, and potassium. The alkali metal is preferably sodium.

The thickness of the intermediate layer is not limited, and is preferably 1 to 200 nm and particularly preferably 1 to 20 nm. By causing the thickness of the intermediate layer to be at the lower limit of the above range or greater, the effect of increasing adhesion provided by the intermediate layer is more increased.

The concentration of alkali metal atoms in the intermediate layer can be measured by various surface analysis apparatuses such as TOF-SIMS, XPS, and XRF.

The proportion of alkali metal atoms to all atoms in the entirety of the intermediate layer can be obtained by XPS depth profile analysis using ion sputtering, wherein measurement by XPS and surface etching by ion sputtering using an ion gun provided in an XPS apparatus are alternately performed.

In the intermediate layer, the average alkali metal concentration in a region having a depth of 1 nm or less from the surface that is in contact with the surface-treating layer is determined by obtaining a depth profile of the alkali metal atom concentration by TOF-SIMS (time-of-flight secondary ion mass spectrometry) depth analysis using ion sputtering, and then calculating the average alkali metal atom concentration in the profile. TOF-SIMS depth profile analysis by ion sputtering is performed by alternately repeating measurement by TOF-SIMS and surface etching by ion sputtering using an ion gun provided in a TOF-SIMS apparatus.

The article of the present disclosure can be produced by forming a layer of the surface-treating agent of the present disclosure on the surface of the substrate and post-treating this layer as necessary, thereby forming a layer from the surface-treating agent of the present disclosure.

The layer of the surface-treating agent of the present disclosure can be formed by applying the surface-treating agent to the surface of the substrate so as to coat the surface. The coating method is not limited. For example, a wet coating method and a dry coating method can be used.

Examples of the wet coating method include dip coating, spin coating, flow coating, spray coating, roll coating, gravure coating, wipe coating, squeegee coat method, die coat, inkjet, cast method, Langmuir-Blodgett method, and similar methods.

Examples of the dry coating method include deposition (usually, vacuum deposition), sputtering, CVD, and similar methods. Specific examples of the deposition method (usually, a vacuum deposition method) include resistive heating, high-frequency heating using electron beam, microwave, or the like, ion beam, and similar methods. Specific examples of the CVD method include plasma-CVD, optical CVD, thermal CVD, and similar methods.

Furthermore, coating by an atmospheric pressure plasma method can be performed.

When using the wet coating method, the surface-treating agent of the present disclosure can be applied to the substrate surface after being diluted with a solvent. From the viewpoint of the stability of the composition of the present disclosure and the volatility of the solvent, the following solvents are preferably used: aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide, N,N-dimethylacetamide, and N-methylpyrrolidone; ether alcohols such as methyl cellosolve, cellosolve, isopropyl cellosolve, butyl cellosolve, and diethylene glycol monomethyl ether; diethylene glycol monoethyl ether acetate; polyfluoroaromatic hydrocarbons (for example, 1,3-bis(trifluoromethyl)benzene); polyfluoroaliphatic hydrocarbons (for example, C₆F₁₃CH₂CH₃ (for example, ASAHIKLIN(R) AC-6000 manufactured by AGC Inc.), C₆F₁₃H (for example, ASAHIKLIN(R) AC-2000 manufactured by AGC Inc.), and 1,1,2,2,3,3,4-heptafluorocyclopentane (for example, Zeorolla(R) H manufactured by ZEON Corporation); fluorine-containing hydrocarbons such as 1,1,2-trichloro-1,2,2-trifluoroethane, 1,2-dichloro-1,1,2,2-tetrafluoroethane, 1,1-dichloro-1,2,2,3,3-pentafluoropropane (HCFC 225), and 1,3-bis(trifluoromethyl)benzene; fluorine-containing alcohols such as CF₃CH₂OH, CF₃CF₂CH₂OH, and (CF₃)₂CHOH; alkyl perfluoroalkyl ethers (the perfluoroalkyl group and the alkyl group may be linear or branched) such as hydrofluoroethers (HFE) (for example, perfluoropropyl methyl ether (C₃F₇OCH₃) (for example, Novec(TM) 7000 manufactured by SUMITOMO 3M), perfluorobutyl methyl ether (C₄F₉OCH₃) (for example, Novec(TM) 7100 manufactured by SUMITOMO 3M), perfluorobutyl ethyl ether (C₄F₉OC₂H₅) (for example, Novec(TM) 7200 manufactured by SUMITOMO 3M), and perfluorohexyl methyl ether (C₂F₅CF(OCH₃)C₃F₇) (for example, Novec(TM) 7300 manufactured by SUMITOMO 3M), or CF₃CH₂OCF₂CHF₂ (for example, ASAHIKLIN(R) AE-3000 manufactured by AGC Inc.)), hydrofluoroolefins; ethers such as CF₃CH=CHCl (for example, CELEFIN(R) 1233Z manufactured by Central Glass Co., Ltd.), CHF₂CF=CHCl (for example, AMOLEA(R) AS-300 manufactured by AGC Inc.), and cyclopentyl methyl ether; siloxanes such as hexamethyldisiloxane, hexaethyldisiloxane, octamethyltrisiloxane, octamethylcyclotetrasiloxane, octamethylcyclopentasiloxane, decamethylcyclopentasiloxane, decamethyltetrasiloxane, dodecamethylpentasiloxane, and tetradecamethylhexasiloxane; and dimethylsulfoxide. One of these solvents may be used singly, or two or more may be used as a mixture. In particular, preferable are aliphatic hydrocarbons, esters, glycol ethers, alcohols, ether alcohols, and siloxanes. For example, preferable are hexane, cyclohexane, heptane, octane, nonane, decane, undecane, dodecane, mineral spirits, methyl acetate, ethyl acetate, propyl acetate, n-butyl acetate, isopropyl acetate, isobutyl acetate, propylene glycol monomethyl ether, propylene glycol monoethyl ether, propylene glycol monobutyl ether, methanol, ethanol, iso-propanol, n-butanol, isobutanol, tert-butanol, sec-butanol, diethylene glycol monomethyl ether, hexamethyldisiloxane, hexaethyldisiloxane, octamethyltrisiloxane, decamethyltetrasiloxane, dodecamethylpentasiloxane, tetradecamethylhexasiloxane, octamethylcyclotetrasiloxane, and octamethylcyclopentasiloxane.

In one embodiment, the solvent when the wet coating method is used may be, for example, a compound represented by R⁹⁰-OH. R⁹⁰ is a monovalent organic group and is preferably a C₁₋₂₀ alkyl group or a C₃₋₂₀ alkylene group, and these groups may be substituted with one or more substituents. Examples of substituents include a hydroxyl group and -OR⁹¹ wherein R⁹¹ is a C₁₋₁₀ alkyl group, and preferably a C₁₋₃ alkyl group, such as a methyl group.

When using the dry coating method, the surface-treating agent of the present disclosure may be directly subjected to the dry coating method, or may be diluted with the solvent before being subjected to the dry coating method.

A layer of the surface-treating agent is preferably formed such that the surface-treating agent of the present disclosure coexists in the layer with a catalyst for hydrolysis and dehydrative condensation. Conveniently, in the case of a wet coating method, the surface-treating agent of the present disclosure is diluted with a solvent, and then, immediately before application to the substrate surface, a catalyst may be added to the diluted solution of the surface-treating agent of the present disclosure. In the case of a dry coating method, the surface-treating agent of the present disclosure to which a catalyst has been added is directly used in a deposition (usually vacuum deposition) treatment, or a pellet-like material may be used in a deposition (usually vacuum deposition) treatment, wherein pellets are obtained by impregnating a porous body of metal such as iron or copper with the surface-treating agent of the present disclosure to which the catalyst has been added.

The catalyst may be any suitable acid or base, transition metal (such as Ti, Ni, Sn, Zr, Al, or B), sulfur-containing compound or nitrogen-containing compound having an unshared electron pair in the molecular structure (such as a sulfoxide compound, an aliphatic amine compound, an aromatic amine compound, a phosphoric acid amide compound, an amide compound, or an urea compound), or the like. The acid catalyst may be, for example, acetic acid, formic acid, trifluoroacetic acid, hydrochloric acid, nitric acid, sulfuric acid, phosphoric acid, sulfonic acid, methanesulfonic acid, or p-toluenesulfonic acid. Also, the base catalyst may be, for example, ammonia, sodium hydroxide, potassium hydroxide, or an organic amine such as triethylamine or diethylamine. Examples of the transition metal, the aliphatic amine compound, and the aromatic amine compound include those described above.

The surface-treating layer contained in the article of the present disclosure may have high abrasion durability. Moreover, the surface-treating layer may have not only high abrasion durability but also have, depending on the composition of the surface-treating agent used, water-repellency, oil-repellency, antifouling properties (e.g., preventing grime such as fingerprints from adhering), waterproof properties (preventing water from entering electronic components and the like), surface lubricity (or lubricity, for example, such as removability by wiping of grime such as fingerprints, and excellent tactile sensations to the fingers), chemical resistance, and the like, and may be suitably used as a functional thin film.

Accordingly, the present disclosure further relates to an optical material having the surface-treating layer as the outermost layer.

The optical material preferably includes a wide variety of optical materials, in addition to optical materials relating to displays and the like as exemplified below: for example, displays such as cathode ray tubes (CRTs; for example, PC monitors), liquid crystal displays, plasma displays, organic EL displays, inorganic thin-film EL dot matrix displays, rear projection displays, vacuum fluorescent displays (VFDs), field emission displays (FEDs); protective plates for such displays; and those obtained by performing an antireflection film treatment on their surfaces.

The article of the present disclosure may be, but is not limited to, an optical member. Examples of the optical member include lenses of glasses or the like; front surface protective plates, antireflection plates, polarizing plates, and anti-glare plates for displays such as PDPs and LCDs; touch panel sheets for equipment such as cell phones and portable information terminals; disc surfaces of optical discs such as Blu-ray(R) discs, DVD discs, CD-Rs, and MOs; optical fibers; and display surfaces of watches and clocks.

The article of the present disclosure may be medical equipment or a medical material. The article having a layer that is obtained according to the present disclosure may be an automobile interior or exterior member. Examples of the exterior material are as follows: windows, light covers, and external camera covers. Examples of the interior material are as follows: instrument panel covers, navigation system touch panels, and decorative interior materials.

The thickness of the layer is not limited. The thickness of the layer in the case of an optical member may be in the range of, for example, 1 to 50 nm, preferably 1 to 30 nm, and more preferably 1 to 15 nm, from the viewpoint of optical performance, abrasion durability, and antifouling properties.

The apparatus for performing X-ray photoelectron spectroscopy for measuring the atomic composition and the ratio of constitutional atoms of the surface-treating layer may be XPS, i.e., PHI 5000 VersaProbe II manufactured by ULVAC-PHI, Inc. Usable measurement conditions for XPS analysis may be an X-ray source of 25 W monochromatic AlKα radiation, a photoelectron detection surface of 1,400 µm × 300 µm, a photoelectron detection angle in a range of 20° to 90° (for example, 20°, 45°, 90°), a pass energy of 23.5 eV, and sputtering with a gas cluster ion beam or Ar ions. The compositions of the surface-treating layer and the intermediate layer can be determined by observing the peak areas of C1s, O1s, and Si2p under the above apparatus and measurement conditions, and calculating the atomic ratio of carbon, oxygen, and silicon.

Also, depth profile analysis may be performed as well. Usable measurement conditions for XPS analysis may be an X-ray source of 25 W monochromatic AlKα radiation, a photoelectron detection surface of 1,400 µm × 300 µm, a photoelectron detection angle in a range of 20° to 90° (for example, 20°, 45°, 90°), a pass energy of 23.5 eV, and Ar ions, gas cluster ions, C60 ions, or the like as sputtering ions. Etching may be performed to 1 to 100 nm by sputtering, and the composition in the coating film at each etching depth may be obtained as well.

By adjusting the photoelectron detection angle of the XPS analysis, the detection depth can be suitably adjusted. For example, a shallow angle close to 20 degrees allows a detection depth of about 3 nm, while a deep angle close to 90 degrees allows a detection depth of about 10 nm.

The silicon oxide-containing intermediate layer described above can be formed by applying a silicon oxide precursor to the substrate surface. When the intermediate layer contains an alkali metal, the intermediate layer can be formed by applying a composition containing a silicon oxide precursor and an alkali metal source to the substrate surface.

Examples of the silicon oxide precursor include silicic acid, a partial condensate of silicic acid, an alkali metal silicate, a silane compound having a hydrolyzable group that is bonded to a silicon atom, and a partially hydrolyzed condensate of such a silane compound. Silicic acid and a partial condensate thereof can be converted to silicon oxide by dehydrative condensation, and an alkali metal silicate can be converted to silicon oxide by being converted first to silicic acid or a partial condensate thereof with an acid or a cation exchange resin and then dehydratively condensing the resulting silicic acid or partial condensate thereof. Examples of the hydrolyzable group in the silane compound having a hydrolyzable group that is bonded to a silicon atom include an alkoxy group and a chlorine atom. The hydrolyzable group of the silane compound can be hydrolyzed to give a hydroxyl group, and the resulting silanol compound can be dehydratively condensed to give silicon oxide. Examples of the silane compound having a hydrolyzable group that is bonded to a silicon atom include alkoxysilanes such as tetraalkoxysilane and alkyltrialkoxysilane, and tetrachlorosilane.

The alkali metal source includes alkali metal hydroxides, water-soluble alkali metal salts, and the like. Examples of the water-soluble alkali metal salts include alkali metal carbonates, alkali metal hydrogen carbonates, alkali metal hydrochlorides, and alkali metal nitrates. The alkali metal source is preferably an alkali metal hydroxide and an alkali metal carbonate.

Note that the alkali metal silicate can be used as a silicon oxide precursor and an alkali metal source. The alkali metal silicate can be converted to silicon oxide via silicic acid, and in this process, a small amount of alkali metal may remain in the produced silicon oxide. Accordingly, regulating the amount of the remaining alkali metal enables silicon oxide containing a predetermined amount of alkali metal atoms to be obtained.

The thickness of the intermediate layer is not limited, and is in the range of, for example, 1 to 50 nm, preferably 1 to 30 nm, more preferably 2 to 15 nm, and even more preferably 3 to 10 nm.

So far, the compound, the composition, and the article of the present disclosure have been described in detail. The compound, the composition, the article, and the like of the present disclosure are not limited to those exemplified above.

### Examples

Hereinafter, the present disclosure will now be described by way of Examples, but the present disclosure is not limited to the following Examples.

### (Synthetic Example 1)

After 1.2 g of 1-(allyloxy)-4-bromobenzene and 20 mL of tetrahydrofuran were added, 3.5 mL of a 15% n-butyllithium solution in hexane was added dropwise at - 78°C, and the mixture was stirred at -78°C for 1 hour. Thereafter, 28 mL of a tetrahydrofuran solution containing 8.8 g of hexamethylcyclotrisiloxane was added dropwise, and the mixture was stirred at room temperature for 4 hours. Thereafter, 2.1 mL of chlorotrimethylsilane was added dropwise, and the mixture was stirred at room temperature overnight. Thereafter, water and toluene were added to remove the aqueous layer, then the toluene layer was washed twice with water, and the toluene layer was concentrated to give 7.0 g of compound (1). The average number of repeating units was 21.

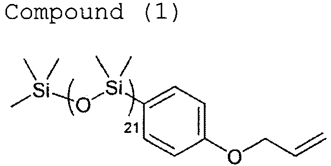

1H-NMR (400 MHz, CHLOROFORM-D) δ 7.48 (d, J = 8.7 Hz, 2H), 6.92 (d, J = 8.2 Hz, 2H), 6.11-6.02 (m, 1H), 5.44-5.40 (m, 1H), 5.30-5.27 (m, 1H), 4.56 (d, J = 5.0 Hz, 2H), 0.34 (s, 6H), 0.24 - -0.09 (m)

### (Synthetic Example 2)

After 2.0 g of compound (1) obtained in Synthetic Example 1, 6.0 mL of toluene, 10 µL of pyridine, and 72 µL of a xylene solution containing a 2% Pt complex of 1,3-divinyl-1,1,3,3-tetramethyldisiloxane were each added, 0.36 mL of trimethoxysilane was added, and the mixture was stirred at room temperature for 3 hours. Thereafter, the mixture was concentrated under reduced pressure to give 1.9 g of the following compound having a terminal trimethoxysilyl group (2). The average number of repeating units was 21.

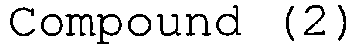

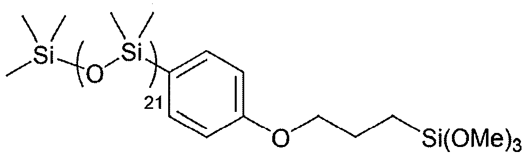

1H-NMR (400 MHz, CHLOROFORM-D) δ 7.48 (d, J = 8.7 Hz, 2H), 6.90 (d, J = 8.7 Hz, 2H), 3.96 (t, J = 6.6 Hz, 2H), 3.63-3.55 (m, 11H), 1.95-1.88 (m, 2H), 0.82-0.78 (m, 2H), 0.32 (s, 6H), 0.24 - -0.09 (m)

### (Surface-treating agent 1)

Compound 2 obtained above was diluted so as to be a 10 wt% hexamethyldisiloxane solution, and thus a surface-treating agent 1 was obtained.

### (Synthetic Example 3)

After 1.8 g of magnesium and 120 ml of tetrahydrofuran were added, a solution obtained by dissolving 10.9 g of 4-bromo-1-butene in 28 ml of tetrahydrofuran was added dropwise, and the mixture was stirred at 32°C for 1 hour to prepare a Grignard reagent (A). Subsequently, 22 g of 4-bromobenzyl bromide and 50 ml of tetrahydrofuran were stirred at -63°C, the Grignard reagent (A) obtained above and 6 ml of dilithium tetrachlorocopper (II) (an approximately 2.5% tetrahydrofuran solution) were added dropwise in this order, and the mixture was stirred overnight while gradually increasing the temperature. Thereafter, the mixture was cooled to 5°C, and an aqueous ammonium chloride solution was added to quench the reaction, tetrahydrofuran was removed by distillation using an evaporator, and then ethyl acetate and brine were added for separation. The resulting ethyl acetate layer was dried over magnesium sulfate, concentrated using an evaporator, and then purified by silica gel column chromatography to give 5.0 g of a colorless liquid compound (3): 1-bromo-4-(4-penten-1-yl)benzene.

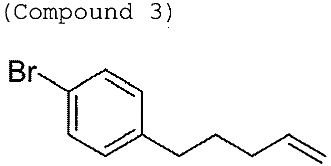

1H-NMR (400 MHz, CHLOROFORM-D) δ 7.41 (d, J = 33.2 Hz, 2H), 7.08 (d, J = 28.6 Hz, 2H), 5.85-5.79 (m, 1H), 5.10-4.95 (m, J = 15.2 Hz, 2H), 2.60 (t, 2H), 2.08 (q, J = 7.2 Hz, 2H), 1.80-1.63 (m, 2H)

### (Synthetic Example 4)

After 1.0 g of compound (3): 1-bromo-4-(4-penten-1-yl)benzene obtained in Synthetic Example 3 and 16 mL of tetrahydrofuran were added, 2.8 mL of a 15% n-butyllithium solution in hexane was added dropwise at - 78°C, and the mixture was stirred at -78°C for 1 hour. Thereafter, 21 mL of a tetrahydrofuran solution containing 4.9 g of hexamethylcyclotrisiloxane was added dropwise, and the mixture was stirred at room temperature for 4 hours. Thereafter, 1.7 mL of chlorotrimethylsilane was added dropwise, and the mixture was stirred at room temperature overnight. Thereafter, water and toluene were added to remove the aqueous layer, then the toluene layer was washed twice with water, and the toluene layer was concentrated to give 4.6 g of compound (4). The average number of repeating units was 15.

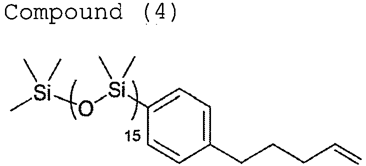

1H-NMR (400 MHz, CHLOROFORM-D) δ 7.50 (d, J = 7.8 Hz, 2H), 7.22 (d, J = 7.8 Hz, 2H), 5.89-5.82 (m, 1H), 5.07-4.98 (m, 2H), 2.64 (t, J = 7.8 Hz, 2H), 2.12 (q, J = 7.2 Hz, 2H), 1.78-1.72 (m, 2H), 0.35 (s, 6H), 0.25 - - 0.05 (m)

### (Synthetic Example 5)

After 2.0 g of compound (4) obtained in Synthetic Example 4, 6.0 mL of toluene, 17 µL of pyridine, and 117 µL of a xylene solution containing a 2% Pt complex of 1,3-divinyl-1,1,3,3-tetramethyldisiloxane were each added, 0.59 mL of trimethoxysilane was added, and the mixture was stirred at room temperature for 3 hours. Thereafter, the mixture was concentrated under reduced pressure to give 1.8 g of the following compound having a terminal trimethoxysilyl group (5). The average number of repeating units was 15.

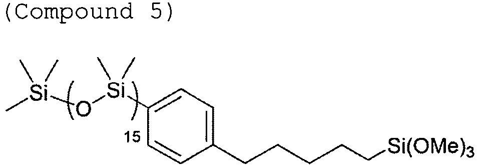

1H-NMR (400 MHz, CHLOROFORM-D) δ 7.48 (d, J = 7.8 Hz, 2H), 7.18 (d, J = 7.8 Hz, 2H), 3.63-3.57 (m, 9H), 2.60 (t, J = 7.8 Hz, 2H), 1.65-1.62 (m, 2H), 1.48-1.38 (m, 4H), 0.68-0.64 (m, 2H), 0.33 (s, 6H), 0.23 - -0.14 (m)

### (Surface-treating agent 2)

Compound (5) obtained above was diluted so as to be a 10 wt% hexamethyldisiloxane solution, and thus a surface-treating agent 2 was obtained.

### (Synthetic Example 6)

After 2.4 g of magnesium and 260 ml of tetrahydrofuran were added, a solution obtained by dissolving 25.1 g of 11-bromo-1-undecene in 62 ml of tetrahydrofuran was added dropwise, and the mixture was stirred at 35 to 38°C for 1 hour to prepare a Grignard reagent (B). Subsequently, 29.1 g of 4-bromobenzyl bromide and 10 ml of tetrahydrofuran were stirred at - 52°C, the Grignard reagent (B) obtained above and 10 ml of dilithium tetrachlorocopper(II) (an approximately 2.5% tetrahydrofuran solution) were added dropwise in this order, and the mixture was stirred overnight while gradually increasing the temperature. Thereafter, the mixture was cooled to 5°C, and an aqueous ammonium chloride solution was added to quench the reaction, tetrahydrofuran was removed by distillation using an evaporator, and then ethyl acetate and brine were added for separation. The resulting ethyl acetate layer was dried over magnesium sulfate, concentrated using an evaporator, and then purified by silica gel column chromatography to give 7.9 g of a colorless liquid compound (6): 1-bromo-4-(4-dodecen-1-yl)benzene.

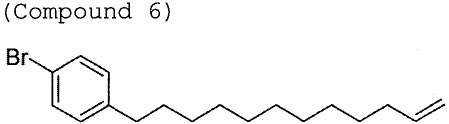

1H-NMR (400 MHz, CHLOROFORM-D) δ 7.37 (d, J = 20.1 Hz, 2H), 7.04 (d, 2H), 5.87-5.76 (m, 1H), 5.05-4.91 (m, 2H), 2.60-2.48 (m, 2H), 2.07-2.01 (m, 2H), 1.64-1.49 (m, 2H), 1.43-1.16 (m, 14H)

### (Synthetic Example 7)

After 1.5 g of compound (6): 1-bromo-4-(4-dodecen-1-yl)benzene obtained in Synthetic Example 6 and 16 mL of tetrahydrofuran were added, 2.9 mL of a 15% n-butyllithium solution in hexane was added dropwise at - 78°C, and the mixture was stirred at -78°C for 1 hour. Thereafter, 21 mL of a tetrahydrofuran solution containing 4.6 g of hexamethylcyclotrisiloxane was added dropwise, and the mixture was stirred at room temperature for 4 hours. Thereafter, 1.8 mL of chlorotrimethylsilane was added dropwise, and the mixture was stirred at room temperature overnight. Thereafter, water and toluene were added to remove the aqueous layer, then the toluene layer was washed twice with water, and the toluene layer was concentrated to give 5.1 g of compound (7). The average number of repeating units was 14.

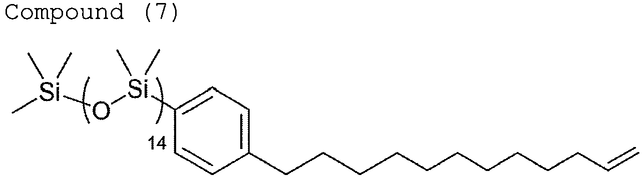

1H-NMR (400 MHz, CHLOROFORM-D) δ 7.50 (d, J = 7.8 Hz, 2H), 7.19 (d, J = 7.8 Hz, 2H), 5.87-5.79 (m, 1H), 5.04-4.94 (m, 2H), 2.62 (t, J = 7.8 Hz, 2H), 2.06 (q, J = 7.0 Hz, 2H), 1.65-1.60 (m, 2H), 1.42-1.30 (m, 14H), 0.36 (s, 6H), 0.27 - -0.04 (m)

### (Synthetic Example 8)

After 2.0 g of compound (7) obtained in Synthetic Example 7, 6.0 mL of toluene, 17 µL of pyridine, and 117 µL of a xylene solution containing a 2% Pt complex of 1,3-divinyl-1,1,3,3-tetramethyldisiloxane were each added, 0.59 mL of trimethoxysilane was added, and the mixture was stirred at room temperature for 3 hours. Thereafter, the mixture was concentrated under reduced pressure to give 1.9 g of the following compound having a terminal trimethoxysilyl group (9). The average number of repeating units was 14.

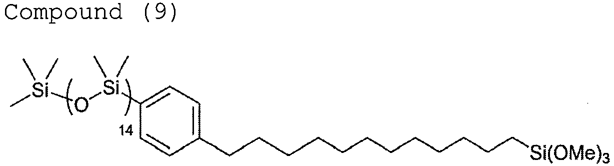

1H-NMR (400 MHz, CHLOROFORM-D) δ 7.48 (d, J = 7.8 Hz, 2H), 7.18 (d, J = 7.3 Hz, 2H), 3.65-3.54 (m, 9H), 2.60 (t, J = 7.8 Hz, 2H), 1.65-1.58 (m, 2H), 1.44-1.27 (m, 18H), 0.68-0.62 (m, 2H), 0.34 (s, 6H), 0.25 - -0.09 (m)

### (Surface-treating agent 3)

Compound (9) obtained above was diluted so as to be a 10 wt% hexamethyldisiloxane solution, and thus a surface-treating agent 3 was obtained.

### (Synthetic Example 10)

After 1.0 g of compound (6): 1-bromo-4-(11-dodecen-1-yl)benzene obtained in Synthetic Example 6 and 10.8 mL of tetrahydrofuran were added, 1.93 mL of a 15% n-butyllithium solution in hexane was added dropwise at - 78°C, and the mixture was stirred at -78°C for 1 hour. Thereafter, 10.8 mL of a tetrahydrofuran solution containing 1.38 g of hexamethylcyclotrisiloxane was added dropwise, and the mixture was stirred at room temperature for 4 hours. Thereafter, 1.17 mL of chlorotrimethylsilane was added dropwise, and the mixture was stirred at room temperature overnight. Thereafter, water and toluene were added to remove the aqueous layer, then the toluene layer was washed twice with water, and the toluene layer was concentrated to give 2.25 g of compound (10). The average number of repeating units was 7.6.

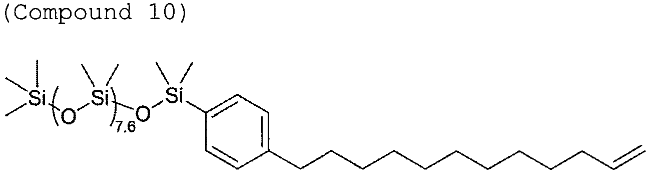

1H-NMR (400 MHz, CHLOROFORM-D) δ 7.46 (d, J = 7.8 Hz, 2H), 7.16 (d, J = 7.8 Hz, 2H), 5.84-5.77 (m, 1H), 5.01-4.91 (m, 2H), 2.58 (t, J = 7.8 Hz, 2H), 2.06-2.00 (m, 2H), 1.62-1.26 (m, 21H), 0.32 (s, 6H), 0.08-0.01 (m)

### (Synthetic Example 11)

After 1.50 g of compound (10) obtained in Synthetic Example 10, 10.0 mL of toluene, 21.4 µL of pyridine, and 151.7 µL of a xylene solution containing a 2% Pt complex of 1,3-divinyl-1,1,3,3-tetramethyldisiloxane were each added, 0.76 mL of trimethoxysilane was added, and the mixture was stirred at room temperature for 3 hours. Thereafter, the mixture was purified to give 1.55 g of the following compound having a terminal trimethoxysilyl group (11). The average number of repeating units was 7.6.

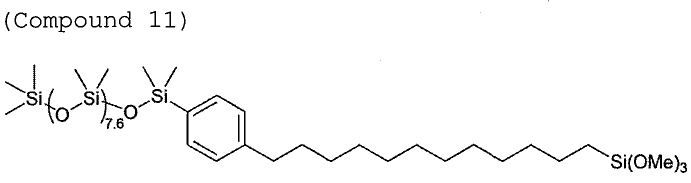

1H-NMR (400 MHz, CHLOROFORM-D) δ 7.46 (d, J = 7.8 Hz, 2H), 7.16 (d, J = 7.8 Hz, 2H), 3.57-3.55 (m, 9H), 2.58 (t, J = 7.8 Hz, 2H), 1.61-1.54 (m, 2H), 1.42-1.24 (m, 18H), 0.66-0.61 (m, 2H), 0.31 (s, 6H), 0.09-0.02 (m)

### (Surface-treating agent 4)

Compound (11) obtained above was diluted so as to be a 10 wt% hexamethyldisiloxane solution, and thus a surface-treating agent 4 was obtained.

### (Synthetic Example 12)

After 10.02 g of 1,1,1,3,5,5,5-heptamethyltrisiloxane, 89.66 g of dichloromethane, and 11.49 g of trichloroisocyanuric acid were each added, the mixture was heated to 40°C and stirred for 1 hour. Thereafter, the mixture was purified by distillation to give 7.55 g of the following chlorosilane compound (12): ((CH₃)₃SiO)₂SiCH₃Cl.

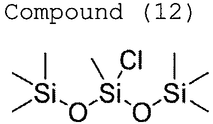

¹H NMR (CDCl₃, 400 MHz) δ [ppm]: 0.157 (br s), 0.376 (br s), ²⁹Si NMR (CDCl₃, 400 MHz) δ [ppm]: -44.484 (s), 11.683 (s)

### (Synthetic Example 13)

After 0.6 g of 1-bromo-4-(11-dodecen-1-yl)benzene and 6.5 mL of tetrahydrofuran were added, 1.16 mL of a 15% n-butyllithium solution in hexane was added dropwise at -78°C, and the mixture was stirred at -78°C for 1 hour. Thereafter, 6.5 mL of a tetrahydrofuran solution containing 1.57 g of hexamethylcyclotrisiloxane was added dropwise, and the mixture was stirred at room temperature for 4 hours. Thereafter, 0.95 mg of compound (12): Me(OSi(Me)₃)₂SiCl was added dropwise under ice cooling, and the mixture was stirred at room temperature overnight. Thereafter, the reaction solution was concentrated and washed three times with acetonitrile to give 1.70 g of compound (13). The average number of repeating units was 14.3.

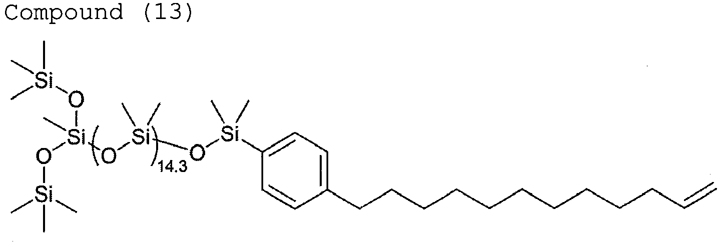

1H-NMR (400 MHz, CHLOROFORM-D) δ 7.46 (d, J = 7.8 Hz, 2H), 7.16 (d, J = 7.8 Hz, 2H), 5.84-5.77 (m, 1H), 5.01-4.90 (m, 2H), 2.60-2.56 (m, 2H), 2.05-2.00 (m, 2H), 1.61-1.26 (m, 18H), 0.31 (s, 6H), 0.14-0.03 (m), 0.02-0.00 (m, 3H)

### (Synthetic Example 14)

After 1.0 g of compound (13) obtained in Synthetic Example 13, 7.0 mL of toluene, 8.2 µL of pyridine, and 58 µL of a xylene solution containing a 2% Pt complex of 1,3-divinyl-1,1,3,3-tetramethyldisiloxane were each added, 0.29 mL of trimethoxysilane was added, and the mixture was stirred at room temperature for 3 hours. Thereafter, the mixture was purified to give 1.52 g of the following compound having a terminal trimethoxysilyl group (14). The average number of repeating units was 14.3.

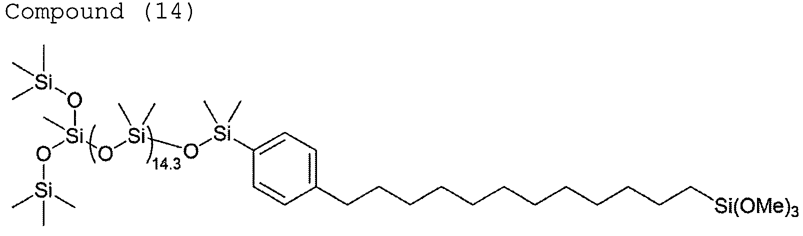

1H-NMR (400 MHz, CHLOROFORM-D) δ 7.46 (d, J = 7.8 Hz, 2H), 7.16 (d, J = 7.8 Hz, 2H), 3.59-3.53 (m, 9H), 2.58 (t, J = 8.0 Hz, 2H), 1.60-1.53 (m, 2H), 1.40-1.24 (m, 18H), 0.65-0.61 (m, 2H), 0.31 (s, 6H), 0.14-0.02 (m), 0.01 (s, 3H)

### (Surface-treating agent 5)

Compound (14) obtained above was diluted so as to be a 10 wt% hexamethyldisiloxane solution, and thus a surface-treating agent 5 was obtained.

### (Synthetic Example 15)

After 10.00 g of tris(trimethylsilyloxy)silane, 67.25 g of dichloromethane, and 8.62 g of trichloroisocyanuric acid were each added, the mixture was heated to 40°C and stirred for 1 hour. Thereafter, the mixture was purified to give 8.51 g of the following chlorosilane compound (15): ((CH₃)₃SiO)₃SiCl.

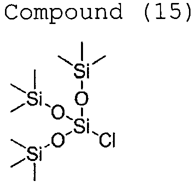

¹H NMR (CDCl₃, 400 MHz) δ [ppm]: 0.165 (br s), ²⁹Si NMR (CDCl₃, 400 MHz) δ [ppm]: -91.102 (s), 12.274 (s)

### (Synthetic Example 16)

After 0.6 g of compound (6): 1-bromo-4-(11-dodecen-1-yl)benzene obtained in Synthetic Example 6 and 6.5 mL of tetrahydrofuran were added, 1.16 mL of a 15% n-butyllithium solution in hexane was added dropwise at - 78°C, and the mixture was stirred at -78°C for 1 hour. Thereafter, 6.5 mL of a tetrahydrofuran solution containing 1.57 g of hexamethylcyclotrisiloxane was added dropwise, and the mixture was stirred at room temperature for 4 hours. Thereafter, 0.95 mg of compound (15): (OSi(Me)₃)₃SiCl was added dropwise under ice cooling, and the mixture was stirred at room temperature overnight. Thereafter, the reaction solution was concentrated and washed three times with acetonitrile to give 1.24 g of compound (16). The average number of repeating units was 18.5.

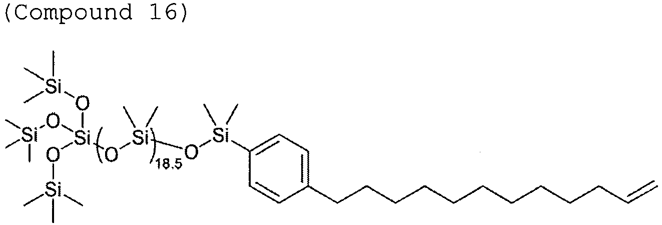

1H-NMR (400 MHz, CHLOROFORM-D) δ 7.46 (d, J = 7.8 Hz, 2H), 7.16 (d, J = 7.8 Hz, 2H), 5.84-5.77 (m, 1H), 5.00-4.90 (m, 2H), 2.58 (t, J = 7.8 Hz, 2H), 2.05-2.00 (m, 2H), 1.61-1.25 (m, 18H), 0.31 (s, 6H), 0.16-0.02 (m)

### (Synthetic Example 17)

After 1.0 g of compound (16) obtained in Synthetic Example 16, 8.0 mL of toluene, 7.8 µL of pyridine, and 55 µL of a xylene solution containing a 2% Pt complex of 1,3-divinyl-1,1,3,3-tetramethyldisiloxane were each added, 0.28 mL of trimethoxysilane was added, and the mixture was stirred at room temperature for 3 hours. Thereafter, the mixture was purified to give 0.88 g of the following compound having a terminal trimethoxysilyl group (17). The average number of repeating units was 18.5.

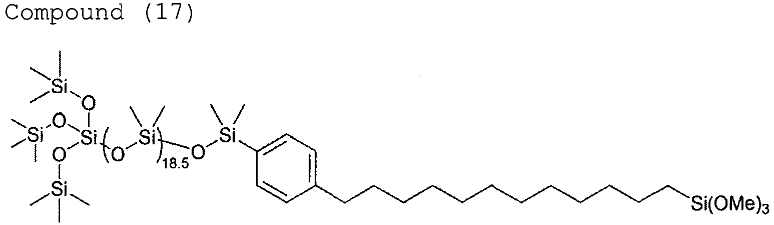

1H-NMR (400 MHz, CHLOROFORM-D) δ 7.46 (d, J = 8.2 Hz, 2H), 7.16 (d, J = 7.8 Hz, 2H), 3.60-3.54 (m, 9H), 2.58 (t, J = 7.8 Hz, 2H), 1.61-1.24 (m, 18H), 0.65-0.61 (m, 2H), 0.31 (s, 6H), 0.14-0.01 (m)

### (Surface-treating agent 6)

Compound (17) obtained above was diluted so as to be a 10 wt% hexamethyldisiloxane solution, and thus a surface-treating agent 6 was obtained.

### (Synthetic Example 18)

After 1.0 g of 1-bromo-4-(11-dodecen-1-yl)benzene and 10.0 mL of tetrahydrofuran were added, 1.95 mL of a 15% n-butyllithium solution in hexane was added dropwise at -78°C, and the mixture was stirred at -78°C for 1 hour. Thereafter, 0.80 g of compound (12): Me(OSi(Me)₃)₂SiCl was added dropwise under ice cooling, and the mixture was stirred at room temperature for 2 hours. Thereafter, water and toluene were added to remove the aqueous layer, then the toluene layer was washed twice with water, and the toluene layer was concentrated to give 1.34 g of compound (18).

¹H NMR (400 MHz, CHLOROFORM-D) δ 7.46 (d, J = 7.8 Hz, 2H), 7.17 (d, J = 7.8 Hz, 2H), 5.85-5.78 (m, 1H), 5.02-4.92 (m, 2H), 2.61-2.57 (m, 2H), 2.07-2.02 (m, 2H), 1.63-1.55 (m, 2H), 1.44-1.27 (m, 14H), 0.26-0.25 (m, 3H), 0.14-0.03 (m, 18H)

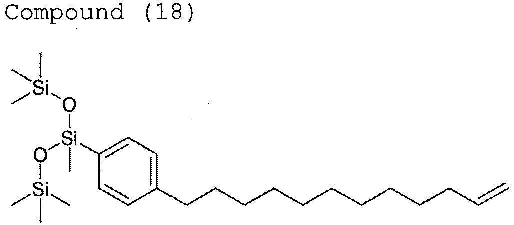

### (Synthetic Example 19)

After 1.0 g of compound (18) obtained in Synthetic Example 18, 7.0 mL of toluene, 23 µL of pyridine, and 164 µL of a xylene solution containing a 2% Pt complex of 1,3-divinyl-1,1,3,3-tetramethyldisiloxane were each added, 0.82 mL of trimethoxysilane was added, and the mixture was stirred at room temperature for 3 hours. Thereafter, the mixture was purified to give 1.1 g of the following compound having a terminal trimethoxysilyl group (19).

¹H NMR (400 MHz, CHLOROFORM-D) δ 7.44 (d, J = 7.8 Hz, 2H), 7.16 (d, J = 7.8 Hz, 2H), 3.60-3.56 (m, 9H), 2.60-2.56 (m, 2H), 1.61-1.55 (m, 2H), 1.42-1.24 (m, 18H), 0.66-0.62 (m, 2H), 0.25-0.24 (m, 3H), 0.10-0.04 (m, 18H)

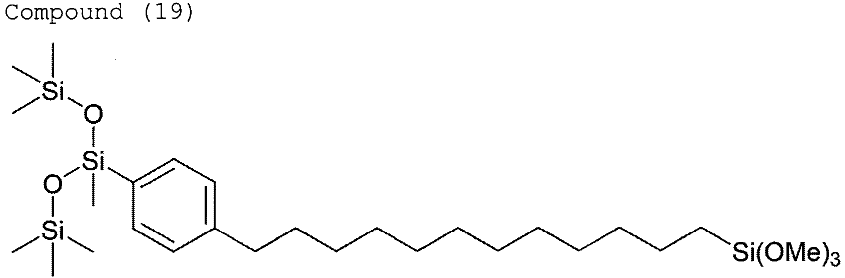

### (Surface-treating agent 7)

Compound (19) obtained above was diluted so as to be a 10 wt% hexamethyldisiloxane solution, and thus a surface-treating agent 7 was obtained.

### (Synthetic Example 20)

A glass flask was charged with a stirrer bar, 1.0 g of compound (13') synthesized in the same manner as in Synthetic Example 13 (the same as compound (13) except that the number of siloxane repeats was 16), 0.12 mL of a xylene solution containing a 2% Pt complex of 1,3-divinyl-1,1,3,3-tetramethyldisiloxane, 3.7 µL of triacetoxymethylsilane, 0.35 g of dichloromethylsilane, and 5 mL of toluene, the flask was immersed in an oil bath at 40°C, and the mixture was stirred with a magnetic stirrer for 2 hours. Thereafter, the mixture was concentrated under reduced pressure, 10 mL of tetrahydrofuran was added to the residue, the flask was immersed in an ice bath, and 1.5 mL of allylmagnesium chloride (2.0 mol/L tetrahydrofuran solution) was added dropwise while stirring the mixture with a magnetic stirrer. After 18 hours of stirring at room temperature, hydrochloric acid and toluene were added to the flask, the mixture was stirred, the liquid in the flask was transferred to a separatory funnel and allowed to stand still for separation, and the lower layer (the aqueous layer) was removed. Water was similarly added to wash the organic layer twice, dried over magnesium sulfate, and then concentrated under reduced pressure to give 1.1 g of compound (20) as a colorless oil.

¹H NMR (400 MHz, CHLOROFORM-D) δ 7.48 (d, J = 8.2 Hz, 2H), 7.18 (d, J = 7.8 Hz, 2H), 5.84-5.73 (m, 2H), 4.89-4.82 (m, 4H), 2.60 (t, J = 7.8 Hz, 2H), 1.64-1.54 (m, 6H), 1.44-1.27 (m, 18H), 0.55 (t, J = 7.8 Hz, 2H), 0.33 (s, 6H), 0.21 - -0.07 (m) 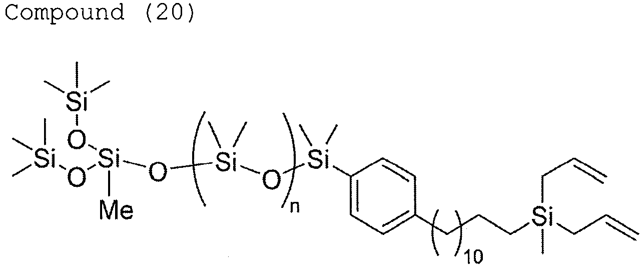 The average value of n in the formula is 16.

### (Synthetic Example 21)

A glass flask was charged with a stirrer bar, 0.81 g of compound (20), 95 µL of a xylene solution containing a 2% Pt complex of 1,3-divinyl-1,1,3,3-tetramethyldisiloxane, 13 µL of pyridine, 0.48 mL of trimethoxysilane, and 5 mL of toluene, and the mixture was stirred with a magnetic stirrer at room temperature for 4 hours. Thereafter, the mixture was concentrated under reduced pressure to give 0.94 g of compound (21) as a slightly yellow oil.

¹H NMR (400 MHz, CHLOROFORM-D) δ 7.46 (d, J = 8.2 Hz, 2H), 7.16 (d, J = 8.2 Hz, 2H), 3.61-3.53 (m, 18H), 2.58 (t, J = 7.8 Hz, 2H), 1.61-1.58 (m, 2H), 1.46-1.38 (m, 4H), 1.30-1.25 (m, 18H), 0.72-0.68 (m, 4H), 0.60-0.56 (m, 4H), 0.49-0.47 (m, 2H), 0.32 (s, 6H), 0.14 - -0.08 (m) 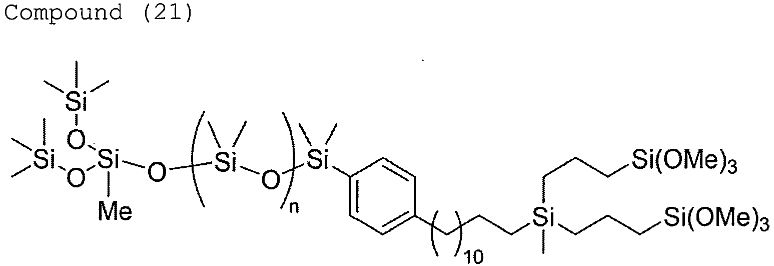 The average value of n in the formula is 16.

### (Surface-treating agent 8)

Compound (21) obtained above was diluted so as to be a 10 wt% hexamethyldisiloxane solution, and thus a surface-treating agent 8 was obtained.

### (Synthetic Example 22)

After 1.0 g of compound (6) and 10.0 mL of tetrahydrofuran were added, 1.95 mL of a 15% n-butyllithium solution in hexane was added dropwise at - 78°C, and the mixture was stirred at -78°C for 1 hour. Thereafter, 1.03 g of compound (15): (OSi(Me)₃)₃SiCl was added dropwise under ice cooling, and the mixture was stirred at room temperature for 2 hours. Thereafter, water and toluene were added to remove the aqueous layer, then the toluene layer was washed twice with water, and the toluene layer was concentrated to give 1.42 g of compound (22).

¹H NMR (400 MHz, CHLOROFORM-D) δ 7.44 (d, 2H), 7.15 (d, 2H), 5.84-5.77 (m, 1H), 5.01-4.90 (m, 2H), 2.61-2.56 (m, 2H), 2.06-2.00 (m, 2H), 1.62-1.53 (m, 2H), 1.43-1.26 (m, 14H), 0.16-0.05 (m, 27H)

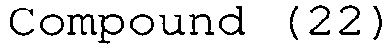

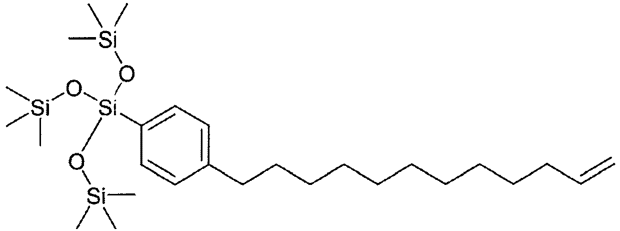

### (Synthetic Example 23)

After 1.0 g of compound (22) obtained in Synthetic Example 22, 7.0 mL of toluene, 20 µL of pyridine, and 141 µL of a xylene solution containing a 2% Pt complex of 1,3-divinyl-1,1,3,3-tetramethyldisiloxane were each added, 0.70 mL of trimethoxysilane was added, and the mixture was stirred at room temperature for 3 hours. Thereafter, the mixture was purified to give 1.2 g of the following compound having a terminal trimethoxysilyl group (23).

¹H NMR (400 MHz, CHLOROFORM-D) δ 7.44 (d, 2H), 7.16 (d, 2H), 3.61-3.55 (m, 9H), 2.61-2.57 (m, 2H), 1.62-1.52 (m, 2H), 1.43-1.25 (m, 14H), 0.67-0.63 (m, 2H), 0.15-0.05 (m, 27H)

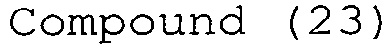

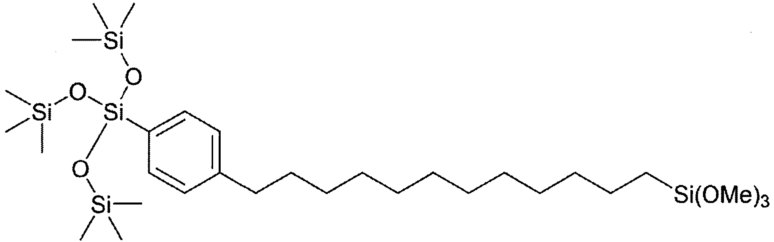

### (Surface-treating agent 9)

Compound (23) obtained above was diluted so as to be a 10 wt% hexamethyldisiloxane solution, and thus a surface-treating agent 9 was obtained.

### (Synthetic Example 24)

After 3.13 g of 4-bromophenol, 0.93 g of potassium hydroxide, and 50 mL of N,N-dimethylformamide were added, the mixture was stirred at 80°C for 30 minutes. Thereafter, 5.0 g of 18-bromo-1-octadecene was added dropwise, and the mixture was stirred at room temperature for 3 hours. Thereafter, water and toluene were added to remove the aqueous layer, then the toluene layer was washed twice with water, and the toluene layer was concentrated to give, 7.8 g of compound (24).

¹H NMR (400 MHz, CHLOROFORM-D) δ 7.36 (d, 2H), 6.77 (d, 2H), 5.87-5.77 (m, 1H), 5.02-4.91 (m, 2H), 3.91 (t, 2H), 2.07-2.01 (m, 2H), 1.80-1.73 (m, 2H), 1.47-1.26 (m, 26H)

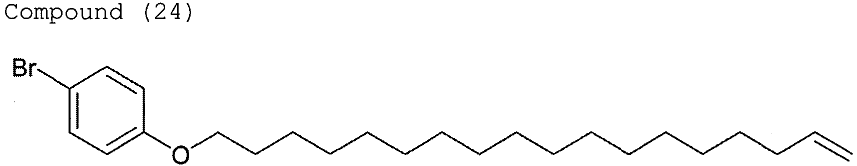

### (Synthetic Example 25)

After 0.6 g of compound (24) and 5.0 mL of tetrahydrofuran were added, 0.91 mL of a 15% n-butyllithium solution in hexane was added dropwise at - 78°C, and the mixture was stirred at -78°C for 1 hour. Thereafter, 5.0 mL of a tetrahydrofuran solution containing 1.20 g of hexamethylcyclotrisiloxane was added dropwise, and the mixture was stirred at room temperature for 4 hours. Thereafter, 0.55 g of compound (12): Me(OSi(Me)₃)₂SiCl was added dropwise under ice cooling, and the mixture was stirred at room temperature overnight. Thereafter, the reaction solution was concentrated and purified using a column. Thus, 1.52 g of compound (25) was obtained. The average number of repeating units was 13.3.

¹H NMR (400 MHz, CHLOROFORM-D) δ 7.47 (d, 2H), 6.90 (d, 2H), 5.87-5.77 (m, 1H), 5.02-4.92 (m, 2H), 3.98-3.90 (m, 2H), 2.07-2.00 (m, 2H), 1.82-1.75 (m, 2H), 1.47-1.27 (m, 26H), 0.33-0.31 (m, 6H), 0.18-0.04 (m), 0.04-0.01 (m, 3H)

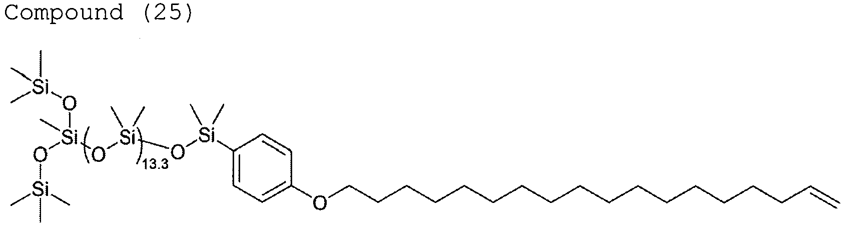

### (Synthetic Example 26)

After 1.2 g of compound (25) obtained in Synthetic Example 25, 10.0 mL of toluene, 9 µL of pyridine, and 65 µL of a xylene solution containing a 2% Pt complex of 1,3-divinyl-1,1,3,3-tetramethyldisiloxane were each added, 325 µL of trimethoxysilane was added, and the mixture was stirred at room temperature for 3 hours. Thereafter, the mixture was purified to give 1.5 g of the following compound having a terminal trimethoxysilyl group (26). The average number of repeating units was 13.3.

¹H NMR (400 MHz, CHLOROFORM-D) δ 7.53 (d, 2H), 7.00 (d, 2H), 3.94-3.94 (m, 2H), 3.62-3.59 (m, 9H), 1.72-1.87 (m, 2H), 1.32-1.32 (m, 32H), 0.39-0.39 (m, 6H), 0.18-0.13 (m), 0.11-0.11 (m, 3H)

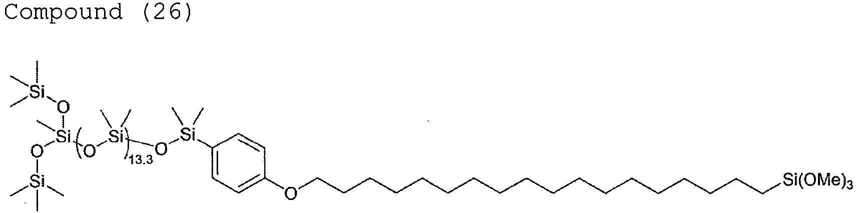

### (Surface-treating agent 10)

Compound (26) obtained above was diluted so as to be a 10 wt% hexamethyldisiloxane solution, and thus a surface-treating agent 10 was obtained.

### (Synthetic Example 27)

After 5 g of chlorodimethylvinylsilane, 14 g of 1,1,1,3,5,5,5-heptamethyltrisiloxane, 2.4 mL of a xylene solution containing a 2% Pt complex of 1,3-divinyl-1,1,3,3-tetramethyldisiloxane, and 100 mL of toluene were added, the mixture was stirred at room temperature for 4 hours. Thereafter, the mixture was distilled under reduced pressure (78 to 82°C at 2 Torr) to give 2.11 g of compound (27) as a colorless liquid.

¹H NMR (400 MHz, CHLOROFORM-D) δ 0.75-0.71 (m, 2H), 0.46-0.36 (m, 8H), 0.16-0.06 (m, 18H), 0.03-0.00 (m, 3H)

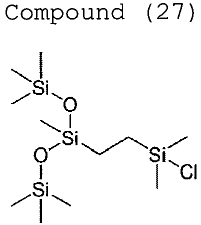

### (Synthetic Example 28)

After 0.7 g of compound (6) and 7.6 mL of tetrahydrofuran were added, 1.39 mL of a 15% n-butyllithium solution in hexane was added dropwise at - 78°C, and the mixture was stirred at -78°C for 1 hour. Thereafter, 7.6 mL of a tetrahydrofuran solution containing 1.83 g of hexamethylcyclotrisiloxane was added dropwise, and the mixture was stirred at room temperature for 4 hours. Thereafter, 1.11 g of compound (27) was added dropwise under ice cooling, and the mixture was stirred at room temperature overnight. Thereafter, the reaction solution was concentrated and purified using a column. Thus, 1.70 g of compound (28) was obtained. The average number of repeating units was 14.5.

¹H NMR (400 MHz, CHLOROFORM-D) δ 7.46 (d, J = 7.8 Hz, 2H), 7.16 (d, J = 7.8 Hz, 2H), 5.83-5.75 (m, 1H), 5.01-4.90 (m, 2H), 2.60-2.56 (m, 2H), 2.05-2.00 (m, 2H), 1.61-1.56 (m, 2H), 1.38-1.25 (m, 14H), 0.45-0.34 (m, 4H), 0.33-0.30 (m, 6H), 0.11-0.02 (m), -0.00 - -0.02 (m, 3H)

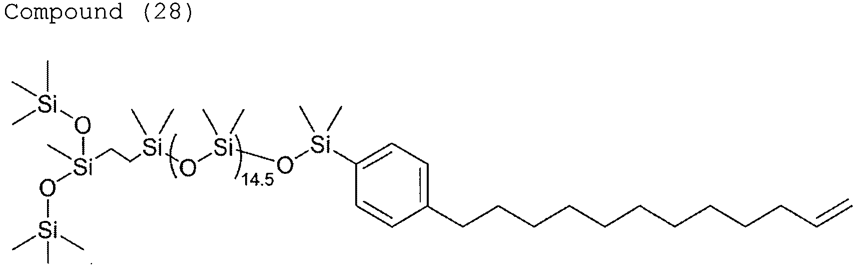

### (Synthetic Example 29)

After 1.0 g of compound (28) obtained in Synthetic Example 28, 10.0 mL of toluene, 7.7 µL of pyridine, and 55 µL of a xylene solution containing a 2% Pt complex of 1,3-divinyl-1,1,3,3-tetramethyldisiloxane were each added, 0.27 mL of trimethoxysilane was added, and the mixture was stirred at room temperature for 3 hours. Thereafter, the mixture was purified to give 1.22 g of the following compound having a terminal trimethoxysilyl group (29). The average number of repeating units was 14.5.

¹H NMR (400 MHz, CHLOROFORM-D) δ 7.49 (d, 2H), 7.17 (d, 2H), 3.61-3.54 (m, 9H), 2.61-2.57 (m, 2H), 1.64-1.57 (m, 2H), 1.43-1.25 (m, 18H), 0.67-0.62 (m, 2H), 0.47-0.35 (m, 4H), 0.34-0.31 (m, 6H), 0.15-0.03 (m), 0.01 - -0.01 (m, 3H)

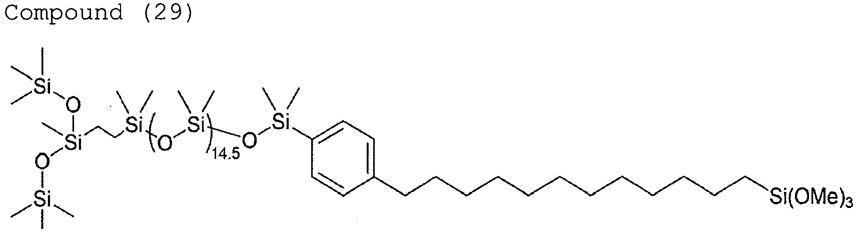

### (Surface-treating agent 11)

Compound (29) obtained above was diluted so as to be a 10 wt% hexamethyldisiloxane solution, and thus a surface-treating agent 11 was obtained.

### (Synthetic Example 30)

A glass flask was charged with a stirrer bar, 2.0 g of 1,1,1,3,5,5,5-heptamethyltrisiloxane, 0.52 g of acetone, 0.14 g of tris(pentafluorophenyl)borane, and 20 mL of toluene, and the mixture was stirred with a magnetic stirrer at room temperature for 1 hour. Thereafter, 1.7 g of diphenylsilane was added to the flask, and the mixture was stirred with a magnetic stirrer at room temperature for 1 hour. Thereafter, the reaction solution was added to a column packed with 2 g of silica gel, moreover, 10 mL of toluene was allowed to flow through the column, and the effluent was concentrated under reduced pressure to give 3.3 g of compound (30) as a colorless oil.

¹H NMR (400 MHz, CHLOROFORM-D) δ 7.62 (dt, J = 7.8, 1.8 Hz, 4H), 7.45-7.35 (m, 6H), 5.50 (s, 1H), 0.12-0.01 (m, 21H)

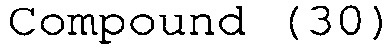

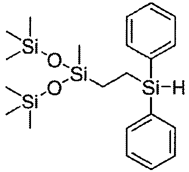

### (Synthetic Example 31)

A glass flask was charged with a stirrer bar, 1.83 g of compound (30), 0.51 g of trichloroisocyanuric acid, and 20 mL of dichloromethane, and the mixture was stirred with a magnetic stirrer at room temperature for 2 hours. Thereafter, the reaction solution was subjected to filtration, and the filtrate was concentrated under reduced pressure to give 1.84 g of compound (31) as a colorless oil.

¹H NMR (400 MHz, CHLOROFORM-D) δ 7.70 (dt, J = 6.4, 1.6 Hz, 4H), 7.46-7.44 (m, 2H), 7.42-7.38 (m, 4H), 0.13-0.10 (m, 3H), 0.08-0.05 (m, 18H)

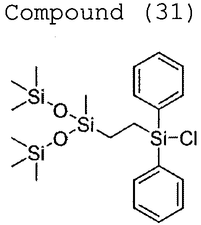

### (Synthetic Example 32)

After a glass flask was charged with a stirrer bar, 0.5 g of 1-bromo-4-(4-dodecen-1-yl)benzene, and 7 mL of tetrahydrofuran, the flask was immersed in a dry ice/acetone bath, 0.98 mL of a 15% n-butyllithium solution in hexane was added dropwise, and the mixture was stirred with a magnetic stirrer for 1 hour. Thereafter, 7 mL of a tetrahydrofuran solution containing 1.3 g of hexamethylcyclotrisiloxane was added dropwise to the flask, and the mixture was stirred at room temperature for 4 hours. Thereafter, 0.92 g of compound (31) was added to the flask, and the mixture was stirred at room temperature for 18 hours. The reaction solution was concentrated under reduced pressure, the concentration residue was added to a column packed with 2 g of silica gel, 20 mL of toluene was allowed to flow through the column, and the effluent was concentrated under reduced pressure to give 1.7 g of compound (32) as a colorless oil.

¹H NMR (400 MHz, CHLOROFORM-D) δ 7.67-7.60 (m, 4H), 7.49 (d, 2H), 7.42-7.27 (m, 6H), 7.20 (d, J = 7.8 Hz, 2H), 5.88-5.78 (m, 1H), 5.04-4.93 (m, 2H), 2.64-2.59 (m, J = 4.6 Hz, 2H), 2.09-2.03 (m, 2H), 1.65-1.59 (m, 2H), 1.41-1.29 (m, 14H), 0.35 (s, 6H), 0.25 - -0.09 (m) 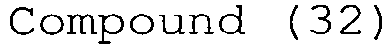 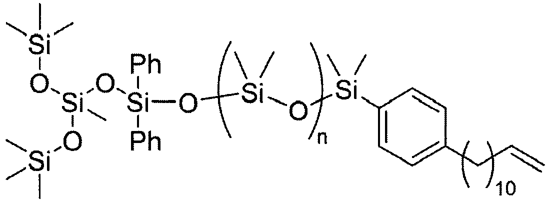 The average value of n in the formula is 16.

### (Synthetic Example 33)

A glass flask was charged with a stirrer bar, 1.5 g of compound (32), 76 µL of a xylene solution containing a 2% Pt complex of 1,3-divinyl-1,1,3,3-tetramethyldisiloxane, 11 µL of pyridine, 0.38 mL of trimethoxysilane, and 5 mL of toluene, and the mixture was stirred with a magnetic stirrer at room temperature for 4 hours. Thereafter, the mixture was concentrated under reduced pressure to give 1.5 g of compound (33) as a slightly yellow oil.

¹H NMR (400 MHz, CHLOROFORM-D) δ 7.64-7.57 (m, 4H), 7.47 (d, J = 7.8 Hz, 2H), 7.39-7.27 (m, 6H), 7.17 (d, J = 7.8 Hz, 2H), 3.61-3.54 (m, 9H), 2.59 (t, J = 7.8 Hz, 2H), 1.62-1.56 (m, 2H), 1.43-1.25 (m, 18H), 0.66-0.62 (m, 2H), 0.32 (s, 6H), 0.22 - -0.12 (m) 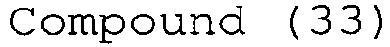 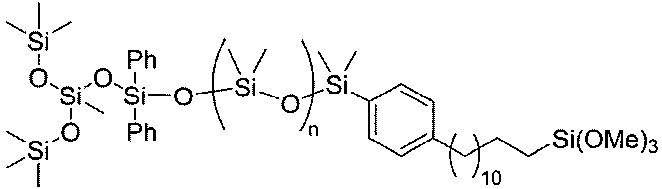 The average value of n in the formula is 16.

### (Surface-treating agent 12)

Compound (33) obtained above was diluted so as to be a 10 wt% hexamethyldisiloxane solution, and thus a surface-treating agent 12 was obtained.

### (Synthetic Example 34)

After 1.0 g of allyltrimethoxysilane, 5.26 mL of 1,1,1,3,5,5,5-heptamethyltrisiloxane, 14 mL of hexane, and 0.0158 g of tris(pentafluorophenyl)borane were added, the mixture was stirred at room temperature for 1 hour. Thereafter, the mixture was purified to give 4.56 g of the following compound (34).

¹H NMR (400 MHz, CHLOROFORM-D) δ 5.81-5.79 (m, 1H), 4.97-4.85 (m, 2H), 1.58-1.56 (m, 2H), 0.14-0.09 (m, 54H), 0.06-0.02 (m, 9H)

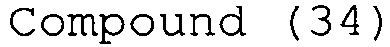

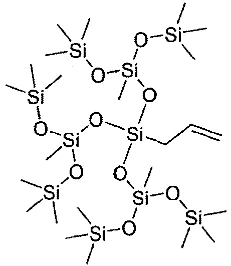

### (Synthetic Example 35)

After 2.0 g of compound (34) obtained in Synthetic Example 34, 20.0 mL of toluene, and 146 µL of a xylene solution containing a 2% Pt complex of 1,3-divinyl-1,1,3,3-tetramethyldisiloxane were each added, 0.83 mL of chlorodimethylsilane was added, and the mixture was stirred at room temperature for 3 hours. Thereafter, the mixture was purified to give 2.10 g of the following compound (35).

¹H NMR (400 MHz, CHLOROFORM-D) δ 1.45-1.63 (m, 2H), 0.84-0.95 (m, 2H), 0.57-0.72 (m, 2H), 0.36-0.43 (m, 6H), 0.07-0.21 (m, 54H), 0.03-0.07 (m, 9H)

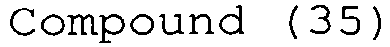

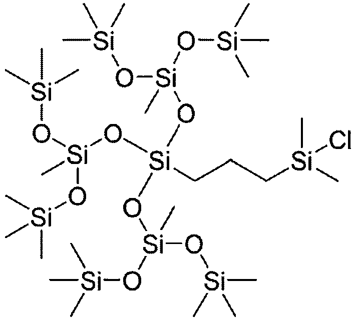

### (Synthetic Example 36)

After 0.5 g of compound (6) and 5.0 mL of tetrahydrofuran were added, 0.97 mL of a 15% n-butyllithium solution in hexane was added dropwise at - 78°C, and the mixture was stirred at -78°C for 1 hour. Thereafter, 5.0 mL of a tetrahydrofuran solution containing 1.31 g of hexamethylcyclotrisiloxane was added dropwise, and the mixture was stirred at room temperature for 4 hours. Thereafter, 1.12 g of compound (35) was added dropwise under ice cooling, and the mixture was stirred at room temperature overnight.
Thereafter, the reaction solution was concentrated and purified using a column. Thus, 1.52 g of the following compound (36) was obtained. The average number of repeating units was 13.

¹H NMR (400 MHz, CHLOROFORM-D) δ 7.46 (d, J = 7.8 Hz, 2H), 7.16 (d, J = 7.8 Hz, 2H), 5.83-5.75 (m, 1H), 5.01-4.90 (m, 2H), 2.60-2.56 (m, 2H), 2.05-2.00 (m, 2H), 1.64-1.52 (m, 2H), 1.47-1.39 (m, 2H), 1.38-1.25 (m, 14H), 0.68-0.54 (m, 4H), 0.33-0.30 (m, 6H), 0.17 - -0.00 (m)

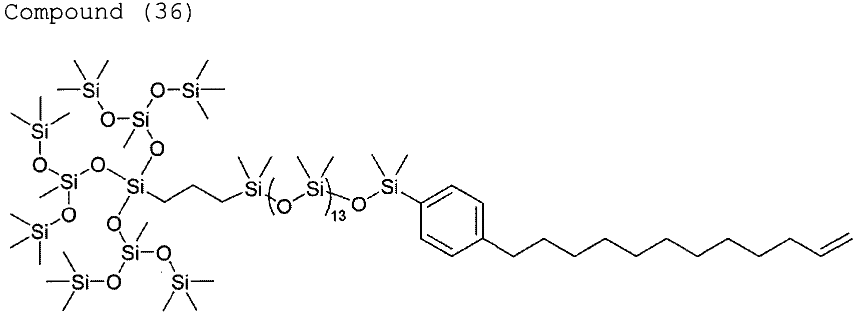

### (Synthetic Example 37)

After 3.0 g of compound (36) obtained in Synthetic Example 36, 30.0 mL of toluene, 16.3 µL of pyridine, and 118 µL of a xylene solution containing a 2% Pt complex of 1,3-divinyl-1,1,3,3-tetramethyldisiloxane were each added, 0.59 mL of trimethoxysilane was added, and the mixture was stirred at room temperature for 3 hours. Thereafter, the mixture was purified to give 3.10 g of the following compound having a terminal trimethoxysilyl group (37). The average number of repeating units was 13.

¹H NMR (400 MHz, CHLOROFORM-D) δ 7.47 (d, J = 7.8 Hz, 2H), 7.16 (d, J = 7.8 Hz, 2H), 3.62-3.54 (m, 9H), 2.62-2.55 (m, 2H), 1.64-1.52 (m, 2H), 1.47-1.37 (m, 2H), 1.31-1.25 (m, 18H), 0.68-0.54 (m, 6H), 0.33-0.29 (m, 6H), 0.17 - -0.00 (m)

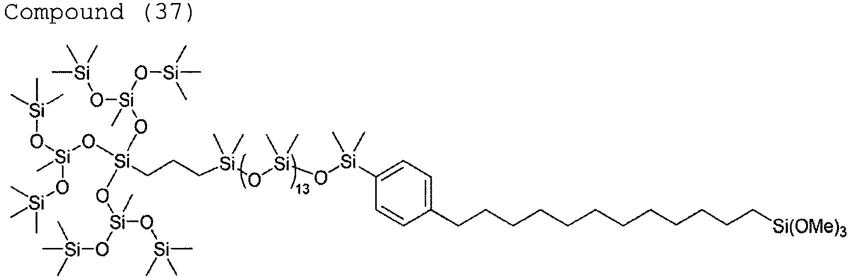

### (Surface-treating agent 13)

Compound (37) obtained above was diluted so as to be a 10 wt% hexamethyldisiloxane solution, and thus a surface-treating agent 13 was obtained.

### (Synthetic Example 38)

After 2.18 g of tetraethoxysilane, 9.85 g of 1,1,1,3,5,5,5-heptamethyltrisiloxane, 20 mL of hexane, and 20 mg of tris(pentafluorophenyl)borane were added, the mixture was stirred at 60°C for 30 minutes. Thereafter, the mixture was purified to give 8.10 g of the following compound (38).

¹H NMR (400 MHz, CHLOROFORM-D) δ 3.78 (q, J = 7.0 Hz, 2H), 1.19 (t, J = 7.1 Hz, 3H), 0.14-0.05 (m, 63H)

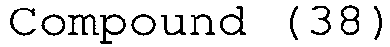

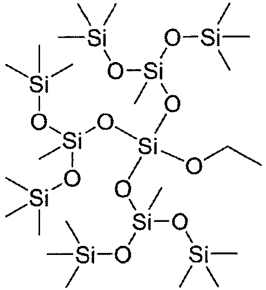

### (Synthetic Example 39)

After 1.0 g of compound (6) and 10.8 mL of tetrahydrofuran were added, 1.95 mL of a 15% n-butyllithium solution in hexane was added dropwise at - 78°C, and the mixture was stirred at -78°C for 1 hour. Thereafter, 10.8 mL of a tetrahydrofuran solution containing 2.61 g of hexamethylcyclotrisiloxane was added dropwise, and the mixture was stirred at room temperature for 4 hours. Thereafter, 0.39 mL of chlorodimethylsilane was added dropwise under ice cooling, and the mixture was stirred at room temperature overnight. Thereafter, the reaction solution was concentrated and purified using a column. Thus, 2.30 g of the following compound (39) was obtained. The average number of repeating units was 12.6.

¹H NMR (400 MHz, CHLOROFORM-D) δ 7.48 (d, J = 7.8 Hz, 2H), 7.18 (d, J = 7.8 Hz, 2H), 5.85-5.79 (m, 1H), 5.03-4.92 (m, 2H), 4.73-4.70 (m, 1H), 2.62-2.58 (m, 2H), 2.07-2.02 (m, 2H), 1.63-1.60 (m, 2H), 1.40-1.28 (m, 14H), 0.34-0.33 (m, 6H), 0.21-0.18 (m, 6H), 0.15-0.06 (m)

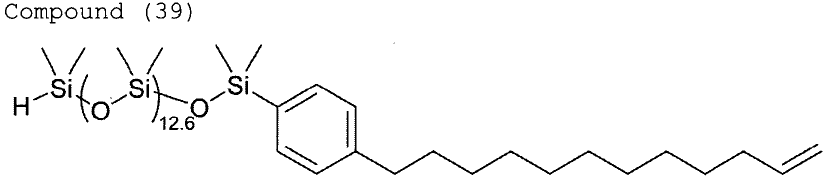

### (Synthetic Example 40)

After 2.0 g of compound (39), 1.38 g of compound (38), 5 mL of hexane, and 4.5 mg of tris(pentafluorophenyl)borane were added, the mixture was stirred at 60°C for 30 minutes. Thereafter, the mixture was purified to give 2.46 g of the following compound (40). The average number of repeating units was 12.6.

¹H NMR (400 MHz, CHLOROFORM-D) δ 7.47 (d, J = 7.8 Hz, 2H), 7.19 (d, J = 7.8 Hz, 2H), 5.87-5.76 (m, 1H), 5.02-4.91 (m, 2H), 2.61-2.54 (m, 2H), 2.07-2.01 (m, 2H), 1.64-1.57 (m, 2H), 1.43-1.27 (m, 14H), 0.36-0.29 (m, 6H), 0.25 - -0.09 (m)

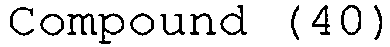

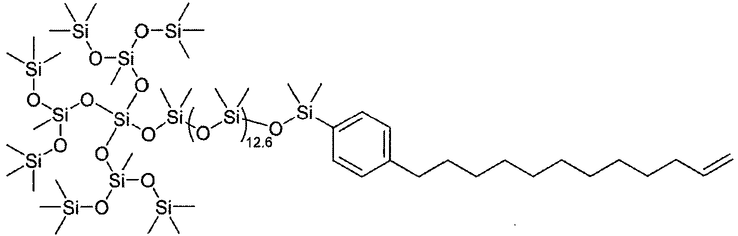

### (Synthetic Example 41)

After 2.0 g of compound (40) obtained in Synthetic Example 40, 20 mL of toluene, 11 µL of pyridine, and 80 µL of a xylene solution containing a 2% Pt complex of 1,3-divinyl-1,1,3,3-tetramethyldisiloxane were each added, 0.40 mL of trimethoxysilane was added, and the mixture was stirred at room temperature for 3 hours. Thereafter, the mixture was purified to give 2.0 g of the following compound having a terminal trimethoxysilyl group (41). The average number of repeating units was 12.6.

¹H NMR (400 MHz, CHLOROFORM-D) δ 7.47 (d, J = 7.8 Hz, 2H), 7.16 (d, J = 7.8 Hz, 2H), 3.57-3.56 (m, 9H), 2.61-2.54 (m, 2H), 1.64-1.56 (m, 2H), 1.43-1.26 (m, 18H), 0.68-0.62 (m, 2H), 0.36-0.30 (m, 6H), 0.25-0.09 (m)

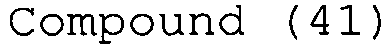

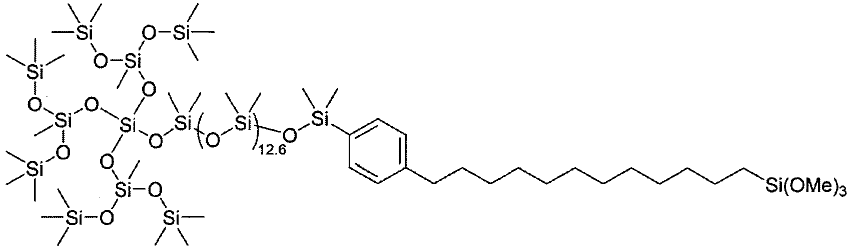

### (Surface-treating agent 14)

Compound (41) obtained above was diluted so as to be a 10 wt% hexamethyldisiloxane solution, and thus a surface-treating agent 14 was obtained.

### (Synthetic Example 42)

After a glass flask was charged with a stirrer bar, 1.5 g of compound (6), and 20 mL of tetrahydrofuran, the flask was immersed in a dry ice/acetone bath, 3.1 mL of a 15% n-butyllithium solution in hexane was added dropwise, and the mixture was stirred with a magnetic stirrer for 1 hour. Thereafter, 0.56 g of chlorodimethylsilane was added to the flask, and the mixture was stirred at room temperature for 1 hour. Water and toluene were added to the flask, the mixture was stirred, the liquid in the flask was transferred to a separatory funnel and allowed to stand still for separation, and the lower layer (the aqueous layer) was removed. Water was similarly added to wash the organic layer twice, dried over magnesium sulfate, and then concentrated under reduced pressure to give 1.3 g of compound (42) as a colorless oil.

¹H NMR (400 MHz, CHLOROFORM-D) δ 7.46 (d, J = 8.2 Hz, 2H), 7.19 (d, J = 8.2 Hz, 2H), 5.87-5.77 (m, 1H), 5.03-4.91 (m, 2H), 4.43-4.40 (m, 1H), 2.60 (t, J = 7.8 Hz, 2H), 2.07-2.01 (m, 2H), 1.65-1.51 (m, 2H), 1.41-1.27 (m, 14H), 0.34 (d, J = 3.6 Hz, 6H)

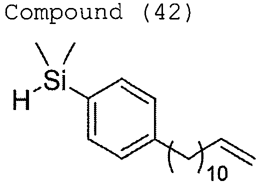

### (Synthetic Example 43)

A glass flask was charged with a stirrer bar, 0.5 g of compound (42), 0.65 g of methyl tris(trimethylsilyl)silicate, 85 mg of tris(pentafluorophenyl)borane, and 10 mL of toluene, the mixture was stirred with a magnetic stirrer at room temperature for 1 hour. Thereafter, the reaction solution was concentrated under reduced pressure, and the residue was purified by silica gel column chromatography (eluent: hexane) to give 0.36 g of compound (43) as a colorless oil.

¹H NMR (400 MHz, CHLOROFORM-D) 5 7.49 (d, J = 7.8 Hz, 2H), 7.17 (d, J = 7.8 Hz, 2H), 5.87-5.77 (m, 1H), 5.02-4.92 (m, 2H), 2.59 (t, J = 7.8 Hz, 2H), 2.07-2.01 (m, 2H), 1.64-1.55 (m, 2H), 1.39-1.27 (m, 14H), 0.33 (s, 6H), 0.23 - -0.07 (m, 27H)

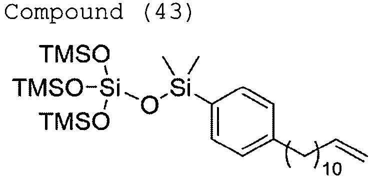

### (Synthetic Example 44)

A glass flask was charged with a stirrer bar, 0.36 g of compound (43), 45 µL of a xylene solution containing a 2% Pt complex of 1,3-divinyl-1,1,3,3-tetramethyldisiloxane, 6 µL of pyridine, 0.22 mL of trimethoxysilane, and 5 mL of toluene, and the mixture was stirred with a magnetic stirrer at room temperature for 4 hours. Thereafter, the mixture was concentrated under reduced pressure to give 0.36 g of compound (44) as a slightly yellow oil.

¹H NMR (400 MHz, CHLOROFORM-D) δ 7.49 (d, J = 7.8 Hz, 2H), 7.17 (d, J = 7.8 Hz, 2H), 3.61-3.56 (m, 9H), 2.59 (t, J = 7.8 Hz, 2H), 1.62-1.52 (m, 2H), 1.42-1.25 (m, 18H), 0.67-0.63 (m, 2H), 0.33 (s, 6H), 0.22 - -0.08 (m, 27H)

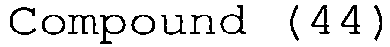

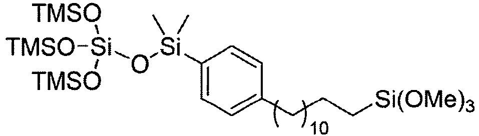

### (Surface-treating agent 15)

Compound (44) obtained above was diluted so as to be a 10 wt% hexamethyldisiloxane solution, and thus a surface-treating agent 15 was obtained.

### (Synthetic Example 45)

After 5.0 g of 4-bromophenol, 1.49 g of potassium hydroxide, and 50 mL of N,N-dimethylformamide were added, the mixture was stirred at 80°C for 30 minutes. Thereafter, 5.2 mL of 11-bromo-1-undecene was added dropwise, and the mixture was stirred at 80°C for 3 hours. Thereafter, water and toluene were added to remove the aqueous layer, then the toluene layer was washed twice with water, and the toluene layer was concentrated to give 5.82 g of compound (45).

¹H NMR (400 MHz, CHLOROFORM-D) δ 7.36 (d, 2H), 6.77 (d, 2H), 5.87-5.77 (m, 1H), 5.03-4.92 (m, 2H), 3.91 (t, 2H), 2.07-2.02 (m, 2H), 1.80-1.73 (m, 2H), 1.48-1.30 (m, 12H)

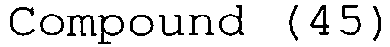

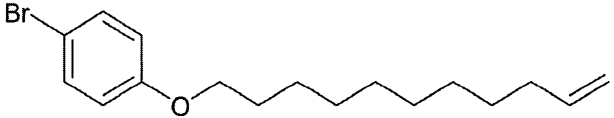

### (Synthetic Example 46)

After 0.7 g of the above compound (45) and 7.53 mL of tetrahydrofuran were added, 1.42 mL of a 15% n-butyllithium solution in hexane was added dropwise at - 78°C, and the mixture was stirred at -78°C for 1 hour. Thereafter, 7.53 mL of a tetrahydrofuran solution containing 1.82 g of hexamethylcyclotrisiloxane was added dropwise, and the mixture was stirred at room temperature for 4 hours. Thereafter, 1.16 g of compound (12): Me(OSi(Me)₃)₂SiCl was added dropwise under ice cooling, and the mixture was stirred at room temperature overnight. Thereafter, the reaction solution was concentrated and purified using a column. Thus, 1.90 g of compound (46) was obtained. The average number of repeating units was 15.

¹H NMR (400 MHz, CHLOROFORM-D) δ 7.47 (d, J = 8.5 Hz, 2H), 6.89 (d, J = 8.5 Hz, 2H), 5.87-5.76 (m, 1H), 5.02-4.92 (m, 2H), 3.98-3.94 (m, 2H), 2.07-2.02 (m, 2H), 1.81-1.74 (m, 2H), 1.49-1.26 (m, 12H), 0.32-0.29 (m, 6H), 0.21-0.05 (m), 0.03-0.01 (m, 3H)

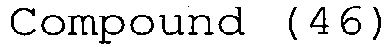

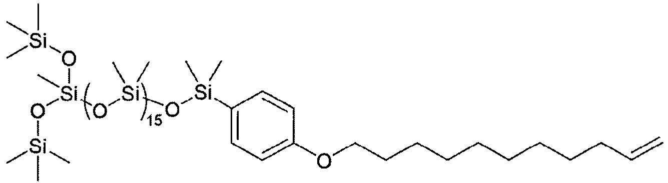

### (Synthetic Example 47)

After 1.5 g of compound (46) obtained in Synthetic Example 46, 10.0 mL of toluene, 9 µL of pyridine, and 69 µL of a xylene solution containing a 2% Pt complex of 1,3-divinyl-1,1,3,3-tetramethyldisiloxane were each added, 347 µL of trimethoxysilane was added, and the mixture was stirred at room temperature for 3 hours. Thereafter, the mixture was purified to give 1.46 g of the following compound having a terminal trimethoxysilyl group (47). The average number of repeating units was 15.

¹H NMR (400 MHz, CHLOROFORM-D) δ 7.53 (d, 2H), 7.00 (d, 2H), 3.94-3.94 (m, 2H), 3.62-3.59 (m, 9H), 1.72-1.87 (m, 2H), 1.32-1.32 (m, 18H), 0.39-0.39 (m, 6H), 0.18-0.13 (m), 0.11-0.11 (m, 3H)

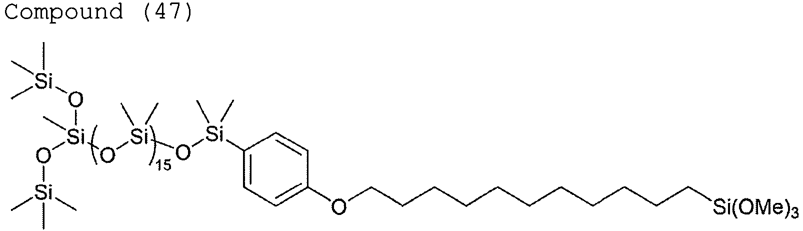

### (Surface-treating agent 16)

Compound (47) obtained above was diluted so as to be a 10 wt% hexamethyldisiloxane solution, and thus a surface-treating agent 16 was obtained.

### (Synthetic Example 48)

After 1.02 g of compound (6) and 10 mL of tetrahydrofuran were added, 2.0 mL of a 15% n-butyllithium solution in hexane was added dropwise at - 78°C, and the mixture was stirred at -78°C for 1 hour. Thereafter, 10.8 mL of a tetrahydrofuran solution containing 10.3 g of hexamethylcyclotrisiloxane was added dropwise, and the mixture was stirred at room temperature overnight. Thereafter, 1.2 mL of chlorotrimethylsilane was added dropwise, and the mixture was stirred at room temperature overnight. Thereafter, toluene was added, the mixture was purified by silica gel column chromatography, and then the toluene layer was concentrated to give a crude product. Acetonitrile was added to wash the crude product three times, and the product oil layer was concentrated to give 5.78 g of compound (48). The average number of repeating units was 78.

¹H NMR (CDCl₃, 400 MHz) δ [ppm]: -0.102-0.213 (m), 0.299 (s), 1.160-1.363 (m), 1.581 (quin), 2.012 (q), 2.565 (t), 4.875-5.003 (m), 5.729-5.849 (m), 7.148 (d), 7.444 (d)

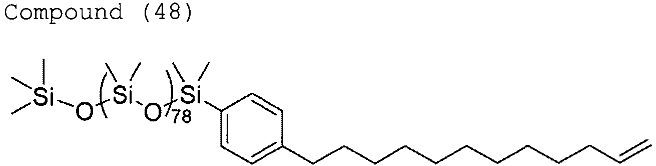

### (Synthetic Example 49)

After 1.5 g of compound (48) obtained in Synthetic Example 48, 2 mL of toluene, 2.7 µL of pyridine, and 19 µL of a xylene solution containing a 2% Pt complex of 1,3-divinyl-1,1,3,3-tetramethyldisiloxane were each added, 0.095 mL of trimethoxysilane was added, and the mixture was stirred at room temperature for 3 hours. Thereafter, the mixture was concentrated under reduced pressure to give 1.5 g of a compound having a terminal trimethoxysilyl group (49). The average number of repeating units was 78.

¹H NMR (CDCl₃, 400 MHz) δ [ppm]: -0.094-0.221 (m), 0.307 (s), 0.607-0.648 (m), 1.181-1.428 (m), 1.589 (quin), 2.571 (t), 3.529-3.595 (m), 7.154 (d), 7.451 (d)

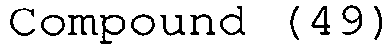

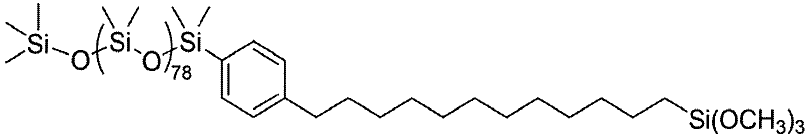

### (Surface-treating agent 17)

Compound (49) obtained above was diluted so as to be a 10 wt% hexamethyldisiloxane solution, and thus a surface-treating agent 17 was obtained.

### (Synthetic Example 50)

After 0.31 g of compound (6) and 3.3 mL of tetrahydrofuran were added, 0.61 mL of a 15% n-butyllithium solution in hexane was added dropwise at - 78°C, and the mixture was stirred at -78°C for 1 hour. Thereafter, 6.5 mL of a tetrahydrofuran solution containing 6.2 g of hexamethylcyclotrisiloxane was added dropwise, and the mixture was stirred at room temperature overnight. Thereafter, 0.37 mL of chlorotrimethylsilane was added dropwise, and the mixture was stirred at room temperature overnight. Thereafter, toluene was added, the mixture was purified by silica gel column chromatography, and then the toluene layer was concentrated to give a crude product. Acetonitrile was added to wash the crude product three times, and the product oil layer was concentrated to give 3.9 g of compound (50). The average number of repeating units was 129.

¹H NMR (CDCl₃, 400 MHz) δ [ppm]: -0.114-0.226 (m), 0.313 (s), 1.181-1.376 (m), 1.597 (quin), 2.022 (q), 2.578 (t), 4.896-4.997 (m), 5.742-5.844 (m), 7.159 (d), 7.458 (d)

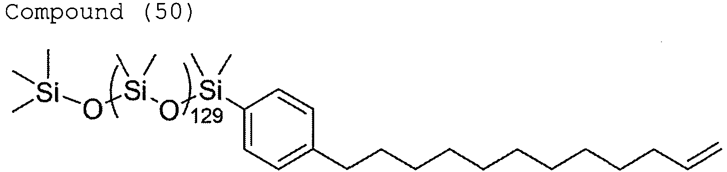

### (Synthetic Example 51)

After 1.0 g of compound (50) obtained in Synthetic Example 50, 1 mL of toluene, 1.5 µL of pyridine, and 11 µL of a xylene solution containing a 2% Pt complex of 1,3-divinyl-1,1,3,3-tetramethyldisiloxane were each added, 0.055 mL of trimethoxysilane was added, and the mixture was stirred at room temperature for 3 hours. Thereafter, the mixture was concentrated under reduced pressure to give 1.0 g of the following compound having a terminal trimethoxysilyl group (51). The average number of repeating units was 129.

¹H NMR (CDCl₃, 400 MHz) δ [ppm]: -0.092-0.223 (m), 0.308 (s), 0.608-0.649 (m), 1.166-1.431 (m), 1.591 (quin), 2.574 (t), 3.524-3.586 (m), 7.156 (d), 7.453 (d)

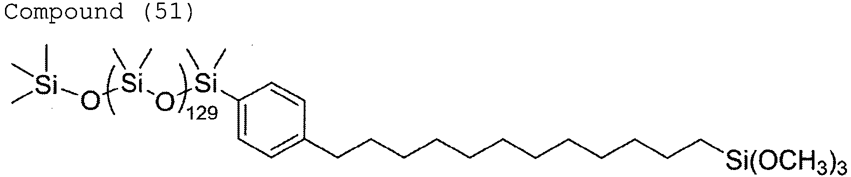

### (Surface-treating agent 18)

Compound (51) obtained above was diluted so as to be a 10 wt% hexamethyldisiloxane solution, and thus a surface-treating agent 18 was obtained.

### (Synthetic Example 52)

After a glass flask was charged with a stirrer bar, 0.49 g of 1-bromo-4-(4-nonadecen-1-yl)benzene, and 10 mL of tetrahydrofuran, the flask was immersed in a dry ice/acetone bath, 0.77 mL of a 15% n-butyllithium solution in hexane was added dropwise, and the mixture was stirred with a magnetic stirrer for 1 hour. Thereafter, 5 mL of a tetrahydrofuran solution containing 0.99 g of hexamethylcyclotrisiloxane was added dropwise to the flask, and the mixture was stirred at room temperature for 4 hours. Thereafter, 0.41 g of compound (12) was added to the flask, and the mixture was stirred at room temperature for 18 hours. The reaction solution was concentrated under reduced pressure, and the residue was purified by silica gel column chromatography (eluents: hexane, chloroform) to give 0.30 g of compound (52) as a colorless oil.

¹H NMR (400 MHz, CHLOROFORM-D) δ 7.47 (d, J = 7.8 Hz, 2H), 7.17 (d, J = 7.8 Hz, 2H), 5.85-5.76 (m, 1H), 5.02-4.91 (m, 2H), 2.59 (t, J = 7.8 Hz, 2H), 2.06-2.01 (m, 2H), 1.64-1.51 (m, 2H), 1.39-1.25 (m, 28H), 0.32 (s, 6H), 0.24 - -0.08 (m) 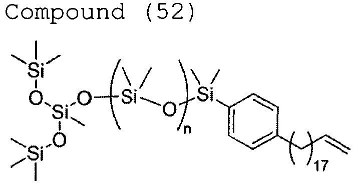 The average value of n in the formula is 12.

### (Synthetic Example 53)

A glass flask was charged with a stirrer bar, 0.30 g of compound (52), 13 µL of a xylene solution containing a 2% Pt complex of 1,3-divinyl-1,1,3,3-tetramethyldisiloxane, 2 µL of pyridine, 0.67 µL of trimethoxysilane, and 2 mL of toluene, and the mixture was stirred with a magnetic stirrer at room temperature for 4 hours. Thereafter, the mixture was concentrated under reduced pressure to give 0.30 g of compound (53) as a slightly yellow oil.

¹H NMR (400 MHz, CHLOROFORM-D) δ 7.47 (d, J = 8.2 Hz, 2H), 7.17 (d, J = 8.2 Hz, 2H), 3.60-3.54 (m, 9H), 2.59 (t, J = 7.8 Hz, 2H), 1.62-1.52 (m, 2H), 1.43-1.25 (m, 32H), 0.67-0.63 (m, 2H), 0.32 (t, J = 3.4 Hz, 6H), 0.25 - -0.08 (m) 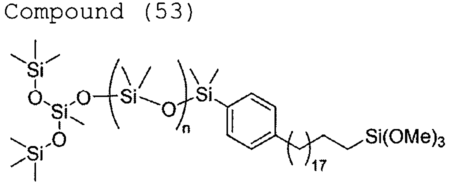 The average value of n in the formula is 12.

### (Surface-treating agent 19)

Compound (53) obtained above was diluted so as to be a 10 wt% hexamethyldisiloxane solution, and thus a surface-treating agent 19 was obtained.

### (Synthetic Example 54)

After 2.09 g of 1-bromo-4-(4-dodecen-1-yl)benzene and 22 mL of tetrahydrofuran were added, 4.27 mL of a 15% n-butyllithium solution in hexane was added dropwise at - 78°C, and the mixture was stirred at -78°C for 1 hour. Thereafter, 22 mL of a tetrahydrofuran solution containing 1.45 g of hexamethylcyclotrisiloxane was added dropwise, and the mixture was stirred at room temperature overnight. Moreover, 2.46 mL of chlorotrimethylsilane was added dropwise, and the mixture was stirred at room temperature overnight. This reaction solution was concentrated under reduced pressure, toluene was added, the mixture was purified by silica gel column chromatography, and then the toluene layer was concentrated to give a crude product. Acetonitrile was added to wash the crude product three times, and the product oil layer was concentrated to give 1.65 g of compound (54).

¹H NMR (CDCl₃, 400 MHz) δ [ppm]: 0.005-0.0078 (m), 0.303-0.314 (m), 1.224-1.368 (m), 1.585 (quin), 2.016 (q), 2.569 (t), 4.889-4.997 (m), 5.741-5.842 (m), 7.153 (d), 7.451 (d)

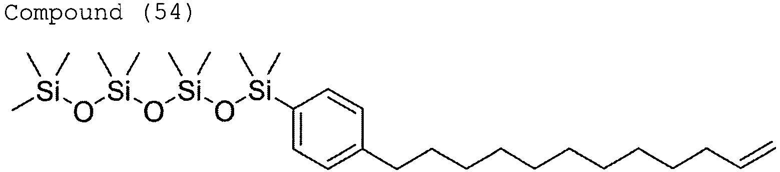

### (Synthetic Example 55)

After 1.65 g of compound (54) obtained in Synthetic Example 54, 10 mL of toluene, 27 µL of pyridine, and 190 µL of a xylene solution containing a 2% Pt complex of 1,3-divinyl-1,1,3,3-tetramethyldisiloxane were each added, 0.95 mL of trimethoxysilane was added, and the mixture was stirred at room temperature for 2 hours. Thereafter, the mixture was purified to give 1.67 g of the following compound having a terminal trimethoxysilyl group (55).

¹H NMR (CDCl₃, 400 MHz) δ [ppm]: 0.022-0.096 (m), 0.329-0.340 (m), 0.651 (t), 1.258-1.450 (m), 1.573-1.647 (m), 2.595 (t), 3.556-3.581 (m), 7.129 (d), 7.457 (d)

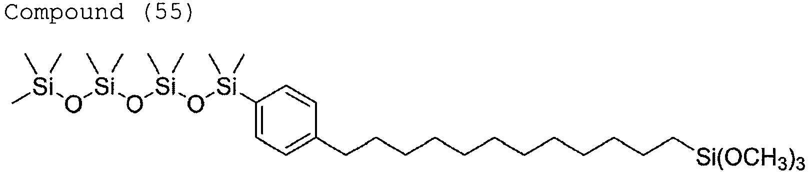

### (Surface-treating agent 20)

Compound (55) obtained above was diluted so as to be a 10 wt% hexamethyldisiloxane solution, and thus a surface-treating agent 20 was obtained.

### (Synthetic Example 56)

After 1.0 g of dimethoxymethylvinylsilane, 3.53 g of 1,1,1,3,5,5,5-heptamethyltrisiloxane, 10 mL of hexane, and 13 mg of tris(pentafluorophenyl)borane were added, the mixture was stirred at room temperature for 30 minutes. Thereafter, the mixture was purified to give 4.09 g of the following compound (56).

1H-NMR (400 MHz, CHLOROFORM-D) δ 5.89-6.07 (2H), 5.74-5.86 (1H), -0.16-0.33 (45H)

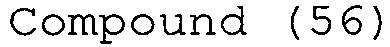

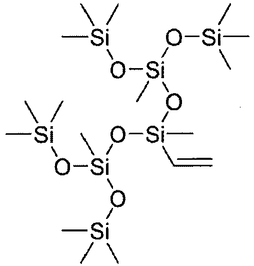

### (Synthetic Example 57)

After 3.0 g of compound (56) obtained in Synthetic Example 56, 50 mL of toluene, and 314 µL of a xylene solution containing a 2% Pt complex of 1,3-divinyl-1,1,3,3-tetramethyldisiloxane were each added, 1.80 mL of chlorodimethylsilane was added, and the mixture was stirred at 40°C for 3 hours. Thereafter, the mixture was purified to give 3.01 g of the following compound (57).

1H-NMR (400 MHz, CHLOROFORM-D) δ 0.68-0.85 (2H), 0.44-0.60 (2H), 0.32-0.44 (6H), -0.21-0.27 (45H)

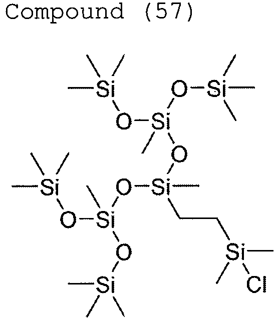

### (Synthetic Example 58)

After 0.8 g of 1-bromo-4-(11-dodecen-1-yl)benzene and 8.6 mL of tetrahydrofuran were added, 1.67 mL of a 15% n-butyllithium solution in hexane was added dropwise at -78°C, and the mixture was stirred at -78°C for 1 hour. Thereafter, 8.6 mL of a tetrahydrofuran solution containing 2.09 g of hexamethylcyclotrisiloxane was added dropwise, and the mixture was stirred at room temperature for 4 hours. Thereafter, 2.06 mg of the above compound (57) was added dropwise under ice cooling, and the mixture was stirred at room temperature overnight. Thereafter, the reaction solution was concentrated and washed three times with acetonitrile to give 4.4 g of compound (58). The average number of repeating units was 13.7.

1H-NMR (400 MHz, CHLOROFORM-D) δ 7.46 (d, J = 7.8 Hz, 2H), 7.16 (d, J = 7.8 Hz, 2H), 5.91-5.77 (m, 1H), 5.12-4.92 (m, 2H), 2.68-2.58 (m, 2H), 2.10-2.05 (m, 2H), 1.68-1.61 (m, 2H), 1.50-1.23 (m, 14H), 0.60-0.44 (m, 4H), 0.40-0.33 (m, 6H), 0.29 - -0.08 (m)

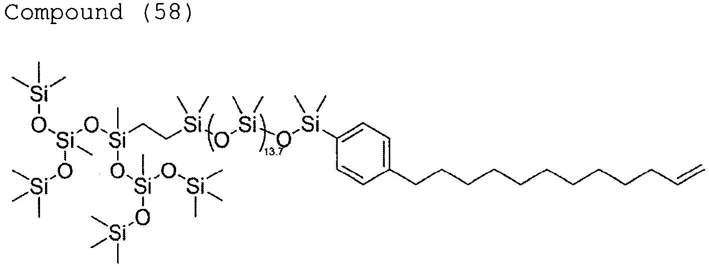

### (Synthetic Example 59)

After 4.4 g of compound (58) obtained in Synthetic Example 58, 10 mL of toluene, 28 µL of pyridine, and 197 µL of a xylene solution containing a 2% Pt complex of 1,3-divinyl-1,1,3,3-tetramethyldisiloxane were each added, 0.99 mL of trimethoxysilane was added, and the mixture was stirred at room temperature for 3 hours. Thereafter, the mixture was purified to give 2.2 g of the following compound having a terminal trimethoxysilyl group (59). The average number of repeating units was 13.7.

1H-NMR (400 MHz, CHLOROFORM-D) δ 7.46 (d, J = 8.2 Hz, 2H), 7.16 (d, J = 8.2 Hz, 2H), 3.62-3.52 (m, 9H), 2.60-2.56 (m, 2H), 1.64-1.53 (m, 2H), 1.42-1.18 (m, 18H), 0.66-0.61 (m, 2H), 0.56-0.39 (m, 4H), 0.33-0.29 (m, 6H), 0.19 - -0.11 (m)

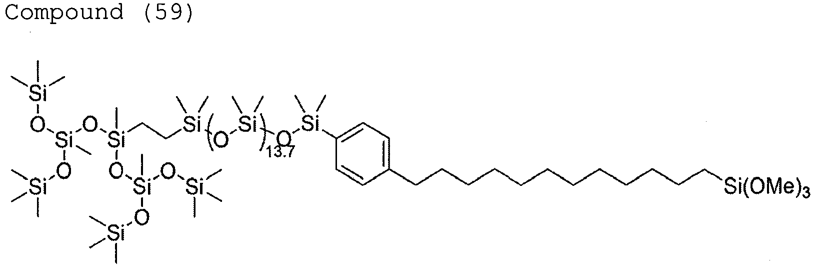

### (Surface-treating agent 21)

Compound (59) obtained above was diluted so as to be a 10 wt% hexamethyldisiloxane solution, and thus a surface-treating agent 21 was obtained.

### (Synthetic Example 60)

After 4.52 g of 1-bromo-4-(undec-10-en-1-yloxy)benzene and 48 mL of tetrahydrofuran were added, 10.4 mL of a 15% n-butyllithium solution in hexane was added dropwise at -78°C, and the mixture was stirred at - 78°C for 1 hour. Thereafter, 4.54 mL of chlorodimethylsilane was added dropwise, and the mixture was stirred at room temperature overnight. Thereafter, 0.37 mL of chlorotrimethylsilane was added dropwise, and the mixture was stirred at room temperature overnight. Thereafter, toluene and water were added to perform washing three times, and then the toluene layer was concentrated to give 4.39 g of compound (60).

¹H NMR (CDCl₃, 400 MHz) δ [ppm]: 0.306-0.315 (m), 1.218-1.460 (m), 1.770 (quin), 2.037 (q), 3.951 (t), 4.401 (sep), 4.910-5.018 (m), 5.758-5.860 (m), 6.897 (d), 7.443 (d)

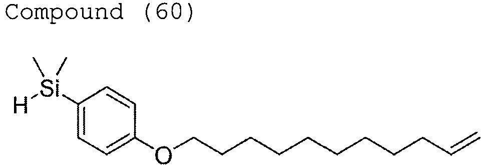

### (Synthetic Example 61)

After 2.0 g of compound (60) obtained in Synthetic Example 60, 40 mL of toluene, 2.14 g of 3-methoxy-1,1,1,3,5,5,5-heptamethyltrisiloxane, and 0.34 g of tris(pentafluorophenyl)borane were each added, the mixture was stirred at room temperature for 2 hours. The reaction solution was concentrated and then purified by silica gel column chromatography to give 0.45 g of the following compound (61).

¹H NMR (CDCl₃, 400 MHz) δ [ppm]: 0.007-0.135 (m), 0.299-0.338 (m), 1.272-1.496 (m), 1.788 (quin), 2.053 (q), 3.974 (t), 4.926-5.033 (m), 5.775-5.875 (m), 6.903 (d), 7.493 (d)

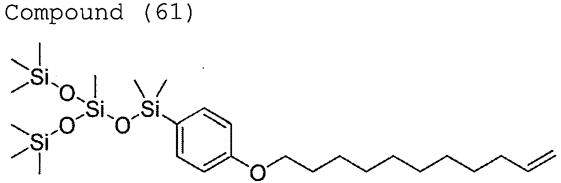

### (Synthetic Example 62)

After 0.45 g of compound (61) obtained in Synthetic Example 61, 2 mL of toluene, 9 µL of pyridine, and 63 µL of a xylene solution containing a 2% Pt complex of 1,3-divinyl-1,1,3,3-tetramethyldisiloxane were each added, 0.32 mL of trimethoxysilane was added, and the mixture was stirred at room temperature for 3 hours. Thereafter, the mixture was concentrated under reduced pressure to give 0.43 g of a compound having a terminal trimethoxysilyl group (62).

¹H NMR (CDCl₃, 400 MHz) δ [ppm]: 0.080 (s), 0.322 (s), 0.653 (t), 1.278-1.485 (m), 1.779 (quin), 3.535-3.626 (m), 3.966 (t), 6.895 (d), 7.485 (d)

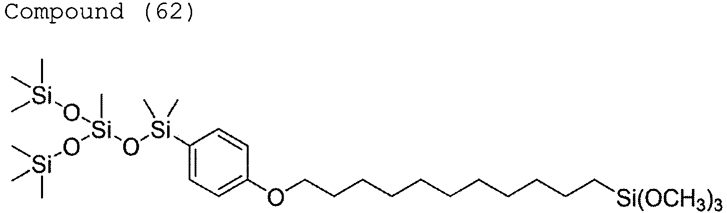

### (Surface-treating agent 22)

Compound (62) obtained above was diluted so as to be a 10 wt% hexamethyldisiloxane solution, and thus a surface-treating agent 22 was obtained.

### (Synthetic Example 63)

After a glass flask was charged with a stirrer bar, 5.0 g of bromophenyloctadecenyl ether, and 100 mL of tetrahydrofuran, the flask was immersed in a dry ice/methanol/water bath (methanol:water = 45:55) to regulate the solution temperature to -40°C, 8.3 mL of a 15% n-butyllithium solution in hexane was added dropwise, and the mixture was stirred with a magnetic stirrer for 1 hour. Thereafter, 1.5 g of chlorodimethylsilane was added to the flask, and the mixture was stirred at room temperature for 1 hour. Water and toluene were added to the flask, the mixture was stirred, the liquid in the flask was transferred to a separatory funnel and allowed to stand still for separation, and the lower layer (the aqueous layer) was removed. Water was similarly added to wash the organic layer twice, dried over magnesium sulfate, and then concentrated under reduced pressure to give 4.5 g of compound (63) as a white solid.

1H-NMR (400 MHz, CHLOROFORM-D) δ 7.45 (dt, J = 8.5, 2.1 Hz, 2H), 6.91 (dd, J = 11.0, 2.3 Hz, 2H), 5.87-5.77 (m, 1H), 5.03-4.92 (m, 2H), 4.43-4.39 (m, 1H), 3.98-3.93 (m, 2H), 2.07-2.02 (m, 2H), 1.82-1.75 (m, 2H), 1.49-1.27 (m, 26H), 0.35 (s, 6H)

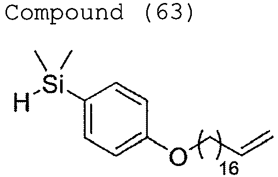

### (Synthetic Example 64)

A glass flask was charged with a stirrer bar, 2.0 g of compound (63), 2.1 g of methyl tris(trimethylsilyl)silicate, 0.27 g of tris(pentafluorophenyl)borane, and 40 mL of toluene, and the mixture was stirred with a magnetic stirrer at room temperature for 1 hour. Thereafter, the reaction solution was concentrated under reduced pressure, and the residue was purified by silica gel column chromatography (eluent: hexane) to give 1.09 g of compound (64) as a colorless oil.

1H-NMR (400 MHz, CHLOROFORM-D) δ 7.49 (dt, J = 9.0, 2.1 Hz, 2H), 6.89 (dt, J = 8.8, 2.2 Hz, 2H), 5.87-5.76 (m, 1H), 5.02-4.91 (m, 2H), 3.98-3.93 (m, 2H), 2.06-2.01 (m, 2H), 1.81-1.74 (m, 2H), 1.47-1.26 (m, 26H), 0.31 (s, 6H), 0.22 - -0.07 (m, 27H)

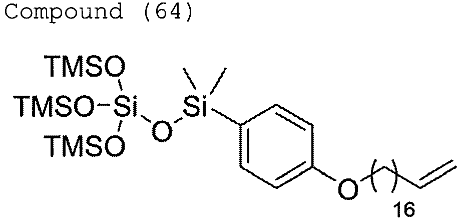

### (Synthetic Example 65)

A glass flask was charged with a stirrer bar, 1.09 g of compound (64), 0.13 mL of a xylene solution containing a 2% Pt complex of 1,3-divinyl-1,1,3,3-tetramethyldisiloxane, 18 µL of pyridine, 0.65 mL of trimethoxysilane, and 10 mL of toluene, and the mixture was stirred with a magnetic stirrer at room temperature for 4 hours. Thereafter, the mixture was concentrated under reduced pressure to give 1.11 g of compound (65) as a slightly yellow oil.

1H-NMR (400 MHz, CHLOROFORM-D) δ 7.52-7.47 (m, 2H), 6.92-6.87 (m, 2H), 3.98-3.94 (m, 2H), 3.62-3.53 (m, 9H), 1.81-1.72 (m, 2H), 1.48-1.16 (m, 30H), 0.68-0.62 (m, 2H), 0.32 (s, 6H), 0.17 - -0.02 (m, 27H)

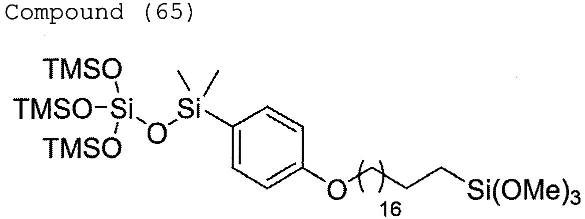

### (Surface-treating agent 23)

Compound (65) obtained above was diluted so as to be a 10 wt% hexamethyldisiloxane solution, and thus a surface-treating agent 23 was obtained.

### (Synthetic Example 66)

After 5.0 g of 4-bromo-3-fluorophenol, 1.35 g of potassium hydroxide, and 50 mL of N,N-dimethylformamide were added, the mixture was stirred at 80°C for 30 minutes. Thereafter, 5.09 g of 11-bromo-1-undecene was added dropwise, and the mixture was stirred at 80°C for 3 hours. Thereafter, water and toluene were added to remove the aqueous layer, then the toluene layer was washed twice with water, and the toluene layer was concentrated to give 6.82 g of compound (66).

1H-NMR (400 MHz, CHLOROFORM-D) δ 7.38 (t, J = 8.5 Hz, 1H), 6.67 (dd, J = 10.5, 2.7 Hz, 1H), 6.59 (dd, J = 8.7, 2.7 Hz, 1H), 5.86-5.76 (m, 1H), 5.02-4.92 (m, 2H), 3.90 (t, J = 6.6 Hz, 2H), 2.04 (q, J = 7.2 Hz, 2H), 1.79-1.72 (m, 2H), 1.45-1.29 (m, 12H)

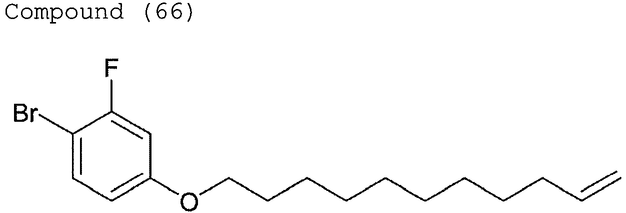

### (Synthetic Example 67)

After 0.6 g of the above compound (66) and 6.1 mL of tetrahydrofuran were added, 1.17 mL of a 15% n-butyllithium solution in hexane was added dropwise at - 78°C, and the mixture was stirred at -78°C for 1 hour. Thereafter, 6.1 mL of a tetrahydrofuran solution containing 1.48 g of hexamethylcyclotrisiloxane was added dropwise, and the mixture was stirred at room temperature for 4 hours. Thereafter, 0.94 g of compound (12): Me(OSi(Me)₃)₂SiCl was added dropwise under ice cooling, and the mixture was stirred at room temperature overnight. Thereafter, the reaction solution was concentrated and purified using a column. Thus, 1.85 g of compound (67) was obtained. The average number of repeating units was 18.

1H-NMR (400 MHz, CHLOROFORM-D) δ 7.37 (dd, J = 8.2, 6.9 Hz, 1H), 6.68 (dd, J = 8.2, 2.3 Hz, 1H), 6.53 (dd, J = 10.7, 2.1 Hz, 1H), 5.87-5.76 (m, 1H), 5.02-4.92 (m, 2H), 3.94 (t, J = 6.6 Hz, 2H), 2.07-2.02 (m, 2H), 1.81-1.74 (m, 2H), 1.46-1.30 (m, 12H), 0.36-0.36 (m, 6H), 0.25 - -0.07 (m)

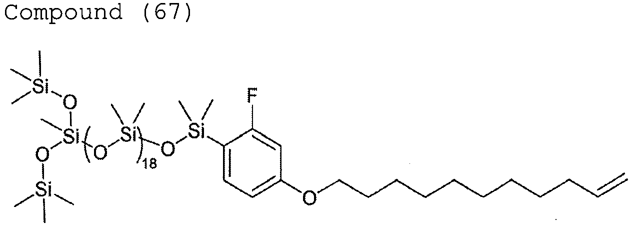

### (Synthetic Example 68)

After 1.5 g of compound (67) obtained in Synthetic Example 67, 10.0 mL of toluene, 12 µL of pyridine, and 85 µL of a xylene solution containing a 2% Pt complex of 1,3-divinyl-1,1,3,3-tetramethyldisiloxane were each added, 430 µL of trimethoxysilane was added, and the mixture was stirred at room temperature for 3 hours. Thereafter, the mixture was purified to give 1.46 g of the following compound (68) having a terminal trimethoxysilyl group. The average number of repeating units was 18.

1H-NMR (400 MHz, CHLOROFORM-D) δ 7.35 (t, J = 7.5 Hz, 1H), 6.67 (dd, J = 8.2, 2.3 Hz, 1H), 6.52 (d, J = 10.5 Hz, 1H), 3.92 (t, J = 6.6 Hz, 2H), 3.60-3.53 (m, 9H), 1.76 (t, J = 7.3 Hz, 2H), 1.42-1.26 (m, 16H), 0.64 (t, J = 8.2 Hz, 2H), 0.34-0.34 (m, 6H), 0.11-0.09 (m)

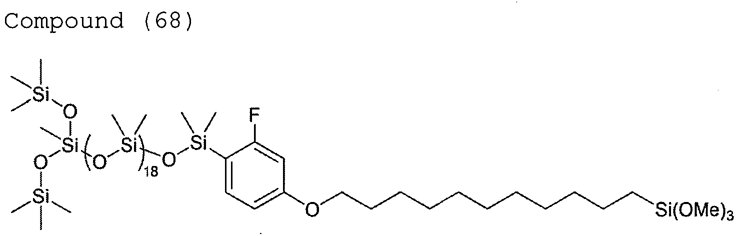

### (Surface-treating agent 24)

Compound (68) obtained above was diluted so as to be a 10 wt% hexamethyldisiloxane solution, and thus a surface-treating agent 24 was obtained.

### (Synthetic Example 69)

After 5.0 g of 3,5-dibromophenol, 1.02 g of potassium hydroxide, and 50 mL of N,N-dimethylformamide were added, the mixture was stirred at 80°C for 30 minutes. Thereafter, 3.85 g of 11-bromo-1-undecene was added dropwise, and the mixture was stirred at 80°C for 3 hours. Thereafter, water and toluene were added to remove the aqueous layer, then the toluene layer was washed twice with water, and the toluene layer was concentrated to give 4.55 g of compound (69).

1H-NMR (400 MHz, CHLOROFORM-D) δ 7.22 (t, J = 1.6 Hz, 1H), 6.98 (d, J = 1.6 Hz, 2H), 5.85-5.78 (m, 1H), 5.02-4.92 (m, 2H), 3.91 (t, J = 6.6 Hz, 2H), 2.05-2.03 (m, 2H), 1.77-1.73 (m, 2H), 1.44-1.30 (m, 12H)

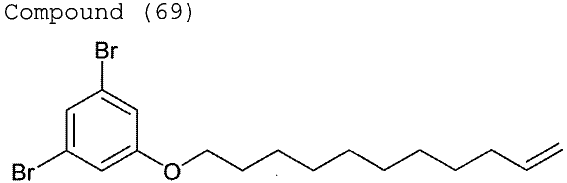

### (Synthetic Example 70)

After 0.5 g of the above compound (69), 0.79 g of compound (12): Me(OSi(Me)₃)₂SiCl, and 5.0 mL of tetrahydrofuran were added, 1.74 mL of a 15% n-butyllithium solution in hexane was added dropwise at - 78°C, and the mixture was stirred at -78°C overnight. Thereafter, the reaction solution was concentrated and purified using a column. Thus, 0.87 g of compound (70) was obtained.

1H-NMR (400 MHz, CHLOROFORM-D) δ7.12 (t, J = 1.6 Hz, 1H), 6.88 (d, J = 1.6 Hz, 2H), 5.84-5.77 (m, 1H), 5.01-4.91 (m, 2H), 3.98-3.95 (m, 2H), 2.05-2.01 (m, 2H), 1.80-1.77 (m, 2H), 1.54-1.30 (m, 12H), 0.29-0.26 (m, 6H), 0.10 - -0.05 (m, 36H)

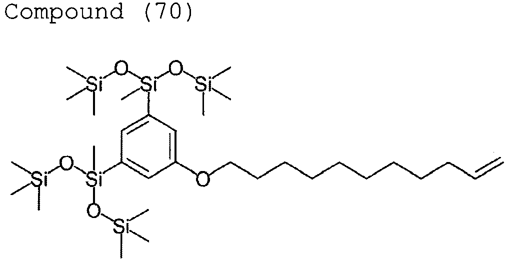

### (Synthetic Example 71)

After, 0.87 g of compound (70) obtained in Synthetic Example 70, 10 mL of toluene, 13 µL of pyridine, and 96 µL of a xylene solution containing a 2% Pt complex of 1,3-divinyl-1,1,3,3-tetramethyldisiloxane were each added, 483 µL of trimethoxysilane was added, and the mixture was stirred at room temperature for 3 hours. Thereafter, the mixture was purified to give 0.90 g of the following compound having a terminal trimethoxysilyl group (71).

1H-NMR (400 MHz, CHLOROFORM-D) δ 7.25 (s, 1H), 7.07 (s, 2H), 3.95 (t, J = 6.6 Hz, 2H), 3.59-3.56 (m, 9H), 1.77 (t, J = 7.3 Hz, 2H), 1.45-1.27 (m, 18H), 0.64 (t, J = 8.0 Hz, 2H), 0.25-0.22 (m, 6H), 0.13 - -0.06 (m, 36H)

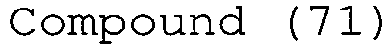

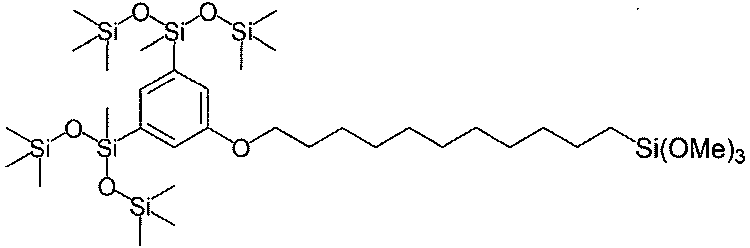

### (Surface-treating agent 25)

Compound (69) obtained above was diluted so as to be a 10 wt% hexamethyldisiloxane solution, and thus a surface-treating agent 25 was obtained.

### (Synthetic Example 72)

A glass flask was charged with a stirrer bar, 2.0 g of compound (63), 2.2 g of 3-methoxy-1,1,1,3,5,5,5-heptamethyltrisiloxane, 0.27 g of tris(pentafluorophenyl)borane, and 40 mL of toluene, and the mixture was stirred with a magnetic stirrer at room temperature for 1 hour. Thereafter, the reaction solution was concentrated under reduced pressure, and the residue was purified by silica gel column chromatography (eluent: hexane) to give 0.40 g of compound (72) as a colorless oil.

1H-NMR (400 MHz, CHLOROFORM-D) δ 7.48 (d, J = 7.8 Hz, 2H), 6.89 (d, J = 8.2 Hz, 2H), 5.86-5.76 (m, 1H), 5.01-4.91 (m, 2H), 3.98-3.92 (m, 2H), 2.04 (q, J = 7.0 Hz, 2H), 1.81-1.74 (m, 2H), 1.45-1.26 (m, 26H), 0.32 (s, 6H), 0.11-0.07 (m, 18H), -0.00 (s, 3H)

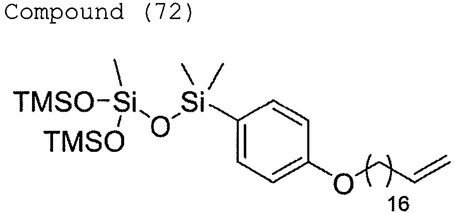

### (Synthetic Example 73)

A glass flask was charged with a stirrer bar, 0.40 g of compound (72), 48 µL of a xylene solution containing a 2% Pt complex of 1,3-divinyl-1,1,3,3-tetramethyldisiloxane, 7 µL of pyridine, 0.24 mL of trimethoxysilane, and 2 mL of toluene, and the mixture was stirred with a magnetic stirrer at room temperature for 4 hours. Thereafter, the mixture was concentrated under reduced pressure to give 0.42 g of compound (73) as a slightly yellow oil.

1H-NMR (400 MHz, CHLOROFORM-D) δ 7.48 (d, J = 8.7 Hz, 2H), 6.89 (d, J = 8.2 Hz, 2H), 3.98-3.93 (m, 2H), 3.60-3.56 (m, 9H), 1.77 (q, J = 7.2 Hz, 2H), 1.46-1.25 (m, 30H), 0.67-0.63 (m, 2H), 0.31 (s, 6H), 0.11-0.05 (m, 18H), -0.01 (s, 3H)

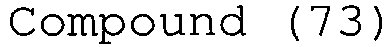

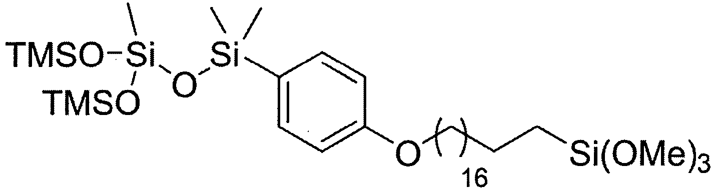

### (Surface-treating agent 26)

Compound (73) obtained above was diluted so as to be a 10 wt% hexamethyldisiloxane solution, and thus a surface-treating agent 26 was obtained.

### (Synthetic Example 74)

After 2.5 g of 4-bromo-2-methoxyphenol, 0.63 g of potassium hydroxide, and 25 mL of N,N-dimethylformamide were added, the mixture was stirred at 80°C for 30 minutes. Thereafter, 2.39 g of 11-bromo-1-undecene was added dropwise, and the mixture was stirred at 80°C for 3 hours. Thereafter, water and toluene were added to remove the aqueous layer, then the toluene layer was washed twice with water, and the toluene layer was concentrated to give 1.82 g of compound (74).

1H-NMR (400 MHz, CHLOROFORM-D) δ 7.00-6.96 (m, 2H), 6.73-6.71 (m, 1H), 5.83-5.75 (m, 1H), 5.00-4.91 (m, 2H), 3.95 (t, J = 6.9 Hz, 2H), 3.83 (s, 3H), 2.05-2.00 (m, 2H), 1.84-1.77 (m, 2H), 1.44-1.28 (m, 12H)

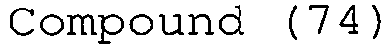

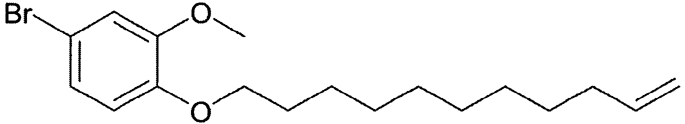

### (Synthetic Example 75)

After 0.7 g of the above compound (74) and 10 mL of tetrahydrofuran were added, 1.27 mL of a 15% n-butyllithium solution in hexane was added dropwise at - 78°C, and the mixture was stirred at -78°C for 3 hours. Thereafter, 6.9 mL of a tetrahydrofuran solution containing 1.66 g of hexamethylcyclotrisiloxane was added dropwise, and the mixture was stirred at room temperature for 3 hours. Thereafter, 1.01 g of compound (12): Me(OSi(Me)₃)₂SiCl was added dropwise under ice cooling, and the mixture was stirred at room temperature for 1 hour. Thereafter, the reaction solution was concentrated and purified using a column. Thus, 2.32 g of compound (75) was obtained. The average number of repeating units was 22.

1H-NMR (400 MHz, CHLOROFORM-D) δ 7.09-7.05 (m, 2H), 6.89-6.87 (m, 1H), 5.85-5.75 (m, 1H), 5.01-4.91 (m, 2H), 4.01 (t, J = 6.9 Hz, 2H), 3.87 (s, 3H), 2.06-2.01 (m, 2H), 1.87-1.80 (m, 2H), 1.46-1.29 (m, 12H), 0.36-0.32 (m, 6H), 0.24 - -0.08 (m)

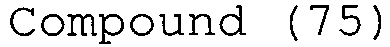

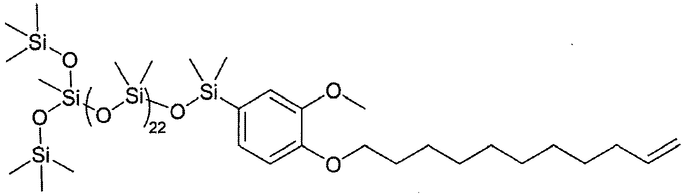

### (Synthetic Example 76)

After 1.32 g of compound (75) obtained in Synthetic Example 75, 10.0 mL of toluene, 6.4 µL of pyridine, and 45 µL of a xylene solution containing a 2% Pt complex of 1,3-divinyl-1,1,3,3-tetramethyldisiloxane were each added, 229 µL of trimethoxysilane was added, and the mixture was stirred at room temperature for 3 hours. Thereafter, the mixture was purified to give 1.19 g of the following compound having a terminal trimethoxysilyl group (76). The average number of repeating units was 22.

1H-NMR (400 MHz, CHLOROFORM-D) δ 7.09-7.05 (m, 2H), 6.89-6.87 (m, 1H), 4.01 (t, J = 6.9 Hz, 2H), 3.87 (s, 3H), 3.59-3.56 (m, 9H), 1.83 (t, J = 7.5 Hz, 2H), 1.44-1.27 (m, 16H), 0.64 (t, J = 8.2 Hz, 2H), 0.32 (s, 6H), 0.09-0.01 (m)

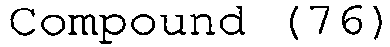

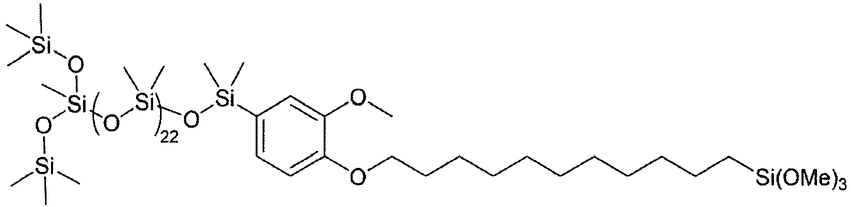

### (Surface-treating agent 27)

Compound (76) obtained above was diluted so as to be a 10 wt% hexamethyldisiloxane solution, and thus a surface-treating agent 27 was obtained.

### (Synthetic Example 77)

After 2.0 g of 6-bromo-2-naphthol, 0.46 g of potassium hydroxide, and 25 mL of N,N-dimethylformamide were added, the mixture was stirred at 80°C for 30 minutes. Thereafter, 1.74 g of 11-bromo-1-undecene was added dropwise, and the mixture was stirred at 80°C for 3 hours. Thereafter, water and toluene were added to remove the aqueous layer, then the toluene layer was washed twice with water, and the toluene layer was concentrated to give 3.22 g of compound (77).

1H-NMR (400 MHz, CHLOROFORM-D) δ 7.89 (s, 1H), 7.59 (dd, J = 21.3, 8.9 Hz, 2H), 7.48 (dd, J = 8.7, 1.8 Hz, 1H), 7.16 (dd, J = 8.9, 2.5 Hz, 1H), 7.07 (s, 1H), 5.86-5.79 (m, 1H), 5.03-4.93 (m, 2H), 4.04 (t, J = 6.6 Hz, 2H), 2.08-2.03 (m, 2H), 1.86-1.80 (m, 2H), 1.51-1.31 (m, 12H)

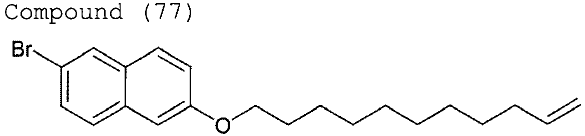

### (Synthetic Example 78)

After 0.7 g of the above compound (75) and 10 mL of tetrahydrofuran were added, 1.21 mL of a 15% n-butyllithium solution in hexane was added dropwise at - 78°C, and the mixture was stirred at -78°C for 3 hours. Thereafter, 6.5 mL of a tetrahydrofuran solution containing 1.58 g of hexamethylcyclotrisiloxane was added dropwise, and the mixture was stirred at room temperature for 3 hours. Thereafter, 0.96 g of compound (12): Me(OSi(Me)₃)₂SiCl was added dropwise under ice cooling, and the mixture was stirred at room temperature for 1 hour. Thereafter, the reaction solution was concentrated and purified using a column. Thus, 1.24 g of compound (78) was obtained. The average number of repeating units was 16.

1H-NMR (400 MHz, CHLOROFORM-D) δ 7.95 (s, 1H), 7.71 (dd, J = 13.0, 8.5 Hz, 2H), 7.58 (dd, J = 8.0, 1.1 Hz, 1H), 7.12 (td, J = 9.1, 2.3 Hz, 2H), 5.86-5.76 (m, 1H), 5.02-4.91 (m, 2H), 4.07 (t, J = 6.6 Hz, 2H), 2.07-1.99 (m, 2H), 1.88-1.81 (m, 2H), 1.53-1.31 (m, 12H), 0.44-0.36 (m, 6H), 0.25 - -0.13 (m)

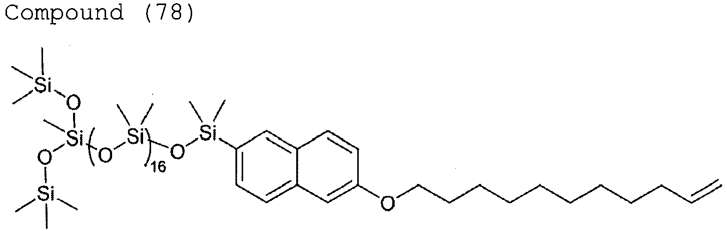

### (Synthetic Example 79)

After 0.95 g of compound (78) obtained in Synthetic Example 78, 10.0 mL of toluene, 5.7 µL of pyridine, and 40 µL of a xylene solution containing a 2% Pt complex of 1,3-divinyl-1,1,3,3-tetramethyldisiloxane were each added, 204 µL of trimethoxysilane was added, and the mixture was stirred at room temperature for 3 hours. Thereafter, the mixture was purified to give 0.94 g of the following compound having a terminal trimethoxysilyl group (79). The average number of repeating units was 16.

1H-NMR (400 MHz, CHLOROFORM-D) δ 7.95 (s, 1H), 7.71 (dd, J = 13.0, 8.5 Hz, 2H), 7.58 (dd, J = 8.0, 1.1 Hz, 1H), 7.12 (td, J = 9.1, 2.3 Hz, 2H), 4.07 (t, J = 6.6 Hz, 2H), 3.59-3.56 (m, 9H), 1.83 (t, J = 7.5 Hz, 2H), 1.44-1.27 (m, 16H), 0.64 (t, J = 8.2 Hz, 2H), 0.32 (s, 6H), 0.09-0.01 (m)

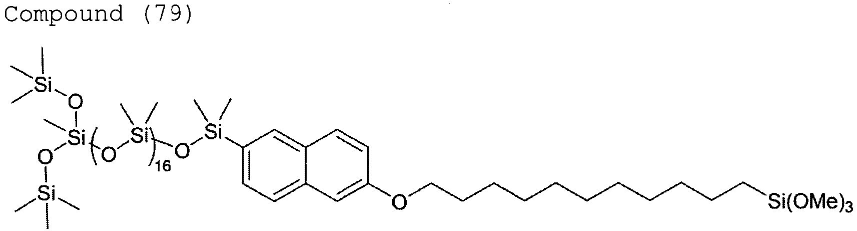

### (Surface-treating agent 28)

Compound (79) obtained above was diluted so as to be a 10 wt% hexamethyldisiloxane solution, and thus a surface-treating agent 28 was obtained.

### (Synthetic Example 80)

After 2.5 g of 4-bromo-2,3-difluorophenol, 0.62 g of potassium hydroxide, and 30 mL of N,N-dimethylformamide were added, and the mixture was stirred at 80°C for 30 minutes. Thereafter, 2.32 g of 11-bromo-1-undecene was added dropwise, and the mixture was stirred at 80°C for 3 hours. Thereafter, water and toluene were added to remove the aqueous layer, then the toluene layer was washed twice with water, and the toluene layer was concentrated to give 2.5 g of compound (80).

1H-NMR (400 MHz, CHLOROFORM-D) δ 7.20-7.15 (m, 1H), 6.66-6.62 (m, 1H), 5.85-5.75 (m, 1H), 5.01-4.91 (m, 2H), 4.00 (t, J = 6.6 Hz, 2H), 2.06-2.00 (m, 2H), 1.83-1.76 (m, J = 7.0 Hz, 2H), 1.48-1.29 (m, 12H)

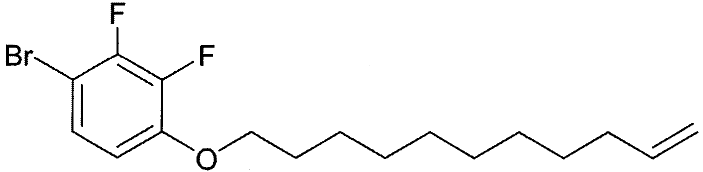

### (Synthetic Example 81)

After 0.7 g of the above compound (80) and 10 mL of tetrahydrofuran were added, 1.25 mL of a 15% n-butyllithium solution in hexane was added dropwise at - 78°C, and the mixture was stirred at -78°C for 3 hours. Thereafter, 6.8 mL of a tetrahydrofuran solution containing 1.63 g of hexamethylcyclotrisiloxane was added dropwise, and the mixture was stirred at room temperature for 3 hours. Thereafter, 0.99 g of compound (12): Me(OSi(Me)₃)₂SiCl was added dropwise under ice cooling, and the mixture was stirred at room temperature for 1 hour. Thereafter, the reaction solution was concentrated and purified using a column. Thus, 2.25 g of compound (81) was obtained.

1H-NMR (400 MHz, CHLOROFORM-D) δ 7.11-7.07 (m, 1H), 6.74-6.70 (m, 1H), 5.85-5.75 (m, 1H), 5.01-4.91 (m, 2H), 4.03 (t, J = 6.6 Hz, 2H), 2.06-2.01 (m, 2H), 1.84-1.77 (m, 2H), 1.55-1.30 (m, 12H), 0.37 (s, 6H), 0.24 - -0.09 (m)

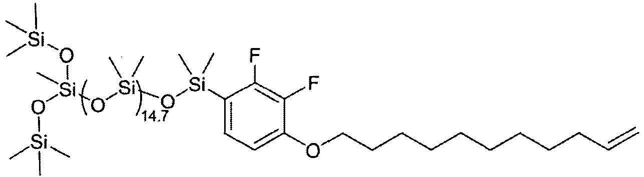

### (Synthetic Example 82)

After 1.0 g of compound (81) obtained in Synthetic Example 81, 10 mL of toluene, 6.4 µL of pyridine, and 45 µL of a xylene solution containing a 2% Pt complex of 1,3-divinyl-1,1,3,3-tetramethyldisiloxane were each added, 229 µL of trimethoxysilane was added, and the mixture was stirred at room temperature for 3 hours. Thereafter, the mixture was purified to give 1.01 g of the following compound having a terminal trimethoxysilyl group (82).

1H-NMR (400 MHz, CHLOROFORM-D) δ 7.10-7.07 (m, 1H), 6.73-6.69 (m, 1H), 4.02 (t, J = 6.6 Hz, 2H), 3.59-3.53 (m, 9H), 1.80 (t, J = 7.5 Hz, 2H), 1.46-1.26 (m, 16H), 0.66-0.62 (m, 2H), 0.36 (s, 6H), 0.23 - -0.09 (m)

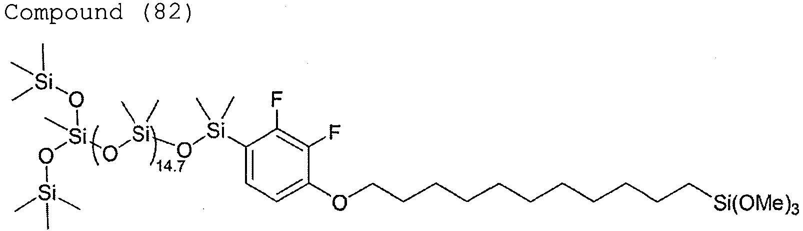

### (Surface-treating agent 29)

Compound (82) obtained above was diluted so as to be a 10 wt% hexamethyldisiloxane solution, and thus a surface-treating agent 29 was obtained.

### (Synthetic Example 83)

A glass flask was charged with a stirrer bar, 14.2 g of 14-hydroxy-3,6,9,12-tetraoxatetradecyl p-toluenesulfonate, 6.90 g of 4-bromophenol, 305 mL of acetonitrile, and 5.52 g of potassium carbonate, then the flask was heated by being immersed in an oil bath to an internal temperature of 80°C, and the mixture was stirred for 5 hours. After being cooled to room temperature, the mixture was subjected to filtration, and the filtrate was concentrated to give a pale orange oil. This was purified by silica gel column chromatography (eluents: ethyl acetate, methanol) to give 13.9 g of compound (83) as a colorless oil.

1H-NMR (400 MHz, CHLOROFORM-D) δ 7.36 (d, J = 8.8 Hz, 2H), 6.80 (d, J = 8.8 Hz, 2H), 4.10 (t, J = 4.8 Hz, 2H), 3.73 (t, J = 4.8 Hz, 2H), 3.80-3.59 (m, 16H), 2.74 (brs, 1H)

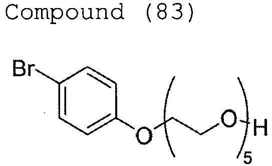

### (Synthetic Example 84)

A glass flask was charged with a stirrer bar, 13.1 g of compound (83), and 250 mL of tetrahydrofuran, the flask was immersed in an ice bath to an internal temperature of 2°C, then the flask was charged with 6.01 g of sodium hydride (a paraffin oil dispersion having a content of 60%) and 15.3 g of 11-bromo-1-undecene and immersed in an oil bath to an internal temperature of 70°C, and the mixture was stirred for 12 hours. After being cooled to room temperature, the flask was charged with water and ethyl acetate, the mixture was stirred, the solution was transferred to a separatory funnel, and the aqueous layer was removed. The remaining organic layer was washed twice with water, dried over magnesium sulfate, and concentrated under reduced pressure to give an orange oil. This was purified by silica gel column chromatography (eluents: heptane, ethyl acetate) to give 11.9 g of compound (84) as a slightly yellow oil.

1H-NMR (400 MHz, CHLOROFORM-D) δ 7.38 (d, J = 8.8 Hz, 2H), 6.82 (d, J = 8.8 Hz, 2H),4.15 (t, J = 4.8 Hz, 2H), 3.83 (t, J = 5.0 Hz, 2H), 3.75-3.72 (m, 2H), 3.69-3.63 (m, 12H), 3.59-3.56 (m, 2H), 3.40 (t, J = 6.6 Hz, 2H), 2.00 (m, 2H), 1.60-1.55 (m, 2H), 1.41-1.19 (m, 14H)

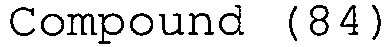

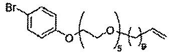

### (Synthetic Example 85)

After a glass flask was charged with a stirrer bar, 1.0 g of compound (84), and 7 mL of tetrahydrofuran, the flask was immersed in a dry ice/acetone bath, 1.23 mL of a 15% n-butyllithium solution in hexane was added dropwise, and the mixture was stirred with a magnetic stirrer for 1 hour. Thereafter, 9 mL of a tetrahydrofuran solution containing 1.55 g of hexamethylcyclotrisiloxane was added dropwise to the flask, and the mixture was stirred at room temperature for 4 hours. Thereafter, 0.59 g of 3-chloro-1,1,1,3,5,5,5-heptamethyltrisiloxane was added to the flask., and the mixture was stirred at room temperature for 18 hours. The reaction solution was concentrated under reduced pressure, and the residue was purified by silica gel column chromatography (eluent: chloroform) to give a slightly yellow oil. This oil was washed with acetonitrile and concentrated under reduced pressure to give 1.80 g of compound (85) as a slightly yellow oil. The average number of repeating units was 12.

1H-NMR (400 MHz, CHLOROFORM-D) δ 7.47 (d, J = 8.2 Hz, 2H), 6.91 (d, J = 8.7 Hz, 2H), 5.86-5.76 (m, 1H), 5.02-4.91 (m, 2H), 4.14 (t, J = 4.8 Hz, 2H), 3.86 (t, J = 5.0 Hz, 2H), 3.75-3.72 (m, 2H), 3.69-3.63 (m, 12H), 3.59-3.56 (m, 2H), 3.44 (t, J = 6.6 Hz, 2H), 2.04 (q, J = 7.0 Hz, 2H), 1.59-1.54 (m, 2H), 1.39-1.20 (m, 14H), 0.32 (s, 6H), 0.25 - -0.13 (m)

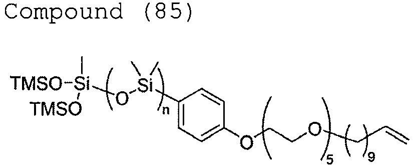

### (Synthetic Example 86)

A glass flask was charged with a stirrer bar, 1.80 g of compound (85), 91 µL of a xylene solution containing a 2% Pt complex of 1,3-divinyl-1,1,3,3-tetramethyldisiloxane, 13 µL of pyridine, 0.46 mL of trimethoxysilane, and 10 mL of toluene, the mixture was stirred with a magnetic stirrer at room temperature for 4 hours. Thereafter, the mixture was concentrated under reduced pressure to give 1.83 g of compound (86) as a slightly yellow oil. The average number of repeating units was 12.

1H-NMR (400 MHz, CHLOROFORM-D) δ 7.47 (d, J = 8.7 Hz, 2H), 6.91 (d, J = 8.7 Hz, 2H), 4.14 (t, J = 5.0 Hz, 2H), 3.86 (t, J = 5.0 Hz, 2H), 3.74-3.72 (m, 2H), 3.69-3.62 (m, 12H), 3.60-3.54 (m, 11H), 3.44 (t, J = 6.9 Hz, 2H), 1.59-1.55 (m, 2H), 1.41-1.39 (m, 2H), 1.33-1.26 (m, 14H), 0.66-0.62 (m, 2H), 0.31 (s, 6H), 0.25 - -0.07 (m)

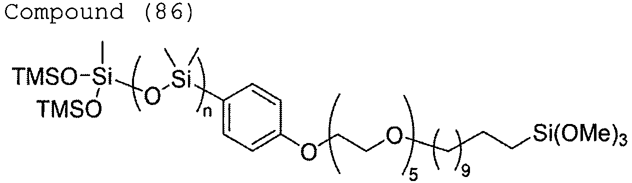

### (Surface-treating agent 30)

Compound (86) obtained above was diluted so as to be a 10 wt% hexamethyldisiloxane solution, and thus a surface-treating agent 30 was obtained.

### (Synthetic Example 87)

After 0.3014 g of 1-bromo-4-(4-dodecen-1-yl)benzene and 3.2 mL of tetrahydrofuran were added, 0.62 mL of a 15% n-butyllithium solution in hexane was added dropwise at -78°C, and the mixture was stirred at -78°C for 1 hour. Thereafter, 6.5 mL of a tetrahydrofuran solution containing 6.28 g of hexamethylcyclotrisiloxane was added dropwise, and the mixture was stirred at room temperature for 16 hours. Moreover, 0.74 g of 3-chloro-1,1,1,5,5,5-hexamethyltrisiloxane was added dropwise, and the mixture was stirred at room temperature for 16 hours. This reaction solution was concentrated under reduced pressure, toluene was added, the mixture was purified by silica gel column chromatography, and then the toluene layer was concentrated to give a crude product. Acetonitrile was added to wash the crude product three times, and the product oil layer was concentrated to give 1.76 g of compound (87).

1H NMR (CDCl3, 400 MHz) δ [ppm]: -0.074-0.364 (m), 1.234-1.427 (m), 1.610 (quin), 2.039 (q), 2.593 (t), 4.915-5.016 (m), 5.765-5.867 (m), 7.175 (d), 7.471 (d)

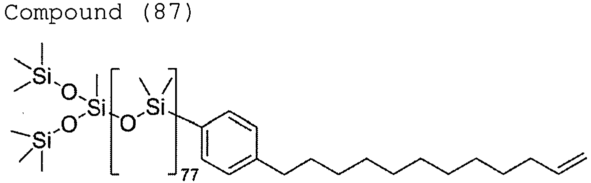

### (Synthetic Example 88)

After 1.49 g of compound (87), 4 mL of toluene, 6 µL of pyridine, and 30 µL of a xylene solution containing a 2% Pt complex of 1,3-divinyl-1,1,3,3-tetramethyldisiloxane were each added, 90 µL of trimethoxysilane was added, and the mixture was stirred at room temperature for 2 hours. Thereafter, the mixture was purified to give 6.78 g of compound (88).

1H NMR (CDCl3, 400 MHz) δ [ppm]: -0.077-0.325 (m), 0.648 (t), 1.92-1.425 (m), 1.513-1.642 (m), 2.589 (t), 3.545-3.569 (m), 7.175 (d), 7.469 (d)

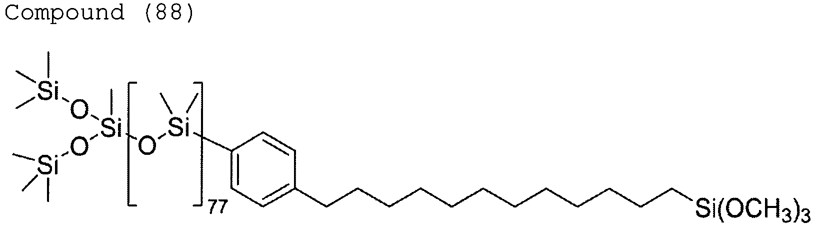

### (Surface-treating agent 31)

Compound (88) obtained above was diluted so as to be a 10 wt% hexamethyldisiloxane solution, and thus a surface-treating agent 31 was obtained.

### (Synthetic Example 89)

After 0.5056 g of 1-bromo-4-(4-dodecen-1-yl)benzene and 5.4 mL of tetrahydrofuran were added, 1.02 mL of a 15% n-butyllithium solution in hexane was added dropwise at -78°C, and the mixture was stirred at -78°C for 1 hour. Thereafter, 14.4 mL of a tetrahydrofuran solution containing 13.90 g of hexamethylcyclotrisiloxane was added dropwise, and the mixture was stirred at room temperature for 16 hours. Moreover, 1.19 g of 3-chloro-1,1,1,5,5,5-hexamethyltrisiloxane was added dropwise, and the mixture was stirred at room temperature for 16 hours. This reaction solution was concentrated under reduced pressure, toluene was added, the mixture was purified by silica gel column chromatography, and then the toluene layer was concentrated to give a crude product. Acetonitrile was added to wash the crude product three times, and the product oil layer was concentrated to give 8.46 g of compound (89).

1H NMR (CDCl3, 400 MHz) δ [ppm]: -0.098-0.378 (m), 1.245-1.404 (m), 1.624 (quin), 2.050 (q), 2.605 (t), 4.918-5.029 (m), 5.769-5.871 (m), 7.185 (d), 7.484 (d)

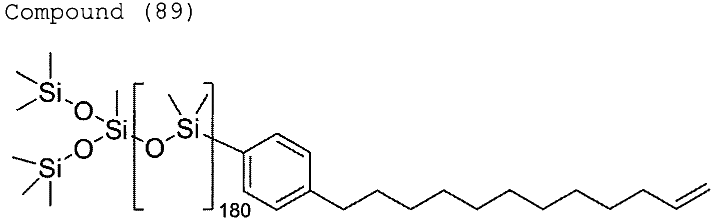

### (Synthetic Example 90)

After 2.02 g of compound (89), 4 mL of toluene, 3 µL of pyridine, and 20 µL of a xylene solution containing a 2% Pt complex of 1,3-divinyl-1,1,3,3-tetramethyldisiloxane were each added, 55 µL of trimethoxysilane was added, and the mixture was stirred at room temperature for 2 hours.
Thereafter, the mixture was purified to give 1.85 g of compound (90).

1H NMR (CDCl3, 400 MHz) δ [ppm]: -0.091-0.310 (m), 0.633 (t), 1.239-1.411 (m), 1.545-1.609 (m), 2.574 (t), 3.506-3.582 (m), 7.159 (d), 7.454 (d)

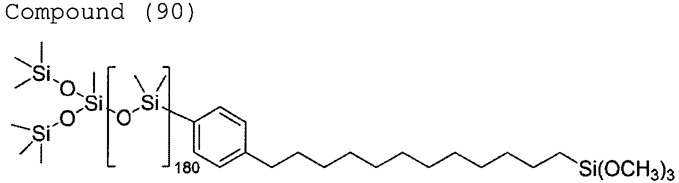

### (Surface-treating agent 32)

Compound (90) obtained above was diluted so as to be a 10 wt% hexamethyldisiloxane solution, and thus a surface-treating agent 32 was obtained.

### (Synthetic Example 91)

After 0.5 g of 1-bromo-4-(11-dodecen-1-yl)benzene and 5.4 mL of tetrahydrofuran were added, 1.08 mL of a 15% n-butyllithium solution in hexane was added dropwise at -78°C, and the mixture was stirred at -78°C for 1 hour. Thereafter, 14.4 mL of a tetrahydrofuran solution containing 13.8 g of hexamethylcyclotrisiloxane was added dropwise, and the mixture was stirred at room temperature for 16 hours. Thereafter, 0.59 mL of trimethylchlorosilane was added at room temperature, and the mixture was stirred at room temperature for 3 hours. Thereafter, the reaction solution was concentrated, the concentrate was treated with silica gel and then washed three times with acetonitrile to give 13.0 g of compound (91).

1H-NMR (400 MHz, CHLOROFORM-D) δ 7.45 (d, J = 7.6 Hz, 2H), 7.16 (d, J = 7.6 Hz,2H), 5.86-5.75 (m, 1H), 5.00-4.90 (m, 2H), 2.60-2.56 (m, 2H), 2.05-1.97 (m, 2H) ,1.65-1.25 (m, 16H), 0.31 (s, 6H), 0.21 - -0.09 (m)

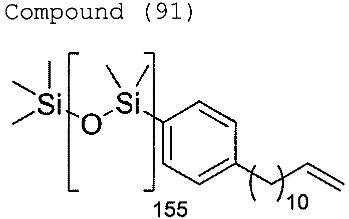

### (Synthetic Example 92)

After 2.0 g of compound (91), 10 mL of toluene, 4.6 µL of aniline, and 38 µL of a xylene solution containing a 2% Pt complex of 1,3-divinyl-1,1,3,3-tetramethyldisiloxane were each added, 0.86 mL of trimethoxysilane was added, and the mixture was stirred at 45°C for 3 hours. Thereafter, the mixture was purified to give 1.82 g of compound (92).

1H-NMR (400 MHz, CHLOROFORM-D) δ 7.46 (d, J = 8.0 Hz, 2H), 7.16 (d, J = 8.4 Hz,2H), 3.57-3.53 (m, 9H), 2.58 (t, J = 7.2 Hz, 2H), 1.63-1.52 (m, 2H), 1.42-1.24(m, 18H), 0.66-0.62 (m, 2H), 0.31 (s, 6H), 0.21 - -0.09 (m)

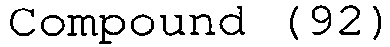

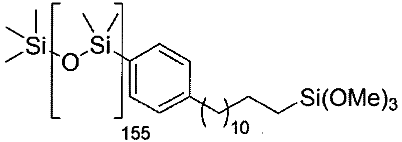

### (Surface-treating agent 33)

Compound (92) obtained above was diluted so as to be a 10 wt% hexamethyldisiloxane solution, and thus a surface-treating agent 33 was obtained.

### (Synthetic Example 93)

After 1.18 g of 1-bromo-4-(4-dodecen-1-yl)benzene and 10.8 mL of tetrahydrofuran were added, 2.03 mL of a 15% n-butyllithium solution in hexane was added dropwise at -78°C, and the mixture was stirred at -78°C for 1 hour. Thereafter, 3.2 mL of a tetrahydrofuran solution containing 3.10 g of hexamethylcyclotrisiloxane was added dropwise, and the mixture was stirred at room temperature for 16 hours. Subsequently, 1.38 mL of chlorotrimethylsilane was added dropwise, the mixture was stirred at room temperature for 2 hours, toluene was added, the mixture was purified by silica gel column chromatography, and the toluene layer thereof was concentrated to give a crude product. Acetonitrile was added to wash the crude product three times, and the product oil layer was concentrated to give 2.55 g of compound (93).

1H NMR (CDCl3, 400 MHz) δ [ppm]: -0.072-0.223 (m), 0.329 (s), 1.197-1.394 (m), 1.611 (quin), 2.041 (q), 2.594 (t), 4.912-5.022 (m), 5.766-5.867 (m), 7.176 (d), 7.473 (d)

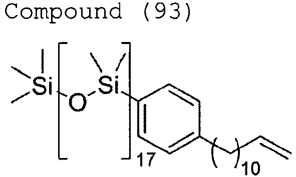

### (Synthetic Example 94)

After 2.05 g of compound (93), 2 mL of toluene, 0.014 g of triacetoxymethylsilane, and 0.25 mL of a xylene solution containing a 2% Pt complex of 1,3-divinyl-1,1,3,3-tetramethyldisiloxane were each added, 0.67 mL of trichlorosilane was added in an ice bath, and the mixture was stirred at room temperature for 3 hours. The reaction solution was concentrated under reduced pressure, 3.3 mL of tetrahydrofuran was added, the mixture was cooled in an ice bath, then 6.7 mL of a tetrahydrofuran solution containing 11% allylmagnesium chloride was added dropwise, and the mixture was stirred at room temperature for 16 hours. Thereafter, the mixture was purified to give 2.02 g of the following compound (94).

1H NMR (CDCl3, 400 MHz) δ [ppm]: -0.069-0.227 (m), 0.332 (s), 0.587 (t), 1.190-1.441 (m), 1.554-1.683 (m), 2.597 (t), 4.810-5.072 (m), 5.740-5.849 (m), 7.180 (d), 7.476 (d)

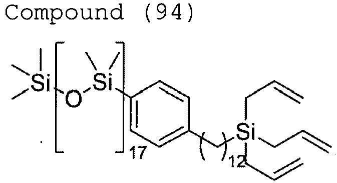

### (Synthetic Example 95)

After 2.00 g of compound (94), 4 mL of toluene, 25 µL of pyridine, and 120 µL of a xylene solution containing a 2% Pt complex of 1,3-divinyl-1,1,3,3-tetramethyldisiloxane were each added, 1.17 mL of trimethoxysilane was added, and the mixture was stirred at room temperature for 2 hours. Thereafter, the mixture was purified to give 2.45 g of compound (95).

1H NMR (CDCl3, 400 MHz) δ [ppm]: -0.074-0.221 (m), 0.326 (s), 0.594 (t), 0.711 (t), 1.185-1.506 (m), 1.608 (quin), 2.592 (t), 3.525-3.649 (m), 7.175 (d), 7.469 (d)

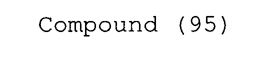

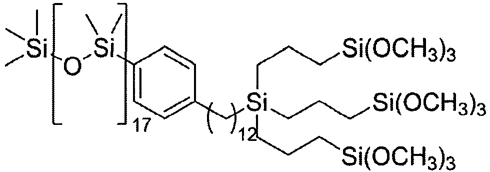

### (Surface-treating agent 34)

Compound (95) obtained above was diluted so as to be a 10 wt% hexamethyldisiloxane solution, and thus a surface-treating agent 34 was obtained.

### (Synthetic Example 96)

After 0.99 g of magnesium and 19.2 g of tetrahydrofuran were added, a solution obtained by dissolving 11.8 g of 18-bromo-1-octadecene in 69.0 g of tetrahydrofuran was added dropwise, and the mixture was stirred at 34 to 39°C for 6 hours to prepare a Grignard reagent (C). Subsequently, 10.0 g of 1-bromo-4-(5-bromopentyl)benzene and 289 g of tetrahydrofuran were stirred at -2°C, and the Grignard reagent (C) obtained above and 2.7 ml of dilithium tetrachlorocopper(II) (an approximately 2.5% tetrahydrofuran solution) were added dropwise in this order, and the mixture was stirred for 16 hours while gradually increasing the temperature. Thereafter, the mixture was cooled to 5°C, a saturated aqueous ammonium chloride solution was added to quench the reaction, and toluene was added for separation. Magnesium sulfate was added to the resulting organic layer for drying, and the mixture was concentrated using an evaporator, and then the concentrate was purified by silica gel column chromatography to give 7.6 g of compound (96): 1-bromo-4-(tricos-22-ene-1-yl)benzene as a white solid.

1H NMR (CDCl3, 400 MHz) δ [ppm]: 1.180-1.470 (m), 1.520-1.696 (m), 2.042 (q), 2.549 (t), 4.882-5.056 (m), 5.730-5.907 (m), 7.046 (d), 7.383 (d)

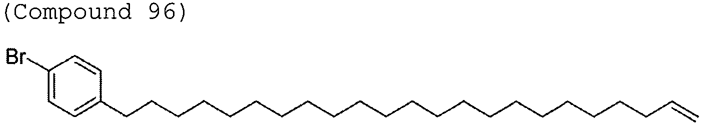

### (Synthetic Example 97)

After 1.51 g of 1-bromo-4-(tricos-22-ene-1-yl)benzene and 11 mL of tetrahydrofuran were added, 2.2 mL of a 15% n-butyllithium solution in hexane was added dropwise at -45°C, and the mixture was stirred at -45°C for 1 hour. Thereafter, 3.3 mL of a tetrahydrofuran solution containing 3.18 g of hexamethylcyclotrisiloxane was added dropwise, and the mixture was stirred at room temperature for 16 hours. Moreover, 1.20 mL of chlorotrimethylsilane was added dropwise, and the mixture was stirred at room temperature for 2 hours. This reaction solution was concentrated under reduced pressure, toluene was added, the mixture was purified by silica gel column chromatography, and then the toluene layer was concentrated to give a crude product. Acetonitrile was added to wash the crude product three times, and the product oil layer was concentrated to give 2.68 g of compound (97).

1H NMR (CDCl3, 400 MHz) δ [ppm]: -0.067-0.149 (m), 0.296-0.371 (m), 1.188-1.450 (m), 1.614 (quin), 2.047 (q), 2.598 (t), 4.887-5.061 (m), 5.733-5.911 (m), 7.180 (d), 7.477 (d)

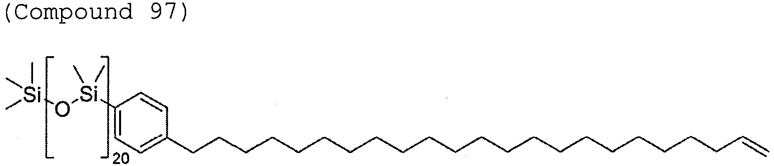

### (Synthetic Example 98)

After 2.00 g of compound (97), 4 mL of toluene, 25 µL of pyridine, and 120 µL of a xylene solution containing a 2% Pt complex of 1,3-divinyl-1,1,3,3-tetramethyldisiloxane were each added, 0.39 mL of trimethoxysilane was added, and the mixture was stirred at room temperature for 2 hours. Thereafter, the mixture was purified to give 1.72 g of compound (98).

1H NMR (CDCl3, 400 MHz) δ [ppm]: 0.006-0.156 (m), 0.295-0.370 (m), 0.655 (t), 1.185-1.447 (m), 1.533-1.650 (m), 2.597 (t), 3.538-3.613 (m), 7.179 (d), 7.476 (d)

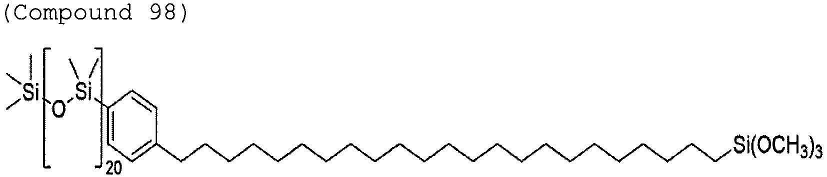

### (Surface-treating agent 35)

Compound (98) obtained above was diluted so as to be a 10 wt% hexamethyldisiloxane solution, and thus a surface-treating agent 35 was obtained.

### (Synthetic Example 100)

The following compound (101) was obtained in the same manner as in Synthetic Example 8 except that 11-dodecan-1-ylbenzene was used in place of compound (7).

1H NMR (CDCl3, 400 MHz) δ [ppm]: 0.633 (t), 1.239-1.411 (m), 1.545-1.609 (m), 2.574 (t), 3.506-3.582 (m), 7.159 (d)

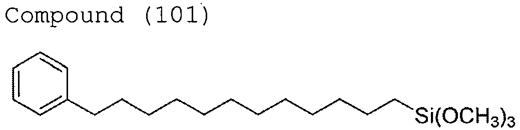

### (Synthetic Example 101)

The following compound (103) was obtained in the same manner as in Synthetic Example 8 except that 4-(11-dodecan-1-yl)phenol was used in place of compound (7).

1H NMR (CDCl3, 400 MHz) δ [ppm]: 0.648 (t), 1.253-1.425 (m), 1.513-1.621 (m), 2.589 (t), 3.487-3.606 (m), 6.806 (d), 7.019 (d)

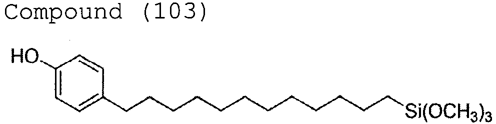

### (Synthetic Example 102)

The following compound (111) was obtained in the same manner as in Synthetic Example 8 except that (dodec-11-ene-1-yloxy)benzene was used in place of compound (7).

1H NMR (CDCl3, 400 MHz) δ [ppm]: 0.653 (t), 1.278-1.485 (m), 1.779 (quin), 3.535-3.626 (m), 3.966 (t), 6.895 (d)

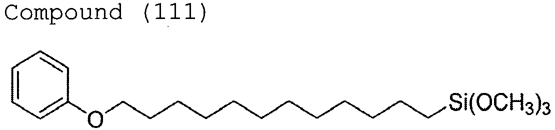

### (Synthetic Example 103)

The following compound (131) was obtained in the same manner as in Synthetic Example 8 except that (17-octadecan-1-yloxy)benzene was used in place of compound (7).

1H NMR (CDCl3, 400 MHz) δ [ppm]: 0.646 (t), 1.251-1.479 (m), 1.775 (quin), 3.529-3.608 (m), 3.960 (t), 6.890 (d)

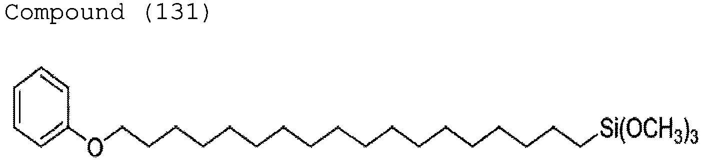

### (Synthetic Example 104)

The following compound (132) was obtained in the same manner as in Synthetic Example 8 except that compound (24) was used in place of compound (7).

¹H NMR (CDCl₃, 400 MHz) δ [ppm]: 0.646 (t), 1.251-1.479 (m), 1.775 (quin), 3.529-3.608 (m), 3.960 (t), 6.771 (d), 7.357 (d)

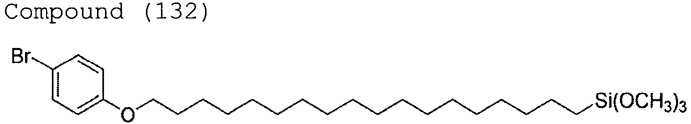

### <Preparation of surface-treating agent>

Component (A) and component (B) and a solvent were combined as shown in Table 1 below to prepare a surfacetreating agent. The solvent was hexamethyldisiloxane. The solid concentration based on the solvent was 10% by weight.

**[Table 1]**

| Surface-treating agent number | Component (A) | Component (B) | Mixing ratio (% by weight) | |
|---|---|---|---|---|
| | Number of Component | Number of Component | Component (A) | Component (B) |
| Surface-treating agent 101 | Compound (9) | Compound (101) | 90 | 10 |
| Surface-treating agent 102 | Compound (9) | Compound (101) | 80 | 20 |
| Surface-treating agent 103 | Compound (49) | Compound (101) | 90 | 10 |
| Surface-treating agent 104 | Compound (49) | Compound (101) | 80 | 20 |
| Surface-treating agent 105 | Compound (14) | Compound (101) | 90 | 10 |
| Surface-treating agent 106 | Compound (14) | Compound (101) | 80 | 20 |
| Surface-treating agent 107 | Compound (19) | Compound (101) | 90 | 10 |
| Surface-treating agent 108 | Compound (19) | Compound (101) | 80 | 20 |
| Surface-treating agent 109 | Compound (23) | Compound (101) | 90 | 10 |
| Surface-treating agent 110 | Compound (23) | Compound (101) | 80 | 20 |
| Surface-treating agent 111 | Compound (26) | Compound (131) | 90 | 10 |
| Surface-treating agent 112 | Compound (26) | Compound (131) | 80 | 20 |
| Surface-treating agent 113 | Compound (26) | Compound (132) | 90 | 10 |
| Surface-treating agent 114 | Compound (26) | Compound (132) | 80 | 20 |
| Surface-treating agent 115 | Compound (62) | Compound (111) | 90 | 10 |
| Surface-treating agent 116 | Compound (62) | Compound (111) | 80 | 20 |
| Surface-treating agent 117 | Compound (65) | Compound (131) | 90 | 10 |
| Surface-treating agent 118 | Compound (65) | Compound (131) | 80 | 20 |
| Surface-treating agent 119 | Compound (88) | Compound (103) | 95 | 5 |
| Surface-treating agent 120 | Compound (90) | Compound (101) | 90 | 10 |
| Surface-treating agent 121 | Compound (9) | Compound (101) | 50 | 50 |
| Surface-treating agent 122 | Compound (26) | Compound (131) | 50 | 50 |
| Surface-treating agent 123 | Compound (26) | Compound (132) | 50 | 50 |

### (Comparative Example 1)

### (Surface-treating agent A)

MCR-XT11 (triethoxysilylethyl-terminated polydimethylsiloxane, Mw = 600 to 900) manufactured by Gelest Inc. was diluted so as to be a 10% by weight hexamethyldisiloxane solution to give a surface-treating agent A.

### (Comparative Examples 2 and 3)

### (Surface-treating agent B)

After 1.0 g of MCR-H11 (monohydride-terminated Si-H modified silicone, molecular weight 1,500) manufactured by Gelest Inc., 0.9 g of trimethoxy(4-vinylphenyl)silane, and 1 µL of a xylene solution containing a 2% Pt complex of 1,3-divinyl-1,1,3,3-tetramethyldisiloxane were each added at room temperature, 4.0 g of MCR-H11 was added over 0.5 hours, and the mixture was stirred at room temperature for 1 hour. Thereafter, 5 µL of a xylene solution containing a 2% Pt complex of 1,3-divinyl-1,1,3,3-tetramethyldisiloxane was added, the mixture was stirred at room temperature for 1 hour, moreover, 20 µL of a xylene solution containing a 2% Pt complex of 1,3-divinyl-1,1,3,3-tetramethyldisiloxane was added, and the mixture was stirred at room temperature for 1 hour. Subsequently, the mixture was purified to give 5.33 g of compound (99).

1H-NMR (400 MHz, CHLOROFORM-D) δ 7.56-7.49 (m, 2H), 7.24-7.10 (m, 2H), 3.78-3.42 (m, 9H), 2.67-2.63 (m, 2H), 1.37-1.26(m, 4H), 0.92-0.82 (m, 5H), 0.54-0.50 (m, 2H), 0.21 - -0.09 (m)

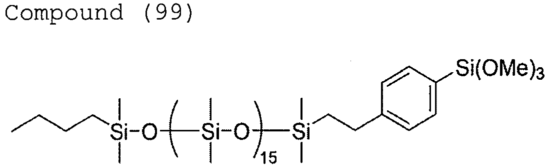

### (Surface-treating agent B)

The resulting compound (99) was diluted so as to be a 10% by weight hexamethyldisiloxane solution, and thus a surface-treating agent B was obtained.

### (Na-containing intermediate layer forming material)

First, 2.2 g of sodium hydroxide (manufactured by Fujifilm Wako Pure Chemical Corporation) was dissolved in 24 g of distilled water to give a 8.4% by mass aqueous sodium hydroxide solution. Then, 24 g of this 8.4% by mass aqueous sodium hydroxide solution and 20 g of MS gel (M.S. GEL D-100-60A (manufactured by AGC Si-Tech Co., Ltd.)) were mixed so that the aqueous sodium hydroxide solution was absorbed into the MS gel. The MS gel that had absorbed the aqueous sodium hydroxide solution was dried at 25°C for 8 hours, then molded with a tableting machine (4 MPa for 1 minute), and fired at 1,000°C for 1 hour to give a formed article 1 (pellets).

### (Formation of surface-treating layer)

### (Examples 1 to 6, 13 to 25, 36 to 46, 55 to 59, 62 to 81, and Comparative Examples 2 and 4 to 6)

The surface-treating agents 1 to 35, 101 to 123, and the surface-treating agent B prepared above were vacuum-deposited onto chemically tempered glass (Gorilla Glass, manufactured by Corning Incorporated, thickness 0.7 mm). Specifically, a molybdenum boat in a vacuum deposition system was filled with 0.1 g of a surface-treating agent, and the vacuum deposition system was evacuated to a pressure of 3.0 × 10⁻³ Pa or lower. Thereafter, vapor deposition by the electron beam deposition scheme was performed using the formed article 1 to form a Na-containing silicon dioxide film having a thickness of 7 nm, followed by heating the boat by the resistance heating scheme to form a surface-treating layer. Thereafter, heat treatment was performed in an oven at 150°C for 2 hours to give a surface-treating layer.

### (Examples 7-12, 26-35, 47-54 and 60-61, and Comparative Examples 1 and 3)

The surface-treating agents 1 to 18, 20 to 28, 34 and 35, and surface-treating agents A and B prepared above were vacuum-deposited onto chemically tempered glass (Gorilla Glass, manufactured by Corning Incorporated, thickness 0.7 mm). Specifically, a molybdenum boat in a vacuum deposition system was filled with 0.1 g of a surface-treating agent, and the vacuum deposition system was evacuated to a pressure of 3.0×10⁻³ Pa or lower. Thereafter, vapor deposition by the electron beam deposition scheme was performed using the formed article 1 to form a silicon dioxide film having a thickness of 7 nm, followed by heating the boat by the resistance heating scheme to form a surface-treating layer. Thereafter, heat treatment was performed in an oven at 150°C for 2 hours to give a surface-treating layer.

### <Evaluation>

### [Abrasion resistance evaluation]

### (Initial evaluation)

As initial evaluation (0 times of abrasion), the static water contact angle was measured after forming the surface-treating layer and wiping off excessive matter on the surface. For contact angle measurement, a fully automatic contact angle meter DropMaster 700 (manufactured by Kyowa Interface Science Co., Ltd.) was used under an environment of 25°C. Specifically, the substrate having the measurement target, i.e., the surface-treating layer, was placed horizontally, water was dripped from a microsyringe onto the surface, and a static image was taken with a video microscope one second after the dropwise addition to thereby measure the static contact angles. The static contact angle was measured at five different points on the surface-treating layer of the substrate, and the average value calculated therefrom was used.

### (Evaluation after abrasion resistance test)

A friction block as described below was brought into contact with the formed surface-treating layer, a 5 N load was applied thereto, and the friction block was moved back and forth at a speed of 40 mm/sec, with the load being applied. After predetermined times of abrasion, the static water contact angle was measured. The results are shown in Table 2 and Table 3.

### - Friction block

The surfaces of an article obtained by processing silicone rubber as described below were covered with cotton soaked with artificial sweat having the following composition, and the article was used as a friction block.

Composition of artificial sweat:
Anhydrous disodium hydrogen phosphate: 2 g
Sodium chloride: 20 g
85% Lactic acid: 2 g
Histidine hydrochloride: 5 g
Distilled water: 1 kg

Article obtained by processing silicone rubber:
Obtained by processing Silicone Rubber Stopper SR-51 manufactured by Tigers Polymer Corporation into a cylinder having a diameter of 1 cm and a thickness of 1 cm.

**[Table 2]**

| Example / Comparative Example | Surface-treating agent | Water contact angle (degree) | | Retention rate relative to initialangle (%) |
|---|---|---|---|---|
| | | At the beginning | After 50 times of abrasion | |
| Example 1 | Surface-treating agent 1 | 102.3 | 83.6 | 82 |
| Example 2 | Surface-treating agent 2 | 102.2 | 91.5 | 90 |
| Example 3 | Surface-treating agent 3 | 104.7 | 98.1 | 94 |
| Example 4 | Surface-treating agent 4 | 104.2 | 90.5 | 87 |
| Example 5 | Surface-treating agent 5 | 104.1 | 96.4 | 93 |
| Example 6 | Surface-treating agent 6 | 105.2 | 96.7 | 92 |
| Example 7 | Surface-treating agent 1 | 102.9 | 71.6 | 70 |
| Example 8 | Surface-treating agent 2 | 104.8 | 72.9 | 70 |
| Example 9 | Surface-treating agent 3 | 105.8 | 75.2 | 71 |
| Example 10 | Surface-treating agent 4 | 104.4 | 76.1 | 73 |
| Example 11 | Surface-treating agent 5 | 104.4 | 76.1 | 73 |
| Example 12 | Surface-treating agent 6 | 105.6 | 78.6 | 74 |
| Example 13 | Surface-treating agent 7 | 100.3 | 91.7 | 91 |
| Example 14 | Surface-treating agent 8 | 104.0 | 85.2 | 82 |
| Example 15 | Surface-treating agent 9 | 101.9 | 80.6 | 79 |
| Example 16 | Surface-treating agent 10 | 104.2 | 93.5 | 90 |
| Example 17 | Surface-treating agent 11 | 105.3 | 83.3 | 79 |
| Example 18 | Surface-treating agent 12 | 102.6 | 81.5 | 79 |
| Example 19 | Surface-treating agent 13 | 103.4 | 81.8 | 79 |
| Example 20 | Surface-treating agent 14 | 105.6 | 80.7 | 76 |
| Example 21 | Surface-treating agent 15 | 104.0 | 85.9 | 83 |
| Example 22 | Surface-treating agent 16 | 105.2 | 88.1 | 84 |
| Example 23 | Surface-treating agent 17 | 104.0 | 84.0 | 81 |
| Example 24 | Surface-treating agent 18 | 103.7 | 73.9 | 71 |
| Example 25 | Surface-treating agent 19 | 101.8 | 90.1 | 89 |
| Example 26 | Surface-treating agent 7 | 96.3 | 73.1 | 76 |
| Example 27 | Surface-treating agent 8 | 103.1 | 71.8 | 70 |
| Example 28 | Surface-treating agent 10 | 106.1 | 80.4 | 76 |
| Example 29 | Surface-treating agent 11 | 105.3 | 73.2 | 70 |
| Example 30 | Surface-treating agent 12 | 102.8 | 72.2 | 70 |
| Example 31 | Surface-treating agent 13 | 105.4 | 74.1 | 70 |
| Example 32 | Surface-treating agent 14 | 105.9 | 73.8 | 70 |
| Example 33 | Surface-treating agent 16 | 106.1 | 73.9 | 70 |
| Example 34 | Surface-treating agent 17 | 105.0 | 73.0 | 70 |
| Example 35 | Surface-treating agent 18 | 104.8 | 73.5 | 70 |
| Example 36 | Surface-treating agent 20 | 103.4 | 91.0 | 88 |
| Example 37 | Surface-treating agent 21 | 103.1 | 79.5 | 77 |
| Example 38 | Surface-treating agent 22 | 101.4 | 86.1 | 85 |
| Example 39 | Surface-treating agent 23 | 105.7 | 93.4 | 88 |
| Example 40 | Surface-treating agent 24 | 104.8 | 84.5 | 81 |
| Example 41 | Surface-treating agent 25 | 103.0 | 71.8 | 70 |
| Example 42 | Surface-treating agent 26 | 104.5 | 96.2 | 92 |
| Example 43 | Surface-treating agent 27 | 105.2 | 87.1 | 83 |
| Example 44 | Surface-treating agent 28 | 105.4 | 90.8 | 86 |
| Example 45 | Surface-treating agent 29 | 106.0 | 74.2 | 70 |
| Example 46 | Surface-treating agent 30 | 102.2 | 74.4 | 73 |
| Example 47 | Surface-treating agent 20 | 100.4 | 81.5 | 81 |
| Example 48 | Surface-treating agent 21 | 105.3 | 69.5 | 66 |
| Example 49 | Surface-treating agent 22 | 99.3 | 69.6 | 70 |
| Example 50 | Surface-treating agent 23 | 102.2 | 79.6 | 78 |
| Example 51 | Surface-treating agent 24 | 104.6 | 71.7 | 69 |
| Example 52 | Surface-treating agent 26 | 99.5 | 82.2 | 83 |
| Example 53 | Surface-treating agent 27 | 105.4 | 75.2 | 71 |
| Example 54 | Surface-treating agent 28 | 104.8 | 77.3 | 74 |
| Example 55 | Surface-treating agent 31 | 102.5 | 90.4 | 88 |
| Example 56 | Surface-treating agent 32 | 102.9 | 76.0 | 74 |
| Example 57 | Surface-treating agent 33 | 102.4 | 68.6 | 67 |
| Example 58 | Surface-treating agent 34 | 100.2 | 83.2 | 83 |
| Example 59 | Surface-treating agent 35 | 102.8 | 97.6 | 95 |
| Example 60 | Surface-treating agent 34 | 98.9 | 70.0 | 71 |
| Example 61 | Surface-treating agent 35 | 105.0 | 92.4 | 88 |
| Comparative Example 1 | Surface-treating agent A | 100.4 | 63.8 | 64 |
| Comparative Example 2 | Surface-treating agent B | 105.5 | 65.5 | 62 |
| Comparative Example 3 | Surface-treating agent B | 103.1 | 62.7 | 61 |

**[Table 3]**

| Example / Comparative Example | Surface-treating agent | Water contact angle (degree) | | Retention rate relative to initialangle (%) |
|---|---|---|---|---|
| | | At the beginning | After 50 times of abrasion | |
| Example 62 | Surface-treating agent 101 | 103.4 | 97.0 | 94 |
| Example 63 | Surface-treating agent 102 | 102.9 | 97.2 | 94 |
| Example 64 | Surface-treating agent 103 | 103.7 | 85.0 | 82 |
| Example 65 | Surface-treating agent 104 | 103.1 | 82.1 | 80 |
| Example 66 | Surface-treating agent 105 | 103.6 | 95.6 | 92 |
| Example 67 | Surface-treating agent 106 | 102.1 | 94.3 | 92 |
| Example 68 | Surface-treating agent 107 | 99.7 | 88.6 | 89 |
| Example 69 | Surface-treating agent 108 | 98.9 | 87.8 | 89 |
| Example 70 | Surface-treating agent 109 | 101.2 | 81.3 | 80 |
| Example 71 | Surface-treating agent 110 | 101.6 | 80.2 | 79 |
| Example 72 | Surface-treating agent 111 | 103.8 | 90.6 | 87 |
| Example 73 | Surface-treating agent 112 | 103.1 | 91.2 | 88 |
| Example 74 | Surface-treating agent 113 | 101.1 | 89.7 | 89 |
| Example 75 | Surface-treating agent 114 | 101. 6 | 88.6 | 87 |
| Example 76 | Surface-treating agent 115 | 101.1 | 85.9 | 85 |
| Example 77 | Surface-treating agent 116 | 101.7 | 85.1 | 84 |
| Example 78 | Surface-treating agent 117 | 104.9 | 95.6 | 91 |
| Example 79 | Surface-treating agent 118 | 103.8 | 93.2 | 90 |
| Example 80 | Surface-treating agent 119 | 104.7 | 87.6 | 84 |
| Example 81 | Surface-treating agent 120 | 104.1 | 84.8 | 81 |
| Comparative Example 4 | Surface-treating agent 121 | 100.1 | 61.6 | 62 |
| Comparative Example 5 | Surface-treating agent 122 | 98.7 | 62.9 | 64 |
| Comparative Example 6 | Surface-treating agent 123 | 96.5 | 58.3 | 60 |

### Industrial Applicability

The silane compound of the present disclosure can be suitably utilized in a variety of applications.

## Claims

1. A silane compound represented by the following formula (1):
((R^{A}-(R^{S}) _{γ1}-(SiR⁶₂)_{γ2})_{γ3}R^{Ar})_{α}-X¹-(R^{H})_{β} (1)
wherein
R^{A} is a monovalent group containing one or more Si atoms to which neither a hydroxyl group nor a hydrolyzable group is directly bonded, or a hydrocarbon group;
R^{S} is a group represented by the following formula: 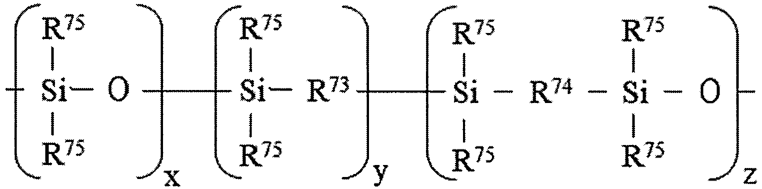 wherein
R⁷³ is each independently a single bond, a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁴ is each independently a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁶ is each independently a C₁₋₆ alkylene group,
R⁷⁷ is each independently an optionally substituted phenylene group or naphthylene group,
R⁷⁸ is each independently a single bond or a C₁₋₆ alkylene group,
R⁷⁹ is each independently a single bond or an oxygen atom,
R⁷⁵ is each independently a hydrocarbon group,
x is an integer of 0 to 500,
y is an integer of 0 to 500,
z is an integer of 0 to 500,
x + y + z is 1 or more, and
the occurrence order of the respective repeating units enclosed in parentheses provided with x, y, or z is not limited in the formula;
R⁶ is each independently a hydrocarbon group;
R^{Ar} is a di- to hexavalent aromatic group;
X¹ is a di- to decavalent group;
R^{H} is a monovalent group containing a Si atom to which a hydroxyl group or a hydrolyzable group is bonded;
α is an integer of 1 to 9;
β is an integer of 1 to 9;
γ1 is 0 or 1;
γ2 is 0 or 1; and
γ3 is an integer of 1 to 5.

2. The silane compound according to claim 1, wherein R^{A} is a group represented by the following group A:
R¹ₙₐR²₃₋ₙₐSi-R⁰- (A)
wherein
R¹ is each independently a group represented by -(R⁴-SiR³₂)ₘₐ-R³,
R⁴ is each independently an oxygen atom or a C₁₋₆ alkylene group,
R³ is each independently a hydrocarbon group or R^{1'},
R^{1'} has the same meaning as R¹,
ma is each independently an integer of 1 to 5,
provided that the number of R^{1'} in R¹ is 20 or less,
R² is each independently a hydrocarbon group,
na is an integer of 1 to 3, and
R⁰ is a single bond or an oxygen atom.

3. The silane compound according to claim 2, wherein in the group A,
R¹ is each independently a group represented by - (OSiR³₂)ₘₐ-R³,
R³ is each independently a hydrocarbon group or R^{1'},
ma is each independently 1 or 2,
R² is each independently a hydrocarbon group, and
na is an integer of 1 to 3.

4. The silane compound according to claim 2, wherein R³ is a C₁₋₄ alkyl group.

5. The silane compound according to claim 1, wherein R^{A} is a C₁₋₁₂ alkyl group.

6. The silane compound according to claim 1, wherein R⁶ is a C₁₋₄ alkyl group or a phenyl group.

7. The silane compound according to claim 1, wherein R^{Ar} is an arylene group having 6 to 20 carbon atoms.

8. The silane compound according to claim 1, wherein x is an integer of 1 to 300, y is an integer of 1 to 300, and z is an integer of 1 to 300.

9. The silane compound according to claim 1, wherein x is an integer of 1 to 100, y is an integer of 1 to 100, and z is an integer of 1 to 100.

10. The silane compound according to claim 1, wherein x is an integer of 0 to 500, y is 0, z is an integer of 0 to 500, and x + y + z is 1 or more.

11. The compound according to claim 1, wherein X¹ is a divalent organic group containing an alkylene group having 3 or more carbon atoms.

12. The compound according to claim 1, wherein X¹ is a divalent organic group containing an alkylene group having 11 or more carbon atoms.

13. The compound according to claim 1, wherein
X¹ is a divalent organic group further containing - CO-, -COO-, -OCO-, -NR⁴¹-, -CONR⁴¹-, -NR⁴¹CO-, -OCONR⁴¹-, - NR⁴¹COO-, -NR⁴¹-CO-NR⁴¹-, -O-, -S-, -O-(CH₂)ₓ₁-CONR⁴¹-, -O-(CH₂)ₓ₁-NR⁴¹CO-, or -O-(CH₂)ₓ₁-CO-,
R⁴¹ is a hydrogen atom or a C₁₋₆ alkyl group, and
x1 is an integer of 1 to 30.

14. The compound according to claim 1, wherein
X¹ is a divalent organic group further containing - CO-, -COO-, -OCO-, -NR⁴¹-, -CONR⁴¹-, -NR⁴¹CO-, -OCONR⁴¹-, - O-(CH₂)x₁-CONR⁴¹-, -O-(CH₂)ₓ₁-NR⁴¹CO-, or -O-(CH₂)ₓ₁-CO-,
R⁴¹ is a hydrogen atom or a C₁₋₆ alkyl group, and
x1 is an integer of 1 to 30.

15. The compound according to claim 1, wherein X¹ is a group represented by the following formula:
-X²¹-X¹⁰-X¹¹-X¹².
wherein
X²¹ is a single bond, -O-, -O-(CₐH₂ₐO)_{b}-, R⁶¹_{b1}R⁶²_{3-b1}C-, R⁶³_{b2}R⁶⁴_{3-b2}Si-, or R⁶⁵₂N-,
R⁶¹ is a divalent organic group,
R⁶² is a hydrogen atom or a monovalent organic group,
R⁸³ is a divalent organic group,
R⁶⁴ is a hydrogen atom or a monovalent organic group,
R⁶⁵ is a divalent organic group,
b1 is 2 or 3,
b2 is 2 or 3,
a is an integer of 1 to 4,
b is an integer of 1 to 10,
X¹⁰ is an alkylene group having 3 or more carbon atoms,
X¹¹ is a single bond, -CO-, -COO-, -OCO-, -NR⁴¹-, - CONR⁴¹-, -NR⁴¹CO-, -OCONR⁴¹-, -NR⁴¹COO-, -NR⁴¹-CO-NR⁴¹-, -O-, -S-, -O-(CH₂)ₓ-CONR⁴¹-, -O-(CH₂)ₓ-NR⁴¹CO-, or -O-(CH₂)ₓ₁-CO-,
R⁴¹ is a hydrogen atom or a C₁₋₆ alkyl group,
x1 is an integer of 1 of 30, and
X¹² is a single bond or a C₁₋₃₀ alkylene group.

16. The silane compound according to claim 1, wherein R^{H} is a group represented by the following formula (S1), (S2), (S3), (S4), or (S5): 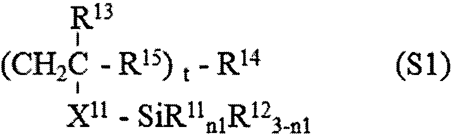
- SiR¹¹ₙ₁R¹²₃₋ₙ₁ (S2)
**-** SiR^{a1}ₖ₁R^{b1}₁₁R^{c1}ₘ₁ (S3)
- CR^{d1}ₖ₂R^{e1}₁₂R^{f1}ₘ₂ (S4)
**-** NR^{g1}R^{h1} (S5)
wherein
R¹¹ is each independently a hydroxyl group or a hydrolyzable group,
R¹² is each independently a monovalent organic group,
n1 is each independently an integer of 0 to 3 for each (SiR¹¹_{n1R}¹²₃₋ₙ₁) unit,
X¹¹ is each independently a single bond or a divalent organic group,
R¹³ is each independently a hydrogen atom or a monovalent organic group,
t is each independently an integer of 2 or more,
R¹⁴ is each independently a hydrogen atom, a halogen atom, or -X¹¹-SiR¹¹ₙ₁R¹²₃₋ₙ₁,
R¹⁵ is each independently a single bond, an oxygen atom, an alkylene group having 1 to 6 carbon atoms, or an alkyleneoxy group having 1 to 6 carbon atoms,
R^{a1} is each independently -Z¹-SiR²¹ₚ₁R²²_{q1}R²³ᵣ₁,
Z¹ is each independently a divalent organic group,
R²¹ is each independently -Z^{1'}-SiR^{21'}_{p1'}R^{22'}_{q1'}R^{23'}_{r1'},
R²² is each independently a hydroxyl group or a hydrolyzable group,
R²³ is each independently a monovalent organic group,
p1 is each independently an integer of 0 to 3,
q1 is each independently an integer of 0 to 3,
r1 is each independently an integer of 0 to 3,
Z^{1'} is each independently a divalent organic group,
R^{21'} is each independently -Z^{1"}-SiR^{22"}_{q1"}R^{23"}_{r1"},
R^{22'} is each independently a hydroxyl group or a hydrolyzable group,
R^{23'} is each independently a monovalent organic group,
p1' is each independently an integer of 0 to 3,
q1' is each independently an integer of 0 to 3,
r1' is each independently an integer of 0 to 3,
Z^{1"} is each independently a divalent organic group,
R^{22"} is each independently a hydroxyl group or a hydrolyzable group,
R^{23"} is each independently a monovalent organic group,
q1" is each independently an integer of 0 to 3,
r1" is each independently an integer of 0 to 3,
R^{b1} is each independently a hydroxyl group or a hydrolyzable group,
R^{c1} is each independently a monovalent organic group,
k1 is each independently an integer of 0 to 3,
l1 is each independently an integer of 0 to 3,
m1 is each independently an integer of 0 to 3,
provided that, in the formula (S3), at least two Si atoms to which a hydroxyl group or a hydrolyzable group is bonded are present,
R^{d1} is each independently -Z²-CR³¹ₚ₂R³²_{q2}R³³ᵣ₂,
Z² is each independently a single bond, an oxygen atom, or a divalent organic group,
R³¹ is each independently -Z^{2'}-CR^{32'}_{q2'}R^{33'}_{r2'},
R³² is each independently -Z³-SiR³⁴ₙ₂R³⁵₃₋ₙ₂,
R³³ is each independently a hydrogen atom, a hydroxyl group, or a monovalent organic group,
p2 is each independently an integer of 0 to 3,
q2 is each independently an integer of 0 to 3,
r2 is each independently an integer of 0 to 3,
Z^{2'} is each independently a single bond, an oxygen atom, or a divalent organic group,
R^{32'} is each independently -Z³-SiR³⁴ₙ₂R³⁵₃₋ₙ₂,
R^{33'} is each independently a hydrogen atom, a hydroxyl group, or a monovalent organic group,
q2' is each independently an integer of 0 to 3,
r2' is each independently an integer of 0 to 3,
Z³ is each independently a single bond, an oxygen atom, or a divalent organic group,
R³⁴ is each independently a hydroxyl group or a hydrolyzable group,
R³⁵ is each independently a monovalent organic group,
n2 is each independently an integer of 0 to 3,
R^{e1} is each independently -Z³-SiR³⁴ₙ₂R³⁵₃₋ₙ₂,
R^{f1} is each independently a hydrogen atom, a hydroxyl group, or a monovalent organic group,
k2 is each independently an integer of 0 to 3,
l2 is each independently an integer of 0 to 3,
m2 is each independently an integer of 0 to 3,
provided that, in the formula (S4), at least two Si atoms to which a hydroxyl group or a hydrolyzable group is bonded are present,
R^{g1} and R^{h1} are each independently -Z⁴-SiR¹¹ₙ₁R¹²₃₋ₙ₁, - Z⁴-SiR^{a1}ₖ₁R^{b1}₁₁R^{c1}ₘ₁, or -Z⁴-CR^{d1}ₖ₂R^{e1}₁₂R^{f1}ₘ₂, and
Z⁴ is each independently a single bond, an oxygen atom, or a divalent organic group,
provided that, in the formula (S5), at least two Si atoms to which a hydroxyl group or a hydrolyzable group is bonded are present.

17. The silane compound according to claim 16, wherein R^{H} is a group represented by the formula (S2).

18. The silane compound according to claim 16, wherein R^{H} is a group represented by the formula (S3), (S4), or (S5).

19. The silane compound according to claim 1, wherein
R^{A} is a C₁₋₄ alkyl group, 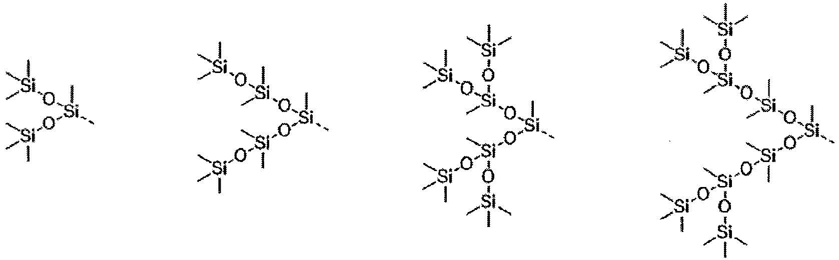 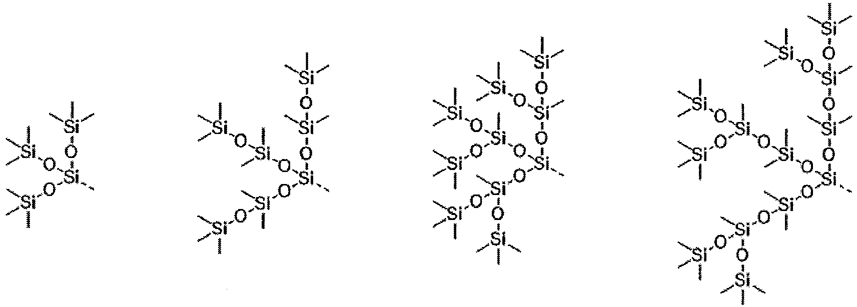 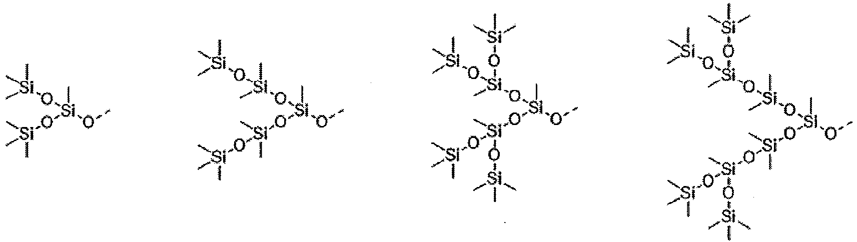 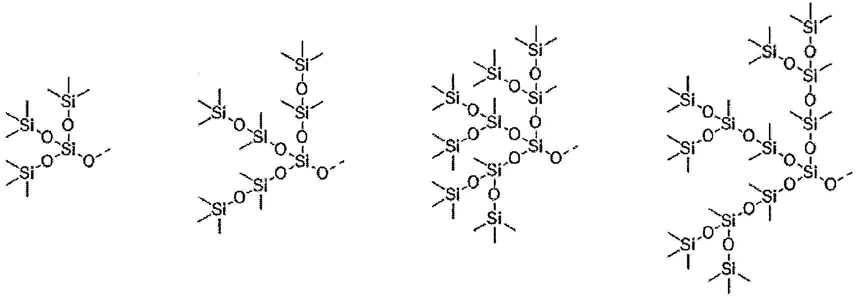 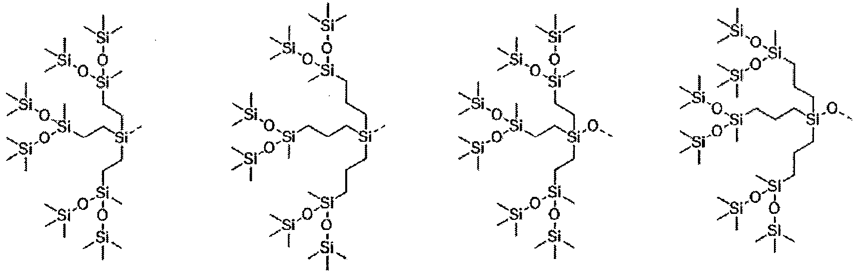
R^{S} is - (SiR⁷⁵₂-O-)ₓ-;
R⁶ is a C₁₋₄ alkyl group;
R^{Ar} is a phenylene group or a naphthylene group, or a benzenetriyl group, optionally substituted with a fluorine atom or a C₁₋₄ alkoxy group
X¹ is a group represented by the following formula:
-X²¹-X¹⁰-
wherein
X²¹ is a single bond, -O-, or -O-(C₂H₄O)_{b}-,
b is an integer of 2 to 10, and
X¹⁰ is an alkylene group having 11 to 24 carbon atoms;
R^{H} is -Si(OR)₃ or -SiR(OR)₂;
α is 1;
β is 1;
γ1 is 0 or 1;
γ2 is 0 or 1; and
γ3 is 1 or 2.

20. The compound according to claim 1, which is selected from: 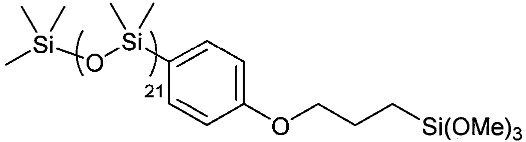 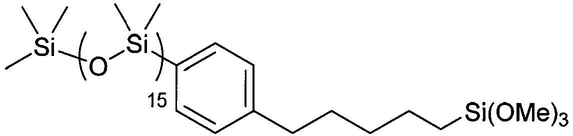 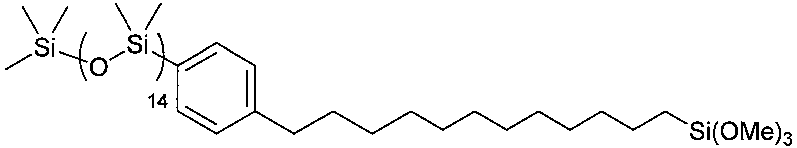 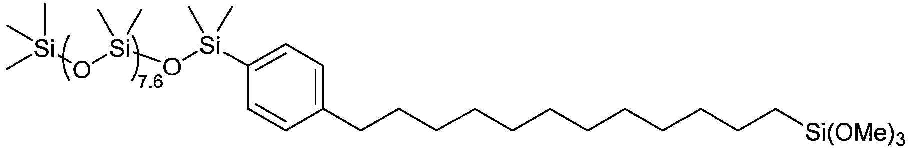 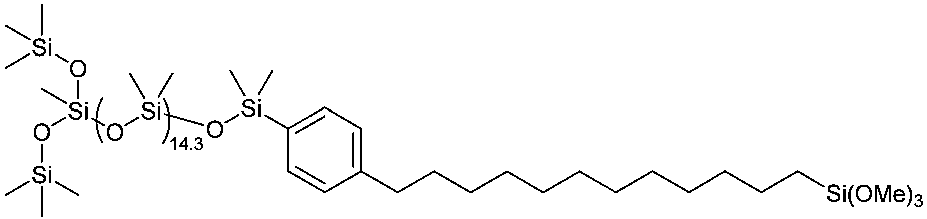 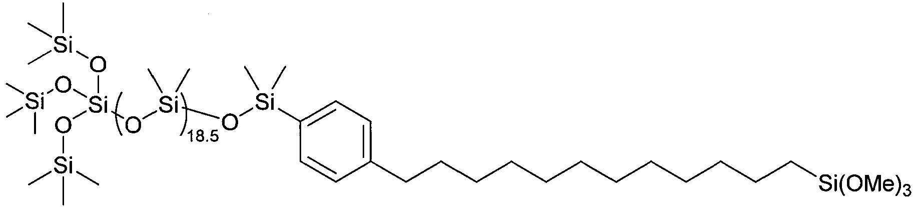 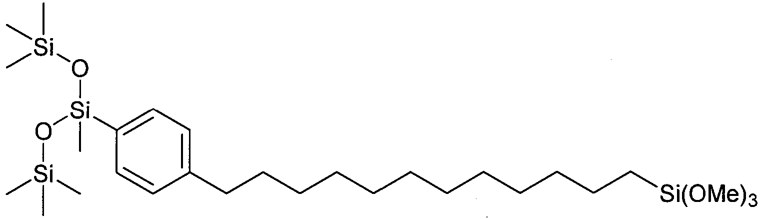 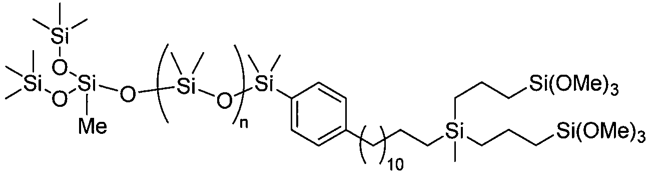 wherein n is 16, 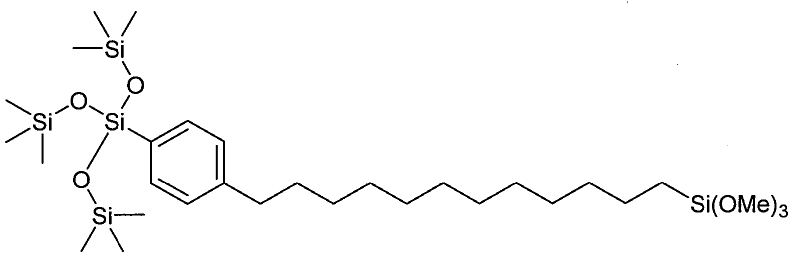 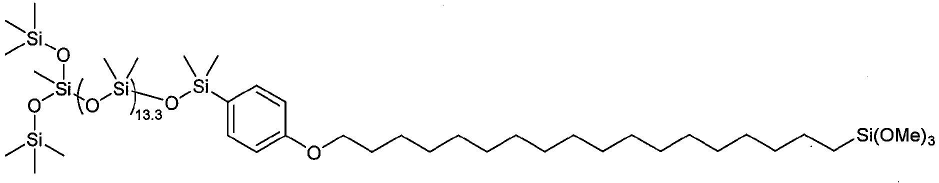 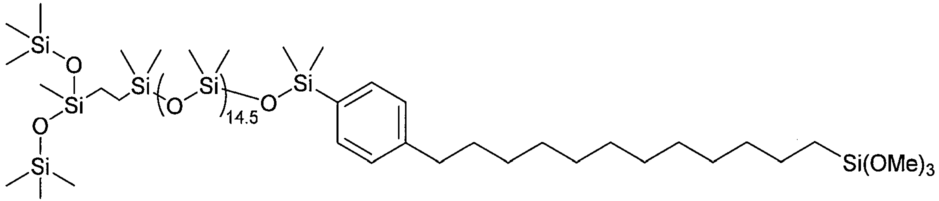 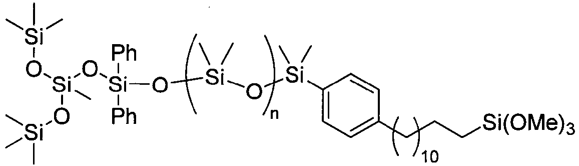 wherein n is 16, 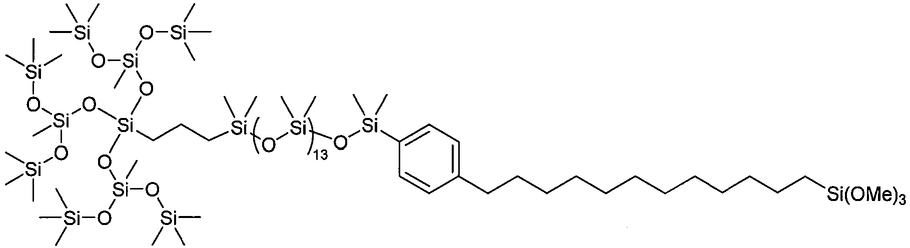 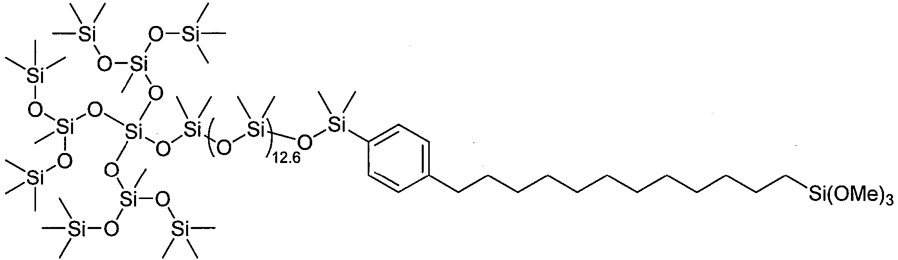 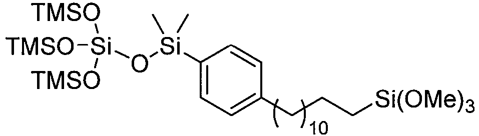 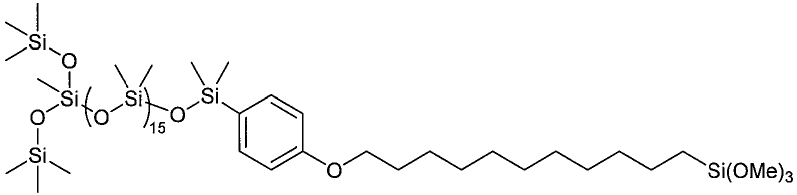 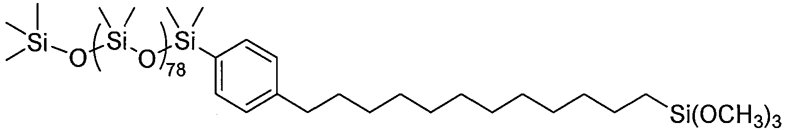 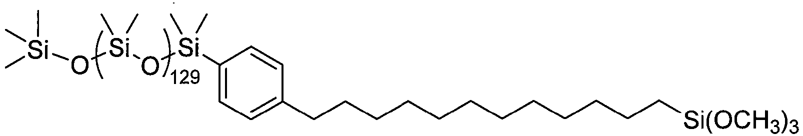 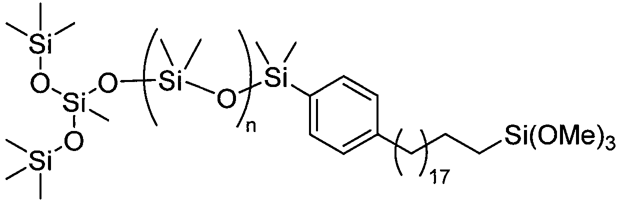 wherein n is 12, 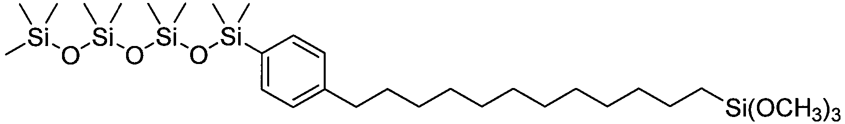 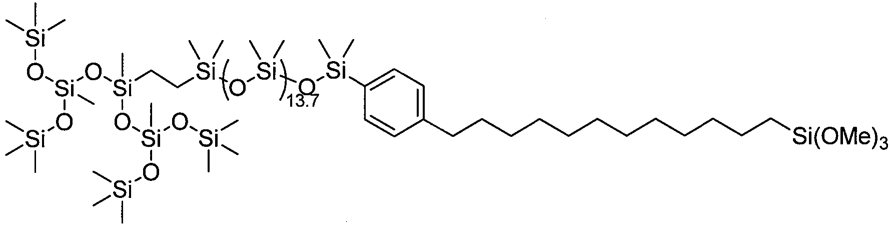 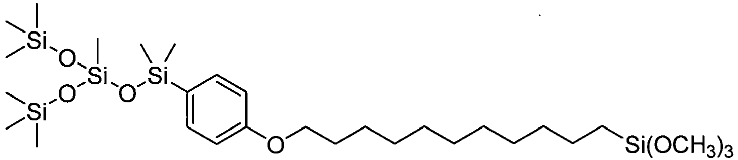 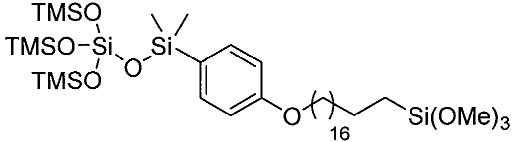 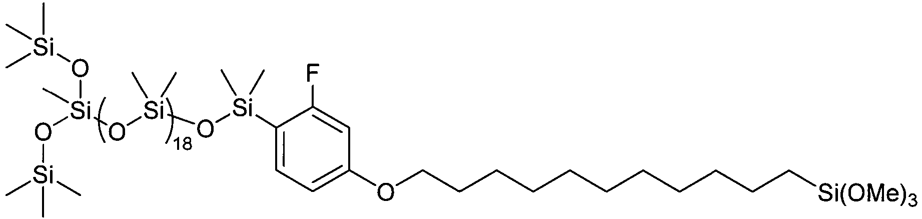 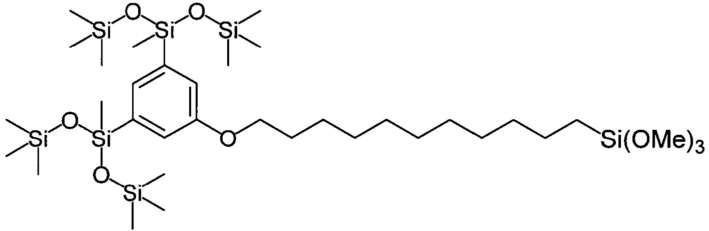 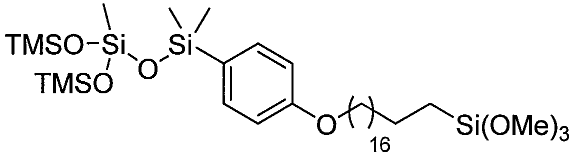 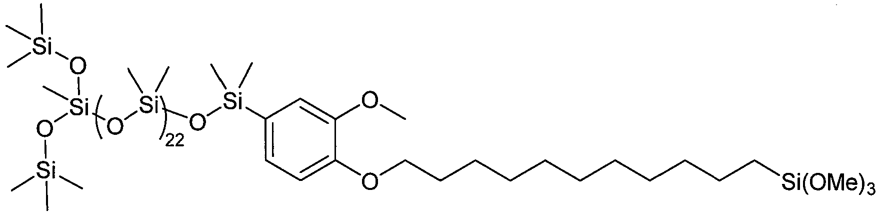 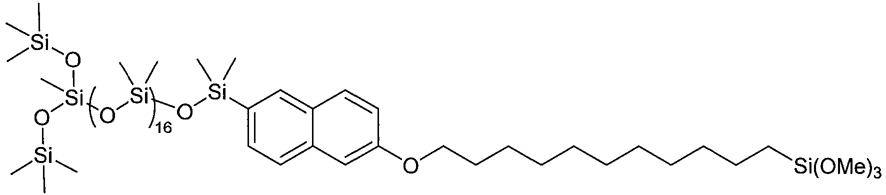 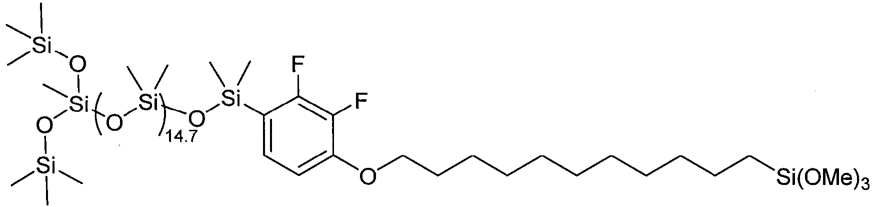 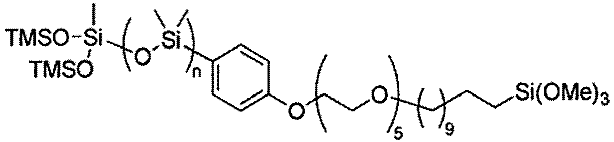 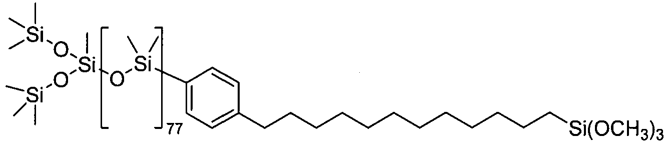 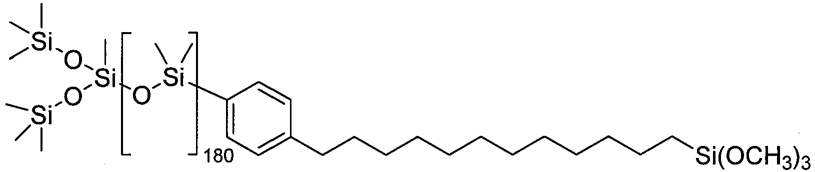 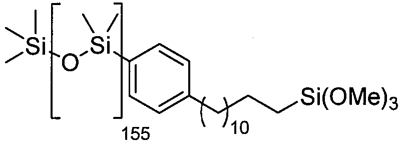 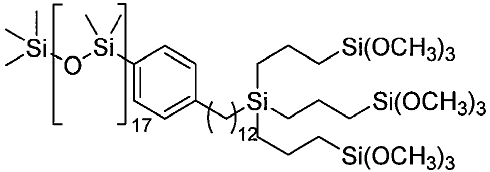 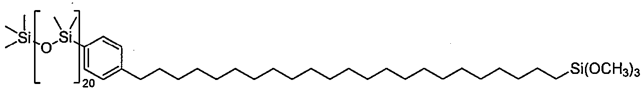 wherein TMS is a trimethylsilane group.

21. A compound represented by the following formula (1a1), (1a2), (1a3), or (1a4):
R^{A}-R^{S}-SiR⁶₂-R^{Ar}-R^{X}-CONR⁸¹-(CH₂)_{za}-CH=CH₂ (1a1)
R^{A}-R^{S}-SiR⁶₂-R^{Ar}-R^{X}-CON[- (CH₂)_{za}-CH=CH₂]₂ (1a2)
R^{A}-R^{S}-SiR⁶₂-R^{Ar}-R^{X}-CONR⁸¹-(CH₂)_{zb}-CR⁸²[-(CH₂)_{za}-CH=CH₂]₂ (1a3)
R^{A}-R^{S}-SiR⁶ ₂-R^{Ar}-R^{X}-CONR⁸¹- (CH₂)z_{b}-C[-(CH₂)_{za}-CH=CH₂]3 (1a4)
wherein
R^{A} is a hydrocarbon group, or a monovalent group containing one or more Si atoms to which neither a hydroxyl group nor a hydrolyzable group is directly bonded;
R^{S} is a group represented by the following formula: 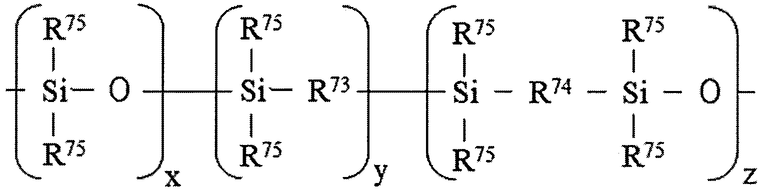 wherein
R⁷³ is each independently a single bond, a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁴ is each independently a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁶ is each independently a C₁₋₆ alkylene group,
R⁷⁷ is each independently an optionally substituted phenylene group or naphthylene group,
R⁷⁸ is each independently a single bond or a C₁₋₆ alkylene group,
R⁷⁹ is each independently a single bond or an oxygen atom,
R⁷⁵ is each independently a hydrocarbon group,
x is an integer of 0 to 500,
y is an integer of 0 to 500,
z is an integer of 0 to 500,
x + y + z is 1 or more, and
the occurrence order of the respective repeating units enclosed in parentheses provided with x, y, or z is not limited in the formula;
R⁶ is each independently a hydrocarbon group;
R^{Ar} is a divalent aromatic group;
R^{X} is a single bond or a divalent group;
R⁸¹ is a hydrogen atom or a monovalent organic group;
R⁸² is a hydrogen atom or a monovalent organic group;
za is an integer of 0 to 30; and
zb is an integer of 0 to 30.

22. A compound represented by the following formula (1b1), (1b2), (1b3), or (1b4):
Hal-R^{Ar}-R^{X}-CONR⁸¹-(CH₂)_{z}-CH=CH₂ (1b1)
Hal-R^{Ar}-R^{X}-CON[-(CH₂)_{z}-CH=CH₂]₂ (1b2)
Hal-R^{Ar}-R^{X}-CONR⁸¹-(CH₂)_{zb}-CR⁸²[-(CH₂)_{za}-CH=CH₂]₂ (1b3)
Hal-R^{ar}-R^{X}-CONR⁸¹-(CH₂)_{zb}-C[-(CH₂)_{za}-CH=CH₂]₃ (1b4)
wherein
Hal is halogen,
R^{Ar} is a divalent aromatic group,
R^{X} is a single bond or a divalent group,
R⁸¹ is a hydrogen atom or a monovalent organic group,
R⁸³ is a hydrogen atom or a monovalent organic group,
za is an integer of 0 to 30, and
zb is an integer of 0 to 30.

23. A compound represented by the following formula (1c1), (1c2), or (1c3):
R^{A}-R^{S}-SiR⁶₂-R^{Ar}-R^{X}-(CH₂)_{za}-CH=CH₂ (1c1)
R^{A}-R^{S}-SiR⁶₂-R^{Ar}-R^{X}-SiR⁸³[- (CH₂)_{za}-CH=CH₂ (1c2)
R^{A}-R^{S}-SiR⁶₂-R^{Ar}-R^{X}-Si[-(CH₂)_{za}-CH=CH₂]₃ (1c3)
wherein
R^{A} is a hydrocarbon group, or a monovalent group containing one or more Si atoms to which neither a hydroxyl group nor a hydrolyzable group is directly bonded;
R^{S} is a group represented by the following formula: 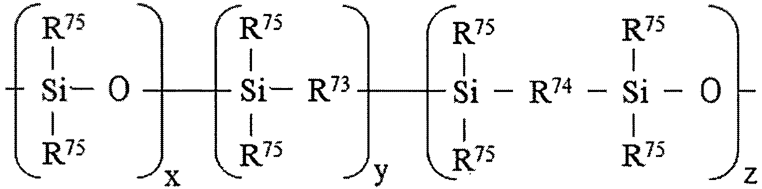 wherein
R⁷³ is each independently a single bond, a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁴ is each independently a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁶ is each independently a C₁₋₆ alkylene group,
R⁷⁷ is each independently an optionally substituted phenylene group or naphthylene group,
R⁷⁸ is each independently a single bond or a C₁₋₆ alkylene group,
R⁷⁹ is each independently a single bond or an oxygen atom,
R⁷⁵ is each independently a hydrocarbon group,
x is an integer of 0 to 500,
y is an integer of 0 to 500,
z is an integer of 0 to 500,
x + y + z is 1 or more, and
the occurrence order of the respective repeating units enclosed in parentheses provided with x, y, or z is not limited in the formula;
R⁶ is each independently a hydrocarbon group;
R^{Ar} is a divalent aromatic group;
R^{X} is a single bond or a divalent group;
R⁸³ is a hydrogen atom or a monovalent organic group;
za is an integer of 0 to 30; and
zb is an integer of 0 to 30.

24. A compound represented by the following formula (1d1), (1d2), or (1d3):
Hal-R^{Ar}-R^{X}-(CH₂)_{za}-CH=CH₂ (1d1)
Hal-R^{Ar}-R^{X}-SiR⁸³[- (CH₂)_{za}-CH=CH₂]₂ (1d2)
Hal-R^{Ar}-R^{X}-Si[-(CH₂)_{za}-CH=CH₂]₃ (1d3)
wherein
Hal is halogen,
R^{Ar} is a divalent aromatic group,
R^{X} is a single bond or a divalent group,
R⁸³ is a hydrogen atom or a monovalent organic group,
za is an integer of 0 to 30, and
zb is an integer of 0 to 30.

25. A silane compound represented by the following formula:
R¹ₙₐR²₃₋ₙₐSi-(CH₂)ₚ-SiR²₂-X
wherein
R¹ is each independently a group represented by -(R⁴-SiR³₂)ₘₐ-R³,
R⁴ is each independently an oxygen atom or a C₁₋₆ alkylene group,
R³ is each independently a hydrocarbon group or R^{1'},
R^{1'} has the same meaning as R¹,
ma is each independently an integer of 1 to 5,
provided that the number of R^{1'} in R¹ is 20 or less,
R² is each independently a hydrocarbon group,
na is an integer of 1 to 3,
p is an integer of 0 to 10, and
X is a hydrogen atom or a chlorine atom.

26. A silane compound represented by the following formula:
R¹ₙₐR²₃₋ₙₐSi-(CH₂)_{q}-CH=CH₂
wherein
R¹ is each independently a group represented by -(R⁴-SiR³₂)ₘₐ-R³,
R⁴ is each independently an oxygen atom or a C₁₋₆ alkylene group,
R³ is each independently a hydrocarbon group or R^{1'},
R^{1'} has the same meaning as R¹,
ma is each independently an integer of 1 to 5,
provided that the number of R^{1'} in R¹ is 20 or less,
R² is each independently a hydrocarbon group,
na is an integer of 1 to 3, and
q is an integer of 0 to 10.

27. A composition comprising the compound represented by formula (1) according to claim 1 and a compound represented by formula (2):
((X³)_{γ}-R^{Ar})_{α}-X¹-(R^{H})_{β} (2)
wherein
X³ is hydrogen, fluorine, chlorine, bromine, iodine, or a hydroxyl group,
R^{Ar} is a di- to hexavalent aromatic group,
X¹ is a di- to decavalent group,
R^{H} is a monovalent group containing a Si atom to which a hydroxyl group or a hydrolyzable group is bonded,
α is an integer of 1 to 9,
β is an integer of 1 to 9, and
y is the valence of R^{Ar} minus 1.

28. The composition according to claim 27, comprising the compound represented by formula (2) in an amount of 0.1% by mass to 30% by mass based on the sum of the compound represented by formula (1) and the compound represented by formula (2).

29. The composition according to claim 27, wherein the compound represented by formula (2) is the following compound:

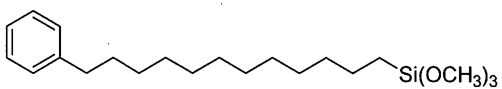

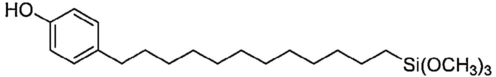

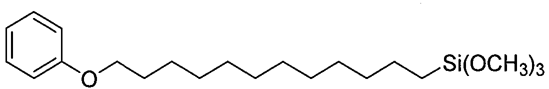

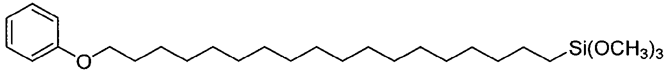

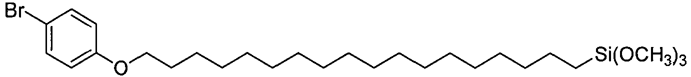

30. The composition according to claim 27, comprising the compound represented by formula (1) according to claim 20 and the compound represented by formula (2) according to claim 28.

31. A surface-treating agent comprising the compound according to claim 1.

32. The surface-treating agent according to claim 31, further comprising a condensate of the compound according to claim 1.

33. The surface-treating agent according to claim 31, further comprising a solvent selected from compounds represented by R⁸¹OR⁸², R⁸³ₙ₈C₆H₆₋ₙ₈, R⁸⁴R⁸⁵R⁸⁶Si-(O-SiR⁸⁷R⁸⁸)ₘ₈-R⁸⁹, and (OSiR⁸⁷R⁸⁸)ₘ₉,
wherein
R⁸¹ to R⁸⁹ are each independently a monovalent organic group having 1 to 10 carbon atoms,
m8 is an integer of 1 to 6,
m9 is an integer of 4 to 8, and
n8 is an integer of 0 to 6.

34. The surface-treating agent according to claim 33, wherein the solvent is R⁸⁴R⁸⁵R⁸⁶Si-(O-SiR⁸⁷R⁸⁸)ₘ₈-R⁸⁹.

35. The surface-treating agent according to claim 33, wherein the solvent is hexamethyldisiloxane, hexaethyldisiloxane, octamethyltrisiloxane, octamethylcyclotetrasiloxane, or decamethylcyclopentasiloxane.

36. The surface-treating agent according to claim 31, which is for vacuum deposition.

37. The surface-treating agent according to claim 31, which is for wet coating.

38. A pellet comprising the surface-treating agent according to claim 31.

39. An article comprising a substrate and a layer on the substrate, wherein the layer is formed from the compound according to claim 1.

40. The article according to claim 39, comprising, between the substrate and the aforementioned layer, a silicon oxide-containing intermediate layer.

41. The article according to claim 39, wherein the intermediate layer comprises an alkali metal atom.

42. The article according to claim 41, wherein the alkali metal atom is at least partially a sodium atom.

43. The article according to claim 39, which is an optical member.

44. The article according to claim 39, which is a display.
